# EUROPÄISCHE PATENTSCHRIFT

(11) **EP 1 774 198 B1**
(45) Veröffentlichungstag und Bekanntmachung des Hinweises auf die Patenterteilung: **19.09.2012**
(21) Anmeldenummer: 05771073.3
(22) Anmeldetag: 08.08.2005
(51) Int. Cl.: F16H 3/66

(54) **MEHRSTUFEN-AUTOMATGETRIEBE**
MULTI-SPEED AUTOMATIC TRANSMISSION
BOITE DE VITESSES AUTOMATIQUE A PLUSIEURS ETAGES

(30) Priorität: 06.08.2004 DE 102004038286
(43) Veröffentlichungstag der Anmeldung: 18.04.2007
(73) Patentinhaber: ZF Friedrichshafen AG, 88038 Friedrichshafen (DE)
(72) Erfinder: BAUKNECHT, Gert, 88048 Friedrichshafen (DE); ZIEMER, Peter, 88069 Tettnang (DE); GIERLING, Armin, 88085 Langenargen (DE)
(86) Internationale Anmeldenummer: PCT/EP2005/008600
(87) Internationale Veröffentlichungsnummer: WO 2006/015845

(56) Entgegenhaltungen:
- EP-A- 0 997 663
- EP-A- 1 375 962
- EP-A1- 1 710 471
- EP-A1- 1 736 687
- WO-A-03/087624
- WO-A-03/095865
- US-A1- 2003 083 173
- PATENT ABSTRACTS OF JAPAN Bd. 2003, Nr. 03, 5. Mai 2003 (2003-05-05) -& JP 2002 323098 A (KYOWA METAL WORK CO LTD), 8. November 2002 (2002-11-08)

## Beschreibung

Automatgetriebe mit mehreren, ohne Gruppenschaltung schaltbaren Gängen sind vielfältig bekannt. Aus der US 5,106,352 ist ein 6-Gang-Automatgetriebe bekannt, bei dem ein einfacher Vorschalt-Planetenradsatz koaxial zu einem als Ravigneaux-Planetenradsatz ausgebildeten Zweisteg-Vierwellen-Hauptradsatz angeordnet ist und fünf Schaltelemente vorgesehen sind. Dabei ist der Vorschalt-Planetenradsatz als nicht schaltbare Reduzierstufe mit an einem Getriebegehäuse festgesetztem Sonnenrad ausgeführt, deren Ausgangsdrehzahl kleiner ist als die Drehzahl einer Antriebswelle des Automatgetriebes und über zwei Kupplungen auf zwei unterschiedliche Elemente des Hauptradsatzes übertragbar ist, wobei eines dieser beiden Elemente zusätzlich über eine erste Bremse an dem Getriebegehäuse festsetzbar ist. Dieses Eingangselement des Hauptradsatzes, welches wahlweise mit dem Ausgangselement des Vörschaltradsätzes verbindbar oder am Getriebegehäuse festsetzbare ist, sei im folgenden mit "erstes Eingangselement des Hauptradsatzes" bezeichnet. Entsprechend sei das andere Eingangselement des Hauptradsatzes, das auch mit dem Ausgangselement des Vorschalt-Planetenradsatz verbindbare ist, im folgenden mit "zweites Eingangselement des Hauptradsatzes" bezeichnet. Die Drehzahl der Antriebswelle ist über eine dritte Kupplung auf ein drittes Eingangselement des Hauptradsatzes übertragbar, wobei dieses dritte Element über eine zweite Bremse auch an dem Getriebegehäuse festsetzbar ist. Ein viertes Element des Haüptradsatzes bildet das Ausgangselement des Hauptradsatzes und ist ausschließlich fest mit einer Abtriebswelle des Automatgetriebes verbunden.

US 2003/0083173 wird als nächstliegender Stand der Technik angesechen. Die inhalt der EP 1710471 und EP1736687 gilt als Stand der Technik, der bei Neuheit zu berücksichtigen ist, für die Vertragsstaaten DE, FR, GB.

Mehrere alternative Bauteilanordnungen zu diesem in der US 5,106,352 beschriebenen Automatgetriebe sind beispielsweise aus der US 6,139,463 und der DE 102 10 348 A1 bekannt.

In der noch nicht veröffentlichten Deutschen Patentanmeldung DE 10221095.0, der Anmelderin ist eine Weiterentwicklung des in der US 5,106,352 bekannten 6-Gang-Automatgetriebes zu einem 7-Gang-Automatgetriebe beschrieben. Gegenüber der US 5,106,352 ist der Vorschalt-Planetenradsatz als einfacher, schaltbarer Plus-Planetenradsatz in Doppelplanetenbauweise ausgeführt und ein zusätzliches sechstes Schaltelement hinzugefügt. Ein Steg des Vorschalt-Planetenrädsatzes bildet dabei das fest mit der Antriebswelle des Automatgetriebes verbundene Eingangselement des Vorschalt-Planetenradsatzes. Ein Sonnenrad des Vorschalt-Planetenradsatzes ist über das gegenüber der US 5,106,352 zusätzliche sechste Schaltelement an einem Getriebegehäuse festsetzbar. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert mit einer Drehzahl kleiner oder gleich der Drehzahl der Antriebswelle. Für diese kinematische Kopplung der einzelnen Radsatzelemente und Schaltelemente offenbart die DE 10221095.0 zahlreiche verschiedene Anordnungsvarianten der Getriebekomponenten relativ zueinander.

In der JP 20011182785 A ist eine Weiterentwicklung des aus der US 5,106,352 bekannten 6-Gang-Automatgetriebes zu einem 8-Gang-Automatgetriebe beschrieben. Gegenüber der US 5,106,352 ist dabei der Vorschalt-Planetenradsatz als einfacher, nicht schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenrad-satzes ist an einem Getriebegehäuse festgesetzt. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert stets mit einer Drehzahl kleiner der Drehzahl der Antriebswelle. Über das gegenüber der US 5,106,352 zusätzliche sechste Schaltelement ist das - wahlweise mit dem Ausgangselement des Vorschalt-Planetenradsatzes verbindbare oder am Getriebegehäuse festsetzbare - erste Eingangselement des Hauptradsatzes nun wahlweise auch mit der Antriebswelle des Getriebes verbindbar. Hinsichtlich der räumlichen Anordnung der Schaltelemente relativ zueinander und relativ zu den Planetenradsätzen ist in der JP 2001/182785 A vorgeschlagen, die beiden Schaltelemente, über die das erste und zweite Eingangselement des Hauptradsatzes mit dem Hohlrad des Vorschalt-Planetenradsatzes verbindbar sind, zusammen mit dem gegenüber der US 5,106,352 zusätzlichen sechsten Schaltelement als eine Baugruppe axial zwischen dem Vorschalt-Planetenradsatz und dem Hauptradsatz anzuordnen. Dabei ist das bereits aus der US 5,106,352 bekannte (fünfte) Schaltelement, über welches die Antriebswelle mit dem dritten Eingangselement des Hauptradsatzes verbindbar ist, auf der dieser Baugruppe gegenüberliegenden Seite des Hauptradsatzes angeordnet, also auch auf der dem Vorschalt-Planetenradsatz abgewandten Seite des Hauptradsatzes. Weiterhin lehrt die JP 2001/182785 A, das gegenüber der US 5,106,352 zusätzliche sechste Schaltelement innerhalb der genannten Baugruppe räumlich gesehen radial über dem Schaltelement anzuordnen, über welches erste Eingangselement des Hauptradsatzes mit dem Hohlrad des Vorschaltradsatzes verbindbar ist.

In der noch nicht veröffentlichten Deutschen Patentanmeldung DE 10318565.8 der Anmelderin wird eine verbesserte Bauteilanordnung des aus der JP 2001/182785 A bekannten 8-Gang-Automatgetriebes beschrieben. Um gegenüber der zugrunde liegenden Basiskonstruktion des 6-Gang-Automatgetriebe gemäß US 5,106,352 nur vergleichsweise wenige konstruktive Änderungen vornehmen zu müssen, wird in der DE 10318565.8 vorgeschlagen, die aus dem 6-Gang-Automatgetriebe bekannte räumliche Lage von Vorschalt-Planetenradsatz, Ravigneaux-Hauptradsatz und den ersten fünf Schaltelementen im Getriebegehäuse relativ zueinander beizubehalten und das gegenüber der US 5,106,352 zusätzliche sechste Schaltelementes in dem Getriebegehäuse auf der Seite des Getriebes anzuordnen, die einem Antriebsmotor zugewandt ist, räumlich gesehen zwischen einer antriebsseitigen Getriebegehäusewand und ersten Schaltelement, über welches das Ausgangselement des Vorschalt-Planeteradsatzes mit dem zweiten Eingangselement des Hauptradsatzes verbindbar ist, räumlich gesehen aber auch zwischen der genannten antriebsseitigen Getriebegehäusewand und dem Vorschalt-Planetenradsatz. Das gegenüber der US 5,106,352 zusätzliche sechste Schaltelement ist also auf der dem Hauptradsatz abgewandten Seite des Vorschalt-Planetenradsatzes angeordnet.

Der vorliegenden Erfindung liegt die Aufgabe zugrunde, das in der JP 2001/182785 A bzw. der DE 10318565.8 angegebene Mehrstufen-Automatgetriebe mit acht Vorwärtsgängen weiterzuentwicketn und alternative Bauteilanordnungen für die Planetenradsätze und die sechs Schaltelemente für zu schaffen.

Diese Aufgabe wird durch ein die Merkmale des Patentanspruchs 1 aufweisendes Mehrstufen-Automatgetriebe gelöst. Vorteilhafte Ausgestaltungen und Weiterbildungen der Erfindung ergeben sich aus den Unteransprüchen.

Die Erfindung geht aus von dem in der JP 2001/182785 A bzw. der noch nicht veröffentlichten Deutschen Patentanmeldung DE 10318565.8 der Anmelderin beschriebenen Getriebeschema für ein Mehrstufen-Automatgetriebe mit zumindest acht Vorwärtsgängen, umfassend eine Antriebswelle, eine Abtriebswelle, einen als Doppelplanetenradsatz ausgebildeten Vorschaltradsatz, einen als gekoppelten Planetenradsatz mit mindestens drei nicht gekoppelten Eingangselementen und einem Ausgangselement ausgebildeten Hauptradsatz, sowie mindestens sechs Schaltelemente. Durch selektives Schließen von jeweils zwei der Schaltelemente ist eine Drehzahl der Antriebswelle derart auf die Abtriebswelle übertragbar, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Die gesamte Offenbarung der noch nicht vorveröffentlichten Deutschen Patentanmeldung DE 10318565.8 der Anmelderin soll ausdrücklich auch Teil der Offenbarung der vorliegenden Erfindung sein.

Ein Eingangselement des Vorschaltradsatzes ist ständig mit der Antriebswelle verbunden. Ein Ausgangselement des Vorschaltradsatzes rotiert stets mit einer Drehzahl kleiner der Drehzahl der Antriebswelle. Ein drittes Element des Vorschaltradsatzes ist an einem Getriebegehäuse festgesetzt. Die Ausgangsdrehzahl des Vorschaltradsatzes ist über zwei Schaltelemente auf zwei unterschiedliche Eingangselemente der Hauptradsatzes übertragbar. Die Drehzahl der Antriebswelle ist über zwei andere Schaltelemente ebenfalls auf zwei verschiedene Eingangselemente des Hauptradsatzes übertragbar. Das Ausgangselement des Hauptradsatzes ist ständig mit der Abtriebswelle verbunden.

In einer bevorzugten Ausgestaltung dieses Getriebeschemas als 8-Gang-Automatgetriebe bildet ein (gekoppelter) Steg des Vorschaltradsatzes dessen stets mit der Antriebswelle verbundenes Eingangselement, ein Hohlrad des Vorschaltradsatzes dessen mit zwei verschiedenen Eingangselementen des Hauptradsatzes verbindbares Ausgangselement, und ein Sonnenrad des Vorschaltradsatzes dessen am Getriebegehäuse festgesetztes drittes Element. Vorschalt- und Hauptradsatz sind koaxial zueinander angeordnet. Der Hauptradsatz kann als Zweisteg-Verwellen-Getriebe in Bauform eines "Ravigneaux-Planetenradsatzes" ausgeführt sein, mit einem ersten Sonnenrad als erstes Eingangselement des Hauptradsatzes, welches wahlweise mit dem Hohlrad des Vorschaltradsatzes oder der Antriebswelle verbindbar oder am Getriebegehäuse festsetzbar ist, mit einem zweiten Sonnenrad als zweites Eingangselement des Hauptradsatzes, welches mit dem Hohlrad des Vorschaltradsatzes verbindbar ist, mit einem (gekoppelten) Steg als drittes Eingangselement des Hauptradsatzes, welcher wahlweise mit der Antriebswelle verbindbar oder am Getriebegehäuse festsetzbar ist, sowie mit einem Hohlrad als Ausgangselement des Hauptradsatzes, welches stets mit der Abtriebswelle verbunden ist. In diesem Fall ist
- ein Eingangselement des ersten Schaltelementes mit dem Ausgangselement des Vorschaltradsatzes verbunden,
- ein Ausgangselement des ersten Schaltelementes mit dem zweiten Eingangselement des Hauptradsatzes verbunden,
- ein Eingangselement des zweiten Schaltelementes mit dem Ausgangselement des Vorschaltradsatzes verbunden,
- ein Ausgangselement des zweiten Schaltelementes mit dem ersten Eingangselement des Hauptradsatzes verbunden,
- ein Eingangselement des dritten Schaltelementes mit dem Getriebegehäuse verbunden,
- ein Ausgangselement des dritten Schaltelementes mit dem ersten Eingangselement des Hauptradsatzes verbunden,
- ein Eingangselement des vierten Schaltelementes mit dem Getriebegehäuse verbunden,
- ein Ausgangselement des vierten Schaltelementes mit dem dritten Eingangselement des Hauptradsatzes verbunden,
- ein Eingangselement des fünften Schaltelementes mit der Antriebswelle verbunden,
- ein Ausgangselement des fünften Schaltelementes mit dem dritten Eingangselement des Hauptradsatzes verbunden,
- ein Eingangselement des sechsten Schaltelementes mit der Antriebswelle verbunden,
- ein Ausgangselement des sechsten Schaltelementes mit dem ersten Eingangselement des Hauptradsatzes verbunden, sowie
- das Ausgangselement des Hauptradsatzes ständig mit der Abtriebswelle verbunden.

Der Hauptradsatz kann aber auch als Zweisteg-Vierwellen-Getriebe mit zwei gekoppelten Einsteg-Planetenradsätzen ausgebildet sein, wobei beispielsweise das wahlweise mit dem Hohlrad des Vorschaltradsatzes oder der Antriebswelle verbindbare oder am Getriebegehäuse festsetzbare erste Eingangselement dieses Hauptradsatzes durch ein Sonnenrad des ersten dieser beiden Einsteg-Planetenradsätzen des Hauptradsatzes und ein mit diesem ersten Sonnenrad des Hauptradsatzes verbundenen Steg des zweiten dieser beiden Einsteg-Planetenradsätzen des Hauptradsatzes gebildet wird, und wobei das mit dem Hohlrad des Voüschaltradsatzes verbindbare zweite Eingangselement dieses Hauptradsatzes durch ein Sonnenrad des zweiten der beiden Einsteg-Planetenradsätzen des Hauptradsatzes gebildet wird, und wobei das wahlweise mit der Antriebswelle verbindbare oder am Getriebegehäuse festsetzbare dritte Eingangselement des Hauptradsatzes durch einen Steg des ersten der beiden Einsteg-Planetenradsätzen des Hauptradsatzes und einen mit diesem ersten Steg des Hauptradsatzes verbundenen Hohlrad des zweiten der beiden Einsteg-Planetenradsätzen des Hauptradsatzes gebildet wird, und wobei ein Hohlrad des ersten der beiden Einsteg-Planetenradsätzen des Hauptradsatzes als Ausgangselement dieses Hauptradsatzes stets mit der Abtriebswelle verbunden ist. In diesem Fall entspricht die Anbindung der Ein- und Ausgangselemente der sechs Schaltelemente an die drei Eingangselemente des Hauptradsatzes der zuvor am Beispiel des Ravigneäux-Hauptradsatzes, beschriebenen Anbindung.

Der Hauptradsatz kann beispielsweise auch als "Dreisteg-Fünfwellen-Getriebe" mit drei gekoppelten Einsteg-Planetenradsätzen ausgebildet sein, oder auch als "reduziertes Dreisteg-Fünfivellen-Getriebe" mit drei gekoppelten Einsteg-Planetenradsätzen, bei denen zumindest zwei dieser Einzel-Planetenradsätze über einen gemeinsamen Steg und ein weiteres gemeinsames Zentralrad (also entweder über deren Sonnenräder oder über deren Hohlräder) miteinander gekoppelt ("reduziert") sind. Analog dazu kann der Hauptradsatz beispielsweise auch als "reduziertes Viersteg-Sechswellen-Getriebe ausgebildet sein, bei dem die dabei im Prinzip vorhandenen vier miteinander gekoppelten Einzel-Planetenradsätze derart zusammengefasst sind, dass der Hauptradsatz nur noch zwei Stege aufweist. Im Unterschied zu der Anbindung der sechs Schaltelemente an die Eingangselemente eines Hauptradsatzes vom Typ "Zweisteg-Vierwellen-Planetengetriebe bieten sich hinsichtlich der kinematischen Anbindung der Ein- und Ausgangselemente des dritten und sechsten Schaltelementes an die einzelnen Hauptradsatz-Elemente verschiedene Möglichkeiten, wobei dann gilt:
- das Eingangselement des dritten Schaltelementes ist mit dem Getriebegehäuse verbunden,
- das Ausgangselement des dritten Schaltelementes ist mit dem ersten Eingangselement des Hauptradsatzes oder einem in einem Drehzahlplan zu diesem ersten Eingangselement benachbarten Eingangselement des Hauptradsatzes verbunden,
- das Eingangselement des sechsten Schaltelementes ist mit der Antriebswelle verbunden,
- das Ausgangselement des sechsten Schaltelementes ist mit dem ersten Eingangselement des Hauptradsatzes oder einem in dem Drehzahlplan zu

diesem ersten Eingangselement benachbarten Eingangselement des Hauptradsatzes verbunden.

In allen genannten Ausführungsvarianten sind im ersten Vorwärtsgang das erste und vierte Schaltelement, im zweiten Vorwärtsgang das erste und dritte Schaltelement, im dritten Vorwärtsgang das erste und zweite Schaltelement, im vierten Vorwärtsgang das erste und sechste Schaltelement, im fünften Vorwärtsgang das erste und fünfte Schaltelement, im sechsten Vorwärtsgang das fünfte und sechste Schaltelement, im siebten Vorwärtsgang das zweite und fünfte Schaltelement und im achten Vorwärtsgang das dritte und fünfte Schaltelement geschlossen. Im Rückwärtsgang sind das vierte Schaltelement und zusätzlich entweder das zweite oder das sechste Schaltelement geschlossen.

Gemäß der Erfindung wird nun vorgeschlagen, dass eine Servoeinrichtung zur Betätigung des sechsten Schaltelementes ständig mit der Drehzahl des ersten Eingangselementes des Hauptradsatzes rotiert. Das mit dem ersten Eingangselement des Hauptradsatzes verbundene Ausgangselement des sechsten Schaltelementes nimmt dabei die Servoeinrichtung des sechsten Schaltelementes auf. Wie allgemein üblich, umfasst die Servoeinrichtung des sechsten Schaltelementes zumindest einen Druckraum und einen Kolben zur Betätigung eines Lamellenpaketes des sechsten Schaltelementes, vorzugsweise zusätzlich auch einen Druckausgleichsraum zum Ausgleich des dynamischen Kupplungsdruckes des rotierenden Druckraums. Da die Servoeinrichtung des sechsten Schaltelementes nun stets mit der Ausgangsdrehzahl des sechsten Schaltelementes rotiert und diese Ausgangsdrehzahl kinematisch mit der Abtriebsdrehzahl des Getriebes gekoppelt, ist die Steuerung bzw. Regelung des Kupplungsdruckes beim Betätigen des sechsten Schaltelementes relativ unempfindlich auf im Verlauf dieser Schaltung auftretende unerwünschte Drehzahlschwankungen der Antriebswelle des Getriebes, selbst wenn der dynamische Druckausgleich konstruktiv nicht ideal ausgelegt werden konnte oder ein dynamischer Druckausgleich überhaupt nicht vorgesehen ist. Derartige unerwünschte Drehzahlschwankungen können beispielsweise durch einen unrunden Lauf eines das Getriebe antreibenden Verbrennungsmotors hervorgerufen werden. Ein weiterer Vorteil ist das gegenüber dem Stand der Technik verringerte Drehzahlniveau der Servoeinrichtung des sechsten Schaltelementes in einem großen Betriebsbereich des Getriebes, nämlich im ersten, zweiten, dritten, siebten und achten Vorwärtsgang des Getriebes. Positiv für die Einbringung von Druckmittel in den rotierenden Druckraum der Servoeinrichtung des sechsten Schaltelementes ist auch, dass bei einem Gangwechsel vom dritten in den vierten Vorwärtsgang und vom siebten in den sechsten Vorwärtsgang die Befüllung dieses Druckraums zu Beginn der Schaltung aus einem niedrigeren Drehzahlzahlniveau heraus startet als beim Stand der Technik.

Eine Servoeinrichtung zur Betätigung des ja ebenfalls kinematisch mit dem ersten Eingangselement des Hauptradsatzes gekoppelten zweiten Schaltelementes kann - je nach der räumlichen Lage des zweiten Schaltelementes relativ zu dem sechsten Schaltelement und zu den Planetenradsätzen - entweder auch ständig mit der Drehzahl des ersten Eingangselementes des Hauptradsatzes rotieren oder aber ständig mit einer Drehzahl des Ausgangselementes des zweiten Schaltelementes. Die Servoeinrichtung des zweiten Schaltelementes wird also entweder von dem mit dem ersten Eingangselement des Hauptradsatzes verbundenen Ausgangselement des zweiten Schaltelementes aufgenommen oder aber von dem mit dem Ausgangselement des Vorschaltradsatzes verbundenen Eingangselement des zweiten Schaltelementes. Wie allgemein üblich, umfasst die Servoeinrichtung des zweiten Schaltelementes zumindest einen Druckraum und einen Kolben zur Betätigung eines Lamellenpaketes des zweiten Schaltelementes, vorzugsweise zusätzlich auch einen Druckausgleichsraum zum Ausgleich des dynamischen Kupplungsdruckes des rotierenden Druckraums.

In einer ersten Ausgestaltung der Erfindung hinsichtlich Bauteilanordnung ist vorgesehen, dass das zweite und sechste Schaltelement räumlich gesehen zumindest teilweise in einem Bereich axial zwischen dem Vorschaltradsatz und einer sich radial erstreckenden Gehäusewand des Getriebegehäuses angeordnet sind, räumlich gesehen auf der dem Hauptradsatz abgewandten Seite des Vorschaltradsatzes. Dabei kann diese Gehäusewand eine einem Antriebsmotor des Getriebes zugewandte Außenwand des Getriebegehäuses sein.

In einer zweiten Ausgestaltung der Erfindung hinsichtlich Bauteilanordnung ist vorgesehen, dass das zweite und sechste Schaltelement räumlich gesehen zumindest teilweise in einem Bereich axial zwischen dem Vorschaltradsatz und dem Hauptradsatz angeordnet sind.

Bei dieser ersten und zweiten erfindungsgemäßen Ausgestaltung sind das zweite und sechste Schaltelement vorzugsweise unmittelbar benachbart zueinander angeordnet. Demnach bilden das zweite und sechste Schaltelement eine Baugruppe, die räumlich gesehen axial zwischen dem ersten und dem dritten Schaltelement und/oder axial zwischen dem ersten Schaltelement und dem Hauptradsatz und/oder axial zwischen dem fünften und dem dritten Schaltelement und/oder axial zwischen dem fünften Schaltelement und dem Hauptradsatz und/oder axial neben dem ersten Schaltelement (insbesondere axial neben einem Lamellenpaket des ersten Schaltelementes) und/oder axial neben dem dritten Schaltelement (insbesondere axial neben einem Lamellenpaket des dritten Schaltelementes angeordnet sein kann.

So wird im Rahmen von mehreren Weiterbildungen dieser ersten und zweiten erfindungsgemäßen Ausgestaltung vorgeschlagen, für das zweite und das dazu benachbarte sechste Schaltelement einen gemeinsamen Lamellenträger vorzusehen, jeweils mit unterschiedlicher konstruktiver Ausbildung. Beispielsweise ist dieser gemeinsame Lamellenträger dabei als Außenlamellenträger des sechsten Schaltelementes und als Innenlamellenträger des zweiten Schaltelementes ausgebildet, oder als Außentamellenträger des zweiten Schaltelementes und als Innenlamellenträger des sechsten Schaltelementes, oder aber als Außentamellenträger beider Schaltelemente. In axialer Richtung gesehen kann das Lamellenpaket des zweiten Schaltelementes dabei zumindest teilweise radial über oder zumindest teilweise radial unter oder auch axial neben dem Lamellenpaket des sechsten Schaltelementes angeordnet sein.

In einer dritten Ausgestaltung der Erfindung hinsichtlich Bauteilanordnung ist vorgesehen, dass das sechste Schaltelement räumliche gesehen zumindest teilweise in einem Bereich axial zwischen dem Vorschaltradsatz und einer sich radial erstreckenden Gehäusewand des Getriebegehäuses angeordnet ist, räumlich gesehen auf der dem Hauptradsatz abgewandten Seite des Vörschaltradsatzes, und dass das zweite Schaltelement räumlich gesehen zumindest teilweise in einem Bereich axial zwischen dem Vorschaltradsatz und dem Hauptradsatz angeordnet ist. Vorzugsweise ist hierbei das fünfte Schaltelement räumlich gesehen axial zwischen dem Vorschaltradsatz und dem Hauptradsatz angeordnet, axial angrenzend an den Vorschaltradsatz. Die genannte Gehäusewand kann eine einem Antriebsmotor des Getriebes zugewandte Außenwand des Getriebegehäuses sein.

In einer vierten Ausgestaltung der Erfindung Hinsichtlich Bauteilanordnung ist vorgesehen, dass das zweite Schaltelement räumlich gesehen zumindest teilweise in einem Bereich axial zwischen dem Vorschaltradsatz und einer sich radial erstreckenden Gehäusewand des Getriebegehäuses angeordnet ist, räumlich gesehen auf der dem Hauptradsatz abgewandten Seite des Vorschaltradsatzes, und dass das sechste Schaltelement räumlich gesehen zumindest teilweise in einem Bereich axial zwischen dem Vorschaltradsatz und dem Hauptradsatz angeordnet ist. Vorzugsweise ist das zweite Schaltelement dabei räumlich gesehen auf der Seite des ersten Schaltelementes angeordnet, die dem sechsten Schaltelement gegenüber liegt. Das sechste Schaltelement kann räumlich gesehen axial zwischen dem fünften und dem dritten Schaltelement und/oder axial zwischen dem fünften Schaltelement und dem Hauptradsatz und/oder axial neben dem fünften Schaltelement und/oder axial neben dem dritten Schaltelement angeordnet sein. Die genannte Gehäusewand kann eine einem Antriebsmotor des Getriebes zugewandte Außenwand des Getriebegehäuses sein.

Bei den zuvor genannten einzelnen Varianten von Anordnung und konstruktiver Ausbildung des zweiten und sechsten Schaltelementes und deren Servoeinrichtungen können die jeweiligen Lamellenpakete des zweiten und sechsten Schaltelementes bei derem Schließen - bezogen auf den Druckraum und die Bewegungsrichtung des diesem Druckraum zugeordneten Kolbens der jeweiligen Servoeinrichtung - entweder gedrückt oder gezogen betätigt werden. Entsprechend ergeben sich auch vielfältige Varianten hinsichtlich der räumlichen Anordnung der jeweiligen Druckräume zur Betätigung der Lamellen des zweiten bzw. sechsten Schaltelementes und - soweit für einen dynamischen Ausgleich des rotatorischen Druckes der rotierenden Druckräume vorhandeln - der jeweiligen Druckausgleichsräume der Servoeinrichtungen des zweiten und sechsten Schaltelementes, relativ zueinander und relativ zu den benachbarten Bauelementen.

In Verbindung mit einer Anordnung, bei der das Lamellenpaket des zweiten Schaltelementes in axialer Richtung gesehen zumindest teilweise radial über dem Lamellenpaket des sechsten Schaltelementes angeordnet ist, ergeben sich insbesondere folgende sinnvolle Varianten, deren Merkmale zumindest zum Teil auch miteinander kombiniert sein können:
- das Lamellenpaket und die Servoeinrichtung des sechsten Schaltelementes sind zumindest weitgehend innerhalb eines Kupplungsraumes des zweiten Schaltelementes angeordnet, der durch einen Außenlamellenträger des zweiten Schaltelementes gebildet wird;
- die Servoeinrichtungen des zweiten und sechsten Schaltelementes sind zumindest überwiegend auf der dem Vorschaltradsatzes abgewandten Seite der Lamellenpakete des zweiten und sechsten Schaltelementes angeordnet;
- der Druckraum der Servoeinrichtung des sechsten Schaltelementes ist näher am Vorschaltradsatz angeordnet als der Druckraum der Servoeinrichtung des zweiten Schaltelementes;
- der Druckraum der Servoeinrichtung des sechsten Schaltelementes ist axial benachbart zu dem Druckausgleichsraum der Servoeinrichtung des zweiten Schaltelementes angeordnet, insbesondere getrennt von diesem durch eine Mantelfläche des für das zweite und sechste Schaltelement gemeinsamen Lamellenträgers;
- die Druckräume der Servoeinrichtungen des zweiten und sechsten Schaltelementes sind axial zueinander benachbart angeordnet, insbesondere getrennt voneinander durch eine Mantelfläche des für das zweite und sechste Schaltelement gemeinsamen Lamellenträgers;
- der Kolben der Servoeinrichtung des zweiten Schaltelementes (bzw. ein mit diesem Kolben verbundenes Betätigungselement zur Betätigung der Lamellen des zweiten Schaltelementes) umgreift das Lamellenpaket des zweiten Schaltelementes in axialer Richtung radial außen;
- der Druckraum der Servoeinrichtung des zweiten Schaltelementes ist in axialer Richtung gesehen zumindest überwiegend radial über dem Druckraum der Servoeinrichtung des sechsten Schaltelementes angeordnet;
- der Druckausgleichsraum der Servoeinrichtung des zweiten Schaltelementes ist in axialer Richtung gesehen zumindest überwiegend radial über dem Druckausgleichsraum der Servoeinrichtung des sechsten Schaltelementes angeordnet;
- der Druckausgleichsraum der Servoeinrichtung des zweiten Schaltelementes wird über den Druckausgleichsraum der Servoeinrichtung des sechsten Schaltelementes mit Schmiennittel befüllt;
- der Druckausgleichsraum der Servoeinrichtung des zweiten Schaltelementes ist näher am Vorschaltradsatz angeordnet als der Druckraum der Servoeinrichtung des zweiten Schaltelementes;
- der Druckausgleichsraum der Servoeinrichtung des sechsten Schaltelementes ist näher am Vorschaltradsatz angeordnet als der Druckraum der Servoeinrichtung des sechsten Schaltelementes.

In Verbindung mit einer Anordnung, bei der das Lamellenpaket des sechsten Schaltelementes in axialer Richtung gesehen zumindest teilweise radial oberhalb eines Lamellenpaketes des zweiten Schaltelementes angeordnet ist; ergeben sich insbesondere folgende sinnvolle Varianten, deren Merkmale zumindest zum Teil auch miteinander kombiniert sein können:
- das Lamellenpaket und die Servoeinrichtung des zweiten Schaltelementes sind zumindest weitgehend innerhalb eines Kupplungsraumes des sechsten Schaltelementes angeordnet, der durch einen Außenfamellenträger des sechsten Schaltelementes gebildet wird;
- die Servoeihrichtungen des zweiten und sechsten Schaltelementes sind axial benachbart zum Vorschaltradsatz angeordnet, wobei die Lamellenpakete des zweiten und sechsten Schaltelementes auf der dem Vorschaltradsatz abgewandten Seite der Servoeinrichtungen des zweiten und sechsten Schaltelementes angeordnet sind;
- der Druckraum der Servoeinrichtung des zweiten Schaltelementes ist axial benachbart zu dem Druckausgleichsraum der Servoeinrichtung des sechsten Schaltelementes angeordnet, insbesondere getrennt von diesem durch eine Mantelfläche des für das zweite und sechste Schaltelement gemeinsamen Lamellenträgers;
- die Druckräume der Servoeinrichtungen des zweiten und sechsten Schaltelementes sind zueinander axial benachbart angeordnet, insbesondere getrennt voneinander durch eine Mantelfläche des für das zweite und sechste Schaltelement, gemeinsamen Lamellenträgers;
- der Druckraum der Servoeinrichtung des sechsten Schaltelementes ist in axialer Richtung gesehen zumindest überwiegend radial über dem Druckraum der Servoeinrichtung des zweiten Schaltelementes angeordnet;
- der Druckausgleichsraum der Servoeinrichtung des sechsten Schaltelementes ist in axialer Richtung gesehen zumindest überwiegend radial über dem Druckausgleichsraum der Servoeinrichtung des zweiten Schaltelementes angeordnet;
- der Druckausgleichsraum der Servoeinrichtung des sechsten Schaltelementes wird über den Druckausgleichsraum der Servoeinrichtung des zweiten Schaltelementes mit Schmiermittel befüllt;
- der Druckraum der Servoeinrichtung des zweiten Schaltelementes ist näher am Vorschaltradsatz angeordnet als der Druckausgleichsraum der Servoeinrichtung des zweiten Schaltelementes;
- der Druckraum der Servoeinrichtung des sechsten Schaltelementes ist näher am Vorschaltradsatz angeordnet als der Druckausgleichsraum der Servoeinrichtung des sechsten Schaltelementes.

In Verbindung mit einer Anordnung, bei der die Lamellenpakete des zweiten und sechsten Schaltelementes axial nebeneinander angeordnet sind, ergeben sich insbesondere folgende sinnvolle Varianten, deren Merkmale auch miteinander kombiniert sein können:
- der Druckraum der Servoeinrichtung des sechsten Schaltelementes ist näher am Vorschaltradsatz angeordnet als der Druckraum der Servoeinrichtung des zweiten Schaltelementes;
- der Kolben der Servoeinrichtung des sechsten Schaltelementes (bzw. ein mit diesem Kolben verbundenes Betätigungselement zur Betätigung der Lamellen des sechsten Schaltelementes) umgreift die Lamellenpakete des zweiten und sechsten Schaltelementes in axialer Richtung radial außen.

In Verbindung mit einer Anordnung, bei der das zweite Schaltelement räumlich gesehen zumindest teilweise in einem Bereich axial zwischen Vorschaitradsatz und Hauptradsatz und das sechste Schaltelement räumlich gesehen zumindest teilweise auf der dem Hauptradsatz abgewandten Seite des Vorschaltradsatzes angeordnet sind und das sechste Schaltelement über einen dynamischen Druckausgleich verfügt, ergeben sich insbesondere folgende sinnvolle Variante:
- der Druckraum der Servoeinrichtung des sechsten Schaltelementes ist näher am Vorschaltradsatz angeordnet als der Druckausgleichsraum eines dynamischen Druckausgleichs der Servoeinrichtung des sechsten Schaltelementes;
- der Druckausgleichsraum der Servoeinrichtung des sechsten Schaltelementes ist näher am Vorschaltradsatz angeordnet als der Druckraum der Servoeinrichtung des sechsten Schaltelementes.

In Verbindung mit einer Anordnung, bei der das zweite Schaltelement räumlich gesehen zumindest teilweise auf der dem Hauptradsatz abgewandten Seite des Vorschaltradsatzes und das sechste Schaltelement räumlich gesehen zumindest teilweise in einem Bereich axial zwischen Vorschaltradsatz und Hauptradsatz angeordnet sind und das sechste Schaltelement über einen dynamischen Druckausgleich verfügt, ist zweckmäßigerweise der Druckausgleichsraum der Servoeinrichtung des sechsten Schaltelementes näher am Vorschaltradsatz angeordnet als der Druckraum der Servoeinrichtung des sechsten Schaltelementes.

Entsprechend der zuvor genannten erfindungsgemäßen Bauteilanordnungen kann vorgesehen sein, dass das mit dem Ausgangselement des Vorschaltradsatzes verbundene Eingangselement des zweiten Schaltelementes und/oder das mit der Antriebswelle des Getriebes verbundene Eingangselement des sechsten Schaltelementes die Lamellenpakete des zweiten und sechsten Schaltelementes in axialer Richtung radial außen umgreift. Zusätzlich oder alternativ dazu kann das mit dem ersten Eingangselement des Hauptradsatzes verbundene Ausgangselement des zweiten Schaltelementes und das mit dem ersten Eingangselement des Hauptradsatzes verbundene Ausgangselement des sechsten Schaltelementes das erste und fünfte Schaltelement in axialer Richtung radial außen vollständig übergreifen. Alternativ kann das Ausgangselement des zweiten Schaltelementes einen Kupplungsraum des sechsten Schaltelementes, der durch einen Außenlamellenträger dieses sechsten

Schaltelementes gebildet wird, in axialer Richtung durchgreifen.

Die Erfindung wird im folgenden anhand der Figuren näher erläutert, wobei die Bezugszeichen vergleichbarer Bauelemente in allen Figuren auch gleichartig bezeichnet sind. Es zeigen:
- • Fig. 1A: ein Getriebeschema gemäß dem gattungsgemäßen Stand der Technik;
- • Fig. 1B: ein Schaltschema des Getriebes gemäß Fig. 1;
- • Fig. 1C: ein Drehzahlplan des Getriebes gemäß Fig. 1;
- • Fig. 2: ein beispielhaftes erstes erfindungsgemäßes Getriebeschema;
- • Fig. 3: ein beispielhaftes zweites erfindungsgemäßes Getriebeschema;
- • Fig. 4: ein beispielhaftes drittes erfindungsgemäßes Getriebeschema;
- • Fig. 5: ein beispielhaftes viertes erfindungsgemäßes Getriebeschema;
- • Fig. 6: ein beispielhaftes fünftes erfindungsgemäßes Getriebeschema;
- • Fig. 7: ein beispielhaftes sechstes erfindungsgemäßes Getriebeschema;
- • Fig. 8: ein beispielhaftes siebtes erfindungsgemäßes Getriebeschema;
- • Fig. 9: ein beispielhaftes achtes erfindungsgemäßes Getriebeschema;
- • Fig. 10: ein beispielhaftes neuntes erfindungsgemäßes Getriebeschema;
- • Fig.11: ein beispielhaftes zehntes erfindungsgemäßes Getriebeschema;
- • Fig. 12: ein beispielhaftes elftes erfindungsgemäßes Getriebeschema;
- • Fig. 13: ein beispielhaftes zwölftes erfindungsgemäßes Getriebeschema;
- • Fig. 14: ein beispielhaftes dreizehntes erfindungsgemäßes Getriebeschema;
- • Fig. 15: ein beispielhaftes vierzehntes erfindungsgemäßes Getriebeschema;
- • Fig. 16: ein beispielhaftes fünfzehntes erfindungsgemäßes Getriebeschema;
- • Fig. 17: ein beispielhaftes sechzehntes erfindungsgemäßes Getriebeschema, basierend auf dem Getriebeschema gemäß Fig. 9, mit einem ersten alternativen Hauptradsatz;
- • Fig. 18: ein beispielhaftes siebzehntes erfindungsgemäßes Getriebeschema, basierend auf dem Getriebeschema gemäß Fig. 9, mit einem zweiten alternativen Hauptradsatz;
- • Fig. 19: ein beispielhaftes achtzehntes erfindungsgemäßes Getriebeschema, basierend auf dem Getriebeschema gemäß Fig. 18;
- • Fig. 20: ein beispielhaftes neunzehntes erfindungsgemäßes Getriebeschema, basierend auf dem Getriebeschema gemäß Fig. 18, mit einem dritten alternativen Hauptradsatz;
- • Fig. 21A: ein beispielhaftes zwanzigstes erfindungsgemäßes Getriebeschema, basierend auf dem Getriebeschema gemäß Fig. 18, mit einem vierten alternativen Hauptradsatz;
- • Fig. 21B: ein Drehzahlplan des Getriebes gemäß Fig. 21A;
- • Fig. 22: ein beispielhaftes einundzwanzigstes erfindungsgemäßes Getriebeschema; und
- • Fig. 23: ein beispielhaftes zweiundzwanzigstes erfindungsgemäßes Getriebeschema.

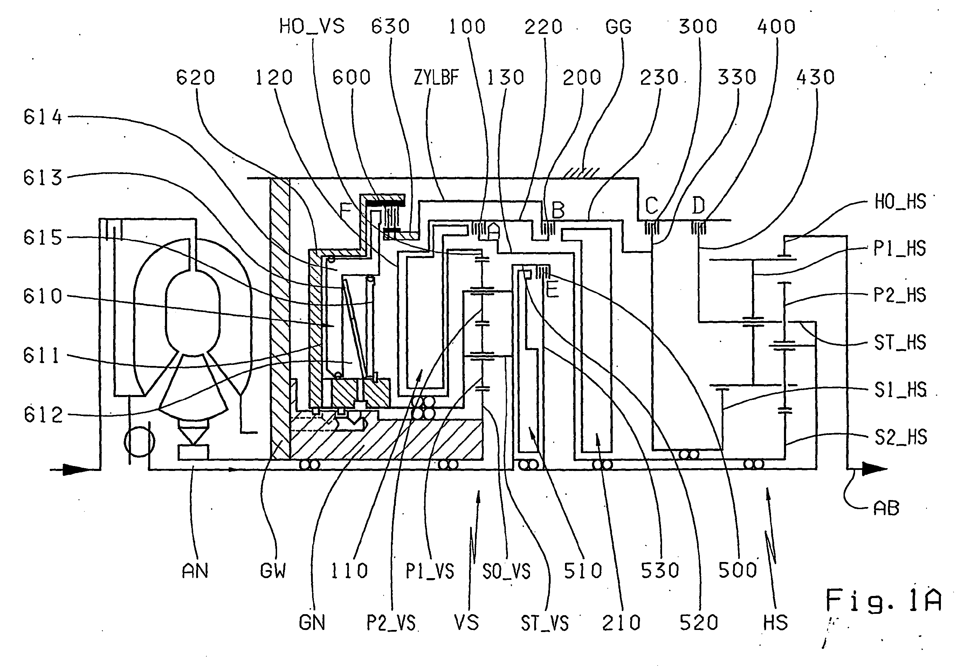

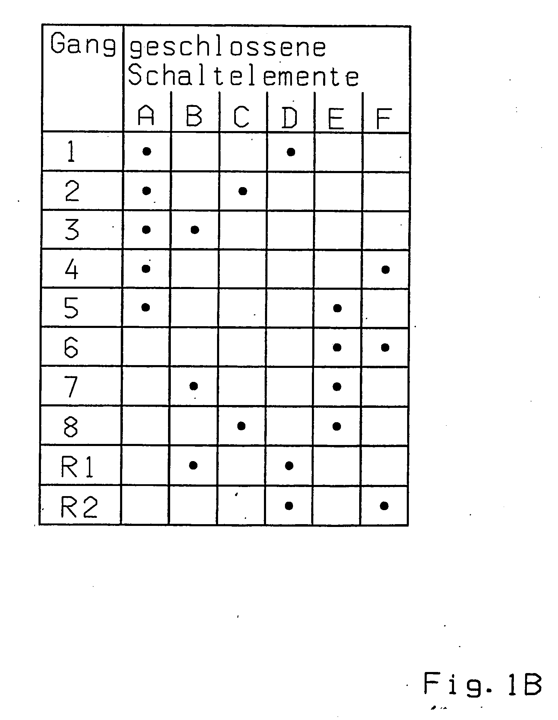

Zum besseren Verständnis wird zunächst der der Erfindung zugrundeliegende Stand der Technik erläutert. Fig. 1 A zeigt dabei das Getriebeschema gemäß DE 10318565.8 nicht norveröffent licht, Fig. 1B das entsprechende Schaltschema. In Fig. 1A ist mit AN eine Antriebswelle des Automatgetriebes bezeichnet, die mit einem (nicht dargestellten) Antriebsmotor des Automatgetriebes wirkverbunden ist, im dargestellten Beispiel über einen Drehmomentwandler mit Torsionsdämpfer und Wandlerüberbrückungskupplung. Mit AB ist eine koaxial zur Antriebswelle AN angeordnete Abtriebswelle des Automatgetriebes bezeichnet, die mit mindestens einer Antriebsachse des Kraftfahrzeugs wirkverbunden ist. Selbstverständlich könnte anstelle des Drehmomentwandlers auch eine Reibkupplung als Anfahrelement des Automatgetriebes zwischen Antriebsmotor und Automatgetriebe angeordnet sein. Auch könnte der Antriebsmotor nur über einen einfachen Torsionsdämpfer oder ein Zweimassenschwungrad oder eine starre Welle mit der Antriebswelle AN des Getriebes verbunden sein, wobei in diesem Fall ein innerhalb des Automatgetriebes angeordnetes Reibschaltelement als Anfahrelement des Getriebes ausgebildet sein muß.

Das Automatgetriebe weist einen Vorschaltradsatz VS und einen koaxial neben (aber nicht unmittelbar neben) diesem Vorschaltradsatz VS angeordneten Hauptradsatz HS auf. Der Vorschaltradsatz VS ist als Plus-Planetenradsatz in Doppelplanetenbauweise ausgeführt, mit einem Hohlrad HO_VS, mit einem Sonnenrad SO_VS, sowie mit einem aus zwei Einzelstegen gebildeten Steg ST_VS, an dem innere Planetenräder P1_VS, die mit dem Sonnenrad SO_VS kämmen, und äußere Planetenräder P2_VS, die mit den inneren Planetenrädern P1_VS und dem Hohlrad HO_VS kämmen, verdrehbar gelagert sind. Dabei arbeitet dieser Vorschaltradsatz VS_als nicht schaltbare Reduzierstufe und erzeugt eine Ausgangsdrehzahl, die vom Betrag her kleiner ist als eine Eingangsdrehzahl der Antriebswelle AN des Automatgetriebes. Hierzu ist das Sonnenrad SO_VS des Vorschaltradsatzes VS an einem Getriebegehäuse GG festgesetzt und der Steg ST_VS ständig mit der Antriebswelle AN verbunden. Das Hohlrad HO_VS bildet also das Ausgangselement des Vorschaltradsatzes VS und ist über zwei Schaltelemente A, B mit einzelnen Eingangselementen des Hauptradsatzes HS verbindbar.

Der Hauptradsatz HS ist als gekoppeltes Zweisteg-Vierwellen-Planetengetriebe ausgebildet, mit drei nicht miteinander gekoppelten Eingangselementen und einem Ausgangselement, in Bauform eines Ravigneaux-Radsatzes mit zwei Sonnenrädern S1_HS und S2_HS, einem Hohlrad HO_HS sowie einem gekoppelten Steg ST_HS, an dem lange Planetenräder P1_HS, die mit dem ersten Sonnenrad S1_HS und dem Hohlrad HO_HS kämmen, und kurze Planetenräder P2_HS, die mit dem zweiten Sonnenrad S2_HS und den langen Planetenrädern P1_HS kämmen, verdrehbar gelagert sind. Dabei bildet das erste Sonnenrad S1_HS das erste Eingangselement des Hauptradsatzes HS, das zweite Sonnenrad S2_HS das zweite Eingangselement des Hauptradsatzes HS, der gekoppelte Steg ST_HS das dritte Eingangselement des Hauptradsatzes HS und das Hohlrad HO_HS das Ausgangselement des Hauptradsatzes HS.

Das Automatgetriebe weist insgesamt sechs Schaltelemente A bis F auf: Die Schaltelemente A, B, E und F sind als Kupplung ausgebildet, die Schaltelemente C und D als Bremse. Hierzu ist das zweite Sonnenrad S2_HS des Hauptradsatzes HS über das erste Schaltelement A mit dem Hohlrad HO_VS des Vorschaltradsatzes VS verbindbar. Weiterhin ist hierzu das erste Sonnenrad S1_HS des Hauptradsatzes HS über das zweite Schaltelement B mit dem Hohlrad HO_VS des Vorschaltradsatzes VS verbindbar, über das dritte Schaltelement C an dem Getriebegehäuse GG festsetzbar und über das sechste Schaltelement F mit der-Antriebswelle AN verbindbar. Weiterhin ist hierzu der Steg ST_HS des Hauptradsatzes HS über das vierte Schaltelement D an dem Getriebegehäuse GG festsetzbar und über das fünfte Schaltelement E mit der Antriebswelle AN verbindbar. Infolge dieser Anbindung der einzelnen Elemente des Hauptradsatzes HS an die einzelnen Schaltelemente ist der Steg ST_HS des Hautradsatzes HS also durch ein gleichzeitiges Schließen des fünften und sechsten Schaltelementes E, F auch mit dem ersten Sonnenrad S1_HS des Hauptradsatzes HS verbindbar. Das Hohlrad HO_HS des Hauptradsatzes HS ist ständig und ausschließlich mit der Abtriebswelle AB verbunden.

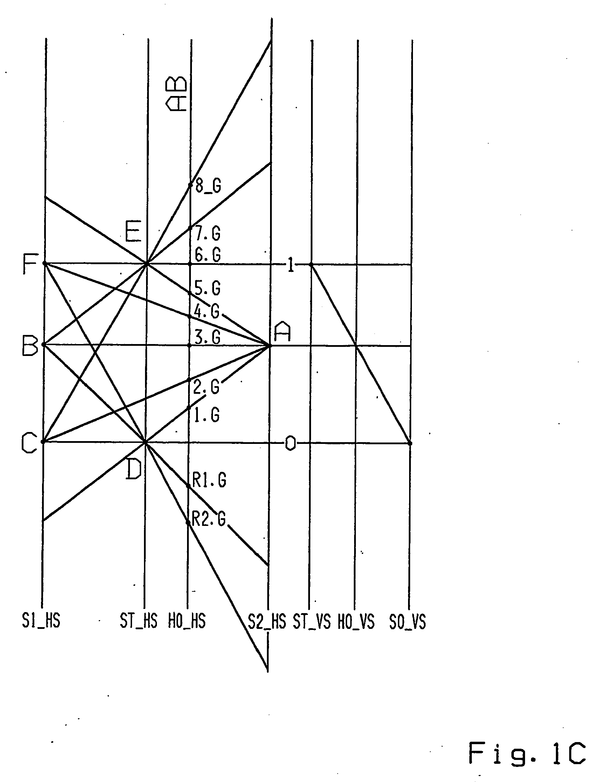

Fig. 1B zeigt ein Schaltschema des in Fig. 1A dargestellten Mehrstufen-Automatgetriebes. Es sind insgesamt acht Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Im ersten Gang "1" sind Kupplung A und Bremse D geschlossen, im zweiten Gang "2" Kupplung A und Bremse C, im dritten Gang "3" die Kupplungen A und B, im vierten Gang "4" die Kupplungen A und F, im fünften Gang "5" die Kupplungen A und E, im sechsten Gang "6" die Kupplungen E und F, im siebten Gang "7" die Kupplungen B und E, und im achten Gang "8" Bremse C und Kupplung E. In einem ersten Rückwärtsgang "R1" sind Kupplung B und Bremse D geschlossen. Es kann auch ein zweiter Rückwärtsgang "R2" vorgesehen sein, in dem Kupplung F und Bremse D geschlossen sind. Fig. 1C zeigt einen Drehzahlplan des in Fig. 1A dargestellten Mehrstufen-Automatgetriebes.

Zurückkommend auf Fig. 1A, sind die Lamellenpakete sowie die Ein-und Ausgangselemente der Schaltelemente einheitlich bezeichnet. So ist das Lamellenpaket des ersten Schaltelementes A mit 100 bezeichnet, das Eingangselement des ersten Schaltelementes A mit 120, das Ausgangselement des ersten Schaltelementes A mit 130, sowie eine Servoeinrichtung zur Betätigung des Lamellenpaketes 100 des ersten Schaltelementes A mit 110. Entsprechend sind die Lamellenpakete der anderen Schaltelemente B, C, D, E und F mit 200, 300, 400, 500 und 600 bezeichnet, die Eingangselemente der anderen Schaltelemente B, E und F mit 220, 520 und 620. Entsprechend sind auch die Ausgangselemente der anderen Schaltelemente B, C, D, E und F mit 230, 330, 430, 530 und 630 bezeichnet, sowie die Servoeinrichtungen der anderen Kupplungen B, E und F zum Betätigen deren jeweiligen Lamellenpakete 200 bzw. 500 bzw. 600 mit 210, 510 und 610.

Hinsichtlich der räumlichen Anordnung der Schaltelemente und Radsätze relativ zueinander innerhalb des mit GG bezeichneten Getriebegehäuses lehrt die DE 10318565.8 folgendes: Das als Kupplung ausgebildete fünfte Schaltelement E ist räumlich gesehen axial zwischen Vorschaltradsatz VS und Hauptradsatz HS angeordnet, axial ummittelbar angrenzend an den Vorschaltradsatz VS. Das ebenfalls als Kupplung ausgebildete zweite Schaltelement B ist ebenfalls axial zwischen Vorschaltradsatz VS und Hauptradsatz HS angeordnet, wobei das Lamellenpaket 200 dieser Kupplung B räumlich gesehen in etwa radial über dem Lamellenpaket 500 der Kupplung E angeordnet ist und die Servoeinrichtung 210 der Kupplung B axial an die Kupplung E auf deren dem Vorschaltradsatz VS abgewandten Seite angrenzt. Axial in Richtung Hauptradsatz HS gesehen schließen sich an die Kupplung B zuerst das als Bremse ausgebildete dritte Schaltelement C, dann das ebenfalls als Bremse ausgebildete vierte Schaltelement D und dann der Hauptradsatz HS an. Das Lamellenpaket 100 des als Kupplung ausgebildete ersten Schaltelementes A ist räumlich gesehen in etwa über dem Vorschaltradsatz VS angeordnet. Die Servoeinrichtung 110 dieser Kupplung A ist zumindest überwiegend auf der dem Hauptradsatz HS abgewandten Seite des Vorschaltradsatzes VS angeordnet. Auf der dem Vorschaltradsatz VS abgewandten Seite der Servoeinrichtung 110 der Kupplung A, räumlich gesehen axial zwischen der Kupplung A und einer antriebsseitigen getriebegehäusefesten Gehäusewand GW, also auf der dem Hauptradsatz HS abgewandten Seite von Kupplung A und Vorschaltradsatz VS, ist das als Kupplung ausgebildete sechste Schaltelement F angeordnet.

Als Ausführungsbeispiel für eine Servoeinrichtung eines Schaltelementes ist in Fig. 1A die Servoeinrichtung 610 des sechsten Schaltelementes F näher detailliert. So ist diese Servoeinrichtung 610 innerhalb eines zylinderförmigen Lamellenträgers angeordnet, der das Eingangselement 620 der Kupplung F bildet und entsprechend stets mit Drehzahl der Antriebswelle AN des Getriebes rotiert. Die Servoeinrichtung 610 weist einen Druckraum 611 auf, der durch einen Mantelflächenabschnitt des Lamellenträgers der Kupplung F und einen Kolben 614 der Servoeinrichtung 610 gebildet wird. Bei einer Druckbeaufschlagung dieses Druckraums 611 bewegt sich der Kolben 614 gegen die Kraft eines hier beispielhaft als Tellerfeder ausgebildeten Rücksfelielementes 613 der Servoeinrichtung 610 axial in Richtung des Vorschaltradsatzes VS und betätigt bzw. schließt das Lamellenpaket 600 der Kupplung F. Zur vorzugsweise vollständigen Kompensation eines dynamischen Druckes des rotierenden Druckraumes 611 weist die Servoeinrichtung 610 zusätzlich einen mit Schmiermittel drucklos befüllbaren Druckausgleichsraum 612 auf, der durch eine Fläche des Kolbens 614 und eine Stauscheibe 615 gebildet wird. Das Eingangselement 620 ist auf einer getriebegehäusefesten Nabe GN verdrehbar gelagert, die sich ausgehend von der getriebegehäusefesten Gehäusewand GW im Innenraum des Getriebegehäuses GG axial in Richtung des Vorschältradsatzes VS bis zum Sonnenrad SO_VS des Vorschaltradsatzes VS erstreckt und mit diesem Sonnenrad SO_VS verdrehfest verbunden ist. Entsprechend weist diese getriebegehäusefeste Nabe GN auch Kanäle zur Druck-und Schmiermittelzuführung zum Druckraum bzw. Druckausgleichsraum der Kupplung F auf.

Alle im folgenden erfindungsgemäßen Beispiele für ein Getriebeschema bzw. eine Bauteilanordnung gemäß der vorliegenden Erfindung basieren im Prinzip auf die Fig. 1A dargestellte kinematische Struktur des Automatgetriebes gemäß dem Stand der Technik, jeweils mit einer Antriebswelle AN, mit einer Abtriebswelle AB, mit einem als Plus-Planetenradsatz in Doppelplanetenbauweise ausgeführten Vorschaltradsatz VS, der über eines seiner Elemente stets mit der Antriebswelle verbunden ist und eine Ausgangsdrehzahl erzeugt, die niedriger ist als die Drehzahl der Antriebswelle AN, mit einem koaxial zum Vorschaltradsatz VS angeordneten Hauptradsatz HS, der aus mindestens zwei miteinander gekoppelten Planetenradsätzen gebildet wird und daher mindestens drei unabhängige Eingangselemente und ein unabhängiges Ausgangselement aufweist, sowie mit sechs Schaltelementen A bis F, durch deren selektives Schließen die Drehzahl der Antriebswelle AN über den Vorschalt- und Hauptradsatz HS derart übertragbar ist, dass zumindest acht Vorwärtsgänge gruppenschaltungsfrei schaltbar sind. Dabei ist die Ausgangsdrehzahl des Vorschaltradsatzes VS über ein erstes Schaltelement A und ein zweites Schaltelement B auf zwei verschiedene Eingangselemente des Hauptradsatzes HS übertragbar. Weiterhin ist die Drehzahl der Antriebswelle AN über ein fünftes Schaltelement E auf ein drittes Eingangselement des Hauptradsatzes übertragbar. Weiterhin ist die Drehzahl der Antriebswelle AN über ein sechstes Schaltelement F auf das Eingangselement des Hauptradsatzes HS übertragbar, das auch über das zweite Schaltelement B mit dem Ausgangselement des Vorschaltradsatzes VS verbindbar ist. Weiterhin ist das Ausgangselement des Hauptradsatzes HS stets mit der Abtriebswelle AB des Getriebes verbunden.

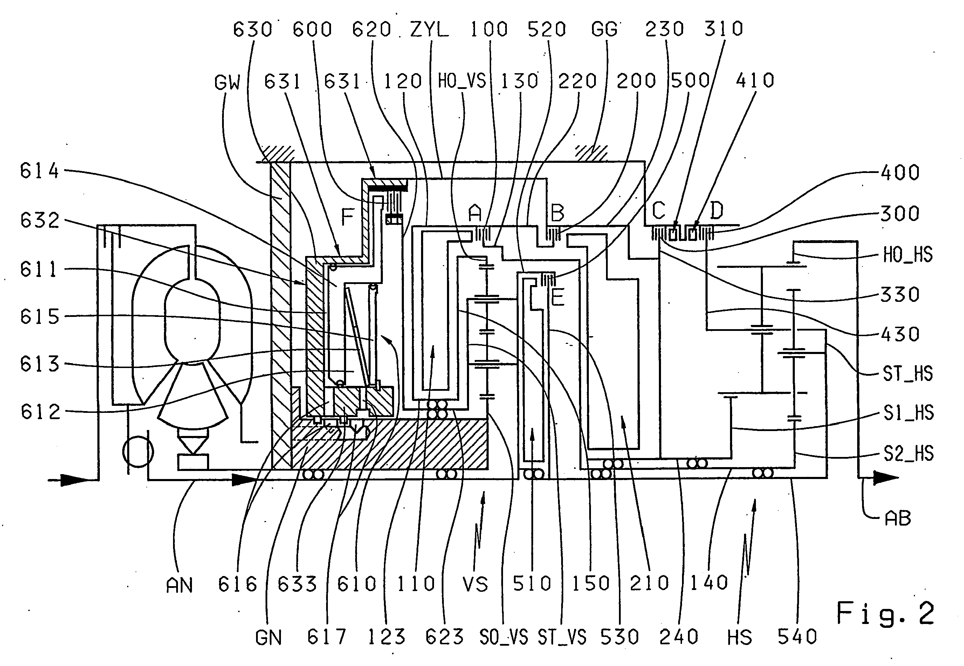

Die in den Figuren 2 bis 8 dargestellten ersten sieben verschiedenen erfindungsgemäßen Getriebeschemata basieren zum einen auf den in Fig. 1A dargestellten Radsatztyp des Hauptradsatzes HS, nämlich einem Ravigneaux-Hauptradsatz, zum anderen im wesentlichen auch auf der in Fig. 1A dargestellten Bauteilanordnung der Radsätze und Schaltelemente innerhalb des Getriebes.

Anhand Fig. 2 wird nun ein erstes beispielhaftes Getriebeschema gemäß der vorliegenden Erfindung erläutern, basierend auf dem in Fig. 1A dargestellten Getriebeschema gemäß dem Stand der Technik. Wie aus Fig. 2 leicht ersichtlich, wurde die kinematische Struktur des Getriebes mit einer Antriebswelle AN und einer koaxial zur Antriebswelle AN angeordneten Abtriebswelle AB, mit einem als Plus-Planetenradsatz in Doppelplanetenbauweise ausgeführten Vorschaltradsatz VS, mit einem koaxial zum Vorschaltradsätz VS angeordneten und als gekoppeltes Zweisteg-Vierwetten-Planetengetriebe in Bauform eines Ravigneaux-Radsatzes mit zwei Sonnenrädern S1_HS, S2_HS und nur einem Hohlrad HO_HS ausgebildeten Hauptradsatz HS, sowie mit sechs selektiv paarweise schaltbaren Schaltelementen A bis F zur Übertragung einer Drehzahl der Antriebswelle AN über den Vorschalt- und Hauptradsatz VS, HS auf die Abtriebswelle AB, vollständig aus Fig. 1A übernommen. Wie in Fig. 1A also ist ein Sonnenrad SO_VS des Vorschaltradsatzes VS am Getriebegehäuse festgesetzt und ein gekoppelter Steg ST_VS des Vorschaltradsatzes VS stets mit der Antriebswelle AN des Getriebes verdrehfest verbunden, wodurch ein Hohlrad HO_VS des Vorschaltradsatzes VS eine gegenüber der Drehzahl der Antriebswelle AN reduzierte Ausgangsdrehzahl des Vorschaltradsatzes VS erzeugt. Wie in Fig. 1A also bildet das erste Sonnenrad S1_HS des Hauptradsatzes HS dessen erstes Eingangselement, welches über die Kupplung B mit dem Hohlrad HO_VS des Vorschaltradsatzes VS und über die Kupplung F mit der Antriebswelle AN verbindbar ist und über die Bremse C am Getriebegehäuse GG festsetzbar ist, das zweite Sonnenrad S2_HS des Hauptradsatzes HS dessen zweites Eingangselement, welches über die Kupplung A mit dem Hohlrad HO_VS des Vorschaltradsatzes VS verbindbar ist, ein gekoppelter Steg ST_HS des Hauptradsatzes HS dessen drittes Eingangselement, welches über die Kupplung E mit der Antriebswelle AN verbindbar ist und über die Bremse D am Getriebegehäuse GG festsetzbar ist, und das einzige Hohlrad HO_HS des Hauptradsatzes HS dessen Ausgangselement, welches stets verdrehfest mit der Abtriebswelle AB verbunden ist. Auf mögliche alternative Ausgestaltungen des Hauptradsatzes HS wird später noch näher eingegangen.

Aus Fig. 2 ist weiterhin leicht ersichtlich, dass auch die Bauteilanordnung der Radsätze und Schaltelemente innerhalb des Getriebes im wesentlichen aus Fig. 1A übernommen wurde. Die Änderungen gegenüber Fig. 1A betreffen die kinematische Anbindung des auf der hauptradsatzfernen Seite des Vorschaltradsatzes VS und axial neben der getriebegehäusefesten Gehäusewand GW radial oberhalb der getriebegehäusefesten Nabe GN angeordneten Kupplungszylinders des sechsten Schaltelementes F, in dem das Lamellenpaket 600 dieser Kupplung F und die Servoeinrichtung 610 zur Betätigung dieses Lamellenpaketes 600 angeordnet sind. Bildete dieser Kupplungszylinder in Fig. 1A noch das mit der Antriebswelle AN verdrehfest verbundene Eingangselement der Kupplung F, so bildet dieser Kupplungszylinder in Fig. 2 nunmehr das Ausgangselement 630 der Kupplung F, welches entsprechend der vorgegebenen kinematischen Kopplung der Kupplung F verdrehfest mit dem ersten Sonnenrad S1_HS des Hauptradsatzes HS - das hier ja hier beispielhaft das erste Eingangselement des Hauptradsatzes HS bildet - verbunden ist. Somit rotiert die Servoeinrichtung 610 der Kupplung F stets mit Drehzahl dieses ersten Sonnenrades S1_HS.

Wie in Fig. 1A grenzt die Kupplung E axial unmittelbar an den Vorschaltradsatz VS an dessen dem Hauptradsatz HS zugewandten Seite an. Das Eingangselement 520 der Kupplung E ist mit einem hauptradsatznahen Stegblech des gekoppelten Stegs ST_VS des Vorschaltradsatzes VS und mit der Antriebswelle AN verbunden und beispielhaft als Außenlamellenträger zur Aufnahme von außenverzahnten Lamellen des Lamellenpaketes 500 der Kupplung E ausgebildet. Das Ausgangselement 530 der Kupplung E ist beispielhaft als weitgehend scheibenförmiger Innenlamellenträger zur Aufnahme von innenverzahnten Lamellen des Lamellenpaketes 500 der Kupplung E ausgeführt und über eine Stegwelle 540 mit dem gekoppelten Steg ST_HS des Hauptradsatzes HS - der ja hier beispielhaft das dritte Eingangselement des Hauptradsatzes HS bildet - verdrehfest verbunden, wobei die Stegwelle 540 den Hauptradsatz HS in axialer Richtung zentrisch durchgreift. Geometrisch ist das Lamellenpaket 500 der Kupplung E beispielhaft im Durchmesserbereich des Hohlrades HO_VS des Vorschaltradsatzes VS angeordnet. Eine (in Fig. 2 zur Vereinfachung nur schematisch dargestellte) Servoeinrichtung 510 zur Betätigung des ihr zugeordneten Lamellenpaketes 500 ist innerhalb eines Zylinderraums angeordnet, der durch das Eingangselement 520 bzw. den Außenlamellenträger der Kupplung E gebildet wird. Beim Schließen der Kupplung E betätigt diese Servoeinrichtung 510 das ihr zugeordnete Lamellenpaket 500 axial in Richtung Hauptradsatz HS. Zweckmäßigerweise weist diese Servoeinrichtung 510 auch einen dynamischen Druckausgleich auf, da sie stets mit Drehzahl der Antriebswelle AN rotiert.

Wie in Fig. 1A ist ein Lamellenpaket 100 der Kupplung A in einem Bereich radial über dem Vorschaltradsatz VS angeordnet. Ein mit dem Hohlrad HO_VS des Vorschaltradsatz VS verdrehfest verbundenes Eingangsetement 120 dieser Kupplung A ist beispielhaft als Außenlamellenträger zur Aufnahme von außenverzahnten Lamellen dieses Lamellenpaketes 100 ausgebildet und nimmt in seinem Zylinderraum eine (in Fig. 2 zur Vereinfachung nur schematisch dargestellte) Servoeinrichtung 110 zum Betätigen des Lamellenpaketes 100 auf, wobei diese Servoeinrichtung 110 räumlich gesehen weitgehend auf der dem Hauptradsatz HS abgewandten Seite des Vorschaltradsatzes VS angeordnet ist und das ihr zugeordnete Lamellenpaket 100 beim Schließen der Kupplung A axial in Richtung Hauptradsatz HS betätigt. Zweckmäßigerweise weist diese Servoeinrichtung 110 auch einen dynamischen Druckausgleich auf, da sie stets mit Drehzahl des Hohlrads HO_VS des Vorschaltradsatzes VS rotiert. Das Ausgangselement 130 der Kupplung A ist beispielhaft als zylinderförmiger Innenlamellenträger zur Aufnahme von innenverzahnten Lamellen des Lamellenpaketes 100 der Kupplung A ausgeführt, umschließt die Kupplung E radial und ist über eine zweite Sonnenwelle 140 mit dem vorschaltradsatzfernen zweiten Sonnenrad S2_HS des Hauptradsatzes HS - das ja hier beispielhaft das zweite Eingangselement des Hauptradsatzes HS bildet - verdrehfest verbunden. Dabei durchgreift diese zweite Sonnenwelle 140 zumindest das vorschaltradsatznahe erste Sonnenrad S1_HS des Hauptradsatzes HS in axialer Richtung zentrisch und umschließt dabei die Stegwelle 540. Vorzugsweise ist die zweite Sonnenwelle 140 auch auf der Stegwelle 540 verdrehbar gelagert.

Wie in Fig. 1A ist ein Lamellenpaket 200 der Kupplung B in einem Bereich radial über der Kupplung E angeordnet. Ein mit dem Eingangselement 120 bzw. Außenlamellenträger der Kupplung A verdrehfest verbundenes Eingangselement 220 dieser Kupplung B ist beispielhaft als Innenlamellenträger zur Aufnahme von innenverzahnten Lamellen des Lamellenpaketes 200 der Kupplung B ausgebildet. Räumlich gesehen verläuft radial zwischen dem Eingangselement 220 bzw. Innenlamellenträger der Kupplung B und dem Außendurchmesser des Eingangselementes 520 bzw. Außenlamellenträgers der radial innenliegenden Kupplung E ein zylindrischer Abschnitt des Ausgangselementes 130 bzw. Innenlamellenträgers der Kupplung A. Ein Ausgangselement 230 der Kupplung B ist entsprechend als Außenlamellenträger zur Aufnahme von außenverzahnten Lamellen des Lamellenpaketes 200 der Kupplung B ausgebildet. Dieses Ausgangselement 230 der Kupplung B ist geometrisch in Form eines in Richtung Vorschaltradsatz VS hin geöffneten Topfes ausgebildet und ist über eine erste Sonnenwelle 240 mit dem vorschaltradsatznahen ersten Sonnenrad S1_HS des Hauptradsatzes HS - das ja hier beispielhaft das erste Eingangsetement des Hauptradsatzes HS bildet - verdrehfest verbunden. Diese erste Sönnenwelle 240 umschließt einen Abschnitt der zweiten Sonnenwelle 140 radial und ist vorzugsweise auch an dieser zweiten Sonnenwelle 140 verdrehbar gelagert. Beispielsweise können Nabe des Ausgangselementes 230 und Sonnenwelle 240 auch einstückig ausgeführt sein. In seinem Zylinderraum nimmt das Ausgangselement 230 bzw. der Außenlamellenträger der Kupplung B eine (in Fig. 2 zur Vereinfachung nur schematisch dargestellte) Servoeinrichtung 210 zum Betätigen des Lamellenpaketes 200 der Kupplung B auf, wobei diese Servoeinrichtung 210 räumlich gesehen auf der dem Hauptradsatz HS zugewandten Seite des Lamellenpaketes 200 angeordnet ist und axial an einen scheibenförmigen Abschnitt des Ausgangselementes 130 bzw. Innenlamellenträgers der Kupplung A angrenzt. Beim Schließen der Kupplung B betätigt diese Servoeinrichtung 210 das ihr zugeordnete Lamellenpaket 200 axial in Richtung Vorschaltradsatz VS. Zweckmäßigerweise weist die Servoeinrichtung 210 auch einen dynamischen Druckausgleich auf, da sie stets mit Drehzahl des ersten Sonnenrades S1_HS des Hauptradsatzes HS rotiert.

Wie bereits erwähnt, ist das Ausgangselement 630 der Kupplung F als Außenlamellenträger zur Aufnahme von außenverzahnten Lamellen des Lamellenpaketes 600 der Kupplung F ausgebildet, räumlich gesehen unmittelbar benachbart zur getriebegehäusefesten Gehäusewand GW, die hier beispielhaft eine Außenwand des Getriebegehäuses GG bildet, die einem in Fig. 2 nicht näher dargestellten Antriebsmotor des Getriebes zugewandt ist, wobei dieser Antriebsmotor hier beispielhaft über einen Drehmomentwandler mit der Antriebswelle AN wirkverbunden ist. Insofern kann die getriebegehäusefeste Nabe GN, die sich ausgehend von der Gehäusewand GW in den Getriebeinnenraum axial in Richtung Vorschaltradsatz VS erstreckt und an der das Sonnenrad SO_VS des Vorschaltradsatzes VS festgesetzt ist und radial über der auch die Kupplung F angeordnet ist, auch eine Leitradwelle dieses Drehmomentwandlers sein. Geometrisch ist das Ausgangselement 630 bzw. der Außenlamellenträger der Kupplung F als ein in Richtung Vorschaltradsatz VS bzw. Hauptradsatz HS hin geöffneter Topf ausgebildet, mit einer Nabe 633, einem scheibenförmigen Topfboden 632 und einem abgewinkelten zylindrischen Abschnitt 631. Die Nabe 633 des Ausgangselementes 630 bzw. Außenlamellenträgers der Kupplung F ist auf der getriebegehäusefesten Nabe GN verdrehbar gelagert. Der sich an diese Nabe 633 anschließend scheibenförmige Topfboden 632 des Ausgangselementes 630 bzw. Außenlamellenträgers der Kupplung F erstreckt sich parallel angrenzend zur Gehäusewand GW radial nach außen und geht an einem Außendurchmesser in den abgewinkelten zylindrischen Abschnitt 631 des Ausgangselementes 630 bzw. Außenlamellenträgers der Kupplung F über. Dieser abgewinkelte zylindrische Abschnitt 631 erstreckt sich axial in Richtung Vorschaltradsatz VS hier beispielhaft in etwa bis zur Mitte der getriebegehäusefesten Nabe GN und weist im Bereich seines vorschaltradsatznahen Endes an seinem Innendurchmesser ein Mitnahmeprofil zur Aufnahme der Außenlamellen des Lamellenpaketes 600 der Kupplung F auf.

Die Servoeinrichtung 610 der Kupplung F, umfassend einen Druckraum 611, einen Druckausgleichsraum 612, einen Kolben 614, ein Rückstellelement 613 und eine Stauscheibe 615, ist vollständig innerhalb eines Zylinderraums angeordnet, der durch das Ausgangselement 630 bzw. den Außenlamellenträger der Kupplung F gebildet wird, im wesentlichen radial oberhalb der Nabe 633. Der Kolben 614 ist am Ausgangselement 630 bzw. Außenlamellenträger der Kupplung F axial verschiebbar gelagert. Entsprechend rotiert die Servoeinrichtung 610 ständig mit Drehzahl des ersten Eingangselementes (also hier des ersten Sonnenrades S1_HS) des Hauptradsatzes HS. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, wobei dieser Druckausgleichsraum 612 näher am Vorschaltradsatz VS (bzw. Hauptradsatz HS) angeordnet ist als der genannte Druckraum 611. Dabei wird der Druckraum 611 durch den Kolben 614 und durch eine Mantelfläche des Ausgangselementes 630 bzw. Außenlamellenträgers der Kupplung F gebildet. Der Druckausgleichsraum 612 wird gebildet durch den Kolben 614 und die Stauscheibe 615, welche axial an dem vorschaltradsatznahen Ende der Nabe 633 fixiert und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen die Nabe 633 des Ausgangselementes 630 bzw. Außenlamellenträgers der Kupplung F vorgespannt Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Aufgrund der Lagerung des Ausgangselementes 630 bzw. Außenlamellenträgers der Kupplung F auf der getriebegehäusefesten Nabe GN ergibt sich eine konstruktiv relativ einfache Druck- und Schmiermittelzufuhr zur Kupplung F über entsprechende Kanäle bzw. Bohrungen, die abschnittsweise innerhalb der genannten Gehäusenabe GN und abschnittsweise innerhalb der Nabe 633 des Ausgangselementes 630 der Kupplung F verlaufen. Eine Druckmittelzuführung zum Druckraum 611 der Servoeinrichtung 610 der Kupplung F ist mit 616 bezeichnet, eine Schmiermittelzuführung zum Druckausgleichsraum 612 der Servoeinrichtung 610 mit 617.

Die Drehzahl- und Drehmomentübertragung zwischen dem Ausgangselement 630 bzw. Außenlamellenträger der Kupplung F und dem ersten Sonnenrad S1_HS des Hauptradsatzes HS erfolgt über ein zylinderförmiges Verbindungselement ZYL, das Ausgangselement 230 bzw. den Außenlamellenträger der Kupplung B und die axial kurze zweite Sonnenwelle 140. Dieses zylinderförmige Verbindungselement ZYL ist geometrisch als ein in Richtung Gehäusewand GW hin geöffneter Topf ausgebildet, mit einem scheibenförmigen Topfboden und mit einer zylinderringförmigen Mantelfläche, welche den Vorschaltradsatz VS und die Kupplung A in axialer Richtung radial vollständig übergreift. Der Topfboden des Verbindungselementes ZYL ist an seinem Innendurchmesser im Bereich des Lamellenpaketes 200 der Kupplung B mit dem Ausgangselement 230 bzw. dem Außenlamellenträger der Kupplung B verdrehfest verbunden. Die sich am Außendurchmesser des genannten Topfbodens anschließende zylinderringförmigen Mantelfläche des Verbindungselementes ZYL erstreckt sich axial in Richtung Gehäusewand GW bis zum Lamellenpaket 600 der Kupplung F und ist in diesem Bereich mit dem Ausgangselementes 630 bzw. Außenlamellenträgers der Kupplung F verdrehfestverbünden, beispielsweise über ein Mitnahmeprofil.

Entsprechend der Ausbildung des Ausgangselementes 630 der Kupplung F als Außentamettenträger ist das kinematisch mit der Antriebswelle AN verbundene Eingangselement 620 der Kupplung F als Innenlamellenträger zur Aufnahme von innenverzahnten Lamellen des Lamellenpaketes 600 der Kupplung F ausgebildet. In dem in Fig. 2 dargestellten Ausführungsbeispiel weist dieses Eingangselement 620 der Kupplung F eine Nabe 623 auf, die räumlich gesehen in einen Bereich axial zwischen der Nabe 633 des Ausgangselementes 630 der Kupplung F und dem Sonnenrad SO_VS des Vorschaltradsatzes VS radial auf der getriebegehäusefesten Nabe GN verdrehbar gelagert ist. Diese Nabe 623 des Eingangselementes 620 der Kupplung F ist auf ihrer vorschaltradsatznahen Seite mit einem hauptradsatzfernen Stegblech des gekoppelten Stegs ST_VS des Vorschaltradsatzes VS verdrehfest verbunden, wobei der Steg ST_VS wiederum über sein hauptradsatznahes Stegblech mit der Antriebswelle AN verdrehfest verbunden ist. An dieser Stelle sei noch erwähnt, dass eine Nabe 123 des Eingangselementes 120 der Kupplung A auf der Nabe 623 des Eingangselementes 620 der Kopplung F verdrehbar gelagert ist, wobei diese Nabe 123 des Eingangselementes 120 der Kupplung A auf ihrer vorschaltradsatznahen Seite über eine Mitnahmescheibe 150, welche axial unmittelbar an das hauptradsatzferne Stegblech des Stegs ST_VS angrenzt, mit dem Hohlrad HO_VS des Vorschaltradsatzes VS verdrehfest verbunden ist.

Wie in Fig. 1A ist die Bremse C beispielhaft als Lamellenbremse mit einem Lamellenpaket 300 ausgebildet Dieses Lamellenpaket 300 ist räumlich gesehen in einem Bereich radial über dem Topfboden des Ausgangselementes 230 bzw. Außenlamellenträgers der Kupplung B angeordnet, in etwa auf gleichem Durchmesser wie das Lamellenpaket 200 der Kupplung B. Ein als Innenfamellenträger zur Aufnahme von innenverzahnten Lamellen des Lamellenpaketes 300 der Bremse C ausgebildetes Ausgangselement 330 der Bremse C ist wie in Fig. 1A mit dem Ausgangselement 230 bzw. Außenlamellenträger der Kupplung B im Bereich dessen Topfbodens verdrehfest verbunden und so über dieses Ausgangselement 230 mit dem ersten Sonnenrad S1_HS des Hauptradsatzes HS verbunden. Wie in Fig. 1A schließt sich die ebenfalls beispielhaft als Lamellenbremse mit einem Lamellenpaket 400 ausgebildete Bremse D in Richtung Hauptradsatz HS gesehen axial an die Bremse C an, wobei ein als Inhenlamellenträger zur Aufnahme von innenverzahnten Lamellen des Lamellenpaketes 400 ausgebildetes Ausgangselement 430 dieser Bremse D auf der dem Vorschaltradsatz VS zugewandten Seite des Hauptradsatzes HS mit dem gekoppelten Steg ST_HS des Hauptradsatzes HS - der ja hier beispielhaft das dritte Eingangselement des Hauptradsatzes HS bildet - verdrehfest verbunden ist. In dem in Fig. 2 dargestellten Ausführungsbeispiel sind die Außenfamellenträger der beiden Bremsen C und D im Getriebegehäuse GG integriert, können selbstverständlich aber auch als separate Bauteile ausgeführt sein, die dann mit dem Getriebegehäuse verdrehfest verbunden sind. In Fig. 2 angedeutet ist eine Servoeinrichtung 310 der Bremse C zum Betätigen des Lamellenpaketes 300 und eine Servoeinrichtung 410 der Bremse D zum Betätigen des Lamellenpaketes 400, wobei diese beiden Servoeinrichtungen 310, 410 hier beispielhaft axial zwischen den Lamellenpaketen 300 und 400 angeordnet sind. Selbstverständlich können Bremse C und/oder Bremse D auch als Bandbremse ausgeführt sein. Soll das Getriebeschema gemäß Fig. 2 hinsichtlich nicht koaxialem An- und Abtrieb modifiziert werden, so wird der Fachmann die Bremse D abweichend von Fig. 2 auf der dem Vorschaltradsatz VS abgewandten Seite des Hauptradsatzes HS anordnen. Speziell im Fall eines solchen nicht koaxialen An- und Abtriebs bietet sich auch für die Bremse C eine von Fig. 2 abweichende räumliche Lage innerhalb des Getriebegehäuses GG an, nämlich axial angrenzend an die Gehäusewand GW radial oberhalb des abgewinkelten Bereichs des Außenlamellenträgers 630 der Kupplung F, radial über dem Druckraum 611 der Servoeinrichtung 610 der Kupplung F.

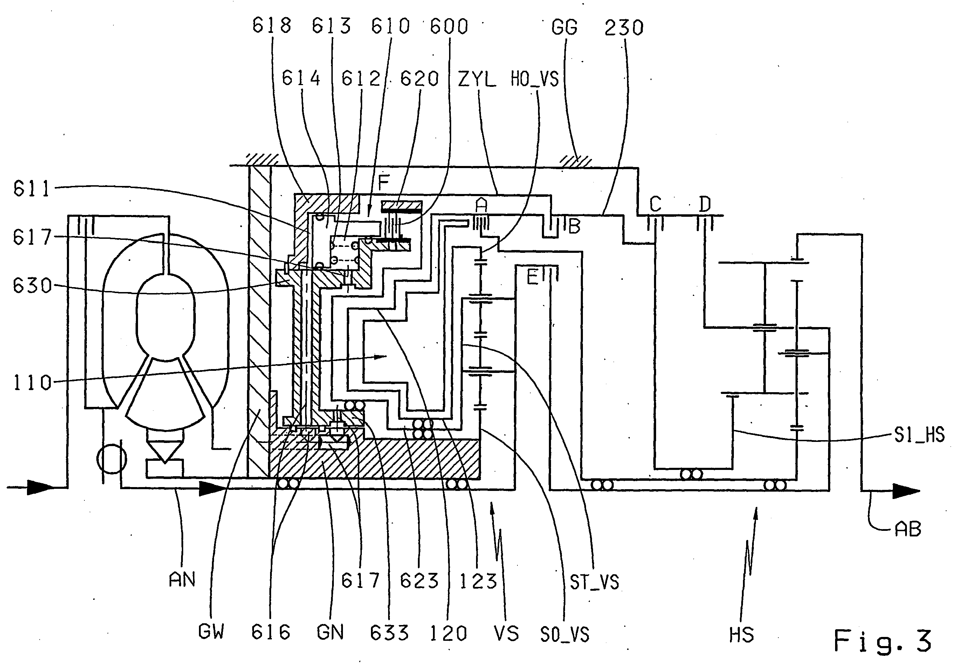

Anhand Fig. 3 wird nun ein zweites beispielhaftes Getriebeschema gemäß der vorliegenden Erfindung erläutert. Die Unterschiede zu dem zuvor anhand Fig. 2 im Detail erläuterten ersten erfindungsgemäßen Getriebeschema betreffen die konstruktive Ausgestaltung des Ausgangselementes 630 der Kupplung F und die konstruktive Ausgestaltung der Servoeinrichtung 610 zur Betätigung des Lamellenpaketes 600 der Kupplung F. Insofern kann die Beschreibung der Fig. 3 auf diese wesentlichen Bauelemente beschränkt bleiben.

Wie aus Fig. 3 ersichtlich, ist das über das zylinderringförmige Verbindungselement ZYL und das Ausgangselement 230 der Kupplung B mit dem vorschaltradsatznahen ersten Sonnenrad S1_HS des Hauptradsatzes HS verbundene Ausgangselement 630 der Kupplung F nunmehr als Innenlamellenträger zur Aufnahme von innenverzahnten Lamellen des Lamellenpaketes 600 der Kupplung F ausgebildet. Wie in Fig. 2 grenzt dieses Ausgangselement 630 dabei an die getriebegehäusefeste Gehäusewand GW, die eine Außenwand des Getriebegehäuses GG auf der dem Hauptradsatz HS gegenüberliegenden Seite des Vorschaltradsatzes VS bildet, ist mit seiner Nabe 633 auf der sich ausgehend von dieser Gehäusewand GW in den Getriebeinnenraum bis hin zum Sonnenrad SO_VS des Vorschaltradsatzes VS erstreckenden getriebegehäusefesten Nabe GN verdrehbar gelagert und nimmt die Servoeinrichtung 610 der Kupplung F auf. Entsprechend ist das über den gekoppelten Steg ST_VS des Vorschaltradsatzes VS mit der Antriebswelle AN verbundene Eingangselement 620 der Kupplung F nunmehr als Außenlamellenträger zur Aufnahme von außenverzahnten Lamellen des Lamellenpaketes 600 der Kupplung F ausgebildet. Wie in Fig. 2 ist die Nabe 623 dieses Eingangselementes 620 ebenfalls auf der getriebegehäusefesten Nabe GN verdrehbar gelagert, und zwar im Bereich axial zwischen Vorschaltradsatz VS und der radialen Lagerung des Ausgangselementes 630 auf der genannten Nabe GN. Ebenfalls wie Fig. 2 ist das Eingangselement 120 der Kupplung A, das als Kupplungszylinder das Lamellenpaket 100 der Kupplung A und die Servoeinrichtung 110 zum Betätigen dieses Lamellenpaketes 100 aufnimmt, im wesentlichen axial zwischen der Kupplung F und dem Vorschaitradsatz VS angeordnet, wobei das Lamellenpaket 100 der Kupplung A in einem Bereich axial über dem Vorschaltradsatz VS angeordnet ist, die Nabe 123 des Eingangselementes 120 aber auf der der Kupplung F zugewandten Seite des Vorschaltradsatzes VS an der Nabe 623 des Eingangselementes 620 der Kupplung F gelagert ist.

Wie aus Fig. 3 weiterhin ersichtlich, weist das Ausgangselement 630 bzw. der Innenlamellenträger der Kupplung F eine im wesentlichen zylinderförmige Struktur auf, mit einer Nabe 633, die wie schon erwähnt auf der getriebegehäusefesten Nabe GN verdrehbar gelagert ist, mit einem scheibenförmigen Abschnitt, der sich ausgehend von der genannten Nabe 633 axial angrenzend und beispielhaft weitgehend parallel zur Gehäusewand GW radial nach außen erstreckt, sowie mit einem gestuft zylinderringförmigen Abschnitt, der sich ausgehend vom Außendurchmesser des genannten scheibenförmigen Anschnitts des Ausgangselementes 630 bzw. Innenlamellenträgers der Kupplung F axial in Richtung Vorschaltradsatz VS bis zum Lamellenpaket 600 der Kupplung F erstreckt. Im Bereich seines vorschaltradsatznahen Endes weist dieser gestuft zylinderringförmige Abschnitt des Ausgangselementes 630 bzw. Innenlamellenträgers der Kupplung F am Außendurchmesser ein geeignetes Mitnahmeprofil auf zur Aufnahme der Innenlamellen des genannten Lamellenpaketes 600. Im Bereich des gehäusewandnahen Endes des Ausgangselementes 630 bzw. Innenlamellenträgers der Kupplung F, in etwa radial über dem scheibenförmigen Anschnitts des Ausgangselementes 630 bzw. Innenlamellenträgers der Kupplung F, ist eine zylindrische Stützscheibe 618 mit ihrem Innendurchmesser verdrehfest am Außendurchmesser des gestuft zylinderringförmigen Abschnitts des Ausgangselementes 630 bzw. Innenlamellenträgers der Kupplung F festgesetzt. Ein scheibenförmiger Abschnitt dieser Stützscheibe 618 erstreckt sich ausgehend von dem Außendurchmesser des Ausgangselements 630 bzw. Innenfamellenträgers der Kupplung F beispielhaft weitgehend parallel zur Gehäusewand GW radial nach außen in etwa bis zum Außendurchmesser des Lamellenpaketes 600 der Kupplung F und geht dann in einen zylinderringförmigen Abschnitt über, der sich axial in Richtung Vorschaltradsatz VS bis ein Stück vor dem Lamellenpaket 600 der Kupplung F erstreckt.

Die Servoeinrichtung 610 der Kupplung F, umfassend einen Druckraum 611, einen Druckausgleichsraum 612, einen Kolben 614 und ein Rückstellelement 613, ist räumlich gesehen radial über dem gestuft zylindeningförmigen Abschnitt des Ausgangselementes 630 bzw. Innenlamellenträgers der Kupplung F angeordnet. Der axial zwischen Lamellenpaket 600 der Kupplung F und dem scheibenförmigen Abschnitt der Stützscheibe 618 angeordnete Kolben 614 ist dabei in dem Ringraum, der zwischen dem Innendurchmesser des zylinderringförmigen Abschnitts der Stützscheibe 618 und dem Außendurchmesser des Ausgangselementes 630 bzw. Innenlamellenträgers der Kupplung F entstanden ist, druckmitteldicht axial verschiebbar gelagert. Zur Bildung eines Druckraums 611 ist die drehmomentführende Verbindung zwischen Stützscheibe 618 und Ausgangselement 630 bzw. Innenlamellenträger der Kupplung F druckmitteldicht ausgeführt, sodaß der Druckraum 611 durch den Kolben 614, die innere Mantelfläche der Stützscheibe 618 und durch einen Abschnitt der äußeren Mantelfläche des Ausgangselementes 630 bzw. Innenlamellenträgers der Kupplung F gebildet wird. Der zum Ausgleich des rotatorischen Drucks des hier stets mit Drehzahl des Sonnenrades S1_HS rotierenden Druckraums 611 über eine Schmiermittelzuführung 617 drucklos mit Schmiermittel befüllbare Druckausgleichsraum 612 ist auf der dem Druckraum 611 gegenüberliegenden Seite des Kolbens 614 angeordnet. Gebildet wird dieser Druckausgleichsraum durch der Kolben 614 und durch einen gegen den Kolben 614 schmiermitteldicht axial verschiebbar abgedichteten Abschnitt der äußeren Mantelfläche des gestuft zylindrischen Abschnitts des Ausgangselementes 630 bzw. Innenlamellenträgers der Kupplung F. Wird der Druckraum 611 zum Schließen der Kupplung F über eine Druckmittelzuführung 616 mit Druckmittel befüllt, so bewegt sich der Kolben 614 gegen die Rückstellkraft des Rückstellelementes 613, das hier beispielhaft als ein Paket aus ringförmig am Umfang des Kolbens 614 verteilt angeordneten und kinematisch parallelgeschalteten Spiralfedern ausgeführt und axial zwischen Kolben 614 und Ausgangselement 630 bzw. Innenlamellenträger der Kupplung F eingespannt ist, axial in Richtung Vorschaltradsatz VS und betätigt so das ihm zugeordnete Lamellenpaket 600 der Kupplung F.

Die Drehzahl- und Drehmomentübertragung zwischen dem Ausgangselement 630 bzw. Innenlamellenträger der Kupplung F und dem zylinderringförmigen Verbindungselement ZYL erfolgt in dem in Fig. 3 dargestellten Ausführungsbeispiel für ein erfindungsgemäßes Getriebe über die Stützscheibe 618 der Kupplung F. Einerseits weist die Stützscheibe 618 hierzu - wie zuvor schon beschrieben - an ihrem Innendurchmesser eine geeignete drehmomentführende Verbindung zum gestuft zylinderringförmigen Abschnitt des Ausgangselementes 630 bzw. Innenlamellenträgers der Kupplung F auf. Andererseits ist die Stützscheibe 618 hierzu im Bereich des lamellennahen Endes ihres zylinderringförmigen Abschnitts über eine geeignete Verbindung verdrehfest mit dem gehäusewandseitigen Ende des genannten Verbindungselement ZYL verbunden, beispielsweise formschlüssig über ein Mitnahmeprofil. Dabei übergreift das zylindemingförmige Verbindungselement ZYL in seinem axialen Verlauf die Lamellenpakete 100, 600 beider Kupplungen A und F. Entgegen der Darstellung in Fig. 3, die eher für eine einstückige Ausbildung von Ausgangselement 230 der Kupplung B und Verbindungselement ZYL spricht, kann je nach geometrischer Auslegung des Eingangselementes 620 bzw. Außenlamellenträgers des Kupplung F und des Ausgangselementes 230 bzw. Außenlämellenträgers der Kupplung B auch vorgesehen sein, dass Stützscheibe 618 und Verbindungselement ZYL einstückig ausgeführt sind.

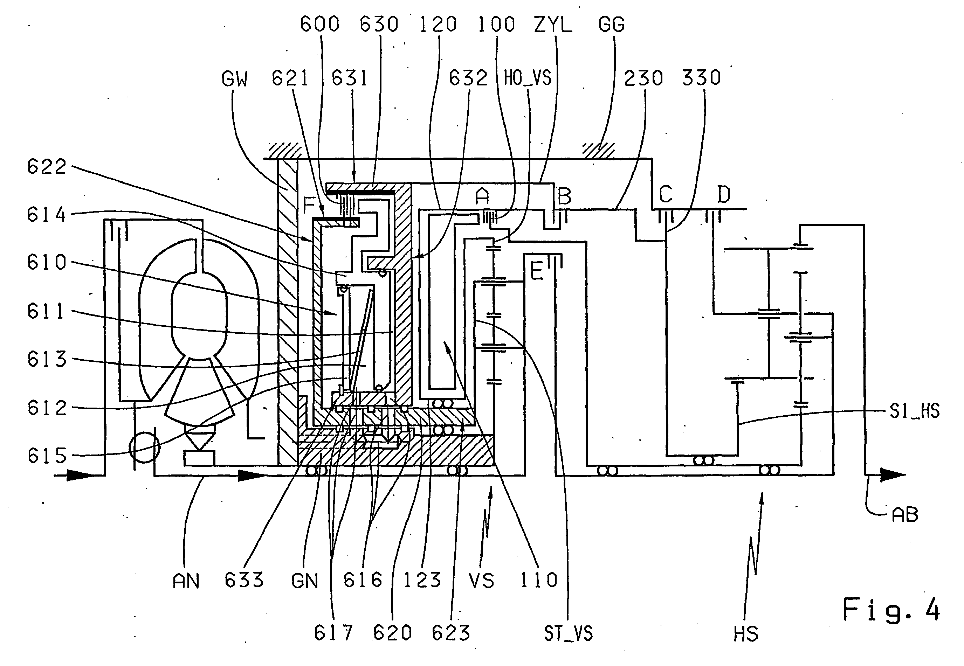

Anhand Fig. 4 wird nun ein drittes-beispielhaftes Gebriebeschema gemäß der vorliegenden Erfindung erläutert, welches auf dem in Fig. 2 dargestellten ersten erfindungsgemaßen Getriebeschema basiert. Wie in Fig. 4 ersichtlich, ist die Kupplung F gegenüber Fig. 2 in sich axial gespiegelt aufgebaut Das als Innenlamellenträger zur Aufnahme von innenverzahnten Lamellen des Lamellenpaketes 600 der Kupplung F ausgebildete Eingangselement 620 der Kupplung F ist nunmehr als in Richtung Vorschaltradsatz VS hin geöffneter Zylinder ausgebildet, mit einer Nabe 623, welche sich axial zwischen der getriebegehäusefesten Gehäuseaußenwand GW und dem Vorschaltradsatz VS erstreckenden getriebegehäusefeste Nabe GN in fast deren ganzen axialen Länge radial umschließt und an dieser Nabe GN verdrehbar gelagert ist, mit einem scheibenförmigen Abschnitt 622, der sich an dem gehäusewandseitigem Ende der genannten Nabe 623 anschließt und sich axial unmittelbar und hier beispielhaft im wesentlichen parallel zur Gehäusewand GW radial nach außen erstreckt in etwa bis zum Durchmesser des Lamellenpaketes 600 der Kupplung F, sowie mit einem zylinderringförmigen Abschnitt 621, der sich am Außendurchmesser des genannten scheibenförmigen Abschnitts 622 anschließt und sich axial in Richtung Vorschaltradsatz VS bis zum vorschaltradsatzseitigen Ende des Lamellenpaketes 600 der Kupplung F erstreckt. An seinem Außendurchmesser weist der genannte zyfinderringförmige Abschnitt 621 des Eingangselementes 620 der Kupplung F ein geeignetes Mitnahmeprofil zur Aufnahme der Innenlamellen dieses Lamellenpaketes 600 auf. Die Nabe 623 des Eingangselementes 620 der Kupplung F ist an deren vorschaltradsatznahen Ende verdrehfest mit dem hauptradsatzfiernen Stegblech des gekoppelten Stegs ST_VS der Vorschaltradsatzes VS und somit über diesen Steg ST_{_}VS mit der Antriebswelle AN verbunden.

Wie in Fig. 2 ist das mit dem Hohlrad HO_VS des Vorschaltradsatz VS verbundene Eingangselement 120 der Kupplung A mit der innerhalb dieses Eingangselementes 120 angeordneten Servoeinrichtung 110 der Kupplung A im wesentlichen auf der Seite des Vorschaltradsatzes VS angeordnet, die der Gehäuseaußenwand GW zugewandt bzw. dem Hauptradsatz HS abgewandt ist, wobei das Lamellenpaket 100 der Kupplung A beispielhaft in einem Bereich radial über dem Vorschaltradsatz VS angeordnet ist. Dabei ist eine Nabe 123 dieses Eingangselementes 120 der Kupplung A auf der Nabe 623 des Eingangselementes 620 der Kupplung F verdrehbar gelagert und auf seiner vorschaltradsatznahen Seite mit dem Hohlrad HO_VS des Vorschaltradsatzes VS verdrehfest verbunden.

Das als Außenlamellenträger zur Aufnahme von außenverzahnten Lamellen des Lamellenpaketes 600 der Kupplung F ausgebildete Ausgangselement 630 der Kupplung F ist nunmehr als ein in Richtung Gehäuseaußenwand GW bzw. als ein in zum Vorschaltradsatz VS entgegengesetzter Richtung hin geöffneter Zylinder ausgebildet und auf der Seite des Eingangselementes 120 der Kupplung A angeordnet, die der Gehäuseaußenwand GW zugewandt bzw. dem Vorschaltradsatz VS abgewandt ist. Eine Nabe 633 dieses Ausgangselementes 630 bzw. Außenlamellenträgers .der Kupplung F ist räumlich gesehen axial zwischen dem scheibenförmigen Abschnitt 622 des Eingangselementes 620 bzw. lnnenlamellenträgers der-Kupplung F und der Nabe 123 des Eingangselementes 120 der Kupplung A angeordnet, umschließt diesen gehäusewandnahen Abschnitt der Nabe 623 des Eingangselementes 620 bzw. Innenlamellenträgers der Kupplung F radial und ist auf dieser Nabe 623 verdrehbar gelagert. Ein weitgehend scheibenförmiger Abschnitt 632 des Ausgangselementes 630 bzw. Außenlamellenträgers der Kupplung F schließt sich am vorschaltradsatznahen Ende der genannten Nabe 633 des Ausgangselementes 630 bzw. Außenlamellenträgers der Kupplung F an und erstreckt sich axial unmittelbar angrenzend an das Eingangselement 120 der Kupplung A radial nach außen bis zu einem Durchmesser, der größer ist als der Außendurchmesser des Lamellenpaketes 600 der Kupplung F und größer ist als der Außendurchmesser des Eingangselementes 120 bzw. Außenlamellenträgers der Kupplung A. Ein zylinderringförmiger Abschnitt 631 des Ausgangselementes 630 bzw. Außenfamellenträgers der Kupplung F schließt sich am Außendurchmesser des genannten scheibenförmigen Abschnitts 632. des Ausgangselementes 630 bzw. Außentamellenträgers der Kupplung F an und erstreckt sich axial in Richtung Gehäusewand GW bis knapp über das Lamellenpaket 600 der Kupplung F hinweg. Im Bereich dieses Lamellenpaketes 600 weist der genannte zylinderringförmiger Abschnitt 631 des Ausgangselementes 630 bzw. Außenlamellenträgers der Kupplung F an seinem Innendurchmesse ein geeignetes Mitnahmeprofil zur Aufnahme der Außenlamellen dieses Lamellenpaketes 600 auf. An seinem vorschaltradsatznahen Ende ist der genannte zylinderringförmiger Abschnitt 631 des Ausgangselementes 630 bzw. Außenlamellenträgers der Kupplung F im Bereich seines Außendurchmessers mit einem zylinderringförmigen Verbindungselement ZYL verdrehfest verbunden. Dieses in axialer Richtung radial oberhalb des Eingangselementes 120 der Kupplung A verlaufende Verbindungselement ZYL ist wie in Fig. 2 zur kinematischen Verbindung zwischen dem Ausgangselement 630 der Kupplung F und dem Ausgangselement 230 der Kupplung B vorgesehen, wobei dieses Ausgangselement 230 der Kupplung B wiederum mit dem Ausgangselement 330 der Bremse C und dem ersten Eingangselement - also hier mit dem ersten Sonnenrad S1_HS - des Hauptradsatzes HS verbunden ist.

Die Servoeinrichtung 610 zur Betätigung des Lamellenpaketes 600 der Kupplung F ist vollständig innerhalb eines Zylinderraums angeordnet, der durch das Ausgangselement 630 bzw. den Aüßenfamellenträger der Kupplung F gebildet wird, räumlich gesehen radial oberhalb der Nabe 633 dieses Ausgangselementes 630. Wie üblich umfaßt diese Servoeinrichtung 610 einen mit Druckmittel befüllbaren Druckraum 611, einen drucklos mit Schmiermittel befüllbaren Druckäusgleichsraum 612 zum dynamischen Druckausgleich der rotatorischen Drucks des Druckraums 611, einen auf das Lamellenpaket 600 wirkenden Kolben 614, ein beispielhaft als Tellerfeder ausgebildetes Rückstellelement 613 zur Kolbenrückstellung, sowie eine Stauscheibe 615 zur Bildung des Druckausgleichsraums 612. Der Kolben 614 ist ähnlich wie in Fig. 2 in dem Ausgangselement 630 der Kupplung F axial verschiebbar gelagert und dabei gegen diesen druckmitteldicht abgedichtet; entsprechend rotiert die Servoeinrichtung 610 stets mit Drehzahl des ersten Eingangselementes des Hauptradsatzes HS. Im Unterschied zu Fig. 2 ist der durch den Kolben 614 und eine innere Mantelfläche des Ausgangsetementes 630 gebildete Druckraum 611 der Servoeinrichtung 610 näher am Vorschaltradsatz VS angeordnet als der durch den Kolben 614 und die gegenüber dem Kolben 614 axial verschiebbar schmiermitteldicht abgedichtete Stauscheibe 615 gebildete Druckausgleichsraum 612 der Servoeinrichtung 610. Im Unterschied zu Fig. 2 bewegt sich der Kolben 614 der Servoeinrichtung 610 bei einer Druckbeaufschlagung des Druckraums 611 axial in Richtung Gehäusewand GW bzw. axial in zum Vorschaltradsatz VS entgegengesetzter Richtung gegen die Federkraft des Rückstellelementes 613 und betätigt so das ihm zugeordnete Lamellenpaket 600 der Kupplung F.

Im Unterschied zu Fig. 2 erfolgt die Druck- und Schmiermittelzufuhr zur Kupplung F über Bohrungen bzw. Kanäle, die abschnittsweise innerhalb der getriebegehäusefesten Nabe GN und abschnittsweise innerhalb der Nabe 623 des Eingangselementes 620 der Kupplung F und abschnittsweise innerhalb der Nabe 633 des Ausgangselementes 630 der Kupplung F verlaufen. In Fig. 4 ist die entsprechende Druckmittelzuführung mit 616 bezeichnet, die entsprechende Schmiermittelzuführung mit 617.

Da die übrigen Getriebebauelemente hinsichtlich ihrer konstruktiven Ausbildung und hinsichtlich ihrer Anordnung innerhalb des Getriebes aus Fig. 2 übernommen wurde, kann auf deren nochmalige Beschreibung an dieser Stelle verzichtet werden.

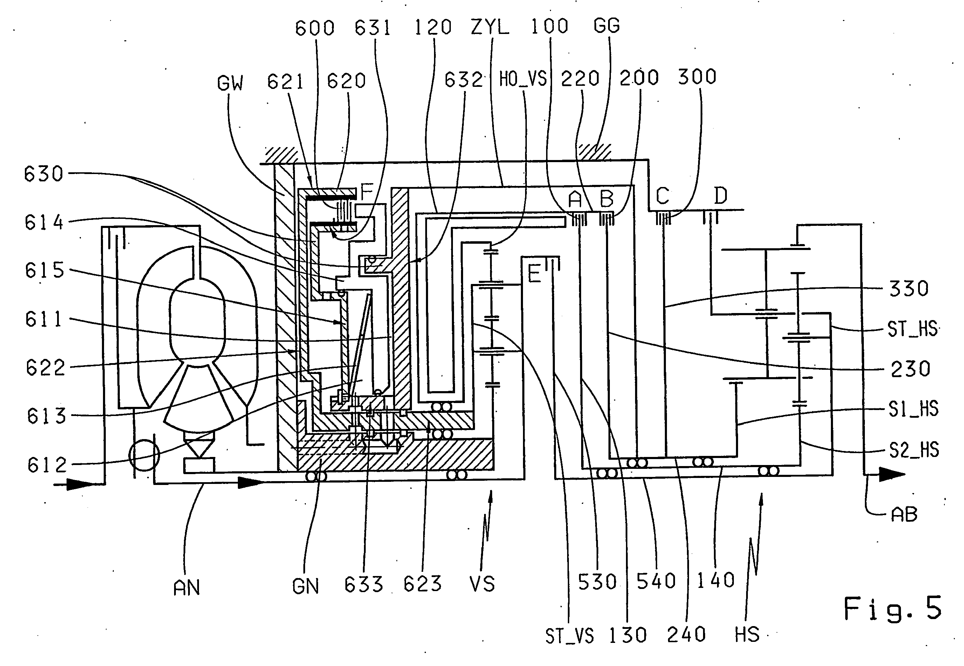

Fig. 5 zeigt ein viertes beispielhaftes Getriebeschema gemäß der vorliegenden Erfindung, welches auf dem zuvor in Fig. 4 dargestellten dritten erfindungsgemäßen Getriebeschema basiert, wobei die Unterschiede zu Fig. 4 im wesentlichen die konstruktive Ausgestaltung von Eingangselement 620 und Ausgangselement 630 der Kupplung F, eine alternative Konstruktion der mechanischen Anbindung der Ausgangselemente 630, 230 und 330 der Schaltelemente F, B und C an das erste Eingangselement des Hauptradsatzes HS betreffen.

Ähnlich wie in Fig. 4 ist das Eingangselement 620 der Kupplung F als ein in Richtung Vorschaltradsatz VS hin geöffneter Zylinder ausgebildet, im Unterschied zu Fig. 4 jedoch als Außenlamellenträger zur Aufnahme von außenverzahnten Lamellen des Lamellenpaketes 600 der Kupplung F. Eine Nabe 623 dieses Eingangselementes 620 umschließt die getriebegehäusefeste Nabe GN, welche sich axial zwischen der getriebegehäusefesten Gehäusewand GW und dem Vorschaltradsatz VS erstreckt, in fast deren ganzen axialen Länge radial und ist an dieser Nabe GN auch verdrehbar gelagert. Ein scheibenförmiger Abschnitt 622 dieses Eingangselementes 620 schließt sich an dem gehäusewandseitigem Ende der genannten Nabe 623 an und erstreckt sich axial unmittelbar und im wesentlichen parallel zur Gehäusewand GW radial nach außen bis zu einem Durchmesser, der größer ist als der Außendurchmesser des Lamellenpaketes 600 der Kupplung F. Ein zylinderringförmiger Abschnitt 621 dieses Eingangselementes 620 schließt sich am Außendurchmesser des genannten scheibenförmigen Abschnitt 622 an, erstreckt sich axial in Richtung Vorschaltradsatz VS bis knapp über das Lamellenpaket 600 der Kupplung F hinweg, und weist an seinem Innendurchmesser ein geeignetes Mitnahmeprofil zur Aufnahme der Außenlamellen dieses Lamellenpaketes 600 auf. Die Nabe 623 des Eingangselementes 620 der Kupplung F ist an deren vorschaltradsatznahen Ende wie in Fig. 4 verdrehfest mit dem hauptradsatzfernen Stegblech des gekoppelten Stegs ST_VS der Vorschaltradsatzes VS und somit über diesen Steg ST_VS mit der Antriebswelle AN verbunden.

Das Ausgangselement 630 der Kupplung F ist nunmehr als Innenlamellenträger zur Aufnahme von innenverzahnten Lamellen des Lamellenpaketes 600 der Kupplung F ausgebildet, geometrisch in Form eines in Richtung Gehäusewand GW bzw. eines in zum Vorschaltradsatz VS entgegengesetzter Richtung hin geöffneten Zylinders und angeordnet auf der Seite des Eingangselementes 120 der Kupplung A, die der Gehäuseaußenwand GW zugewandt bzw. dem Vorschaltradsatz VS abgewandt ist. Eine Nabe 633 dieses Ausgangselementes 630 der Kupplung F ist räumlich gesehen axial zwischen dem scheibenförmigen Abschnitt 622 des Eingangselementes 620 der Kupplung F und der Nabe 123 des Eingangselementes 120 der Kupplung A angeordnet, umschließt diesen gehäusewandnahen Abschnitt der Nabe 623 des Eingangselementes 620 der Kupplung F radial und ist auf dieser Nabe 623 verdrehbar gelagert. Ein teilweise scheibenförmiger Abschnitt 632 des Ausgangselementes 630 der Kupplung F schließt sich am vorschaltradsatznahen Ende der genannten Nabe 633 des Ausgangselementes 630 an und erstreckt sich axial unmittelbar angrenzend an das Eingangselement 120 der Kupplung A radial nach außen bis zu einem Durchmesser, der größer ist als der Außendurchmesser des Eingangselementes 120 der Kupplung A. Ein zylindrischer Abschnitt 631 des Ausgangselementes 630 der Kupplung F, der an seinem Außendurchmesser ein geeignetes Mitnahmeprofil zur Aufnahme der Innenlamellen des Lamellenpaketes 600 der Kupplung F aufweist, ist räumlich gesehen radial unterhalb dieses Lamellenpaketes 600 angeordnet und an seinem gehäusewandnahem Ende mit einer Stauscheibe 615, die funktionell auch der Servoeinrichtung 610 der Kupplung F zugeordnet ist, verbunden. Diese Stauscheibe 615 wiederum ist über ein Mitnahmeprofil an dem gehäusewandnahen Ende der Nabe 633 des Ausgangselementes 630 der Kupplung F verdrehfest befestigt und über einen Sicherungsring axial an dieser Nabe 633 festgelegt. In dem in Fig. 5 dargestellten Beispiel sind der genannte zylindrische Abschnitt 631 des Ausgangselementes 630 und die Stauscheibe 615 einstückig ausgeführt.

Die Servoeinrichtung 610 zur Betätigung des Lamellenpaketes 600 der Kupplung F ist wie in Fig. 4 auf der Seite des scheibenförmigen Abschnitts 632 des Ausgangselementes 630 der Kupplung F angeordnet , die der Gehäusewand GW zugewandt bzw. dem Vorschaltradsatz VS abgewandt ist, räumlich gesehen im wesentlichen radial oberhalb der Nabe 633 des Ausgangselementes 630 der Kupplung F. Wie üblich umfaßt diese Servoeinrichtung 610 einen mit Druckmittel befüllbaren Druckraum 611, einen drucklos mit Schmiermittel befüllbaren Druckausgleichsraum 612 zum dynamischen Druckausgleich des rotatorischen Drucks des Druckraums 611, einen auf das Lamellenpaket 600 wirkenden Kolben 614, ein beispielhaft als Tellerfeder ausgebildetes Rückstellelement 613 zur Kolbenrückstellung, sowie die schon erwähnte Stauscheibe 615 zur Bildung des Druckausgleichsraums 612. Der Kolben 614 ist ähnlich wie in Fig. 4 an dem Ausgangselement 630 der Kupplung F axial verschiebbar gelagert und dabei gegen diesen druckmitteldicht abgedichtet; entsprechend rotiert die Servoeinrichtung 610 auch stets mit Drehzahl des ersten Eingangselementes des Hauptradsatzes HS. Wie in Fig. 4 ist der durch den Kolben 614 und eine innere Mantelfläche des Ausgangselementes 630 gebildete Druckraum 611 der Servoeinrichtung 610 näher am Vorschaltradsatz VS angeordnet als der durch den Kolben 614 und die gegenüber dem Kolben 614 axial verschiebbar schmiermitteldicht abgedichtete Stauscheibe 615 gebildete Druckausgleichsraum 612 der Servoeinrichtung 610. Wie in Fig. 4 bewegt sich der Kolben 614 der Servoeinrichtung 610 bei einer Druckbeaufschlagung des Druckraums 611 axial in Richtung Gehäusewand GW bzw. axial in zum Vorschaltradsatz VS entgegengesetzter Richtung gegen die Federkraft des Rückstellelementes 613 und betätigt so das ihm zugeordnete Lamellenpaket 600 der Kupplung F.

Wie in Fig. 5 ersichtlich, ist zur Drehzahl- und Drehmomentübertragung zwischen Ausgangselement 630 der Kupplung F und dem hier beispielhaft durch das vorschaltradsatznahe erste Sonnenrad S1_HS gebildeten ersten Eingangselementes des Hauptradsatzes HS ein zylinderförmiges Verbindungselement ZYL vorgesehen, das geometrisch in Form eines in Richtung Kupplung F hin geöffneten Topfes ausgebildet ist. Dabei erstreckt sich ein scheibenförmiger Topfboden dieses zylinderförmigen Verbindungselementes ZYL in radialer Richtung axial zwischen der Kupplung B und der Bremse C und ist in seinem Nabenbereich mit einer ersten Sonnenwelle 240 verdrehfest verbunden. Am Außendurchmesser dieses Topfbodens, der größer ist als der Außendurchmesser der Kupplung B, schließt sich ein zylinderringförmiger Abschnitt des Verbindungselementes ZYL an und erstreckt sich axial in Richtung Kupplung F bis zu dem scheibenförmigen Abschnitt 632 des Ausgangselementes 630 dieser Kupplung F und übergreift dabei in seinem axialen Verlauf die Kupplungen B, A und E sowie den Vorschaltradsatz VS vollständig. An seinem gehäusewandseitigen Ende ist der genannte zylinderringförmige Abschnitt des Verbindungselementes ZYL verdrehfest mit dem scheibenförmigen Abschnitt 632 des Ausgangselementes 630 der Kupplung F verbunden, beispielsweise über ein Mitnahmeprofil.

Wie in Fig. 5 weiterhin ersichtlich, ist das Lamellenpaket 100 der Kupplung A im Unterschied zu Fig. 4 nunmehr in einem Bereich axial zwischen Vorschaltradsatz VS und Hauptradsatz HS, genauer gesagt axial zwischen der auf der hauptradsatznahen Seite des Vorschaltradsatzes VS angrenzende Kupplung E und dem Lamellenpaket 200 der Kupplung B. Dabei ist die - in Fig. 5 zur Vereinfachung nur schematisch dargestellte - Servoeinrichtung 110 der Kupplung A zur Betätigung dieses Lamellenpaketes 100 wie in Fig. 4 weitgehend auf der hauptradsatzfernen Seite des Vorschaltradsatzes VS angeordnet, wobei nur ein mit einem Kolben der Servoeinrichtung 110 wirkverbundener und auf das Lamellenpaket 100 wirkender Druckring der Servoeinrichtung 110 den Vorschaltradsatz VS (und hier auch die axial auf der hauptradsatznahen Seite des Vorschaltradsatzes VS angrenzende Kupplung E) in axialer Richtung radial übergreift. Alternativ kann der genannte Druckring beispielsweise auch durch vorzugsweise mehrere umfangsverteilt angeordnete Betätigungsfinger ersetzt sein. In dem in Fig. 5 dargestellten Beispiel sind die Lamellenpakete 100, 200 der beiden Kupplungen unmittelbar nebeneinander auf gleichem Durchmesser angeordnet, wobei die Eingangselemente 120 und 220 beider Kupplungen A und B hier beispielhaft als Außenlamellenträger ausgebildet sind. Dabei ist das Eingangselement 220 der Kupplung B unverändert über das Eingangselement 120 der Kupplung A mit dem Hohlrad HO_VS - das ja das Ausgangselement des Vorschaltradsatzes VS bildet- verbunden. Das Ausgangselement 230 der Kupplung B ist hier beispielhaft als separater, weitgehend scheibenförmiger Innenlamellenträger ausgebildet, der radial unterhalb des Lamellenpaketes 200 der Kupplung B angeordnet und in seinem Nabenbereich mit der ersten Sonnenwelle 240 verdrehfest verbunden. Eine in Fig. 5 zur Vereinfachung nicht dargestellte Servoeinrichtung der Kupplung B zum Betätigen des Lamellenpaketes 200 kann wahlweise auf einer der beiden Seiten dieses Lamellenpaketes 200 angeordnet sein. Ein Druckraum dieser Servoeinrichtung der Kupplung B kann beispielsweise auch in einem Bereich axial zwischen dem scheibenförmigen Abschnitt 632 des Ausgangselementes 630 der Kupplung F und dem Eingangselement 120 der Kupplung A, radial über einem axialen Abschnitt der Nabe 623 des Eingangselementes 620 der Kupplung F angeordnet sein, wobei dann ein Druckteller bzw. vorzugsweise mehrere umfangsverteilt angeordnete Betätigungsfinger dieser Servoeinrichtung der Kupplung B das Eingangselement 120 der Kupplung A und das Eingangselement 220 inklusive Lamellenpaket 200 der Kupplung B in axialer Richtung radial umgreifen und das Lamellenpaket 200 beim Schließen der Kupplung B von der hauptradsatznahen Seite her "gezogen" betätigten.

Auch das Ausgangselement 330 der Bremse C ist hier beispielhaft als separater, weitgehend scheibenförmiger Innenlamellenträger ausgebildet, der radial unterhalb des Lamellenpaketes 300 der Bremse C angeordnet und in seinem Nabenbereich mit der ersten Sonnenwelle 240 verdrehfest verbunden ist. Wie bereits erwähnt, ist die genannte erste Sonnenwelle 240 ihrerseits hier beispielhaft mit dem vorschaltradsatznahen ersten Sonnenrad S1_HS (als erstes Eingangselement) des Hauptradsatzes HS verdrehfest verbunden. Sonnenrad S1_HS und Sonnenwelle 240 können beispielsweise auch einstückig ausgeführt sein. Die erste Sonnenwelle 240 wiederum umschließt einen axialen Abschnitt einer zweiten Sonnenwelle 140, über die das Ausgangselement 130 der Kupplung A hier beispielhaft mit dem vorschaltradsatzfernen zweiten Sonnenrad S2_HS (als zweites Eingangselement) des Hauptradsatzes HS verdrehfest verbunden ist, radial. Auch Sonnenrad S2_HS und Sonnenwelle 140 können beispielsweise einstückig ausgeführt sein. Die genannte zweite Sonnenwelle 140 wiederum umschließt einen axialen Abschnitt einer Stegwelle 540, über die das Ausgangselement 530 der Kupplung E hier beispielhaft auf der vorschaltradsatzfernen Seite des Hauptradsatzes HS mit dem gekoppelten Steg ST_HS (als drittes Eingangselement) des Hauptradsatzes HS verdrehfest verbunden ist, radial.

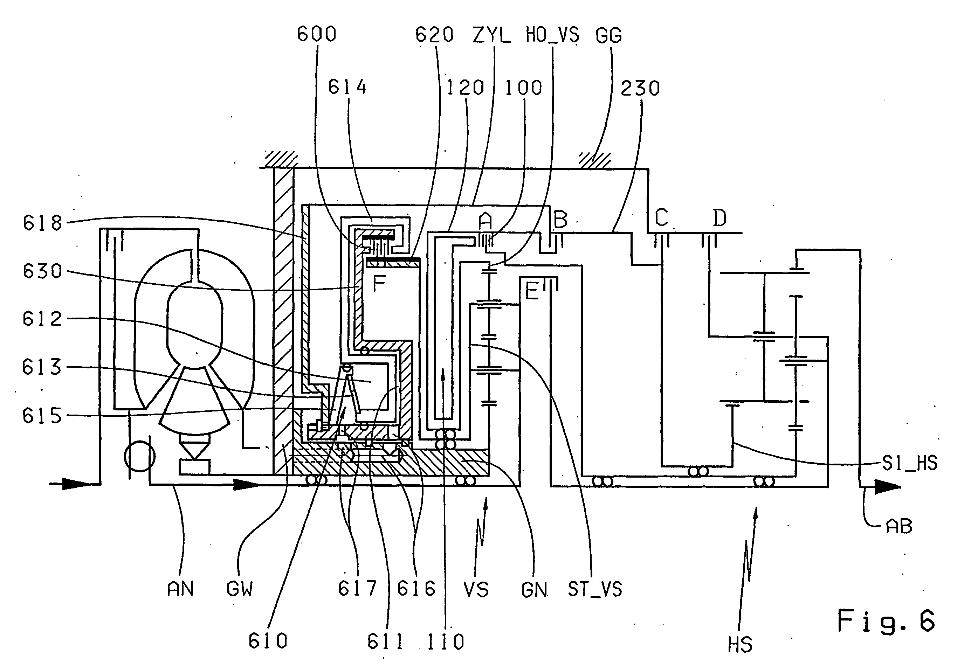

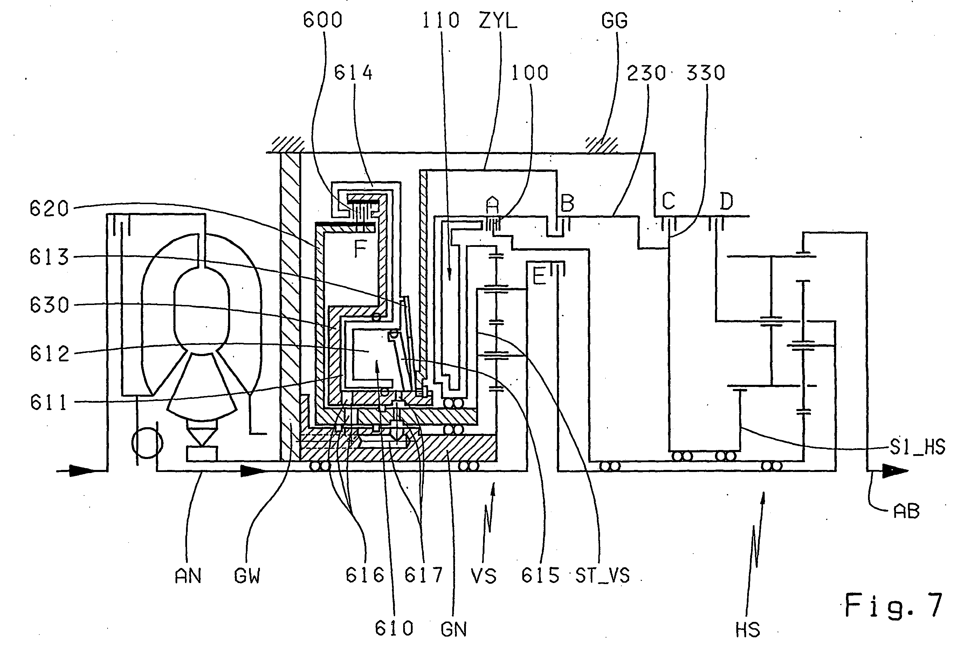

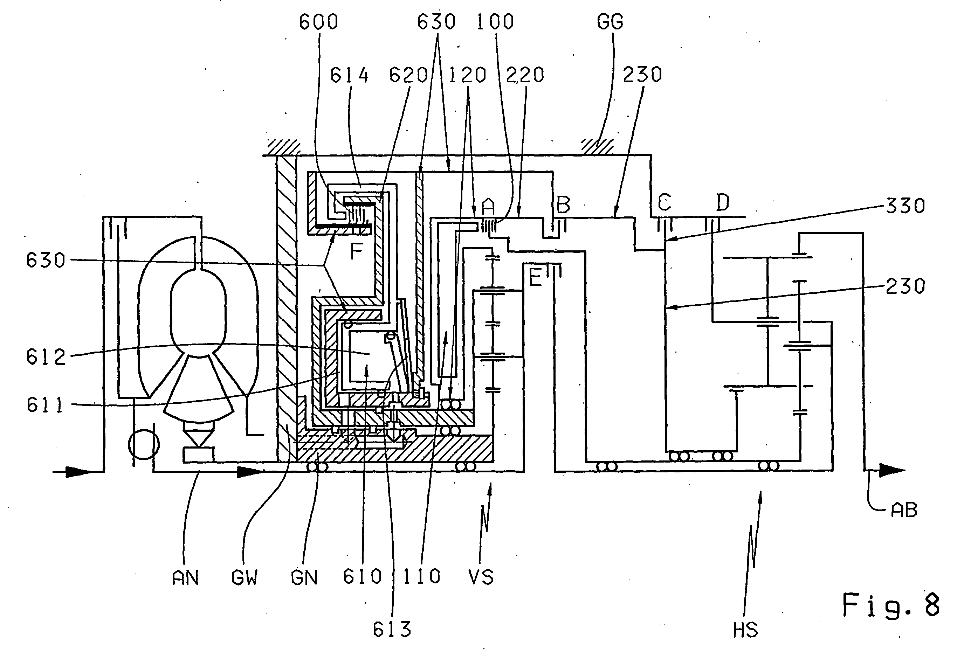

In allen vorigen Ausführungsbeispielen der Kupplung F wird das Lamellenpaket 600 der Kupplung F beim Kupplungsschließen in Bezug zur räumlichen Lage des diesem Lamellenpaket 600 zugeordneten Druckraums 611 der Servoeinrichtung 610 der Kupplung F stets "gedrückt" betätigt. Die in den Figuren 6, 7 und 8 der Vollständigkeit halber dargestellten folgenden drei Ausführungsbeispiele sollen verdeutlichen, dass die Betätigungsrichtung des Lamellenpaketes 600 der Kupplung F beim Kupplungsschließen in Bezug zur räumlichen Lage des ihm zugeordneten Druckraums 611 auch problemlos modifizierbar ist, sodaß das Lamellenpaket 600 in Bezug auf den ihm zugeordneten Druckraum 611 nunmehr "gezogen" betätigt wird. Dabei basiert das in Fig. 6 dargestellte fünfte erfindungsgemäße Getriebeschema auf dem in Fig. 2 dargestellten ersten erfindungsgemäßen Getriebeschema, das in Fig. 7 dargestellte sechste erfindungsgemäße Getriebeschema auf dem in Fig. 4 dargestellten dritten erfindungsgemäßen Getriebeschema, und das in Fig. 8 dargestellte siebte erfindungsgemäße Getriebeschema auf dem in Fig. 5 dargestellten vierten erfindungsgemäßen Getriebeschema. Entsprechend wurden in Fig. 6, Fig. 7 und Fig. 8 die wesentlichen Bezugszeichen des jeweils zugrundeliegenden Getriebeschema eingetragen, wobei auf deren nochmalige Erklärung an dieser Stelle verzichtet werden soll.

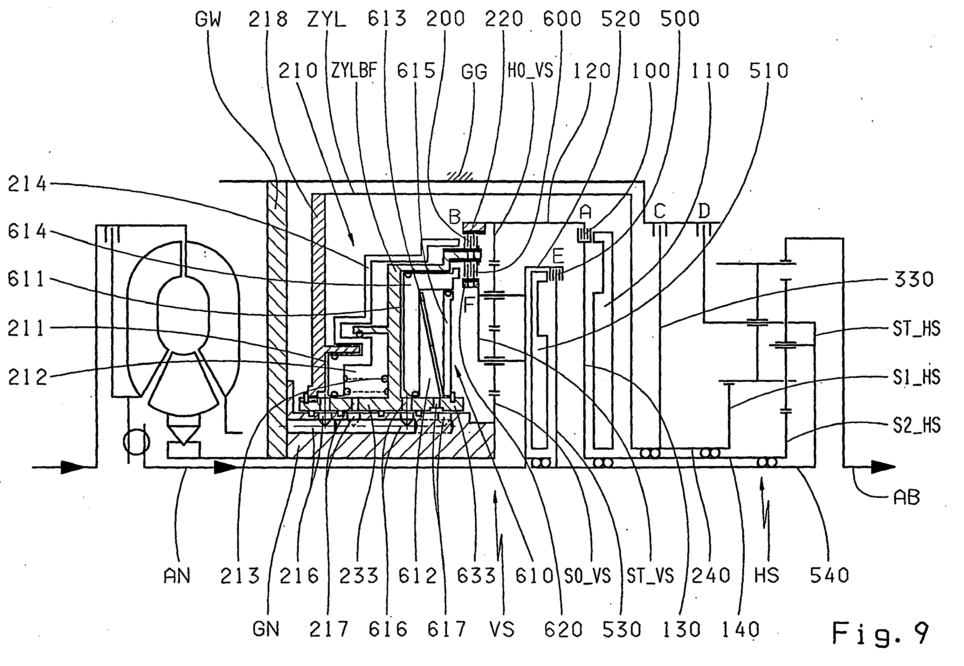

Anhand Fig. 9 wird nun ein achtes beispielhaftes Getriebeschema gemäß der vorliegenden Erfindung erläutert. Die Änderungen gegenüber dem gattungsgemäßen Stand der Technik nach Fig. 1A betreffen im wesentlichen die räumliche Anordnung und konstruktive Ausbildung der Kupplungen B, E und A. Ansonsten entspricht der Aufbau des Getriebes mit der Antriebswelle AN und der koaxial zu dieser verlaufenden Abtriebswelle AB, mit dem antriebsnahen Vorschaltradsatz VS und dem koaxial neben diesem angeordneten abtriebsnahen Hauptradsatz HS, mit der an den Vorschaltradsatz VS auf dessen dem Hauptradsatz HS zugewandten Seite unmittelbar angrenzenden Kupplung E, sowie mit den beiden hauptradsatznahen Bremsen C und D im wesentlichen dem in Fig. 1A dargestellten Getriebe.

Die beiden Kupplungen B und F bilden nunmehr eine fertigungstechnisch einfach vormontierbare Baugruppe, die axial zwischen dem Vorschaltradsatz VS und einer einem nicht näher dargestellten, mit der Antriebswelle AN wirkverbundenen Antriebsmotor des Getriebes zugewandten getriebegehäusefesten Gehäusewand GW angeordnet ist, also auf der dem Hauptradsatz HS abgewandten Seite des Vorschaltradsatzes VS und unmittelbar angrenzend an Vorschaltradsatz VS und Gehäusewand GW. Selbstverständlich können Gehäusewand GW und Getriebegehäuse GG auch einstückig ausgeführt sein. Dabei umfaßt diese Baugruppe einen für beide Kupplungen B, F gemeinsamen Lamellenträger ZYLBF, die Lamellenpakete 200, 600 der beiden Kupplungen B, F, sowie die Servoeinrichtungen 210, 610 zum Betätigen dieser Lamellenpakete 200, 600. Dieser Lamellenträger ZYLBF bildet für beide Kupplungen B, F deren Ausgangselement und ist entsprechend der vorgegebenen kinematischen Kopplung mit dem ersten Eingangselement (also hier dem ersten Sonnenrad S1_HS) des Hauptradsatzes HS verdrehfest verbunden, was später noch im Detail erläutert wird. Für die Kupplung F ist der Lamellenträger ZYLBF als Außenlamellenträger zur Aufnahme von vorzugsweise als außenverzahnte Stahllamellen ausgebildeten Außenlamellen des Lamellenpaketes 600 dieser Kupplung F ausgebildet, für die Kupplung B als Innenlamellenträger zur Aufnahme von vorzugsweise als innenverzahnte Belaglamellen ausgebildeten Innenlamellen des Lamellenpaketes 200 dieser Kupplung B. Räumlich gesehen ist das Lamellenpaket 200 der Kupplung B in einem Bereich radial über dem Lamellenpaket 600 der Kupplung F angeordnet. Entsprechend ist das Eingangselement 620 der Kupplung F als Innenlamellenträger zur Aufnahme von vorzugsweise als innenverzahnte Belaglamellen ausgeführten Innenlamellen des Lamellenpaketes 600 dieser Kupplung F ausgebildet und mit einem hauptradsatzfernen Stegblech des gekoppelten Stegs ST_VS des Vorschaltradsatzes VS verdrehfest verbunden, wobei dieser gekoppelte Steg ST_VS-wie in Fig. 1A ― auf seiner hauptradsatznahen Seite mit der Antriebswelle AN verbunden ist. Selbstverständlich können das genannte Stegblech und der genannte Innenlamellenträger 620 auch einstückig ausgebildet sein. Das Eingangselement 220 der Kupplung B ist als Außenlamellenträger zur Aufnahme von vorzugsweise als außenverzahnte Stahllamellen ausgeführte Außenlamellen des Lamellenpaketes 200 dieser Kupplung B ausgebildet und mit dem Hohlrad HO_VS des Vorschaltradsatzes VS verdrehfest verbunden. Selbstverständlich können Hohlrad HO_VS und der genannte Außenlamellenträger 220 auch einstückig ausgebildet sein. Selbstverständlich können anstelle der wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahliamelle wechselseitig zu einem Lamellenpaket zusammengefügt werden müssen. Selbstverständlich können anstelle der vorgeschlagenen Stahllamellen auch Lamellen aus Carbon oder Kohlefasern oder anderen geeigneten Verbundwerkstoffen verwendet werden.

Geometrisch weist der für die Kupplungen B, F gemeinsame Lamellenträger ZYLBF eine im wesentlichen zylinderförmige Struktur auf und ist auf einer getriebegehäusefesten Nabe GN, die sich ausgehend von der Gehäusewand GW in den Getriebeinnenraum axial in Richtung Vorschaltradsatz VS erstreckt, Verdrehbar gelagert. An dieser Nabe GN ist das Sonnenrad SO_VS des Vorschaltradsatzes VS über eine geeignete Verbindung festgesetzt. Selbstverständlich können Nabe GN und Gehäusewand GW auch einstückig ausgeführt sein. Beispielsweise kann die Nabe GN auch eine Leitradwelle eines im Kraftfluß zwischen Antriebswelle AN und Antriebsmotor des Getriebes angeordneten Drehmomentwandlers sein. Am Außendurchmesser des Lamellenträgers ZYLBF ist ein zylindrischer Abschnitt vorgesehen, an dessen Innendurchmesser die Außenlamellen des Lamellenpaketes 600 der Kupplung F und an dessen Außendurchmesser die Innenlamellen des Lamellenpaketes 200 angeordnet sind, wobei beide Lamellenpakete 600, 200 axial an den Vorschaltradsatz VS angrenzen. Ausgehend vom vorschaltradsatzfernen Ende des genannten zylindrischen Abschnitts des Lamellenträgers ZYLBF, also auf der vorschaltradsatzfernen Seite des Lamellenpaketes 600, erstreckt sich ein zumindest weitgehend scheibenförmiger Abschnitt des Lamellenträgers ZYLBF radial nach innen bis zur Nabe des Lamellenträgers ZYLBF. Dabei ist diese Nabe in zwei Nabenabschnitte 633 und 233 unterteilt. Ausgehend vom Innendurchmesser des scheibenförmigen Abschnitts des Lamellenträgers ZYLBF erstreckt sich der Nabenabschnitt 633 axial in Richtung Vorschaltradsatz VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich, ausgehend vom Innendurchmesser des scheibenförmigen Abschnitts des Lamellenträgers ZYLBF, axial in Richtung Gehäusewand GW.

Die Servoeinrichtung 610 der Kupplung F, umfassend einen Druckraum 611, einen Druckausgleichsraum 612, einen Kolben 614, ein Rückstellelement 613 und eine Stauscheibe 615, ist vollständig innerhalb eines Zylinderraums angeordnet, der durch den Lamellenträger ZYLBF gebildet wird, im wesentlichen radial oberhalb des Nabenabschnitts 633. Der Kolben 614 ist am Lamellenträger ZYLBF axial verschiebbar gelagert. Entsprechend rotiert die Servoeinrichtung 610 ständig mit Drehzahl des ersten Eingangselementes (also hier des ersten Sonnenrades S1_HS) des Hauptradsatzes HS. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, wobei dieser Druckausgleichsraum 612 näher am Vorschaltradsatz VS (bzw. Hauptradsatz HS) angeordnet ist als der genannte Druckraum 611. Dabei wird der Druckraum 611 durch eine Mantelfläche des Lamellenträgers ZYLBF (und einen Teil dessen Nabenabschnitts 633) und den Kolben 614 gebildet. Der Druckausgleichsraum 612 wird gebildet durch den Kolben 614 und die Stauscheibe 615, welche axial an dem Nabenabschnitt 633 des Lamellenträgers ZYLBF fixiert und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen den Nabenabschnitt 633 des Lamellenträgers ZYLBF vorgespannt. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Räumlich gesehen ist die Servoeinrichtung 610 der Kupplung F näher an Haupt- und Vorschaltradsatz HS, VS angeordnet als die Servoeinrichtung 210 der Kupplung B. Dabei ist diese Servoeinrichtung 210 räumlich gesehen zumindest überwiegend in einem Bereich radial über dem zweiten Nabenabschnitt 233 des Lamellenträgers ZYLBF angeordnet und auch an dem Lamellenträger ZYLBF axial verschiebbar gelagert. Entsprechend rotiert auch die Servoeinrichtung 210 ständig mit Drehzahl des ersten Eingangselementes (also hier des ersten Sonnenrades S1_HS) des Hauptradsatzes HS. Die Servoeinrichtung 210 der Kupplung B umfasst einen Druckraum 211, einen Druckausgleichsraum 212, einen abschnittsweise meanderförmig ausgebildeten Kolben 214, ein Rückstellelement 213 und eine abschnittsweise zylindrische Stützscheibe 218. Zum Ausgleich des rotatorischen Drucks des rotierenden Druckraums 211 der Servoeinrichtung 210 ist ein dynamischer Druckausgleich mit dem Druckausgleichsraum vorgesehen. Zur Bildung des Druckraums 211 ist die Stützscheibe 218 druckmitteldicht am gehäusewandnahen Ende des Nabenabschnitts 233 des Lamellenträgers ZYLBF mit diesem Nabenabschnitt 233 verdrehfest befestigt und axial gesichert, im dargestellten Beispiel über ein abgedichtetes Mitnahmeprofil und einen Sicherungsring. Der zylindrische Abschnitt der Stützscheibe 218 erstreckt sich dabei axial in Richtung Vorschaltradsatz VS. Der Kolben 214 der Servoeinrichtung 210 ist gegen diesen zylindrischen Abschnitt der Stützscheibe 218 und gegen den Nabenabschnitt 233 des Lamellenträgers ZYLBF axial verschiebbar druckmitteldicht abgedichtet und weist in diesem Bereich eine meanderförmige Kontur auf. Entsprechend wird der Druckraum 211 der Servoeinrichtung 210 durch den Kolben 214, den zylindrischen Abschnitt der Stützscheibe 218, den radial unterhalb dieses zylindrischen Abschnitts der Stützscheibe 218 befindlichen scheibenförmigen Abschnitt der Stützscheibe 218, sowie einen Teil des Nabenabschnitts 233 des Lamellenträgers ZYLBF gebildet. Zur Bildung des Druckausgleichsraums 212 der Servoeinrichtung 210 weist der Lamellenträger ZYLBF auf einem definierten Durchmesser größer dem Durchmesser des zylindrischen Abschnitt der Stützscheibe 218 einen zweiten zylindrischen Abschnitt auf, der sich ausgehend von dem scheibenförmigen Abschnitt des hier beispielhaft einstückigen Lamellenträgers ZYLBF axial in Richtung Gehäusewand GW erstreckt. Der in diesem Bereich meanderförmige Kolben 214 ist gegen diesen zweiten zylindrischen Abschnitt des Lamellenträgers ZYLBF axial verschiebbar schmiermitteldicht abgedichtet. Entsprechend wird der Druckausgleichsraum 212 durch den Kolben 214, den genannten zweiten zylindrischen Abschnitt des Lamellenträger ZYLBF und den radial unterhalb dieses zweiten zylindrischen Abschnitts des Lamellenträgers ZYLBF befindlichen scheibenförmigen Abschnitt des Lamellenträgers ZYLBF gebildet. In seinem weiteren geometrischen Verlauf erstreckt sich der Kolben 214 zumindest weitgehend entlang der Außenkontur des radial oberem Bereichs des Lamellenträgers ZYLBF radial nach außen und axial in Richtung Vorschaltradsatz VS bis zu der vorschaltradsatzfernen Seite des ihm zugeordneten Lamellenpaketes 200 der Kupplung B. Axial vorgespannt wird der Kolben 214 durch das Rückstellelement 213, das hier beispielhaft als ein axial zwischen dem scheibenförmigen Abschnitt des Lamellenträgers ZYLBF und dem Kolben 214 angeordnetes Spiralfederpaket ausgebildet ist. Bei einer Beaufschlagung des Druckraums 211 mit Druckmittel zum Schließen der Kupplung B bewegt sich der Kolben 214 axial in Richtung Vorschaltradsatz VS (bzw. Hauptradsatz HS) und betätigt das ihm zugeordnete Lamellenpaket 200 gegen die Federkraft des Rückstellelementes 213. Der Kolben 214 umgreift also den für beide Kupplungen B, F gemeinsamen Lamellenträger ZYLBF fast vollständig.

Der Druckausgleichsraum 212 der Servoeinrichtung 210 der Kupplung B ist also näher am Vorschaltradsatz VS (bzw. Hauptradsatz HS) angeordnet als der Druckraum 211 dieser Servoeinrichtung 210, wobei der Druckausgleichsraum 212 der Kupplung B und der Druckraum 611 der Servoeinrichtung 610 der Kupplung F unmittelbar benachbart zueinander angeordnet und nur durch eine Mantelfläche des für beide Kupplungen B, F gemeinsamen Lamellenträgers ZYLBF voneinander getrennt sind.

Aufgrund der Lagerung des Lamellenträgers ZYLBF auf der getriebegehäusefesten Nabe GN ergibt sich eine konstruktiv relativ einfache Druck- und Schmiermittelzufuhr zu beiden Kupplungen B, F über entsprechende Kanäle bzw. Bohrungen, die abschnittsweise innerhalb der genannten Gehäusenabe GN und abschnittsweise innerhalb der Nabe des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Wie aus Fig. 9 weiterhin ersichtlich, grenzt die Kupplung E axial unmittelbar an den Vorschaltradsatz VS an dessen dem Hauptradsatz HS zugewandten Seite an. Das Eingangselement 520 der Kupplung E ist mit dem hauptradsatznahen Stegblech des gekoppelten Stegs ST_VS des Vorschaltradsatzes VS und mit der Antriebswelle AN verbunden und beispielhaft als Außenlamellenträger zur Aufnahme von beispielsweise als außenverzahnte Stahllamellen ausgeführten Außenlamellen des Lamellenpaketes 500 der Kupplung E ausgebildet. Das Ausgangselement 530 der Kupplung E ist beispielhaft als weitgehend scheibenförmiger Innenlamellenträger zur Aufnahme von beispielsweise als innenverzahnte Belaglamellen ausgeführten Innenlamellen des Lamellenpaketes 500 der Kupplung E ausgeführt und über eine Stegwelle 540 mit dem dritten Eingangselement des Hauptradsatzes HS - hier also mit dem gekoppelten Steg ST_HS des Hauptradsatzes HS - verbunden, wobei die Stegwelle 540 den Hauptradsatz HS in axialer Richtung zentrisch durchgreift. Geometrisch ist das Lamellenpakete 500 der Kupplung E beispielhaft im Durchmesserbereich des Hohlrades HO_VS des Vorschaltradsatzes VS angeordnet. Sinnvollerweise ist eine Servoeinrichtung 510 zur Betätigung des Lamellenpaketes 500 innerhalb des Eingangselementes 520 der Kupplung E angeordnet. Zweckmäßigerweise weist diese hier zur Vereinfachung nur schematisch dargestellte Servoeinrichtung 510 auch einen dynamischen Druckausgleich auf, da sie stets mit Drehzahl der Antriebswelle AN rotiert.

In Richtung Hauptradsatz HS gesehen grenzt die Kupplung A axial an die Kupplung E an. Dabei übergreift das mit dem Hohlrad HO_VS des Vorschaltradsatzes VS verbundene Eingangselement 120 dieser Kupplung A die Kupplung E vollständig und ist hier beispielhaft als Außenlamällenträger zur Aufnahme von vorzugsweise als außenverzahnte Belaglamallen ausgeführten Außenlamellen des Lamellenpaketes 100 der Kupplung A ausgebildet. Entsprechend ist das Ausgangselement 130 der Kupplung A hier beispielhaft als weitgehend scheibenförmiger Innenlamellenträger zur Aufnahme von vorzugweise als innenverzahnte Stahllamellen ausgeführten Innenlamellen des Lamellenpaketes 100 ausgebildet und über eine zweiten Sonnenwelle 140 mit dem zweiten Eingangselement - also hier dem zweiten Sonnenrad S2_HS - des Hauptradsatzes HS verbunden. Dabei umschließt diese zweite Sonnenwelle 140 die Stegwelle 540 abschnittsweise und durchgreift in ihrem axialen Verlauf das vorschaltradsatznahe erste Sonnenrad S1_HS des Hauptradsatzes HS zentrisch. Selbstverständlich können das zweite Sonnenrad S2_HS und die zweite Sonnenwelle 140 auch einstückig ausgeführt sein. Selbstverständlich können auch Ausgangselement (Innenlamellenträger) 130 der Kupplung A und zweite Sonnenwelle 140 einstückig ausgeführt sein, wobei die zweite Sonnenwelle 140 dann eine auf der Stegwelle 540 gelagerte Nabe des Ausgangselementes (Innenlamellenträger) 130 bildet. Im dargestellten Beispiel sind die Lamellenpakete 100, 200 der Kupplungen A, B auf einen zumindest ähnlichen Durchmesser angeordnet. Entsprechend kann auch ein für beide Kupplungen A, B gemeinsamer Lamellenträger als deren Eingangselement vorgesehen sein. Zur Betätigung des Lamellenpaketes 100 der Kupplung A ist eine Servoeinrichtung 110 vorgesehen, die hier beispielhaft auf der hauptradsatznahen Seite des Lamellenpakete 100 angeordnet ist und das Lamellenpaket 100 beim Schließen der Kupplung A axial in Richtung Vorschaltradsatz VS betätigt. Vorzugsweise weist diese hier zur Vereinfachung nur schematisch dargestellte Servoeinrichtung 110 auch einen dynamischen Druckausgleich auf, da die Servoeinrichtung 110 stets mit Drehzahl des zweiten Sonnenrades S2_HS des Hauptradsatzes HS rotiert. In einer anderen Anordnungsvariante kann die Servoeinrichtung 110 der Kupplung A auch auf der vorschaltradsatznahen Seite des ihr zugeordneten Lamellenpaketes 100 angeordnet sein, wobei dann dieses Lamellenpaket 100 beim Schließen der Kupplung A axial in Richtung Hauptradsatz HS betätigt wird.

Selbstverständlich können auch für die Kupplungen E und A anstelle der im Ausführungsbeispiel vorgesehenen wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahllamelle wechselseitig zu einem Lamellenpaket zusammengefügt werden müssen. Selbstverständlich können anstelle der vorgeschlagenen Stahllamellen auch Lamellen aus Carbon oder Kohlefasern oder anderen geeigneten Verbundwerkstoffen verwendet werden.

Wie bereits erwähnt, bildet der für beide Kupplungen B, F gemeinsame Lamellenträger ZYLBF das mit dem ersten Eingangselement des Hauptradsatzes HS verbundene Ausgangselement für beide Kupplungen B, F. Die Drehzahl- und Drehmomentübertragung zwischen diesem Lamellenträger ZYLBF und dem ersten Sonnenrad S1_HS des Hauptradsatzes HS erfolgt dabei über die Stützscheibe 218, ein zylinderförmiges Verbindungselement ZYL und eine erste Sonnenwelle 240. Die Stützscheibe 218 ist nahe der Gehäusewand GW mit der Nabe des Lamellenträgers ZYLBF verdrehfest verbunden, erstreckt sich axial angrenzend an diese Gehäusewand GW radial nach außen, und ist im Bereich ihres Außendurchmessers mit dem zylinderförmigen Verbindungselement ZYL verbunden, beispielsweise über ein Mitnahmeprofil. Dieses zylinderförmige Verbindungselement ZYL wiederum ist geometrisch als ein in Richtung Gehäusewand GW hin geöffneter Topf ausgebildet, mit einer zylinderringförmigen Mantelfläche, welche die Baugruppe der beiden Kupplungen B, F, den Vorschaltradsatz VS und die beiden Kupplungen E und A in axialer Richtung radial vollständig übergreift, sowie mit einem scheibenförmigen Topfboden, der sich neben der Kupplung A auf deren dem Hauptradsatz HS zugewandten Seite radial nach innen erstreckt bis knapp oberhalb der zweiten Sonnenwelle 140. In seinem Nabenbereich ist das zylinderförmige Verbindungselement ZYL mit der ersten Sonnenwelle 240 verdrehfest verbunden, welche wiederum mit dem Ausgangselement 330 der Bremse C und dem vorschaltradsatznahen ersten Sonnenrad S1_HS des Hauptradsatzes HS verbunden ist und in ihrem axialen Verlauf die zweite Sonnenwelle 140 abschnittsweise umschließt.

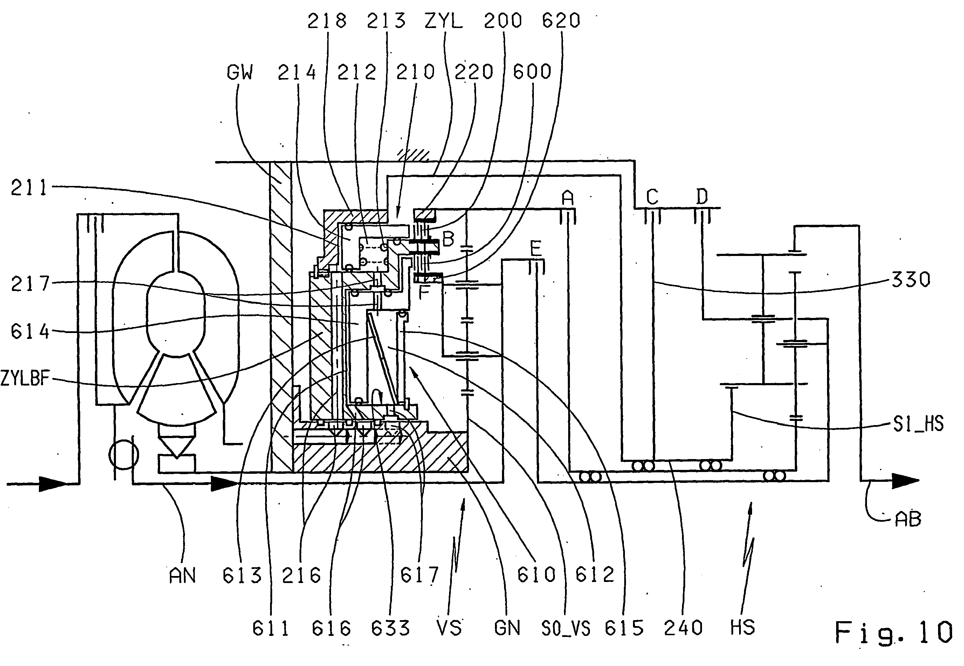

Anhand Fig. 10 wird nun ein neuntes beispielhaftes Getriebeschema gemäß der vorliegenden Erfindung erläutert, basierend auf dem zuvor anhand Fig. 9 beschriebenen achten erfindungsgemäßen Getriebeschema. Die Änderungen gegenüber Fig. 9 betreffen lediglich die konstruktive Ausgestaltung des für die beiden Kupplungen B, F gemeinsamen Lamellenträgers ZYLBF und die räumliche Lage der Servoeinrichtungen 210, 610 dieser beiden Kupplungen B, F. Insofern kann auf die nochmalige Beschreibung der übrigen Getriebebauelemente an dieser Stelle verzichtet werden.

Wie aus Fig. 10 ersichtlich, umfasst die Baugruppe mit den beiden Kupplungen B und F wie in Fig. 9 den für beide Kupplungen B und F gemeinsamen Lamellenträger ZYLBF, die Lamellenpakete 200, 600 der beiden Kupplungen B, F, sowie die Servoeinrichtungen 210 und 610 zum Betätigen dieser Lamellenpakete 200 und 600, ist axial zwischen dem Vorschaltradsatz VS und der antriebsmotornahen getriebegehäusefesten Gehäusewand GW angeordnet und auf der getriebegehäusefesten Nabe GN verdrehbar gelagert. Wie in Fig. 9 bildet der Lamellenträger ZYLBF für beide Kupplungen B, F deren Ausgangselement, ist für die Kupplung B als Innenlamellenträger und für die Kupplung F als Außenlamellenträger ausgebildet, und ist entsprechend der vorgegebenen kinematischen Kopplung mit dem ersten Eingangselement (hier also mit dem ersten Sonnenrad S1_HS) des Hauptradsatzes HS verdrehfest verbunden. Das als Außenlamellenträger ausgebildete Eingangselement 220 der Kupplung B wurde ebenso wie das als Innenlamellenträger ausgebildete Eingangselement 620 der Kupplung F aus Fig. 9 übernommen. Im Unterschied zu Fig. 9 ist die Kupplung B räumlich gesehen nunmehr vollständig radial über der Kupplung F angeordnet, wobei das Lamellenpaket 200 der Kupplung B radial über dem Lamellenpaket 600 der Kupplung F angeordnet ist, und wobei die Servoeinrichtung 210 der Kupplung B radial über der Servoeinrichtung 610 der Kupplung F angeordnet ist.

Wie aus Fig. 10 weiterhin ersichtlich, ist für die beiden Kupplungen B, F gemeinsame Lamellenträger ZYLBF geometrisch in Form eines in Richtung Vorschaltradsatz VS (bzw. Hauptradsatz HS) geöffneten Topfes ausgebildet. Am Außendurchmesser dieses Lamellenträgers ZYLBF ist ein gestufter zylindrischer Abschnitt vorgesehen, an dessen vorschaltradsatznahen Ende am Innendurchmesser die Außenlamellen des Lamellenpaketes 600 der (radial inneren) Kupplung F und am Außendurchmesser die Innenlamellen des Lamellenpaketes 200 der (radial äußeren) Kupplung B angeordnet sind. Beide Lamellenpakete 600, 200 grenzen also axial an den Vorschaltradsatz VS an. Ausgehend vom vorschaltradsatzfernen Ende des gestuften zylindrischen Abschnitts des Lamellenträgers ZYLBF erstreckt sich ein scheibenförmiger Abschnitt des Lamellenträgers ZYLBF parallel zur Gehäusewand GW radial nach innen bis zu einer Nabe 633 des Lamellenträgers ZYLBF. Diese Nabe 633 erstreckt sich, ausgehend vom Innendurchmesser des scheibenförmigen Abschnitts des Lamellenträgers ZYLBF, axial in Richtung Vorschaltradsatz VS und ist auf der getriebegehäusefesten Nabe GN, an der auch das Sonnenrad SO_VS des Vorschaltradsatzes VS festgesetzt ist, verdrehbar gelagert.

Die Servoeinrichtung 610 der Kupplung F ist vollständig innerhalb eines Zylinderraums angeordnet, der durch den gestuften zylindrischen Abschnitt und den scheibenförmigen Abschnitt des Lamellenträgers ZYLBF gebildet wird, und rotiert entsprechend ständig mit Drehzahl des ersten Eingangselementes (also hier des ersten Sonnenrades S1_HS) des Hauptradsatzes HS. Dabei umfasst diese Servoeinrichtung 610 einen Druckraum 611, einen Druckausgleichsraum 612, einen Kolben 614, ein Rückstellelement 613 und eine Stauscheibe 615. Der Kolben 614 ist im Lamellenträger ZYLBF druckmitteldicht axial verschiebbar gelagert und über das hier beispielhaft als Tellerfeder ausgebildete Rückstellelement 613 axial gegen den Nabenabschnitt 633 des Lamellenträgers ZYLBF vorgespannt. Der Druckraum 611 wird gebildet durch den Kolben 614 und einen Teil der inneren Mantelfläche des Lamellenträgers ZYLBF. Zum Ausgleich des rotatorischen Drucks des rotierenden Druckraums 611 ist ein dynamischer Druckausgleich mit dem Druckausgleichsraum 612 vorgesehen, wobei dieser Druckausgleichsraum 612 durch den Kolben 614 und die Stauscheibe 615 gebildet wird und näher am Vorschaltradsatz VS (bzw. Hauptradsatz HS) angeordnet ist als der genannte Druckraum 611.

Die Druckmittel- und Schmiermittel-Versorgung der Servoeinrichtung 610 der Kupplung F erfolgt in konstruktiv relativ einfacher Weise über die getriebegehäusefeste Nabe GN, wobei die entsprechenden Kanäle bzw. Bohrungen abschnittsweise innerhalb der genannten Gehäusenabe GN und abschnittsweise innerhalb der Nabe 633 des Lamellenträgers ZYLBF verlaufen. Eine Druckmittelzuführung zum Druckraum 611 der Servoeinrichtung 610 der Kupplung F ist mit 616 bezeichnet, eine Schmiermittelzuführung zum Druckausgleichsraum 612 der Servoeinrichtung 610 der Kupplung F mit 617. Wird der Druckraums 611 zum Schließen der Kupplung F mit Druckmittel beaufschlagt, so bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Wie bereits erwähnt, ist die Servoeinrichtung 210 der (radial äußeren) Kupplung B räumlich gesehen in einem Bereich radial über der Servoeinrichtung 610 der (radial inneren) Kupplung F angeordnet. Diese Servoeinrichtung 210 umfaßt einen Druckraum 211, einen Druckausgleichsraum 212, einen Kolben 214, ein Rückstellelement 213 und eine Stützscheibe 218. Dabei ist der Druckraum 211 der Servoeinrichtung 210 der (radial äußeren) Kupplung B zumindest in etwa radial über dem Druckraum 611 der Servoeinrichtung 610 der (radial inneren) Kupplung F und der Druckausgleichsraum 212 der Servoeinrichtung 210 der (radial äußeren) Kupplung B zumindest in etwa radial über dem Druckausgleichsraum 612 der Servoeinrichtung 610 der (radial inneren) Kupplung F angeordnet. Gebildet wird der Druckraum 211 durch den Kolben 214, die Stützscheibe 218 und einen Teil der äußeren Mantelfläche des Lamellenträgers ZYLBF. Hierzu ist die Stützscheibe 218 geometrisch in Form eines in Richtung Lamellenpaket 200 (bzw. in Richtung Vorschaltradsatz VS) hin geöffneten Topfes ausgebildet, dessen Mantelfläche den Kolben 214 außen umschließt, und dessen Topfboden an seinem Innendurchmesser am Außendurchmesser des scheibenförmigen Abschnitts des Lamellenträgers ZYLBF befestigt ist. Im dargestellten Beispiel ist für die Befestigung der Stützscheibe 218 an dem Lamellenträger ZYLBF ein drehmomentübertragendes, druckmitteldicht abgedichtetes Mitnahmeprofil und zur axialen Festlegung ein Sicherungsring vorgesehen. Somit ist der Kolben 214 zwischen dem Innendurchmesser des zylindrischen Abschnitts der Stützscheibe 218 und dem Außendurchmesser des gestuften zylindrischen Abschnitts des Lamellenträgers ZYLBF druckmitteldicht axial verschiebbar gelagert und über das Rückstellelement 213 axial gegen den Lamellenträger ZYLBF vorgespannt Das Rückstellelement 213 ist hier beispielhaft als Federpaket aus ringförmig ange-ordneten Spiralfedern ausgeführt.

Eine Druckmittelzuführung 216 zu dem Druckraum 211 der Servoeinrichtung 210 der Kupplung B verläuft abschnittsweise innerhalb der getriebegehäusefesten Nabe GN und abschnittsweise innerhalb des Lamellenträgers ZYLBF. Der Druckausgleichsraum 212 der Servoeinrichtung 210 der (radial äußeren) Kupplung B wird hier in baulängensparender Weise direkt über den Druckausgleichsraum 612 der Servoeinrichtung 610 der (radial inneren) Kupplung F drucklos mit Schmiermittel befüllt. Hierzu ist am Außendurchmesser des Kolbens 614 der Servoeinrichtung 610 mindestens eine Radialbohrung vorgesehen, die einerseits im Druckausgleichsraum 612 der Servoeinrichtung 610 und andererseits in einem nach außen hin schmiermitteldicht abgedichteten Ringkanal am Innendurchmesser des gestuften zylindrischen Abschnitts des Lamellenträgers ZYLBF mündet. Weiterhin ist in dem gestuften zylindrischen Abschnitt des Lamellenträgers ZYLBF mindestens eine Radialbohrung vorgesehen, die einerseits im genannten Ringkanal am Innendurchmesser des gestuften zylindrischen Abschnitts des Lamellenträgers ZYLBF und andererseits im Druckausgleichsraum 212 der Servoeinrichtung 210 mündet. Die entsprechenden Bohrungen bzw. Kanäle zwischen den beiden Druckausgleichsräumen 612, 212 sind in Fig. 10 mit 217 bezeichnet. Wird der Druckraum 211 der Servoeinrichtung 210 zum Schließen der Kupplung B mit Druckmittel befüllt, so bewegt sich der Kolben 214 axial in Richtung Vorschaltradsatz VS (bzw. Hauptradsatz HS) und betätigt das ihm zugeordnete Lamellenpaket 200 gegen die Federkraft des Rückstellelementes 213.

Zur Drehzahl- und Drehmomentübertragung zwischen dem Lamellenträger ZYLBF, der ja das Ausgangselement der beiden Kupplungen B, F bildet, und dem ersten Sonnenrad S1_HS des Hauptradsatzes HS ist- ähnlich wie in Fig. 9 - ein zylinderförmiges Verbindungselement ZYL vorgesehen, welches geometrisch als ein in Richtung Gehäusewand GW hin geöffneter Topf ausgebildet ist, mit einer ringförmigen Mantelfläche, welche die Baugruppe der beiden Kupplungen B, F teilweise und den Vorschaltradsatz VS sowie die beiden Kupplungen E und A in axialer Richtung vollständig radial übergreift und an ihrem der Gehäusewand GW zugewandten Ende über ein geeignetes Mitnahmeprofil verdrehfest mit der Stützscheibe 218 verbunden ist, sowie mit einem scheibenförmigen Topfboden, der sich neben der Kupplung A auf deren dem Hauptradsatz HS zugewandten Seite radial nach innen erstreckt und in seinem Nabenbereich mit der ersten Sonnenwelle 240 verdrehfest verbunden ist. Diese erste Sonnenwelle 240 wiederum ist mit dem Ausgangselement 330 der Bremse C und dem vorschaltradsatznahen ersten Sonnenrad S1_HS des Hauptradsatzes HS verbunden.

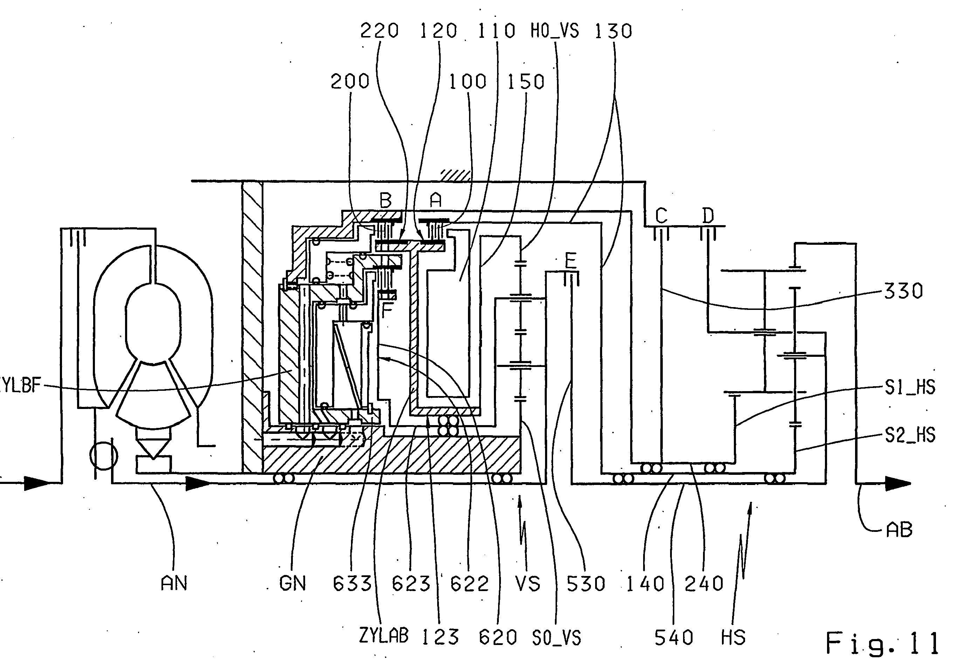

Anhand Fig. 11 wird nun ein zehntes beispielhaftes Getriebeschema gemäß der vorliegenden Erfindung erläutert, basierend auf dem zuvor anhand Fig. 10 beschriebenen neunten erfindungsgemäßen Getriebeschema. Der wesentliche Unterschied zu Fig. 10 betrifft die räumliche Lage der Kupplung A. Zumindest das Lamellenpaket 100 der Kupplung A ist nunmehr auf der dem Hauptrad HS abgewandten Seite des Vorschaltradsatzes VS angeordnet, axial zwischen diesem Vorschaltradsatz VS und der aus den beiden Kupplungen B und F bestehenden Baugruppe. Hieraus ergibt sich die Möglichkeit einer guten Lagerung des Eingangselementes 620 der Kupplung F in Verbindung mit einer guten Lagerung der Eingangselemente 120, 220 der Kupplungen A und B.

In dem in Fig. 11 dargestellten Beispiel weist das hier als Innenlamellenträger ausgebildete Eingangselement 620 der Kupplung F einen scheibenförmigen Abschnitt 622 auf, welcher sich ausgehend von dem Lamellenpaket 600 der Kupplung F radial nach innen erstreckt bis knapp oberhalb der getriebegehäusefesten Nabe GN, sowie eine Nabe 623, welche sich an dem genannten scheibenförmigen Abschnitt 622 im Bereich dessen Innendurchmessers anschließt und sich axial in Richtung Vorschaltradsatz VS bis knapp vor dessen Sonnenrad SO_VS erstreckt und in diesem Bereich mit dem hauptradsatzfernen Stegblech des gekoppelten Stegs ST_VS des Vorschaltradsatzes VS verdrehfest verbunden ist. Dabei ist diese Nabe 623 des Eingangselementes 620 auf der genannten getriebegehäusefesten Nabe GN mit relativ breiter Lagerbasis verdrehbar gelagert.

Für die beiden Kupplungen A, B ist ein gemeinsamer Lamellenträger ZYLAB vorgesehen, der für beide Kupplungen A. B deren Eingangselement (120, 220) bildet. Geometrisch ist dieser Lamellenträger ZYLAB im wesentlichen in Form eines Zylinders ausgebildet. Eine Nabe 123 dieses Lamellenträgers ZYLAB ist verdrehbar auf der Nabe 623 des Eingangselementes 620 der Kupplung F gelagert. Ein scheibenförmiger Abschnitt dieses Lamellenträgers ZYLAB schließt sich an die genannte Nabe 123 an und erstreckt sich radial nach außen bis zu einem Durchmesser, der etwas größer ist als der Durchmesser des Hohlrades HO_VS des Vorschaltradsatzes und in etwa dem Innendurchmesser der Lamellenpakete 100, 200 der beiden Kupplungen A, B entspricht. Am Außendurchmesser des genannten scheibenförmigen Abschnitts des Lamellenträgers ZYLAB schließt sich zum einen ein erster zylindrischer Abschnitt an, welcher dem Eingangselement 120 der Kupplung A zugeordnet ist, sich axial in Richtung Vorschaltradsatz VS erstreckt und an seinem Außendurchmesser die (hier beispielhaft als innenverzahnte Stahllamellen ausgeführten) Innenlamellen des Lamellenpaketes 100 der Kupplung A aufnimmt. Zum anderen schließt sich am Außendurchmesser des genannten scheibenförmigen Abschnitts des Lamellenträgers ZYLAB ein zweiter zylindrischer Abschnitt an, welcher dem Eingangselement 220 der Kupplung B zugeordnet ist, sich axial in zum Vorschaltradsatz VS entgegengesetzter Richtung erstreckt und an seinem Außendurchmesser die (hier beispielhaft als innenverzahnte Belaglamellen ausgeführten) Innenlamellen des Lamellenpaketes 200 der Kupplung B aufnimmt. Zur kinematischen Anbindung des Lamellenträgers ZYLAB, der ja für die beiden Kupplungen A, B deren Eingangselement bildet, an das Ausgangselement des Vorschaltradsatzes VS - also an das Hohlrad HO_VS - ist eine Mitnahmescheibe 150 vorgesehen, die sich unmittelbar angrenzend an den Vorschaltradsatz VS parallel auf dessen hauptradsatzfernen Seite erstreckt und über geeignete Verbindungsmittel mit dem Hohlrad HO_VS des Vorschaltradsatzes VS und der Nabe 123 des Lamellenträgers ZYLAB verbunden ist.

Das Ausgangselement 130 der Kupplung A ist als Außenlamellenträger ausgebildet, geometrisch in Form eines in zum Hauptradsatz HS entgegengesetzter Richtung hin geöffneten Topfes, der das-Lamellenpaket 100 und eine Servoeinrichtung 110 der Kupplung A, den Vorschaltradsatz VS und die Kupplung E in axialer Richtung radial übergreift. Am hauptradsatzfernen Ende seines zylindrischen Abschnitts nimmt dieser Außenlamellenträger 130 die (hier beispielhaft als außenverzahnte Belaglamellen ausgeführten) Außenlamellen des Lamellenpaketes 100 der Kupplung A auf. Am hauptradsatznahen Ende des zylindrischen Abschnitts des Außenlamellenträgers 130 schließt sich ein scheibenförmiger Abschnitt ("Topfboden") an, erstreckt sich angrenzend parallel zum Ausgangselement 530 der Kupplung E radial nach innen und ist in seinem Nabenbereich mit der zweiten Sonnenwelle 140 verdrehfest verbunden. Diese zweite Sonnenwelle 140 wiederum umschließt die mit dem Ausgangselement 530 der Kupplung E verbundene Stegwelle 540 und erstreckt sich radial innerhalb der mit dem ersten Sonnenrad S1_HS des Hauptradsatzes HS verbundenen ersten Sonnenwelle 240 axial in Richtung Hauptradsatz HS, durchgreift das erste Sonnenrad S1_HS zentrisch und ist mit dem zweiten Sonnenrad S2_HS des Hauptradsatzes HS verbunden.

Die zur Betätigung des Lamellenpaketes 100 der Kupplung A vorgesehene Servoeinrichtung 110 ist hier beispielhaft radial oberhalb der Nabe 123 des Lamellenträgers ZYLAB angeordnet, rotiert stets mit Drehzahl des Ausgangselementes - also des Hohlrads HO_VS - des Vorschaltradsatzes VS und betätigt das ihr zugeordnete Lamellenpaket 100 beim Schließen der Kupplung A axial in zum Vorschaltradsatz VS (bzw. Hauptradsatz HS) entgegengesetzter Richtung. Selbstverständlich kann die zur Vereinfachung hier nur schematisch dargestellte Servoeinrichtung 110 einen dynamischen Druckausgleich aufweisen. Eine (hier nicht näher dargestellte) Druck- und Schmiermittelzufuhr zu der Servoeinrichtung 110 verläuft zweckmäßigerweise über entsprechende Kanäle bzw. Bohrungen abschnittsweise innerhalb der getriebegehäusefesten Nabe GN, abschnittsweise innerhalb der Nabe 623 des Innenlamellenträgers 620 der Kupplung F und abschnittsweise innerhalb der Nabe 123 des für die Kupplungen A, B gemeinsamen Lamellenträgers ZYLAB.

In einer anderen Ausgestaltungsvariante zur räumlichen Lage der Servoeinrichtung 110 der Kupplung A kann beispielsweise auch vorgesehen sein, dass ein Kolben dieser Servoeinrichtung 110 im Ausgangselement 130 der Kupplung A axial verschiebbar gelagert ist und ein Druckraum bzw. ein Druckausgleichsraum dieser Servoeinrichtung 110 im Bereich axial neben dem Ausgangselement 530 der Kupplung E angeordnet ist In diesem Fall ist es zweckmäßig, dass die Außenlamellen des Lamellenpaketes 100 der Kupplung A als außenverzahnte Stahllamellen und die Innenlamellen des Lamellenpaketes 100 als innenverzahnte Belaglamellen ausgeführt sind.

Die räumliche Anordnung der übrigen Getriebebauelemente des zehnten erfindungsgemäßen Getriebeschemas gemäß Fig. 11 entspricht der in Fig. 10 dargestellten Anordnung, insofern kann auf deren nochmalige Beschreibung an dieser Stelle verzichtet werden.

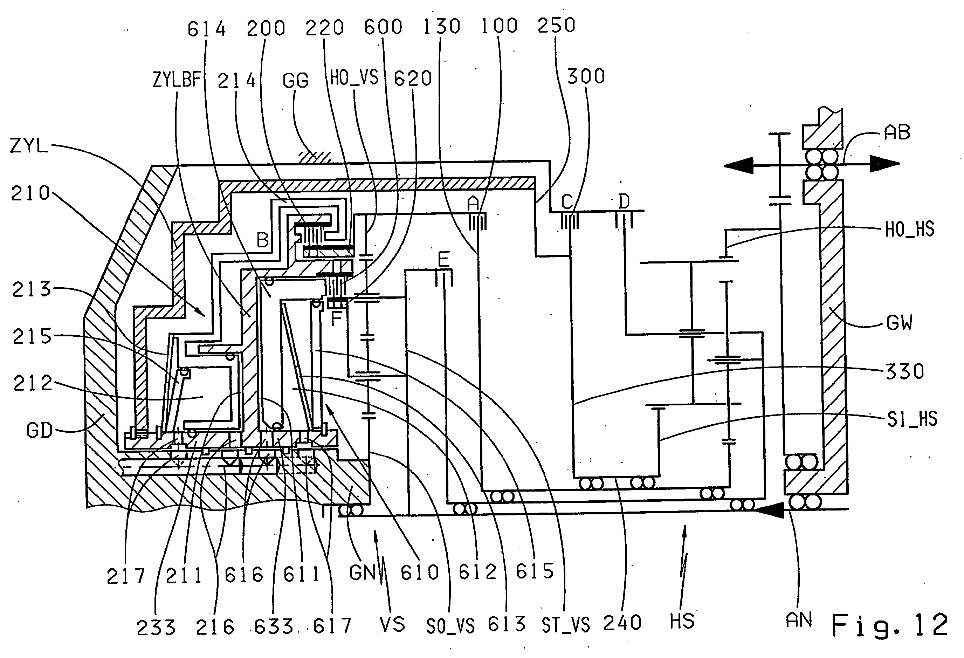

Anhand Fig. 12 wird nun ein elftes beispielhaftes Getriebeschema gemäß der vorliegende Erfindung erläutert, basierend auf dem anhand Fig. 9 beschriebenen achten erfindungsgemäßen Getriebeschema. Die wesentlichen Unterschiede zu Fig. 9 betreffen die konstruktive Ausbildung des für die beiden Kupplungen B und F gemeinsamen Lamellenträgers ZYLBF und die Betätigungsrichtung der Servoeinrichtung 210 der Kupplung B beim Schließen, sowie die räumliche Lage von Antrieb und Abtrieb des Getriebes relativ zueinander. In dem in Fig. 12 dargestellten Beispiel sind Antriebswelle AN und Abtriebswelle AB nunmehr nicht koaxial zueinander angeordnet, sondern achsparallel. Der Abtrieb des Getriebes ist nunmehr nahe einem mit der Antriebswelle AN des Getriebes verbundenen (hier nicht näher dargestellten) Antriebsmotor angeordnet. Ein mit dem Ausgangselement - also hier dem Hohlrad HO_HS - des Hauptradsatzes HS verbundenes erstes Stirnrad des Getriebe-Abtriebs und ein mit diesem ersten Stirnrad kämmendes zweites Stirnrad des Getriebe-Abtriebs sind an einer antriebsmotornahen getriebegehäusefesten Gehäusewand GW verdrehbar gelagert. Das genannte zweite Stirnrad ist vereinfacht mit der Abtriebswelle AB verbunden. Selbstverständlich kann zwischen diesem zweiten Stirnrad und der Abtriebswelle AB auch ein Differential kinematisch zwischengeschaltet sein. Die Antriebswelle AN durchdringt die genannte Gehäusewand GW zentrisch. Aus Fig. 12 ist jedoch sofort ersichtlich, dass, obwohl sich dieses Getriebeschema aufgrund der besonderen konstruktiven Ausbildung der Baugruppe mit den beiden Kupplungen B, F besonders gut für den Einsatz in einem Kraftfahrzeug mit sogenanntem "Front-Quer-Antrieb" eignet, der Fachmann diese Anordnung von Antriebs- und Abtriebswelle AN, AB bei Bedarf ohne besonderen konstruktiven Aufwand für einen Antriebsstrang mit koaxialer Anordnung von Antriebs- und Abtriebswelle modifizieren wird.

Wie aus Fig. 12 weiterhin ersichtlich, ist der Hauptradsatz HS nunmehr antriebsmotornah angeordnet und wird von der mit dem gekoppelten Steg ST_VS des Vorschaltradsatzes VS verbundenen Antriebswelle AN in axialer Richtung zentrisch vollkommen durchdrungen. Entsprechend ist der Vorschaltradsatz VS nunmehr auf dem Antriebsmotor abgewandten Seite des Hauptradsatzes HS angeordnet. Die räumliche Lage der Schaltelemente E, A, C und D - insbesondere die Reibelemente dieser Schaltelemente E, A, C, D - im Bereich axial zwischen Vorschaltradsatz VS und Hauptradsatz HS wurde aus Fig. 9 übernommen. Ähnlich wie in Fig. 9 bilden die Kupplungen B und F eine fertigungstechnisch einfach vormontierbare Baugruppe, die auf der dem Hauptradsatz HS abgewandten Seite des Vorschaltradsatzes VS angeordnet ist, unmittelbar angrenzend an diesen Vorschaltradsatz VS und nunmehr axial zwischen Vorschaltradsatz VS und einem getriebegehäusefesten Gehäusedeckel GD. Dieser Gehäusedeckel GD bildet die dem Antriebsmotor gegenüberliegende Außenwand des Getriebegehäuses GG. Selbstverständlich können Gehäusedeckel GD und Getriebegehäuse GG auch einstückig ausgeführt sein. Dabei weist der Gehäusedeckel GD eine getriebegehäusefeste Nabe GN auf, welche sich axial in Richtung Vorschaltradsatz VS erstreckt und auf welcher der für die beiden Kupplungen B, F gemeinsame Lamellenträgers ZYLBF verdrehbar gelagert ist. Das Sonnenrad SO_VS des Vorschaltradsatzes VS ist an dieser Nabe GN am Getriebegehäuse GG festgesetzt.

Der Lamellenträger ZYLBF bildet für beide Kupplungen B, F deren mit dem ersten Eingangselement (Sonnenrad S1_HS) des Hauptradsatzes HS verbundenes Ausgangselement, ist im Unterschied zu Fig. 9 jedoch für beide Kupplungen B, F nunmehr als Außenlamellenträger zur Aufnahme der Außenlamellen der jeweiligen Lamellenpaket 200 bzw. 600. ausgebildet. Entsprechend sind die Eingangselemente 220, 620 beider Kupplungen B, F nunmehr beide als lnnenlamellenträger zur Aufnahme der Innenlamellen des jeweiligen Lamellenpaketes 200 bzw. 600 ausgeführt. Dabei ist das Lamellenpaket 200 der Kupplung B auf einem größeren Durchmesser angeordnet als das Lamellenpaket 600 der Kupplung F, räumlich gesehen in einem Bereich in etwa radial über diesem Lamellenpaket 600.

Geometrisch weist der für die Kupplungen B, F gemeinsame Lamellenträger ZYLBF eine im wesentlichen zylinderförmige Struktur auf. Eine Nabe des Lamellenträgers ZYLBF ist auf der getriebegehäusefesten Nabe GN der Gehäusewand GW verdrehbar gelagert. Ausgehend von dieser Nabe des Lamellenträgers ZYLBF erstreckt sich in etwa nabenmittig ein erster scheibenförmiger Abschnitt des Lamellenträgers ZYLBF radial nach außen in etwa bis zum Außendurchmesser des Lamellenpaketes 600 der Kupplung F (hier beispielhaft in etwa bis zum Durchmesser des Hohlrades HO_VS des Vorschaltradsatzes VS) und trennt dabei diese Nabe des Lamellenträgers ZYLBF geometrisch in zwei Nabenabschnitte 633 und 233. Der Nabenabschnitt 633 erstreckt sich axial in Richtung Vorschaltradsatz VS bis zu dessen Sonnenrad SO_VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich axial in Richtung Gehäusedeckel GD. Am Außendurchmesser des genannten ersten scheibenförmigen Abschnitts des Lamellenträgers ZYLBF schließt sich ein erster zylindrischer Abschnitt des Lamellenträgers ZYLBF an, erstreckt sich axial in Richtung Vorschaltradsatz VS bis über das an den Vorschaltradsatz VS axial angrenzende Lamellenpaket 600 der Kupplung F und weist an seinem Innendurchmesser ein geeignetes Mitnahmeprofil auf zur Aufnahme der Außenlamellen dieses Lamellenpaketes 600. Am Außendurchmesser dieses ersten zylindrischen Abschnitts des Lamellenträgers ZYLBF - hier beispielhaft räumlich gesehen in etwa abschnittsmittig - schließt sich ein zweiter scheibenförmiger Abschnitt des Lamellenträgers ZYLBF an und erstreckt sich radial nach außen in etwa bis zum Außendurchmesser des (radial äußeren) Lamellenpaketes 200 der Kupplung B. Am Außendurchmesser dieses zweiten scheibenförmigen Abschnitts des Lamellenträgers ZYLBF schließt sich ein zweiter zylindrischer Abschnitt des Lamellenträgers ZYLBF an, erstreckt sich axial in Richtung Vorschaltradsatz VS bis über das dem Vorschaltradsatz VS benachbarte Lamellenpaket 200 der Kupplung B und weist an seinem Innendurchmesser ein geeignetes Mitnahmeprofil auf zur Aufnahme der Außenlamellen dieses Lamellenpaketes 200.

Die Servoeinrichtung 610 der Kupplung F, umfassend einen Druckraum 611, einen Druckausgleichsraum 612, einen Kolben 614, ein Rückstellelement 613 und eine Stauscheibe 615, ist vollständig innerhalb eines Zylinderraums angeordnet, der durch den ersten scheibenförmigen und den ersten zylindrischen Abschnitt des Lamellenträgers ZYLBF gebildet wird, im wesentlichen radial oberhalb des Nabenabschnitts 633. Der Kolben 614 ist am Lamellenträger ZYLBF (konkret am Nabenabschnitt 633 und am ersten zylindrischen Abschnitt des Lamellenträgers ZYLBF) druckmitteldicht axial verschiebbar gelagert. Entsprechend rotiert die Servoeinrichtung 610 ständig mit Drehzahl des ersten Eingangselementes (also hier des Sonnenrades S1_HS) des Hauptradsatzes HS. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, wobei dieser Druckausgleichsraum 612 näher am Vorschaltradsatz VS (bzw. Hauptradsatz HS) angeordnet ist als der genannte Druckraum 611. Dabei wird der Druckraum 611 durch eine Manteltläche des Lamellenträgers ZYLBF (konkret durch den ersten scheibenförmigen Abschnitt des Lamellenträgers ZYLBF, einen Teil des ersten zylindrischen Abschnitts des Lamellenträgers ZYLBF und einen Teil des Nabenabschnitts 633) und den Kolben 614 gebildet. Der Druckausgleichsraum 612 wird gebildet durch den Kolben 614 und die Stauscheibe 615, welche axial an dem Nabenabschnitt 633 des Lamellenträgers ZYLBF fixiert ist und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen den Nabenabschnitt 633 des Lamellenträgers ZYLBF vorgespannt. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600-gegen die Federkraft des Rückstellelementes 613.

Räumlich gesehen ist die Servoeinrichtung 210 der Kupplung B zumindest überwiegend in einem Bereich radial über dem zweiten Nabenabschnitt 233 des Lamellenträgers ZYLBF angeordnet und auch an dem Lamellenträger ZYLBF axial verschiebbar gelagert. Entsprechend rotiert auch die Servoeinrichtung 210 ständig mit Drehzahl des ersten Eingangselementes (also hier des ersten Sonnenrades S1_HS) des Hauptradsatzes HS. Die Servoeinrichtung 210 der Kupplung B umfasst einen Druckraum 211, einen Druckausgleichsraum 212, einen abschnittsweise meanderförmig ausgebildeten Kolben 214, ein Rückstellelement 213 und Stauscheibe 215. Zum Ausgleich des rotatorischen Drucks des rotierenden Druckraums 211 der Servoeinrichtung 210 ist ein dynamischer Druckausgleich mit dem drucklos mit Schmiermittel befüllbaren Druckausgleichsraum 212 vorgesehen. Zur Bildung des Druckraums 211 weist der Lamellenträger ZYLBF einen dritten zylindrischen Abschnitt auf, der sich auf einem definierten Durchmesser ausgehend vom ersten scheibenförmigen Abschnitt des Lamellenträgers ZYLBF axial in Richtung Gehäusewand GW erstreckt. Der Kolben 214 ist am Lamellenträger ZYLBF, konkret am Nabenabschnitt 233 und am genannte dritten zylindrischen Abschnitt des Lamellenträgers ZYLBF druckmitteldicht axial verschiebbar gelagert. Entsprechend wird der Druckraum 211 durch eine Mantelfläche des Lamellenträgers ZYLBF (konkret durch einen Teil des ersten scheibenförmigen Abschnitt des Lamellenträgers ZYLBF, einen Teil des dritten zylindrischen Abschnitts des Lamellenträgers ZYLBF und einen Teil des Nabenabschnitts 233) und den Kolben 214 gebildet. In seinem weiteren geometrischen Verlauf umgreift der Kolben 214 den genannten dritten zylindrischen Abschnitt des Lamellenträgers ZYLBF in axialer und radialer Richtung meanderförmig und erstreckt sich im wesentlichen entlang der Außenkontur des Lamellenträgers ZYLBF radial nach außen bis über dessen Außendurchmesser, übergreift anschließend das Lamellenpaket 200 der Kupplung B in axialer und radialer Richtung, wobei ein mit diesem Kolben verbundener Betätigungsfinger oder Betätigungsring von der dem Vorschaltradsatz VS zugewandten Seite des Lamellenpaketes 200 her auf dieses Lamellenpaket 200 wirkt. Der Kolben 214 ist dabei über das hier beispielhaft als Tellerfeder ausgebildete Rückstellelement 213 axial gegen den Nabenabschnitt 233 des Lamellenträgers ZYLBF vorgespannt. Bei einer Beaufschlagung des Druckraums 211 mit Druckmittel zum Schließen der Kupplung B bewegt sich der Kolben 214 axial in zum Vorschaltradsatz VS (bzw. Hauptradsatz HS) entgegengesetzter Richtung und betätigt das ihm zugeordnete Lamellenpaket 200 gegen die Federkraft des Rückstellelementes 213.

Im Unterschied zu Fig. 9 ist der Druckraum 211 der Servoeinrichtung 210 der Kupplung B also nunmehr unmittelbar benachbart zum Druckraum 611 der Servoeinrichtung 610 der Kupplung F angeordnet und von diesem nur durch eine Mantelfläche des für die Kupplungen B, F gemeinsamen Lamellenträgers ZYLBF getrennt. Die Betätigungsrichtungen dieser beiden Servoeinrichtungen 210, 610 beim Schließen der jeweiligen Kupplung B bzw. F sind dabei verschieden. Bezogen auf die räumliche Lage von Druckraum 211 und Lamellenpaket 200 wird die Kupplung B beim Schließen nunmehr "ziehend" betätigt.

Wie bereits erwähnt, weist die Servoeinrichtung 210 der Kupplung B auch einen dynamischen Druckausgleich auf. Räumlich gesehen ist der entsprechende Druckausgleichsraum 212 auf der dem Druckraum 211 der Servoeinrichtung 210 abgewandten Seite des Kolbens 214 der Servoeinrichtung 210 angeordnet in einem Bereich radial unterhalb des dritten zylindrischen Abschnitts des Lamellenträgers ZYLBF. Gebildet wird dieser Druckausgleichsraum 212 durch den genannten Kolben 214 und die Stauscheibe 215, welche gegenüber dem Kolben 214 axial verschiebbar schmiermitteldicht abgedichtet ist und an dem Nabenabschnitt 233 des Lamellenträgers ZYLBF axial festgesetzt ist.

Aufgrund der Lagerung des Lamellenträgers ZYLBF auf der getriebegehäusefesten Nabe GN der Gehäusewand GW ergibt sich eine konstruktiv relativ einfache Druck- und Schmiermittelzufuhr zu beiden Kupplungen B, F über entsprechende Kanäle bzw. Bohrungen, die abschnittsweise innerhalb der genannten Gehäusenabe GN und abschnittsweise innerhalb der Nabe des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Zur Drehzahl- und Drehmomentübertragung zwischen dem Lamellenträger ZYLBF, der ja das Ausgangselement der beiden Kupplungen B, F bildet, und dem Sonnenrad S1_HS des Hauptradsatzes HS ist ein zylinderförmiges Verbindungselement ZYL vorgesehen, welches geometrisch als ein in Richtung Hauptradsatz HS hin geöffneter Topf ausgebildet ist. Ein Topfboden dieses Verbindungselementes ZYL erstreckt sich in radialer Richtung zwischen Gehäusedeckel GD und dem Kolben 214 der Servoeinrichtung 210 der Kupplung B und ist insbesondere im radial äußeren Bereich im wesentlichen an die Kontur dieses Kolbens 214 angepasst. Das führt in dem dargestellten Beispiel zu der mehrfach abgewinkelten, im wesentlichen aber noch scheibenförmigen Kontur dieses Topfbodens. So befindet sich das radial äußere Ende des Topfbodens hier beispielhaft in etwa radial über dem ersten scheibenförmigen Abschnitt des Lamellenträgers ZYLBF. Auch die Gehäusewand GW ist zum größeren Durchmesser hin axial in Richtung Vorschaltradsatz VS abgeschrägt, was wiederum besonders vorteilhaft ist für den Einbau des Getriebes in einem Kraftfahrzeug mit "Front-Quer-Antrieb", da der für das Getriebe zur Verfügung stehende Einbauraum in diesem Bereich üblicherweise durch einen Fahrzeuglängsrahmen deutlich eingeschränkt ist. In seinem Nabenbereich ist der Topfboden des Verbindungselementes ZYL verdrehfest mit dem gehäusedeckelseitigen Ende der Nabe bzw. des Nabenabschnitts 233 des Lamellenträgers ZYLBF verbunden, hier beispielhaft formschlüssig über ein geeignetes Mitnahmeprofil. Am Außendurchmesser des Topfbodens, auf einem Durchmesser größer dem Außendurchmesser des Kolbens 214, schließt sich eine ringförmige Mantelfläche des zylinderförmigen Verbindungselementes ZYL an diesen Topfboden an und erstreckt sich axial in Richtung Hauptradsatz HS und übergreift dabei die (im wesentlichen radial übereinander angeordneten) Lamellenpakete 200 und 600 der Kupplungen B und F, den Vorschaltradsatz VS sowie die Kupplungen E und A in axialer Richtung vollständig. An seinem hauptradsatznahen Ende, räumlich gesehen in einem Bereich axial zwischen dem Lamellenpaket 100 der Kupplung A und dem Lamellenpaket 300 der Bremse C, ist das zylinderförmige Verbindungselement ZYL verdrehfest mit einem Mitnahmeblech 250 verbunden, beispielsweise formschlüssig über eine geeignetes Mitnahmeprofil. Dieses Mitnahmeblech 250 wiederum ist mit dem als Innenlamellenträger ausgebildeten Ausgangselement 330 der Bremse C verbunden. Das Ausgangselement 330 der Bremse C wiederum erstreckt sich axial angrenzend an das Ausgangselement 130 der Kupplung A radial nach innen und ist in seinem Nabenbereich mit einer Sonnenwelle 240 verdrehfest verbunden. Diese Sonnenwelle 240 wiederum ist mit dem vorschaltradsatznahen Sonnenrad S1_HS des Hauptradsatzes HS verbunden.

In einer anderen Ausgestaltung kann beispielsweise auch vorgesehen sein, dass - bei unveränderter räumlichen Lage des Lamellenpaketes 300 der Bremse C in einem Bereich und axial zwischen Kupplung A und Bremse D - das zylinderförmige Verbindungselement ZYL gleichzeitig den Innenlamellenträger 330 der Bremse bildet. Ist das Lamellenpaket 300 der Bremse C radial unterhalb des Außendurchmessers des Verbindungselementes ZYL angeordnet, so muß der vormals mit Topfboden bezeichnete Abschnitt des Verbindungselementes ZYL als separates Bauelement ausgeführt sein. Selbstverständlich kann die Bremse C aber auch auf einem Durchmesser größer dem Außendurchmesser des Verbindungselementes ZYL angeordnet sein. In noch einer anderen Ausgestaltung kann die Bremse C räumlich gesehen auch auf der dem Hauptradsatz HS abgewandten Seite des Vorschaltradsatzes VS angeordnet sein, beispielsweise in einem Bereich radial über der Kupplung B oder in einem Bereich zwischen Gehäusedeckel GD und Topfboden des Verbindungselementes ZYL radial über dem Druckausgleichsraum 212 der Servoeinrichtung 210 der Kupplung B.

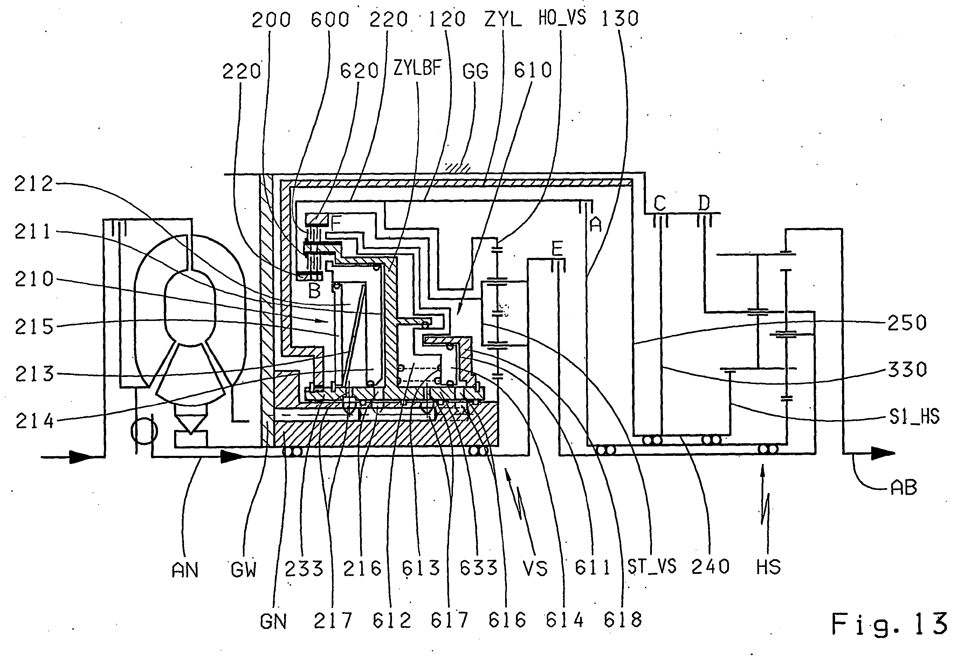

Anhand Fig. 13 wird nun ein zwölftes beispielhaftes Getriebeschema gemäß der vorliegenden Erfindung erläutert, wiederum basierend auf dem anhand Fig. 9 beschriebenen achten erfindungsgemäßen Getriebeschema. Die wesentlichen Unterschiede zu Fig. 9 betreffen die konstruktive Ausbildung des für die beiden Kupplungen B und F gemeinsamen Lamellenträgers ZYLBF sowie die Anordnung der Lamellenpakete 200, 600 der beiden Kupplungen B, F relativ zueinander. In dem in Fig. 13 dargestellten Beispiel ist die vormontierbare Baugruppe mit den beiden Kupplungen B und F unverändert auf der dem Hauptradsatz HS abgewandten Seite des Vorschaltradsatzes VS in einem Bereich axial zwischen Vorschaltradsatz VS und einer getriebegehäusefesten Gehäusewand GW angeordnet. Unverändert umfasst diese Baugruppe mit den beiden Kupplungen B, F auch einen für diese beiden Kupplungen B, F gemeinsamen Lamellenträger ZYLBF, die Lamellenpakete 200 und 600 dieser beiden Kupplungen B, F sowie die Servoeinrichtungen 210 und 610 zur Betätigung dieser Lamellenpakete 200, 600. Ein wesentlicher Unterschied zu Fig. 9 ist, dass das Lamellenpaket 200 der Kupplung B nunmehr auf einem kleineren Durchmesser angeordnet ist als das Lamellenpaket 600 der Kupplung F, räumlich gesehen in einem Bereich radial unterhalb dieses Lamellenpaketes 600. Dabei sind die beiden radial übereinander angeordneten Lamellenpakete 200, 600 nunmehr auf der Seite der Baugruppe angeordnet sind, die dem Vorschaltradsatz VS abgewandt bzw. der getriebegehäusefesten Gehäusewand GW zugewandt ist.

Der für beide Kupplungen B, F gemeinsame Lamellenträger ZYLBF bildet deren Ausgangselement und ist für die Kupplung F als Innenlamellenträger zur Aufnahme von innenverzahnten Lamellen des (radial äußeren) Lamellenpaketes 600 und für die Kupplung B als Außenlamellenträger zur Aufnahme von außenverzahnten Lamellen des (radial inneren) Lamellenpaketes 200 ausgebildet. Entsprechend ist das mit dem gekoppelten Steg ST_VS des Vorschaltradsatzes VS und über diesen Steg ST_VS mit der Antriebswelle AN verbundene Eingangselement 620 der Kupplung F als Außenlamellenträger zur Aufnahme von außenverzahnten Lamellen des Lamellenpaketes 600 dieser Kupplung F ausgebildet. Das mit dem Hohlrad HO_VS des Vorschaltradsatzes VS verbundene Eingangselement 220 der Kupplung B ist als Innenlamellenträger zur Aufnahme der innenverzahnten Innenlamellen des Lamellenpaketes 200 dieser Kupplung B ausgebildet. Entsprechend der räumlichen Lage der beiden radial übereinander angeordneten Lamellenpakete 200, 600 auf der dem Vorschaltradsatz VS abgewandten bzw. auf der der getriebegehäusefesten Gehäusewand GW zugewandten Seite der Baugruppe umgreift das Eingangselement 220 der Kupplung B dabei das Eingangselement 620 und das (radial äußere) Lamellenpaket 600 der Kupplung F sowie das (radial innere) Lamellenpaket 200 der Kupplung B in axialer und radialer Richtung vollständig.

Geometrisch weist der für die Kupplungen B, F gemeinsame Lamellenträger ZYLBF eine im wesentlichen zylinderförmige Struktur auf und ist auf einer getriebegehäusefesten Nabe GN, die sich ausgehend von der Gehäusewand GW in den Getriebeinnenraum axial in Richtung Vorschaltradsatz VS erstreckt, verdrehbar gelagert. An dieser Nabe GN ist das Sonnenrad SO_VS des Vorschaltradsatzes VS über eine geeignete Verbindung festgesetzt Selbstverständlich können Nabe GN und Gehäusewand GW auch einstückig ausgeführt sein. Beispielsweise kann die Nabe GN auch eine Leitradwelle eines im Kraftfluß zwischen Antriebswelle AN und Antriebsmotor des Getriebes angeordneten Drehmomentwandlers sein. Am Außendurchmesser des Lamellenträgers ZYLBF ist ein erster zylindrischer Abschnitt vorgesehen, an dessen Innendurchmesser die Außenlamellen des Lamellenpaketes 200 der Kupplung B und an dessen Außendurchmesser die Innenlamellen des Lamellenpaketes 600 der Kupplung F angeordnet sind, wobei beide Lamellenpakete 600 und 200 - wie gesagt - nahe der getriebegehäusefesten Gehäusewand GW angeordnet sind. Ausgehend vom vorschaltradsatznahen Ende des genannten ersten zylindrischen Abschnitts des Lamellenträgers ZYLBF, also auf der vorschaltradsatznahen Seite des Lamellenpaketes 200, erstreckt sich ein zumindest weitgehend scheibenförmiger Abschnitt des Lamellenträgers ZYLBF radial nach innen bis zur Nabe des Lamellenträgers ZYLBF. Dabei ist diese Nabe in zwei Nabenabschnitte 633 und 233 unterteilt. Ausgehend vom Innendurchmesser des scheibenförmigen Abschnitts des Lamellenträgers ZYLBF erstreckt sich der Nabenabschnitt 633 axial in Richtung Vorschaltradsatz VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich, ausgehend Innendurchmesser des scheibenförmigen Abschnitts des Lamellenträgers ZYLBF, axial in Richtung Gehäusewand GW.

Die Servoeinrichtung 610 der Kupplung F zur Betätigung des radial äußeren Lamellenpaketes 600 umfasst einen Druckraum 611, einen Druckaüsgleichsraum 612, einen abschnittsweise meanderförmig ausgebildeten Kolben 614, ein Rückstellelement 613 und eine abschnittsweise zylindrische Stützscheibe 618 und ist im wesentlichen radial oberhalb des (vorschaltradsatznahen) Nabenabschnitts 633 des Lamellenträgers ZYLBF angeordnet. Der Kolben 614 ist am Lamellenträger ZYLBF axial verschiebbar gelagert. Entsprechend rotiert die Servoeinrichtung 610 ständig mit Drehzahl des ersten Eingangselementes (also hier des ersten Sonnenrades S1_HS) des Hauptradsatzes HS. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, wobei der genannte Druckraum 611 näher am Vorschaltradsatz VS (bzw. Hauptradsatz HS) angeordnet ist als dieser Druckausgleichsraum 612. Zur Bildung des Druckraums 611 ist die Stützscheibe 618 druckmitteldicht am vorschaltradsatznahen Ende des Nabenabschnitts 633 des Lamellenträgers ZYLBF mit diesem Nabenabschnitt 633 befestigt und axial gesichert. Der zylindrische Abschnitt der Stützscheibe 618 erstreckt sich dabei axial in zum Vorschaltradsatz VS entgegengesetzter Richtung. Der Kolben 614 der Servoeinrichtung 610 ist gegen diesen zylindrischen Abschnitt der Stützscheibe 618 und gegen den Nabenabschnitt 633 des Lamellenträgers ZYLBF axial verschiebbar druckmitteldicht abgedichtet und weist in diesem Bereich eine meanderförmige Kontur auf. Entsprechend wird der Druckraum 611 der Servoeinrichtung 610 durch den Kolben 614, den zylindrischen Abschnitt der Stützscheibe 618, den radial unterhalb dieses zylindrischen Abschnitts der Stützscheibe 618 befindlichen scheibenförmigen Abschnitt der Stützscheibe 618, sowie einen Teil des Nabenabschnitts 633 des Lamellenträgers ZYLBF gebildet. Zur Bildung des Druckausgleichsraums 612 der Servoeinrichtung 610 weist der Lamellenträger ZYLBF auf einem definierten Durchmesser größer dem Durchmesser des zylindrischen Abschnitt der Stützscheibe 618 einen zweiten zylindrischen Abschnitt auf, der sich ausgehend von dem scheibenförmigen Abschnitt des hier beispielhaft einstückigen Lamellenträgers ZYLBF axial in Richtung Vorschaltradsatz VS erstreckt. Der in diesem Bereich meanderförmige Kolben 614 ist gegen diesen zweiten zylindrischen Abschnitt des Lamellenträgers ZYLBF axial verschiebbar schmiermitteldicht abgedichtet. Entsprechend wird der Druckausgleichsraum 612 durch den Kolben 614, den genannten zweiten zylindrischen Abschnitt des Lamellenträgers ZYLBF und den radial unterhalb dieses zweiten zylindrischen Abschnitts des Lamellenträgers ZYLBF befindlichen scheibenförmigen Abschnitt des Lamellenträgers ZYLBF gebildet. In seinem weiteren geometrischen Verlauf erstreckt sich der Kolben 614 zumindest weitgehend entlang der Außenkontur des radial oberem Bereichs des Lamellenträgers ZYLBF radial nach außen und axial in Richtung Gehäusewand GW bis zu der vorschaltradsatznahen Seite des ihm zugeordneten Lamellenpaketes 600 der Kupplung F. Axial vorgespannt wird der Kolben 614 durch das Rückstellelement 613, das hier beispielhaft als ein axial zwischen dem scheibenförmigen Abschnitt des Lamellenträgers ZYLBF und dem Kolben 614 angeordnetes Spiralfederpaket ausgebildet ist. Bei einer Beaufschlagung des Druckraums 611 mit Druckmittel zum Schließen der Kupplung V bewegt sich der Kolben 614 axial in Richtung Gehäusewand GW (bzw. axial in zum Vorschaltradsatz VS und Hauptradsatz HS entgegengesetzer Richtung) und betätigt das ihm zugeordnete Lamellenpaket 600 gegen die Federkraft des Rückstellelementes 613. Der Kolben 614 umgreift also den für beide Kupplungen B, F gemeinsamen Lamellenträger ZYLBF fast vollständig.

Räumlich gesehen ist die Servoeinrichtung 610 der Kupplung F näher an Haupt- und Vorschaltradsatz HS, VS angeordnet als die Servoeinrichtung 210 der Kupplung B. Diese Servoeinrichtung 210 der Kupplung B, umfassend einen Druckraum 211, einen Druckausgleichsraum 212, einen Kolben 214, ein Rückstellelement 213 und eine Stauscheibe 215, ist vollständig innerhalb eines Zylinderraums angeordnet, der durch den gehäusewandnahen ersten zylindrischen Abschnitt und den scheibenförmigen Abschnitt des Lamellenträgers ZYLBF gebildet wird, im wesentlichen radial oberhalb des (vorschaltradsatzfemen) Nabenabschnitts 233. Der Kolben 214 ist am Lamellenträger ZYLBF axial verschiebbar gelagert. Entsprechend rotiert auch die Servoeinrichtung 210 ständig mit Drehzahl des ersten Eingangselementes (also hier des ersten Sonnenrades S1_HS) des Hauptradsatzes HS. Zum Ausgleich des rotatorischen Drucks des rotierenden Druckraums 211 der Servoeinrichtung 210 ist ein dynamischer Druckausgleich mit dem drucklos mit Schmiermittel befüllbaren Druckausgleichsraum 212 vorgesehen, wobei der genannte Druckraum 211 näher am Vorschaltradsatz VS (bzw. Hauptradsatz HS) angeordnet ist als dieser Druckausgleichsraum 212. Dabei wird der Druckraum 211 durch eine Mantelfläche des Lamellenträgers ZYLBF (konkret durch einen Teil des gehäusewandnahen ersten zylindrischen Abschnitts des Lamellenträgers ZYLBF, den scheibenförmigen Abschnitt des Lamellenträgers ZYLBF und einen Teil des gehäusewandnahen Nabenabschnitts 233 des Lamellenträgers ZYLBF) und den Kolben 214 gebildet. Der Druckausgleichsraum 212 wird gebildet durch den Kolben 214 und die Stauscheibe 215, welche axial an dem Nabenabschnitt 233 des Lamellenträgers ZYLBF fixiert und gegenüber dem Kolben 214 axial verschiebbar schmiermitteldicht abgedichtet Ist. Der Druckraum 211 der Servoeinrichtung 210 der Kupplung B ist also näher am Vorschaltradsatz VS (bzw. Hauptradsatz HS) angeordnet als der Druckausgleichsraum 212 dieser Servoeinrichtung 210, wobei der Druckraum 211 der Kupplung B und der Druckausgleichsraum 612 der Servoeinrichtung 610 der Kupplung F unmittelbar benachbart zueinander angeordnet und nur durch eine Mantelfläche des für beide Kupplungen B, F gemeinsamen Lamellenträgers ZYLBF voneinander getrennt sind. Der Kolben 214 der Servoeinrichtung 210 ist über das hier beispielhaft als Tellerfeder ausgebildete Rückstellelement 213 axial gegen den Nabenabschnitt 233 des Lamellenträgers ZYLBF vorgespannt. Bei einer Beaufschlagung des Druckraums 211 mit Druckmittel zum Schließen der Kupplung B bewegt sich der Kolben 214 axial in zum Vorschaltradsatz VS (bzw. Hauptradsatz HS) entgegengesetzter Richtung und betätigt das ihm zugeordnete Lamellenpaket 200 gegen die Federkraft des Rückstellelementes 213.

Aufgrund der Lagerung des Lamellenträgers ZYLBF auf der getriebegehäusefesten Nabe GN ergibt sich eine konstruktiv relativ einfache Druck- und Schmiermittelzufuhr zu beiden Kupplungen B, F über entsprechende Kanäle bzw. Bohrungen, die abschnittsweise innerhalb der genannten Gehäusenabe GN und abschnittsweise innerhalb der Nabe des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Zur Verbindung des Lamellenträgers ZYLBF, der wie gesagt das Ausgangselement beider Kupplungen B, F bildet, mit dem ersten Eingangselement des Hauptradsatzes HS - hier also mit dem vorschaltradsatznahen Sonnenrad S1_HS des beispielhaft wiederum als Ravigneaux-Planetenradsatz ausgebildeten Hauptradsatzes HS - ist ähnlich wie in Fig. 12 ein zylinderförmiges Verbindungselement ZYL vorgesehen, welches geometrisch als ein in Richtung Hauptradsatz HS hin geöffneter Topf ausgebildet ist. Axial angrenzend an die Gehäusewand GW und im wesentlichen parallel zu dieser Gehäusewand GW erstreckt sich ein im wesentlichen scheibenförmiger Topfboden dieses Verbindungselementes ZYL in radialer Richtung, axial zwischen der Gehäusewand GW und einem scheibenförmigen Abschnitt des Eingangselementes (Innenlamellenträgers) 220 der Kupplung B, welcher auf der vorschaltradsatzfernen Seite der radial übereinander angeordneten Lamellenpakete 200, 600 der Kupplungen B, F verläuft. An seinem Innendurchmesser ist der Topfboden des Verbindungselementes ZYL mit der Nabe des Lamellenträgers ZYLBF verdrehfest verbunden, im dargestellten Beispiel formschlüssig über ein geeignetes Mitnahmeprofil am gehäusewandseitigen Ende des Nabenabschnitts 233. Am Außendurchmesser des Topfbodens, auf einem Durchmesser größer dem Außendurchmesser des Lamellenpaketes 600 und des Außenlamellenträgers 620 der Kupplung F, schließt sich eine ringförmige Mantelfläche des zylinderförmigen Verbindungselementes ZYL an diesen Topfboden an und erstreckt sich axial in Richtung Hauptradsatz HS und übergreift dabei die (im wesentlichen radial übereinander angeordneten) Lamellenpakete 200 und 600 der Kupplungen B und F, den Vorschaltradsatz VS sowie die Kupplungen E und A in axialer Richtung vollständig. An seinem hauptradsatznahen Ende ist das zylinderförmige Verbindungselement ZYL verdrehfest mit einem Mitnahmeblech 250 verbunden, beispielsweise formschlüssig über eine geeignetes Mitnahmeprofil. Dieses Mitnahmeblech 250 erstreckt sich in einem Bereich axial zwischen dem Ausgangselement 130 der Kupplung A und dem Ausgangselement 330 der Bremse C und ist im Bereich seines Innendurchmessers mit einer Sonnenwelle 240 verdrehfest verbunden. Diese Sonnenwelle 240 wiederum ist mit dem vorschaltradsatznahen Sonnenrad S1_HS des Hauptradsatzes HS verbunden. Selbstverständlich ist diese konstruktive Lösung der kinematischen Anbindung des Lamellenträgers ZYLBF an das Sonnenrad S1_HS als beispielhaft anzusehen; beispielsweise mögliche alternative konstruktive Lösungen wurden bereits anhand Fig. 12 erläutert.

Die räumliche Anordnung der übrigen Getriebebauelemente des zwölten erfindungsgemäßen Getriebeschemas gemäß Fig. 13 entspricht der in Fig. 9 dargestellten Anordnung, insofern kann auf deren nochmalige Beschreibung an dieser Stelle verzichtet werden.

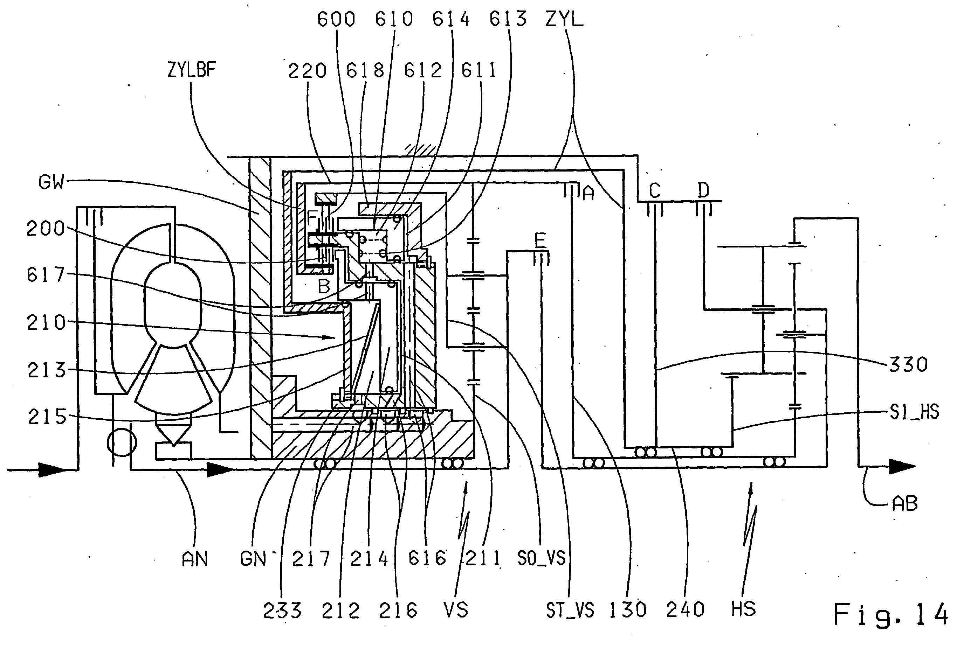

Anhand Fig. 14 wird nun ein dreizehntes beispielhaftes Getriebeschema gemäß der vorliegenden Erfindung erläutert, basierend auf dem zuvor anhand Fig. 13 beschriebenen zwölften erfindungsgemäßen Getriebeschema, wobei die Änderungen gegenüber Fig. 13 lediglich die konstruktive Ausgestaltung des für die beiden Kupplungen B, F gemeinsamen Lamellenträgers ZYLBF und die räumliche Lage der Servoeinrichtungen 210, 610 dieser beiden Kupplungen B, F betreffen, Insofern kann auf die nochmalige Beschreibung der übrigen Getriebebauelemente an dieser Stelle verzichtet werden. Wie in Fig. 14 ersichtlich, wurde das anhand Fig. 10 beschriebene Prinzip der radial übereinander angeordneten Servoeinrichtungen der Baugruppe mit den beiden Kupplunggen B, F nunmehr angewendet auf die Ausgestaltung des für die beiden Kupplungen B, F gemeinsamen Lamellenträgers ZYLBF, bei der das Lamellenpaket 600 der Kupplung F radial über dem Lamellenpaket 200 der Kupplung B angeordnet ist und beide Lamellenpakete 200, 600 auf der dem Vorschaltradsatz VS abgewandten Seite der Baugruppe angeordnet sind.

Nunmehr ist die Servoeinrichtung 610 der Kupplung F räumlich gesehen radial über der Servoeinrichtung 210 der Kupplung E angeordnet. Dabei ist ein Druckraum 611 der (radial äußeren) Servoeinrichtung 610 in etwa radial über einem Druckraum 211 der (radial inneren) Servoeinrichtung 210 und ein Druckausgleichsraum 612 eines dynamischen Druckausgleichs der (radial äußeren) Servoeinrichtung 610 in etwa radial über einem Druckausgleichsraum 212 eines dynamischen Druckausgleichs der (radial inneren) Servoeinrichtung 210 angeordnet. Dabei sind die Druckräume 211, 611 näher am Vorschaltradsatz VS (bzw. am Hauptradsatz HS) angeordnet als die jeweiligen Druckausgleichsräume 212, 612.

Wie aus Fig. 14 weiterhin ersichtlich, ist der für die beiden Kupplungen B, F gemeinsame Lamellenträger ZYLBF geometrisch in Form eines in Richtung Gehäusewand GW geöffneten Topfes ausgebildet. Am Außendurchmesser dieses Lamellenträgers ZYLBF ist ein gestufter zylindrischer Abschnitt vorgesehen, an dessen gehäusewandnahen Ende am Innendurchmesser die Außenlamellen des Lamellenpaketes 200 der (radial inneren) Kupplung B und am Außendurchmesser die Innenlamellen des Lamellenpaketes 600 der. (radial äußeren) Kupplung F angeordnet sind. Beide Lamellenpakete 600, 200 sind benachbart zur Gehäusewand GW angeordnet. Ausgehend vom vorschaltradsatznahen Ende des gestuften zylindrischen Abschnitts des Lamellenträgers ZYLBF erstreckt sich ein scheibenförmiger Abschnitt des Lamellenträgers ZYLBF angrenzend an den gekoppelten Steg ST_VS des Vorschaltradsatzes VS radial nach innen bis zu einer Nabe 233 des Lamellenträgers ZYLBF. Diese Nabe 233 erstreckt sich, ausgehend vom Innendurchmesser des scheibenförmigen Abschnitts des Lamellenträgers ZYLBF, axial in Richtung Gehäusewand GW und ist auf einer getriebegehäusefesten Nabe GN, an der auch das Sonnenrads SO_VS des Vorschaltradsatzes VS festgesetzt ist, verdrehbar gelagert.

Die Servoeinrichtung 210 der Kupplung B ist vollständig innerhalb eines Zylinderraums angeordnet, der durch den gestuften zylindrischen Abschnitt und den scheibenförmigen Abschnitt des Lamellenträgers ZYLBF gebildet wird, und rotiert entsprechend ständig mit Drehzahl des ersten Eingangselementes (also hier des ersten Sonnenrades S1_HS) des Hauptradsatzes HS. Dabei umfasst diese Servoeinrichtung 210 den Druckraum 211, den Druckausgleichsraum 212, einen Kolben 214, ein Rückstellelement 213 und eine Stauscheibe 215. Der Kolben 214 ist im Lamellenträger ZYLBF druckmitteldicht axial verschiebbar gelagert und über das hier beispielhaft als Tellerfeder ausgebildete Rückstellelement 213 axial gegen den Nabenabschnitt 233 des Lamellenträgers ZYLBF vorgespannt. Der Druckraum 211 wird gebildet durch den Kolben 214 und einen Teil der inneren Mantelfläche des Lamellenträgers ZYLBF. Der Druckausgleichsraum 212 zum Ausgleich des rotatorischen Drucks des rotierenden Druckraums 211 ist auf der dem Vorschaltradsatz VS abgewandten Seite des Druckraums 211 angeordnet und wird durch den Kolben 614 und die Stauscheibe 215 gebildet.

Die Druckmittel- und Schmiermittel-Versorgung der Servoeinrichtung 210 der Kupplung B erfolgt in konstruktiv relativ einfacher Weise über die getriebegehäusefeste Nabe GN, wobei die entsprechenden Kanäle bzw. Bohrungen abschnittsweise innerhalb der genannten Gehäusenabe GN und abschnittsweise innerhalb der Nabe 233 des Lamellenträgers ZYLBF verlaufen. Eine Druckmittelzuführung zum Druckraum 211 der Servoeinrichtung 210 der Kupplung B ist mit 216 bezeichnet, eine Schmiermittetzuführung zum Druckausgleichsraum 212 der Servoeinrichtung 210 der Kupplung B mit 217. Wird der Druckraum 211 zum Schließen der Kupplung B mit Druckmittel beaufschlagt, so bewegt sich der Kolben 214 axial in zum Vorschaltradsatz VS (bzw. Hauptradsatz HS) entgegengesetzter Richtung und betätigt das ihm zugeordnete Lamellenpaket 200 gegen die Federkraft des Rückstellelementes 213.

Wie bereits erwähnt, ist die Servoeinrichtung 610 der (radial äußeren) Kupplung F räumlich gesehen in einem Bereich radial über der Servoeinrichtung 210 der (radial inneren) Kupplung B angeordnet. Diese Servoeinrichtung 610 umfasst den Druckraum 611, den Druckausgleichsraum 612, einen Kolben 614, ein Rückstellelement 613 und eine Stützscheibe 618. Dabei ist der Druckraum 611 der (radial äußeren) Servoeinrichtung 610 zumindest in etwa radial über dem Druckraum 211 der (radial inneren) Servoeinrichtung 210 und der Druckausgleichsraum 612 der (radial äußeren) Servoeinrichtung 610 zumindest in etwa radial über dem Druckausgleichsraum 212 der (radial inneren) Servoeinrichtung 210 angeordnet. Gebildet wird der Druckraum 611 durch den Kolben 614, die Stützscheibe 618 und einen Teil der äußeren Mantelfläche des Lamellenträgers ZYLBF. Hierzu ist die Stützscheibe 618 geometrisch in Form eines in Richtung Lamellenpaket 600 (bzw. in Richtung Gehäusewand GW) hin geöffneten Topfes ausgebildet, dessen Mantelfläche den Kolben 614 außen umschließt, und dessen Topfboden an seinem Innendurchmesser am Außendurchmesser des scheibenförmigen Abschnitts des Lamellenträgers ZYLBF druckmitteldicht befestigt ist. Im dargestellten Beispiel ist für die Befestigung der Stützscheibe 618 an dem Lamellenträger ZYLBF ein druckmitteldicht abgedichtetes Mitnahmeprofil und zur axialen Festlegung ein Sicherungsring vorgesehen. Somit ist der Kolben 614 zwischen dem Innendurchmesser des zylindrischen Abschnitts der Stützscheibe 618 und dem Außendurchmesser des gestuften zylindrischen Abschnitts des Lamellenträgers ZYLBF druckmitteldicht axial verschiebbar gelagert und über das Rückstellelement 613 axial gegen den Lamellenträger ZYLBF vorgespannt. Das Rückstellelement 613 ist hier beispielhaft als Federpaket aus ringförmig angeordneten Spiralfedern ausgeführt.

Eine Druckmittelzuführung 616 zu dem Druckraum 611 der Servoeinrichtung 610 der Kupplung F verläuft abschnittsweise innerhalb der getriebegehäusefesten Nabe GN und abschnittsweise innerhalb des Lamellenträgers ZYLBF. Der Druckausgleichsraum 612 der Servoeinrichtung 610 der (radial äußeren) Kupplung F wird hier in baulängensparender Weise direkt über den Druckausgleichsraum 212 der Servoeinrichtung 210 der (radial inneren) Kupplung B drucklos mit Schmiermittel befüllt. Hierzu ist am Außendurchmesser des Kolbens 214 der (radial inneren) Servoeinrichtung 210 mindestens eine Radialbohrung vorgesehen, die einerseits im Druckausgleichsraum 212 der Servoeinrichtung 610 und andererseits in einem nach außen hin schmiermitteldicht abgedichteten Ringkanal am Innendurchmesser des gestuften zylindrischen Abschnitts des Lamellenträgers ZYLBF mündet. Weiterhin ist in dem gestuften zylindrischen Abschnitt des Lamellenträgers ZYLBF mindestens eine Radialbohrung vorgesehen, die einerseits im genannten Ringkanal am Innendurchmesser des gestuften zylindrischen Abschnitts des Lamellenträgers ZYLBF und andererseits im Druckausgleichsraum 612 der (radial äußeren) Servoeinrichtung 610 mündet. Die entsprechenden Bohrungen bzw. Kanäle zwischen den beiden Druckausgleichsräumen 212, 612 sind in Fig. 14 mit 617 bezeichnet. Wird der Druckraum 611 der Servoeinrichtung 610 zum Schließen der Kupplung F mit Druckmittel befüllt, so bewegt sich der Kolben 614 axial in Richtung Gehäusewand GW (bzw. axial in zum Vorschaltradsatz VS und Hauptradsatz HS entgegengesetzer Richtung) und betätigt das ihm zugeordnete Lamellenpaket 600 gegen die Federkraft des Rückstellelementes 613.

Zur Verbindung des das Ausgangselement beider Kupplungen B, F bildenden Lamellenträgers ZYLBF mit dem vorschaltradsatznahen Sonnenrad S1_HS des Hauptradsatzes HS ist ein zylinderförmiges Verbindungselement ZYL vorgesehen, welches geometrisch als ein in Richtung Gehäusewand GW hin geöffneter Topf ausgebildet ist. Ein Topfboden dieses Verbindungselementes ZYL erstreckt sich axial zwischen dem Ausgangselement 130 der Kupplung A und dem Ausgangselement 330 der Bremse C und ist im Bereich seines Innendurchmessers mit einer Sonnenwelle 240 verdrehfest verbunden. Diese Sonnenwelle 240 wiederum ist sowohl mit dem Ausgangselement 330 der Bremse C als auch mit dem vorschaltradsatznahen Sonnenrad S1_HS des Hauptradsatzes HS verbunden. Am Außendurchmesser des Topfbodens des Verbindungselementes ZYL, auf einem Durchmesser größer dem Außendurchmesser der Kupplung A, schließt sich eine ringförmige Mantelfläche des Verbindungselementes ZYL an diesen Topfboden an und erstreckt sich axial in Richtung Gehäusewand GW und übergreift dabei die beiden Kupplungen A und E, den Vorschaltradsatz VS sowie die Kupplung F (und damit auch die radial unterhalb der Kupplung F angeordnete Kupplung B) in axialer Richtung vollständig. An seinem gehäusewandnahen Ende ist das zylinderförmige Verbindungselement ZYL verdrehfest mit der Stauscheibe 215 der Servoeinrichtung 210 der Kupplung B verbunden. Wie in Fig. 14 ersichtlich, erstreckt sich ein radial äußerer Abschnitt dieser Stauscheibe 215 im Bereich der Verbindung zum Verbindungselement ZYL axial zwischen der Gehäusewand GW und einem scheibenförmigen Abschnitt des Eingangselementes (Innenlamellenträgers) 220 der Kupplung B, welcher auf der vorschaltradsatzfernen Seite der radial übereinander angeordneten Lamellenpakete 200, 600 der Kupplungen B, F verläuft. An ihrem Innendurchmesser ist die Stauscheibe - wie bereits erwähnt - über ein drehmomentführendes Mitnahmeprofil mit der Nabe 233 des Lamellenträgers ZYLBF verdrehfest verbunden.

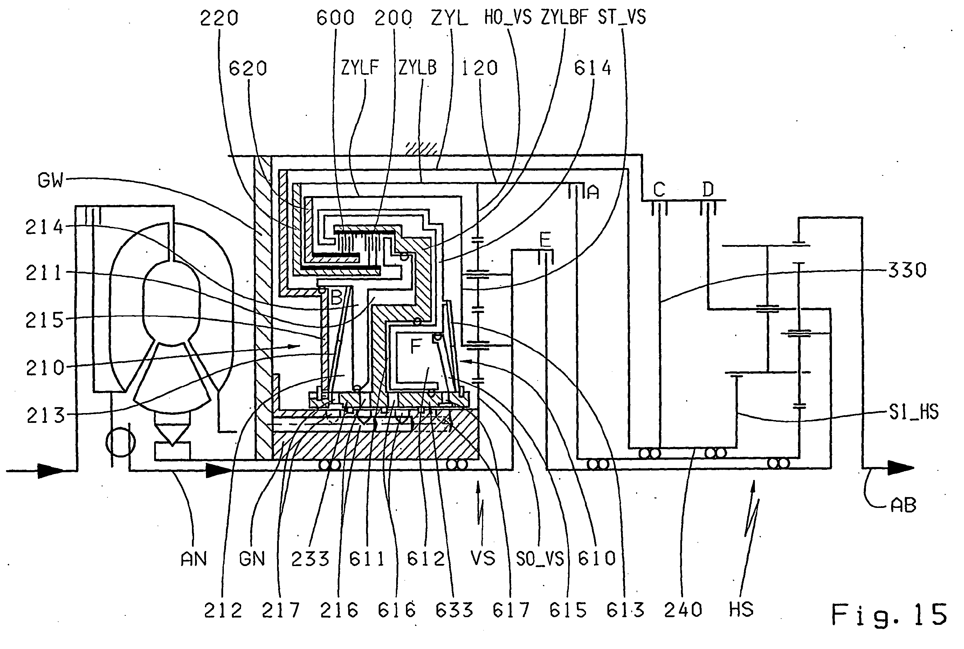

Anhand Fig. 15 wird nun ein vierzehntes beispielhaftes Getriebeschema gemäß der vorliegenden Erfindung erläutert. Ähnlich wie bei den zuvor beschriebenen erfindungsgemäßen Getriebeschemata bzw. Bauteilanordnungen bilden die beiden Kupplungen B und F eine in fertigungstechnisch vorteilhafter Weise vormontierbare Baugruppe, die auf der dem Hauptradsatz HS abgewandten Seite des Vorschaltradsatzes VS angeordnet ist, räumlich gesehen axial zwischen dem Vorschaltradsatz VS und einer getriebegehäusefesten Außenwand GW des Getriebes, radial über einer sich axial zwischen dieser Außenwand GW und dem Vorschaltradsatz VS erstreckenden getriebegehäusefesten Nabe GN. Diese Baugruppe umfasst einen für beide Kupplungen B, F als Außenlamellenträger ausgebildeten gemeinsamen Lamellenträger ZYLBF, ein Lamellenpaket 200 der Kupplung B und eine diesem Lamellenpaket 200 zugeordnete Servoeinrichtung 210 der Kupplung B, ein Lamellenpaket 600 der Kupplung F und eine diesem Lamellenpaket 600 zugeordnete Servoeinrichtung 610 der Kupplung F, einen Innenlamellenträger 220 der Kupplung B sowie einen Innenlamellenträger 620 der Kupplung F. Zum einen sind dabei die Lamellenpakete 200, 600 der beiden Kupplungen B, F axial nebeneinander angeordnet, wobei das Lamellenpaket 200 der Kupplung B näher am Vorschaltradsatz VS (bzw. am Hauptradsatz HS) angeordnet ist als das Lamellenpaket 600 der Kupplung F. Zum anderen sind die Servoeinrichtungen 210, 610 der beiden Kupplungen B, F zumindest weitgehend ebenfalls axial nebeneinander angeordnet, wobei aber die Servoeinrichtung 610 der Kupplung F (bis auf einen unmittelbar auf das Lamellenpaket 600 wirkenden Druckteller dieser Servoeinrichtung 610) näher am Vorschaltradsatz VS (bzw. am Hauptradsatz HS) angeordnet ist als die Servoeinrichtung 210 der Kupplung B, was später noch im Detail erläutert wird. Der Lamellenträger ZYLBF bildet für beide Kupplungen B, F deren Ausgangselement und ist entsprechend der vorgegebenen kinematischen Kopplung mit dem ersten Eingangselement (also hier dem ersten Sonnenrad S1_HS) des Hauptradsatzes HS verdrehfest verbunden, was ebenfalls später noch im Detail erläutert wird.

Geometrisch weist der für die Kupplungen B, F gemeinsame Lamellenträger ZYLBF eine im wesentlichen zylinderförmige Struktur auf und ist auf der getriebegehäusefesten Nabe GN, die sich ausgehend von der Gehäusewand GW in den Getriebeinnenraum axial in Richtung Vorschaltradsatz VS erstreckt, verdrehbar gelagert. An dieser Nabe GN ist das Sonnenrad SO_VS des Vorschaltradsatzes VS über eine geeignete Verbindung festgesetzt. Im Unterschied zu der beispielhaften Darstellung in Fig. 15 können Nabe GN und Gehäusewand GW auch einstückig ausgeführt sein; beispielsweise kann die Nabe GN auch eine Leitradwelle eines im Kraftfluß zwischen Antriebswelle AN und Antriebsmotor des Getriebes angeordneten Drehmomentwandlers sein. Am Außendurchmesser des Lamellenträgers ZYLBF ist ein zylindrischer Abschnitt vorgesehen, an dessen Innendurchmesser sowohl die Außenlamellen des Lamellenpaketes 200 der Kupplung B als auch die Außenlamellen des Lamellenpaketes 600 der Kupplung F angeordnet sind, wobei - wie schon gesagt - das Lamellenpakete 200 näher am Vorschaltradsatz VS angeordnet ist als das Lamellenpaket 600. Ausgehend vom vorschaltradsatznahen Ende des genannten zylindrischen Abschnitts des Lamellenträgers ZYLBF erstreckt sich ein meanderförmiger Abschnitt des Lamellenträgers ZYLBF radial nach innen bis zur Nabe des Lamellenträgers ZYLBF. Dabei ist diese Nabe in zwei Nabenabschnitte 633 und 233 unterteilt. Ausgehend vom Innendurchmesser des meanderförmigen Abschnitts des Lamellenträgers ZYLBF erstreckt sich der Nabenabschnitt 633 axial in Richtung Vorschaltradsatz VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich, ausgehend Innendurchmesser des meanderförmigen Abschnitts des Lamellenträgers ZYLBF, axial in Richtung Gehäusewand GW.

Die Servoeinrichtung 210 der Kupplung B, umfassend einen Druckraum 211, einen Druckausgleichsraum 212, einen Kolben 214, ein Rückstellelement 213 und eine Stauscheibe 215, ist vollständig innerhalb eines Zylinderraums angeordnet, der durch den Lamellenträger ZYLBF gebildet wird, im wesentlichen radial oberhalb des Nabenabschnitts 233. Der Kolben 214 ist am Lamellenträger ZYLBF druckmitteldicht axial verschiebbar gelagert. Der Druckraum 211 ist auf der dem Vorschaltradsatz VS abgewandten Seite des meanderförmigen Abschnitts des Lamellenträgers ZYLBF angeordnet und wird gebildet durch eine Mantelfläche des Lamellenträgers ZYLBF (konkret durch einen Teil des meanderförmigen Abschnitts des Lamellenträgers ZYLBF und einen Teil des Nabenabschnitts 233) und den Kolben 214. Zum Ausgleich des rotatorischen Drucks des rotierenden Druckraums 211 der Servoeinrichtung 210 ist ein dynamischer Druckausgleich mit dem drucklos mit Schmiermittel befüllbaren Druckausgleichsraum 212 vorgesehen, der auf der dem Vorschaltradsatz VS abgewandten Seite des Kolbens 214 angeordnet ist. Gebildet wird der Druckausgleichsraum 212 durch den Kolben 214 und die Stauscheibe 215, welche axial an dem gehäusewandnahen Ende des Nabenabschnitt 233 des Lamellenträgers ZYLBF fixiert und gegenüber dem Kolben 214 axial verschiebbar schmiermitteldicht abgedichtet ist. Der Druckraum 211 ist also näher am Vorschaftradsatz VS (bzw. Hauptradsatz HS) angeordnet als der Druckausgleichsraum 212. Der Kolben 214 ist über das hier beispielhaft als Tellerfeder ausgebildete Rückstellelement 213 axial gegen den Nabenabschnitt 233 des Lamellenträgers ZYLBF vorgespannt. Bei einer Beaufschlagung des Druckraums 211 mit Druckmittel zum Schließen der Kupplung B bewegt sich der Kolben 214 axial in zum Vorschaltradsatz VS (bzw. Hauptradsatz HS) entgegengesetzte Richtung und betätigt das ihm zugeordnete Lamellenpaket 200 gegen die Federkraft des Rückstellelementes 213.

Räumlich gesehen ist die Servoeinrichtung 610 der Kupplung F zumindest weitgehend näher an Vorschaltradsatz VS bzw. Hauptradsatz HS angeordnet als die Servoeinrichtung 210 der Kupplung B, räumlich gesehen zumindest überwiegend in einem Bereich radial über dem vorschaltradsatznahen Nabenabschnitt 633 des Lamellenträgers ZYLBF angeordnet. Die Servoeinrichtung 610 der Kupplung F umfasst einen Druckraum 611, einen Druckausgleichsraum 612, einen abschnittsweise meanderförmig ausgebildeten Kolben 614, ein Rückstellelement 613 und eine scheibenförmige Stauscheibe 615. Der Kolben 614 ist geometrisch weitgehend der dem Vorschaltradsatz VS zugewandten Außenkontur des Lamellenträgers ZYLBF angepasst und am Lamellenträger ZYLBF axial verschiebbar gelagert. Dabei sind der Nabenabschnitt 633 und der meanderförmige Abschnitt des Lamellenträgers ZYLBF gegen den Kolben 614 druckmitteldicht abgedichtet. Der Druckraum 611 ist auf der dem Vorschaltradsatz VS zugewandten Seite des meanderförmigen Abschnitts des Lamellenträgers ZYLBF angeordnet und wird gebildet durch eine Mantelfläche des Lamellenträgers ZYLBF (konkret durch einen Teil des meanderförmigen Abschnitts des Lamellenträgers ZYLBF und einen Teil des Nabenabschnitts 633) und den Kolben 614. In seinem weiteren geometrischen Verlauf erstreckt sich der Kolben 614 radial nach außen bis zu einem Durchmesser größer dem Außendurchmesser des Lamellenträgers ZYLBF und umgreift die beiden axial nebeneinander angeordneten Lamellenpakete 200, 600 in axialer und radialer Richtung und wirkt von der dem Vorschaltradsatz VS abgewandten Seite des Lamellenpaketes 600 her auf dieses ihm zugeordnete Lamellenpaket 600 der Kupplung F. Der Abschnitt des Kolbens 614, der die beiden axial nebeneinander angeordneten-Lamellenpakete 200, 600 umgreift, wurde zuvor schon als "Druckteller der Servoeinrichtung 610" bezeichnet und ist aus Gründen der Montierbarkeit als separates Bauteil ausgebildet, dessen eines Ende auf das Lamellenpaket 600 wirkt und dessen anderes Ende am Außendurchmesser des Kolbens der Servoeinrichtung 610 über geeignete Mittel - beispielsweise formschlüssig - befestigt ist. Anstelle eines rotationssymmetrischen Drucktellers können selbstverständlich auch auf dem Umfang verteilt am Außendurchmesser des Kolbens der Servoeinrichtung 610 befestigte Betätigungsfinger vorgesehen sein. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, der auf der dem Vorschaltradsatz VS zugewandten Seite des Kolbens 614 angeordnet ist. Gebildet wird der Druckausgleichsraum 612 durch den Kolben 614 und die Stauscheibe 615, welche axial an dem vorschaltradsatznahen Ende des Nabenabschnitts 633 des Lamellenträgers ZYLBF fixiert und gegenüber dem Kolben 614 axial verschiebbar schmiermitteldicht abgedichtet ist. Der Druckausgleichsraum 612 ist also näher am Vorschaltradsatz VS (bzw. Hauptradsatz US) angeordnet als der Druckraum 611. Der Kolben 614 ist über das hier beispielhaft als Tellerfeder ausgebildete Rückstellelement 613 axial gegen den Nabenabschnitt 633 des Lamellenträgers ZYLBF vorgespannt, wobei diese Tellerfeder 613 hier außerhalb des Druckausgleichsraums 612 angeordnet ist, also auf der dem Vorschaltradsatz VS zugewandten Seite der Stauscheibe 615. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Der Druckraum 611 der Servoeinrichtung 610 der Kupplung F ist also nur durch eine Mantelfläche des für beide Kupplungen B, F gemeinsamen Lamellenträgers ZYLBF von dem Druckraum 211 der Servoeinrichtung 210 der Kupplung B getrennt. Die Betätigungsrichtung der Servoeinrichtungen 210, 610 beim Kupplungsschließen des jeweils zugeordneten Lamellenpaketes 200 bzw. 600 ist entgegengesetzt.

Aufgrund der Lagerung des Lamellenträgers ZYLBF auf der getriebegehäusefesten Nabe GN ergibt sich eine konstruktiv einfache Druck- und Schmiermittelzufuhr zu beiden Kupplungen B, F über entsprechende Kanäle bzw. Bohrungen, die abschnittsweise innerhalb dem genannten Gehäusenabe GN und abschnittsweise innerhalb der Nabe des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Der Innenlamellenträger 620 der Kupplung F bildet das Eingangselement der Kupplung F. Geometrisch ist dieser Innenlamellenträger 620 als ein Zylinder ausgebildet. Ein zylinderringförmiger Abschnitt dieses Innenlamellenträgers 620 weist an seinem Außendurchmesser ein Mitnahmeprofil zur Aufnahme von innenverzahnten Lamellen des (gehäusewandnahen) Lamellenpaketes 600 der Kupplung F auf und erstreckt sich ausgehend vom vorschaltradsatznahen Ende dieses Lamellenpaketes 600 axial in Richtung Gehäusewand. Ein scheibenförmiger Abschnitt dieses Innenlamellenträgers 620 schließt sich am gehäusewandnahen Ende des genannten zylinderringförmigen Abschnitts des Innenlamellenträgers 620 an diesen an und erstreckt sich ausgehend von diesem zylinderringförmigen Abschnitt des Innenlamellenträgers 620 radial nach außen bis zu einem Durchmesser größer dem Außendurchmesser des Kolbens 615 bzw. Drucktellers der Servoeinrichtung 610 der Kupplung F. An seinem Außendurchmesser ist der genannte scheibenförmige Abschnitt des Innenlamellenträgers 620 verdrehfest mit einem zylinderförmigen Verbindungselement ZYLF verbunden, beispielsweise formschlüssig über ein Mitnahmeprofil. Dieses zylinderförmige Verbindungselement ZYLF wiederum umschließt zumindest die nebeneinander angeordneten Lamellenpakete 200, 600 der beiden Kupplungen B, F und die Servoeinrichtung 610 der Kupplung F in axialer Richtung vollständig (und damit auch den für beiden Kupplungen B, F gemeinsamen Außenlamellenträger ZYLBF in axialer Richtung zumindest weitgehend) und ist an seinem vorschaltradsatznahen Ende mit einem dem Hauptradsatz HS abgewandten Stegblech des gekoppelten Stegs ST_VS des Vorschaltradsatzes VS verbunden. Bespielsweise kann auch vorgesehen sein, dass der Innenlamellenträger 620 der Kupplung F und das zylinderringförmige Verbindungselement ZYLF einstückig ausgeführt sind. Da der Steg ST_VS über sein dem Hauptradsatz HS zugewandtes Stegblech mit der Antriebswelle AN verdrehfest verbunden ist, rotiert der Innenlamellenträger bzw. das Eingangselement 620 der Kupplung F stets mit Drehzahl der Antriebswelle AN.

Der Innenlamellenträger 220 der Kupplung B bildet das Eingangselement der Kupplung B. Geometrisch ist dieser Innenlamellenträger 220 als ein Zylinder ausgebildet. Ein zylinderringförmiger Abschnitt dieses Innenlamellenträgers 220 weist an seinem Außendurchmesser ein Mitnahmeprofil zur Aufnahme von innenverzahnten Lamellen des (vorschaltradsatznahen) Lamellenpaketes 200 der Kupplung B auf und erstreckt sich ausgehend vom vorschaltradsatznahen Ende dieses Lamellenpaketes 200 axial in Richtung Gehäusewand bis in einen Bereich zwischen dem radial äußeren Abschnitt der Stauscheibe 215 der Servoeinrichtung 210 der Kupplung B und dem scheibenförmigen Abschnitt des Innenlamellenträgers 620 der Kupplung F. Ein scheibenförmiger Abschnitt dieses Innenlamellenträgers 220 schließt sich am gehäusewandnahen Ende des genannten zylinderringförmigen Abschnitts des Innenlamellenträgers 220 an diesen an und erstreckt sich ausgehend von diesem zyliriderringförmigen Abschnitt des Innenlamellenträgers 220 axial zwischen dem genannten radial äußeren Abschnitt der Stauscheibe 215 und dem genannten scheibenförmigen Abschnitt des Innenlamellenträgers 620 radial nach außen bis zu einem Durchmesser größer dem Außendurchmesser des Innenlamellenträgers 620 bzw. des zylinderförmigen Verbindungselementes ZYLF. An seinem Außendurchmesser ist der genannte scheibenförmige Abschnitt des Innenlamellenträgers 220 verdrehfest mit einem zylinderringförmigen Verbindungselement ZYLB verbunden, beispielsweise formschlüssig über ein Mitnahmeprofl. Dieses zylinderringförmige Verbindungselement ZYLB wiederum umschließt das zylinderförmige Verbindungselement ZYLF in axialer Richtung vollständig und ist verdrehfest mit dem Hohlrad HO_HS des Vorschaltradsatzes VS verbunden. Somit rotiert der Innenlamellenträger bzw. das Eingangselement 220 der Kupplung B stets mit Drehzahl dieses Hohlrads HO_HS. Da sich das ebenfalls mit diesem Hohlrad HO_HS verdrehfest verbundene Eingangselement 120 der Kupplung A auf der dem Hauptradsatz HS zugewandten Seite des Vorschaltradsatzes VS an das genannte Hohlrad HO_HS axial anschließt, können das Eingangselement 120 (hier beispielhaft der Außenlamellenträger) der Kupplung A und das zylinderringförmige Verbindungselement ZYLB einstückig ausgeführt sein, beispielsweise auch zusammen mit dem Hohlrad HO_VS. Es kann aber auch vorgesehen sein, dass der Innenlamellenträger 220 der Kupplung B und das zylinderringförmige Verbindungselement ZYLB einstückig ausgeführt sind.

Als konstruktive Besonderheit wird die Stauscheibe 215 der Servoeinrichtung 210 der Kupplung B auch zur Drehzahl- und Drehmomentübertragung zwischen dem Lamellenträger ZYLBF, der ja das Ausgangselement beider Kupplungen B, F bildet, und dem vorschaltradsatznahen Sonnenrad S1_HS des Hauptradsatzes HS, das ja hier beispielhaft das erste Eingangselement des Hauptradsatzes HS bildet, verwendet. Hierzu ist die Stauscheibe 215 an dem gehäusewandnahen Ende der Nabe des Lamellenträgers ZYLBF mit dem Nabenabschnitt 233 des Lamellenträgers ZYLBF verdrehfest verbunden, hier beispielhaft über ein Mitnahmeprofil. In ihrem geometrischen Verlauf erstreckt sich die Stauscheibe 215 axial angrenzend an die Gehäusewand GW radial nach außen und ist im Bereich ihres Außendurchmessers mit dem zylinderförmigen Verbindungselement ZYL verbunden, beispielsweise über ein Mitnahmeprofil. Dieses zylinderförmige Verbindungselement ZYL wiederum ist geometrische als ein in Richtung Gehäusewand GW hin geöffneter Topf ausgebildet. Eine ringförmige Mantelfläche dieses Verbindungselementes ZYL umschließt die Baugruppe der beiden Kupplungen B, F bzw. das zylinderringförmige Verbindungselement ZYLB, den Vorschaltradsatz VS sowie die beiden Kupplungen E, A in axialer Richtung vollständig. Ein scheibenförmiger Topfboden dieses Verbindungselementes ZYL schließt sich an die genannte ringförmige Mantelfläche des Verbindungselementes ZYL an dessen hauptradsatznahem Ende an und erstreckt sich im Bereich axial neben der Kupplung A auf deren dem Hauptradsatz HS zugewandten Seite radial nach innen. In seinem Nabenbereich ist das zylinderförmige Verbindungselement ZYL sowohl mit dem Ausgangselement 330 der Bremse C als auch (über eine Sonnenwelle 240) mit dem (hier wieder beispielhaft das erste Eingangselement des Hauptradsatzes HS bildenden) vorschaltradsatznahen Sonnenrad S1_HS des Hauptradsatzes HS verdrehfest verbunden. Infolgedessen rotieren die Servoeinrichtungen 210, 610 beider Kupplungen B, F stets mit Drehzahl dieses Sonnenrades S1_HS.

Die räumliche Anordnung, Ausbildung und kinematische Anbindung der übrigen Getriebebauelemente (Schaltelemente E, A, C und D, Hauptradsatz HS) des vierzehnten erfindungsgemäßen Getriebeschemas gemäß Fig. 15 entspricht der in Fig. 9 dargestellten Anordnung, insofern kann auf deren nochmalige Beschreibung an dieser Stelle verzichtet werden.

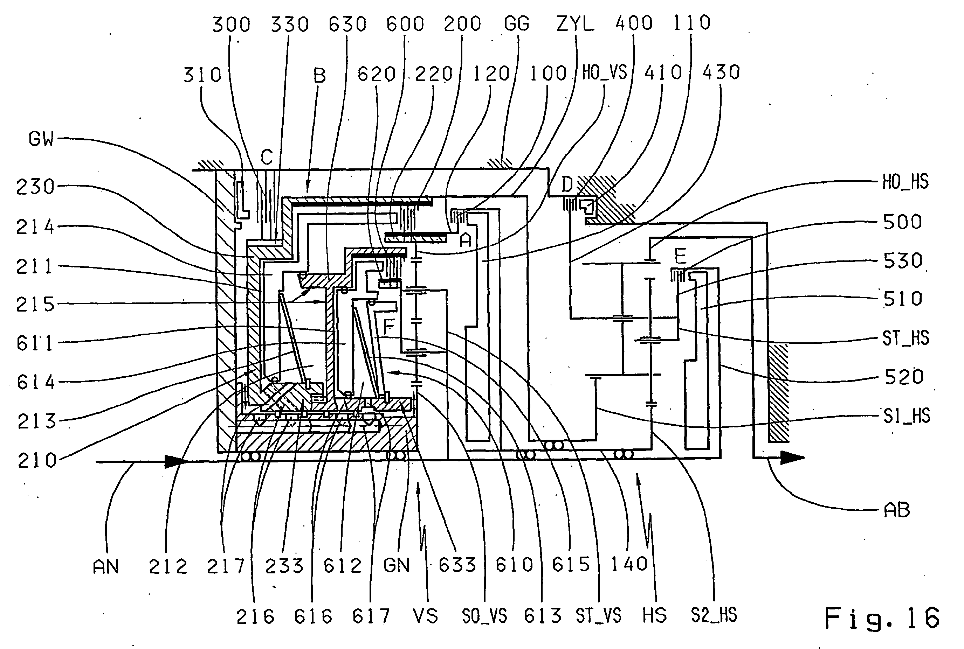

Bei dem folgenden fünfzehnten Ausführungsbeispiel einer erfindungsgemäßen Bauteileanordnung gemäß Figur 16 ist - in Verbindung mit dem gattungsgemäßen Radsatzschema gemäß Fig. 1A und Fig. 1B - vorgesehen, dass eine die Schaltelemente B, F und C umfassende Baugruppe zumindest überwiegend auf der dem Hauptradsatz HS abgewandeten Seite des Vorschaltradsatzes VS angeordnet ist, räumlich gesehen zumindest überwiegend axial zwischen dem Vorschaltradsatz VS und einer getriebegehäusefesten Außenwand GW des Getriebes und zumindest überwiegend radial über einer sich axial zwischen dieser Außenwand GW und dem Vorschaltradsatz VS erstreckenden getriebegehäusefesten Nabe GN. Dabei weist das Lamellenpaket 200 der Kupplung B stets einen größeren Durchmesser auf als das Lamellenpaket 600 der Kupplung F, und die Kupplung F ist stets innerhalb eines durch ein Ausgangselement 230 der Kupplung B gebildeten Zylinderraums angeordnet. In diesen drei Ausführungsbeispielen ist der Hauptradsatz HS wiederum beispielhaft als Ravigneaux-Planetenradsatz ausgeführt, der koaxial zu dem als Einfach-Planetenradsatz in Doppelplanetenbauweise ausgeführten Vorschaltradsatz VS angeordnet ist. Beispielhaft sind Antriebswelle AN und Abtriebswelle AB koaxial zueinander angeordnet, wobei der Fachmann bei Bedarf auch ohne besonderen Umkonstruktionsaufwand eine achsparallele oder zueinander winklige Lage von Antriebs- und Abtriebswelle vorsehen wird.

Die Baugruppe mit den beiden Kupplungen B, F ist überwiegend auf der dem Hauptradsatz HS abgewandten Seite des Vorschaltradsatzes VS angeordnet, räumlich gesehen überwiegend axial zwischen dem Vorschaltradsatz VS und der einem (nicht näher dargestellten) mit der Antriebswelle AN wirkverbundenen Antriebsmotor des Getriebes zugewandten getriebegehäusefesten Gehäusewand GW, dabei unmittelbar an Vorschaltradsatz VS und Gehäusewand GW angrenzend. Dabei umfasst diese Baugruppe der beiden Kupplungen B, F für beide Kupplungen B, F jeweils ein als Außenlamellenträger ausgebildetes Ausgangselement 230 bzw. 630, je ein Lamellenpaket 200 bzw. 600 sowie je eine Servoeinrichtung 210 bzw. 610 zum Betätigen des jeweiligen Lamellenpaketes 200 bzw. 600. Entsprechend der vorgegebenen kinematischen Kopplung sind diese beiden Außenlamellenträger 230, 630 mit dem ersten Eingangselement des Hauptradsatzes HS - hier also mit dessen ersten Sonnenrad S1_HS - verdrehfest verbunden, was später noch im Detail erläutert wird. Das Lamellenpaket 200 der Kupplung B weist einen größeren Durchmesser auf als das Lamellenpaket 600 der Kupplung F. Im wesentlichen ist die Kupplung F innerhalb eines Zylinderraums angeordnet, der durch das Ausgangselement 230 bzw. den Aüßenlamellenträger der Kupplung B gebildet wird. Im Unterschied zu den zuvor beschriebenen erfindungsgemäßen Bauteilanordnungen bzw. Getriebeschemata ist nunmehr auch die beispielhaft als Lamellenbremse ausgebildete Bremse C auf der dem Hauptradsatz HS abgewandten Seite des Vorschaltradsatzes VS angeordnet, in einem Bereich axial zwischen dem Vorschaltradsatz VS und der getriebegehäusefesten Gehäusewand GW, axial angrenzend an die genannte Gehäusewand GW. Selbstverständlich können Gehäusewand GW und Getriebegehäuse GG auch einstückig ausgeführt sein. Die Kupplung A und die Bremse D sind axial zwischen Vorschaltradsatz VS und Hauptradsatz HS angeordnet Die Kupplung E ist im Unterschied zu den zuvor beschriebenen erfindungsgemäßen Bauteilanordnungen bzw. Getriebeschemata nunmehr auf der dem Vorschaltradsatz VS abgewandten Seite des Hauptradsatzes HS angeordnet.

Die entsprechend dem Radsatzschema des gattungsgemäßen Standes der Technik gemäß Fig. 1A kinematisch zwischen der Antriebswelle AN und dem dritten Eingangselement des Hauptradsatzes HS angeordnete Kupplung E grenzt axial unmittelbar an den Hauptradsatz HS an dessen dem Vorschaltradsatz VS abgewandten Seite an. Entsprechend ist ein Eingangselement 520 der Kupplung E mit der Antriebswelle AN und ein Ausgangselement 530 der Kupplung E mit dem gekoppelten Steg ST_HS des Hauptradsatzes HS verbunden. Dabei ist das Eingangselement 520 hier beispielhaft als Außenlamellenträger zur Aufnahme von außenverzahnten Lamellen des Lamellenpaketes 500 der Kupplung E ausgebildet. Entsprechend ist das Ausgangselement 530 der Kupplung E als Innenlamellenträger zur Aufnahme von innenverzahnten Lamellen des Lamellenpaketes 500 der Kupplung E ausgebildet. Im dargestellten Beispiel ist das Lamellenpaket 500 auf einem Durchmesser angeordnet, der in etwa dem Durchmesser des Hohlrads HO_HS des Hauptradsatzes HS entspricht. Dieser Lamellendurchmesser erfordert zwar eine relativ große Anzahl an Lamellen für das Lamellenpaket 500, ermöglicht jedoch im Bereich der Getriebeabtriebs eine für einen sogenannten Standardantrieb günstige schlanke Gehäusebauform. In Verbindung mit einer nicht-koaxialen Anordnung von Antriebs- und Abtriebswelle AN, AB wird der Fachmann die Lamellen der Kupplung E bei Bedarf auch auf einem größeren Durchmesser anordnen. Geometrisch ist der zylinderförmige Außenlamellenträger 520 der Kupplung E als ein in Richtung Hauptradsatz HS hin geöffneter Topf ausgebildet, innerhalb dessen das Lamellenpaket 500 und eine Servoeinrichtung 510 zur Betätigung dieses Lamellenpaketes 500 angeordnet sind. Die mit einer Nabe des Außenlamellenträgers 520 verbundene Antriebswelle AN durchdringt das Getriebe in ihrem axialen Verlauf vollständig bis auf die abtriebsseitige Außenwand des Getriebegehäuses GG. Ein mit dem Hohlrad HO_HS verbundener Abschnitt der Abtriebswelle AB übergreift die Kupplung E in axialer Richtung radial vollständig. Die hier zur Vereinfachung nur schematisch dargestellte Servoeinrichtung 510 ist auf der hauptradsatzfernen Seite des Lamellenpaketes 500 angeordnet und betätigt dieses beim Schließen der Kupplung E axial in Richtung Hauptradsatz HS. Vorzugsweise weist die Servoeinrichtung 510 auch einen dynamischen Druckausgleich auf, da ein nicht näher dargestellter Druckraum dieser Servoeinrichtung 510 stets mit Drehzahl der Antriebswelle AN rotiert.

Die entsprechend dem Radsatzschema des gattungsgemäßen Standes der Technik gemäß Fig. 1A kinematisch zwischen dem gekoppelten Steg ST_HS des Hauptradsatzes HS und dem Getriebegehäuse GG angeordnete Bremse D ist beispielhaft als Lamellenbremse ausgeführt. Räumlich gesehen ist diese Bremse D nahe dem Hauptradsatz HS im Bereich des Innendurchmessers des Getriebegehäuses GG angeordnet, wobei ein als Innenlamellenträger zur Aufnahme von innenverzahnten Lamellen des Lamellenpaketes 400 der Bremse D ausgebildetes Ausgangselement 430 mit dem Stegblech des gekoppelten Stegs ST_HS des Hauptradsatzes HS verdrehfest verbunden ist, welcher dem Vorschaltradsatz VS zugewandt ist. Ein Außenlamellenträger zur Aufnahme von außenverzahnten Lamellen des Lamellenpaketes 400 der Bremse D ist hier beispielhaft direkt in das Getriebegehäuse GG integriert, kann selbstverständlich aber auch als separates Bauelement ausgeführt sein, das dann mit dem Getriebegehäuse GG verdrehfest verbunden ist. Mit 410 ist eine vereinfacht dargestellte Servoeinrichtung der Bremse D zur Betätigung des Lamellenpaketes 400 bezeichnet, die hier beispielhaft ebenfalls in das Getriebegehäuse GG integriert ist, beispielsweise aber auch in einem separaten Außenlamellenträger der Bremse D integriert sein kann. Beim Schließen der Bremse D betätigt die genannte Servoeinrichtung 410 das ihr zugeordnete Lamellenpaket 400 axial in Richtung Vorschaltradsatz VS.

In Richtung Hauptradsatz HS gesehen, grenzt die Kupplung A axial an den Vorschaltradsatz VS an. Entsprechend dem Radsatzschema des gattungsgemäßen Standes der Technik gemäß Fig. 1A ist die Kupplung A kinematisch zwischen dem Ausgangselement des Vorschaltradsatzes VS und dem zweiten Eingangselement des Hauptradsatzes HS angeordnet. Entsprechend ist ein Eingangselement 120 der Kupplung A mit dem Hohlrad HO_VS des Vorschaltradsatzes VS und ein Ausgangselement 130 der Kupplung A mit dem (vorschaltradsatzfernen) zweiten Sonnenrad S2_HS des Hauptradsatzes HS verbunden. Dabei ist das Eingangselement 120 hier beispielhaft als Innenlamellenträger zur Aufnahme von innenverzahnten Lamellen des Lamellenpaketes 100 der Kupplung A ausgebildet. Selbstverständlich können Hohlrad HO_VS und Eingangselement bzw. Innenlamellenträger 120 einstückig ausgeführt sein. Im dargestellten Beispiel ist das Lamellenpaket 100 auf einem größeren Durchmesser angeordnet als das Hohlrad HO_VS. Das Ausgangselement 130 der Kupplung A ist hier als Außenlamellenträger zur Aufnahme von außenverzahnten Lamellen des Lamellenpaketes 100 ausgebildet und über eine Sonnenwelle 140 mit dem vorschaltradsatzfernen zweiten Sonnenrad S2_HS des Hauptradsatzes HS verbunden. Dabei umschließt diese Sonnenwelle 140 die Antriebswelle AN abschnittsweise und durchgreift in ihrem axial Verlauf das vorschaltradsatznahe erste Sonnenrad S1_HS des Hauptradsatzes HS zentrisch. Selbstverständlich können Sonnenwelle 140 und Sonnenrad S2_HS auch einstückig ausgeführt sein. Geometrisch ist der zylinderförmige Außenlamellenträger 130 der Kupplung A als ein in Richtung Vorschaltradsatz VS hin geöffneter Topf ausgebildet, innerhalb dessen das Lamellenpaket 100 und eine Servoeinrichtung 110 zur Betätigung dieses Lamellenpaketes 100 angeordnet sind. Diese hier zur Vereinfachung nur schematisch dargestellte Servoeinrichtung 110 ist auf der hauptradsatznahen Seite des Lamellenpaketes 100 angeordnet und betätigt dieses beim Schließen der Kupplung A axial in Richtung Vorschaltradsatz VS. Vorzugsweise weist die Servoeinrichtung 110 auch einen dynamischen Druckausgleich auf, da ein nicht näher dargestellter Druckraum der Servoeinrichtung 110 stets mit Drehzahl des zweiten Sonnenrades S2_HS des Hauptradsatzes HS rotiert.

Die Kupplung B ist räumlich gesehen überwiegend radial über der getriebegehäusefesten Nabe GN angeordnet, an der auch das Sonnenrad SO_VS des Vorschaltradsatzes VS am Getriebegehäuse GG festgesetzt ist. Das Lamellenpaket 200 der Kupplung B ist dabei zumindest teilweise in einem Bereich radial über dem Hohlrad HO_VS des Vorschaltradsatzes VS auf einem vergleichsweise großen Durchmesser angeordnet. Entsprechend ist das als Innenlamellenträger zur Aufnahme von innenverzahnten Lamellen des Lamellenpaketes 200 ausgebildete Eingangselement 220 der Kupplung B zumindest teilweise ebenfalls im Bereich radial über dem Hohlrad HO_VS des Vorschaltradsatzes VS angeordnet und mit diesem Hohlrad HO_VS verdrehfest verbunden. Selbstverständlich können Innenlamellenträger 220 und Hohlrad HO_VS einstückig ausgeführt sein. Selbstverständlich ist die räumliche Lage des Lamellenpaketes 200 der Kupplung B nicht auf die Darstellung in Fig. 16 beschränkt und kann in axialer Richtung auch nach beiden Seiten hin verschoben sein.

Geometrisch ist das als Außenlamellenträger ausgebildete Ausgangselement 230 der Kupplung B als ein in Richtung Vorschaltradsatz VS bzw. Hauptradsatz HS hin geöffneter zylinderförmiger Topf ausgebildet, mit einem weitgehend zylinderringförmigen Mantel, einem scheibenförmigen Topfboden und einer Nabe 233. Der scheibenförmige Topfboden des Außenlamellenträgers 230 grenzt unmittelbar axial an die Gehäusewand GW an und erstreckt weitgehend parallel zu dieser sich in radialer Richtung. Am Innendurchmesser des genannten Topfbodens schließt sich die Nabe 233 des Außenlamellenträgers 230 an und erstreckt radial über der getriebegehäusefesten Nabe GN in axialer Richtung in etwa bis zur Mitte dieser Nabe GN und ist dabei auf dieser Nabe GN verdrehbar gelagert. Am Außendurchmesser des genannten Topfbodens schließt sich der genannte Mantel des Außenlamellenträgers 230 an und erstreckt sich - im dargestellten Beispiel radial gestuft - axial in Richtung Vorschaltradsatz VS bzw. Hauptradsatz HS bis über das hier radial über den Hohlrad HO_VS des Vorschaltradsatzes VS angeordnete Lamellenpaket 200. Dabei ist der gehäusewandnahe Abschnitt des Mantels des Außenlamellenträgers 230 dabei gleichzeitig als Ausgangselement 330 für die Bremse C ausgebildet und weist an seinem Außendurchmesser ein geeignetes Mitnahmeprofil zur Aufnahme von innenverzahnten Lamellen der Lamellenpaketes 300 dieser Bremse C auf. Am Innendurchmesser des vorschaltradsatznahen Abschnitts des Mantels des Außenlamellenträgers 230 ist ein geeignetes Mitnahmeprofil zur Aufnahme von außenverzahnte Lamellen des Lamellenpaketes 200 der Kupplung B vorgesehen. Die Servoeinrichtung 210 der Kupplung B, umfassend einen Druckraum 211, einen Druckausgleichsraum 212, einen Kolben 214 und ein Rückstellelement 213, ist vollständig innerhalb eines Zylinderraums angeordnet, der durch den Außenlamellenträger 230 der Kupplung B gebildet wird, im wesentlichen radial oberhalb der Nabe 233 des Außenlamellenträgers 230. Der Kolben 214 ist am Außenlamellenträger 230 axial verschiebbar gelagert und dabei gegen diesen druckmitteldicht abgedichtet. Der Druckraum 211 wird durch eine innere Mantelfläche des Außenlamellenträgers 230 und den Kolben 214 gebildet. Entsprechend rotiert der Druckraum 211 ständig mit Drehzahl des Außenlamellenträgers 230. Zum Ausgleich des rotatorischen Drucks des rotierenden Druckraums 211 ist ein dynamischer Druckausgleich mit dem drucklos mit Schmiermittel befüllbaren Druckäusgleichsraum 212 vorgesehen, wobei dieser Druckausgleichsraum 212 näher am Vorschaltradsatz VS (bzw. Hauptradsatz HS) angeordnet ist als der genannte Druckraum 211. Der Druckausgleichsraum 212 ist auf der dem Vorschaltradsatz VS zugewandten Seite des Kolbens 214 angeordnet und wird gebildet durch den Kolben 214 und einer dem Druckraum 211 zugewandten Mantelfläche 215 des Ausgangselementes bzw. Außenlamellenträgers 630 der Kupplung F, wobei dieser Außenlamellenträger 630 gegenüber dem Kolben 214 axial verschiebbar schmiermitteldicht abgedichtet ist. Aus der gewählten Nomenklatur für die zur Bildung des Druckausgleichsraums 212 relevanten Mantelfläche 215 des Außenlamellenträgers 630 ist ersichtlich, dass der Außenlamellenträger 630 der Kupplung F gleichzeitig die Funktion einer Stauscheibe für die Servoeinrichtung 210 der Kupplung B übernimmt. Der Kolben 214 ist über das hier beispielhaft als Tellerfeder ausgebildete Rückstellelement 213 axial gegen die Nabe 233 des Außenlamellenträgers 230 vorgespannt. Bei einer Beaufschlagung des Druckraums 211 mit Druckmittel zum Schließen der Kupplung B bewegt sich der Kolben 214 axial in Richtung Vorschaltradsatz VS bzw. Hauptradsatz HS und betätigt das ihm zugeordnete Lamellenpaket 200 gegen die Federkraft des Rückstellelementes 213. Aufgrund der Lagerung des Außenlamellenträgers 230 der Kupplung B auf der getriebegehäusefesten Nabe GN ergibt sich eine konstruktiv relativ einfache Druck- und Schmiermittelzufuhr zur Kupplung B über entsprechende Kanäle bzw. Bohrungen, die abschnittsweise innerhalb der genannten Gehäusenabe GN und abschnittsweise innerhalb der Nabe 233 des Außenlamellenträgers 230 verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217.

Die Kupplungen B und F sind ineinander verschachtelt, wobei die Kupplung F im Prinzip innerhalb der Kupplung B angeordnet ist. Entsprechend der Lage des Lamellenpaketes 200 der Kupplung B in einem Bereich radial über dem Vorschaltradsatz ist die Kupplung F räumlich gesehen vollständig innerhalb eines Zylinderraums angeordnet, der durch den Kolben 214 der Servoeinrichtung 210 der Kupplung B gebildet wird. Dabei grenzt das Lamellenpaket 600 der Kupplung F axial unmittelbar an den Vorschaltradsatz VS an und ist im dargestellten Beispiel in etwa auf dem Durchmesser des Hohlrades HO_VS des Vorschaltradsatzes VS angeordnet.

Das Eingangselement 620 der Kupplung F ist als Innenlamellenträger zur Aufnahme von innenverzahnten Lamellen des Lamellenpaketes 600 dieser Kupplung F ausgebildet und mit einem hauptradsatzfernen Stegblech des gekoppelten Stegs ST_VS des Vorschaltradsatzes VS verdrehfest verbunden. Selbstverständlich können das genannte Stegblech und der genannte Innenlamellenträger 620 auch einstückig ausgebildet sein. Auf seiner hauptradsatznahen Seite ist der gekoppelten Steg ST_VS des Vorschaltradsatzes VS verdrehfest mit der Antriebswelle AN verbunden.

Der das Lamellenpaket 600 und die Servoeinrichtung 610 aufnehmende Außenlamellenträger 630 der Kupplung F ist geometrisch als ein in Richtung Vorschaltradsatz VS bzw. Hauptradsatz HS hin geöffneter zylinderförmiger Topf ausgebildet, mit einem weitgehend zylinderringförmigen Mantel, einem scheibenförmigen Topfboden und einer Nabe 633. Der im dargestellten Beispiel radial gestufte zylinderringförmige Mantel des Außenlamellenträgers 630 erstreckt sich ausgehend vom vorschaltradsatzseitigen Ende des Lamellenpaketes 600 axial in Richtung Gehäusewand GW bis zu dem Kolben 214 der Servoeinrichtung 210 der Kupplung B. Am Innendurchmessers seines dem Vorschaltradsatz VS zugewandeten Endes weist der genannte Mantel des Außenlamellenträgers 630 ein geeignetes Mitnahmeprofil zur Aufnahme von außenverzahnten Lamellen des Lamellenpaketes 600 der Kupplung F auf. Zur Bildung des Druckausgleichsraums 212 der Servoeinrichtung 210 der Kupplung B ist der genannte Mantel des Außenlamellenträgers 630 an seinem gehäusewandseitigen Ende gegen den Kolben 214 axial verschiebbar schmiermitteldicht abgedichtet. Etwa in Mitte des zylinderringförmigen Mantels des Außenlamellenträgers 630 schließt sich der scheibenförmige Topfboden des Außenlamellenträgers 630 an und erstreckt sich radial nach innen bis knapp oberhalb der getriebegehäusefesten Nabe GN. Am Innendurchmesser des genannten Topfbodens schließt sich die Nabe 633 des Außenlamellenträgers 630 an, erstreckt axial in Richtung Vorschaltradsatz VS bis knapp vor das Sonnenrad SO_VS und ist dabei auf der getriebegehäusefesten Nabe GN verdrehbar gelagert.

Die Servoeinrichtung 610 der Kupplung F, umfassend einen Druckraum 611, einen Druckausgleichsraum 612, einen Kolben 614, ein Rückstellelement 613 und eine Stauscheibe 615, ist vollständig innerhalb eines Zylinderraums angeordnet, der durch den Außenlamellenträger 630 der Kupplung F gebildet wird, und radial oberhalb der Nabe 633 angeordnet. Der Kolben 614 ist am Außenlamellenträger 630 axial verschiebbar gelagert und dabei gegen diesen druckmitteldicht abgedichtet. Der Druckraum 611 wird durch eine dem Vorschaltradsatz VS zugewandte innere Mantelfläche des Außenlamellenträgers 630 und den Kolben 614 gebildet. Entsprechend rotiert der Druckraum 611 ständig mit Drehzahl des Außenlamellenträgers 630. Zum Ausgleich des rotatorischen Drucks des rotierenden Druckraums 611 ist ein dynamischer Druckausgleich mit dem drucklos mit Schmiermittel befüllbaren Druckausgleichsraum 612 vorgesehen, wobei dieser Druckausgleichsraum 612 näher am Vorschaltradsatz VS (bzw. Hauptradsatz HS) angeordnet ist als der genannte Druckraum 611. Gebildet wird der Druckausgleichsraum 612 durch den Kolben 614 und die Stauscheibe 615, welche axial am vorschaltradsatznahen Ende der Nabe 633 des Außenlamellenträgers 630 fixiert und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen die Nabe 633 vorgespannt. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613. Aufgrund der Lagerung des Außenlamellenträgers 630 der Kupplung F auf der getriebegehäusefesten Nabe GN ergibt sich eine konstruktiv relativ einfache Druck- und Schmiermittelzufuhr zur Kupplung F über entsprechende Kanäle bzw. Bohrungen, die abschnittsweise innerhalb dem genannten Gehäusenabe GN und abschnittsweise innerhalb der Nabe 633 des Außenlamellenträgers 630 verlaufen. Eine Druckmittelzuführung zum Druckraum 611 der Servoeinrichtung 610 der Kupplung F ist mit 616 bezeichnet, eine Schmiermittelzuführung zum Druckausgleichsraum 612 der Servoeinrichtung 610 der Kupplung F mit 617.

Räumlich gesehen ist die Servoeinrichtung 610 der Kupplung F also näher an Haupt- und Vorschaltradsatz HS, VS angeordnet als die Servoeinrichtung 210 der Kupplung B, wobei der Druckraum 611 der Servoeinrichtung 610 und der Druckausgleichsraum 211 der Servoeinrichtung 210 nur durch eine Mantelfläche des Ausgangselementes bzw. Außenlamellenträgers 630 der Kupplung F voneinander getrennt sind.

Entsprechend dem Radsatzschema des gattungsgemäßen Standes der Technik gemäß Fig. 1A ist das vorschaltradsatznahe erste Sonnenrad S1_HS des Hauptradsatzes HS das erste Eingangselement des Hauptradsatzes HS. Zur kinematischen Anbindung der Außenlamellenträger 230, 630 der Kupplungen B, F an dieses Sonnenrad S1_HS ist zum einen vorgesehen, dass die Naben 633, 233 der beiden Außenlamellenträger 630, 230 verdrehfest miteinander verbunden sind, hier beispielhaft formschlüssig über ein geeignetes Mitnahmeprofil. Zum anderen ist vorgesehen, dass der Außenlamellenträger 230 der Kupplung B im Bereich seines dem Hauptradsatz HS zugewandten Endes mit einem zylinderförmigen Verbindungselement ZYL verdrehfest - beispielsweise formschlüssig - verbunden ist. Dieses Verbindungselement ZYL wiederum ist geometrisch als ein in Richtung Gehäusewand GW hin geöffneter Topf ausgebildet, mit einem zylinderringförmigen Mantel, der die Kupplung A in axialer Richtung radial umschließt, sowie mit einem scheibenförmigen Topfboden, der sich auf der dem Hauptradsatz HS zugewandten Seite des Ausgangselementes bzw. Außenlamellenträgers 130 der Kupplung A angrenzend an dieses Ausgangselement bzw. diesen Außenlamellenträgers 130 radial nach innen bis auf einen Durchmesser knapp oberhalb der Sonnenwelle 140 erstreckt und in seinem Nabenbereich mit dem vorschaltradsatznahen Sonnenrad S1_HS des Hauptradsatzes HS verbunden ist. Der Außenlamellenträger 630 der Kupplung F ist also über den Außenlamellenträger 230 der Kupplung B verdrehfest mit dem genannten Sonnenrad S1_HS verbunden. Entsprechend rotieren die Servoeinrichtungen 210, 610 beider Kupplungen B, F ständig mit Drehzahl des ersten Eingangselementes - also hier des ersten Sonnenrades S1_HS - des Hauptradsatzes HS.

Ein Außenlamellenträger zur Aufnahme von außenverzahnten Außenlamellen des Lamellenpaketes 300 der Bremse C ist hier beispielhaft direkt in das Getriebegehäuse GG integriert, kann selbstverständlich aber auch als separates Bauelement ausgeführt sein, das dann mit dem Getriebegehäuse GG verdrehfest verbunden ist. Mit 310 ist eine vereinfacht dargestellte Servoeinrichtung der Bremse C zur Betätigung des Lamellenpaketes 300 bezeichnet, die hier beispielhaft in die Gehäusewand GW integriert ist, beispielsweise aber auch in einem separaten Außenlamellenträger der Bremse C integriert sein kann. Beim Schließen der Bremse C betätigt die genannte Servoeinrichtung 310 das ihr zugeordnete Lamellenpaket 300 axial in Richtung Vorschaltradsatz VS bzw. Hauptradsatz HS.

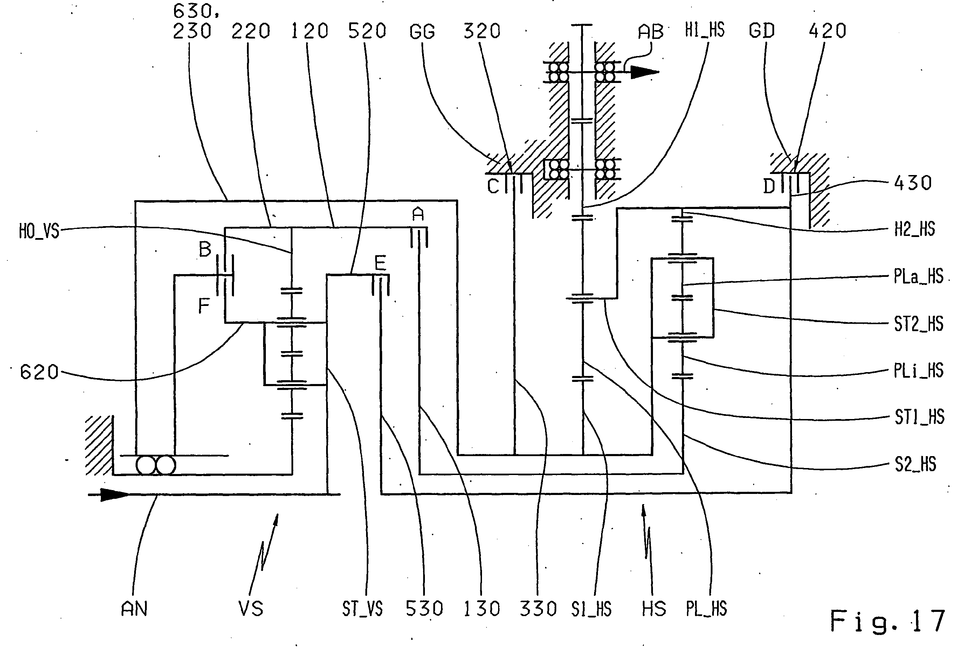

Anhand Fig. 17 wird nun ein beispielhaftes sechzehntes erfindungsgemäßes Getriebeschema erläutert, basierend auf dem Getriebeschema bzw. der Bauteilanordnung gemäß Fig. 9, jedoch mit einem ersten alternativen Hauptradsatz. Nach wie vor ist der Hauptradsatz HS als ein Zweisteg-Vierwellen-Planetengetriebe mit drei Eingangselementen und einem Ausgangselement ausgebildet, weist nunmehr aber zwei miteinander gekoppelte Einfach-Planetenradsätze auf, von denen der erste in Einfach-Planetenbauweise und der zweite in Doppel-Planetenbauweise ausgeführt ist Der erste Einfach-Planetenradsatz des Hauptradsatzes HS ist dem Vorschaltradsatz VS zugewandt und umfasst ein Sonnenrad S1_HS, ein Hohlrad H1_S, sowie einen Steg ST1_HS mit daran verdrehbar gelagerten Planetenrädern PL_HS. Dabei kämmen die Planetenräder PL_HS mit dem Sonnenrad S1_HS und dem Hohlrad H1_HS. Der zweite Einfach-Planetenradsatz des Hauptradsatzes HS ist auf der dem Vorschaltradsatz VS abgewandten Seite des ersten Einfach-Planetenradsatzes des Hauptradsatzes HS angeordnet und umfasst ein Sonnenrad S2_HS, ein Hohlrad H2_S, sowie einen gekoppelten Steg ST2_HS mit daran verdrehbar gelagerten inneren und äußeren Planetenrädern PLi_HS und PLa_HS. Die inneren Planetenräder PLi_HS kämmen dabei mit dem Sonnenrad S2_HS und den äußeren Planetenrädern PLa_HS, die äußeren Planetenrädern PLa_HS mit den inneren Planetenrädern PLi_HS und dem Hohlrad H2_HS.

Sonnenrad S1_HS und gekoppelter Steg ST2_HS sind miteinander verbunden und bilden das erste Eingangselement des Hauptradsatzes HS, welches wiederum mit den Ausgangselementen 230, 630 der beiden Kupplungen B, F und dem Ausgangselement 330 der Bremse C verbunden ist. Wie in Fig. 9 sind Ausgangselement 230 der Kupplung B und Ausgangselement 630 der Kupplung F als gemeinsames Bauteil ausgebildet, das Eingangselement 220 der Kupplung B mit dem Hohlrad HO_VS des Vorschaltradsatzes VS verbunden, das Eingangselement 620 der Kupplung F über den gekoppelten Steg ST_VS des Vorschaltradsatzes VS mit der Antriebswelle AN verbunden, und das Eingangselement 320 der Bremse C mit dem Getriebegehäuse GG verbunden. Das vorschaltradsatzfeme Sonnenrad S2_HS bildet das zweite Eingangselement des Hauptradsatzes HS, welches wiederum mit dem Ausgangselement 130 der Kupplung A verbunden ist. Wie in Fig. 9 ist das Eingangselement 120 der Kupplung A mit dem Hohlrad HO_VS des Vorschaltradsatzes VS verbunden. Steg ST1_HS und Hohlrad H2_HS sind miteinander verbunden und bilden das dritte Eingangselement des Hauptradsatzes HS, welches wiederum mit dem Ausgangselement 530 der Kupplung E und dem Ausgangselement 430 der Bremse D verbunden ist. Wie in Fig. 9 ist das Eingangselement 520 der Kupplung E mit der Antriebswelle AN und das Eingangselement 420 der Bremse D (hier über einen getriebegehäusefesten Gehäusedeckel GD) mit dem Getriebegehäuse GG verbunden. Das vorschaltradsatznahe Hohlrad H1_HS bildet das Ausgangselement des Hauptradsatzes HS, welches wiederum mit der Abtriebswelle AB verbunden ist. Die Schaltlogik dieses sechzehnten erfindungsgemäßen Getriebeschemas gemäß Fig. 17 entspricht der in Fig. 1B dargestellten Schaltlogik des gattungsgemäßen Getriebes.

Hinsichtlich der räumlichen Anordnung der einzelnen Getriebebauteile greift das in Fig. 17 dargestellte Ausführungsbeispiel im wesentlichen auf die in Fig. 9 dargestellte Anordnung zurück, wobei im Unterschied zu Fig. 9 die Abtriebswelle AB nunmehr beispielhaft achsparallel zur Antriebswelle AN und die Bremse D auf der dem Vorschaltradsatz VS abgewandten Seite des Hauptradsatzes HS angeordnet ist. Wie schon mehrfach vorher angedeutet, ist es bei allen zuvor dargestellten erfindungsgemäßen Getriebeschemata bzw. Bauteilanordnungen ohne besonderen konstruktiven Aufwand möglich, die koaxiale Anordnung von Antriebs- und Abtriebswelle dahingehend zu modifizieren, dass Antriebs- und Abtriebeswelle achsparallel oder winklig zueinander verlaufen. Fig. 17 zeigt nun ein entsprechendes Ausführungsbeispiel mit einem kinematisch zwischen dem Hohlrad H1_HS des Hauptradsatzes HS und der Abtriebswelle AB angeordneten Stirntrieb, wobei ein üblicherweise zwischen der Ausgangsseite des Stimtriebs und der Abtriebswelle AB vorgesehenes Differential hier zur Vereinfachung nicht näher dargestellt ist.

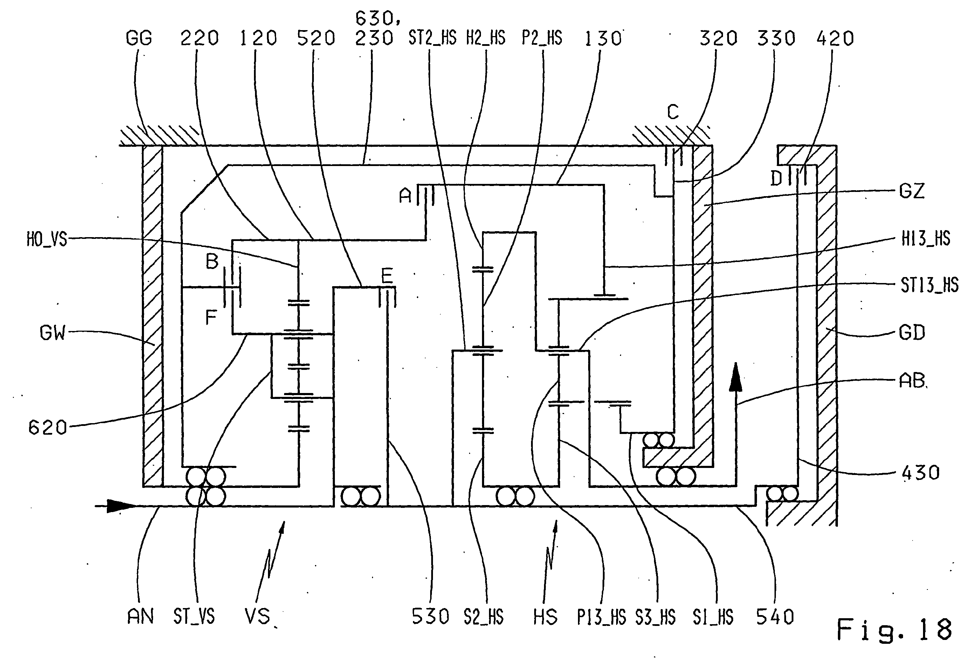

Anhand Fig. 18 wird nun ein siebzehntes beispielhaftes Getriebeschema gemäß der vorliegenden Erfindung erläutert, wiederum basierend auf dem Getriebeschema bzw. der Bauteilanordnung gemäß Fig. 9, jedoch mit einem zweiten alternativen Hauptradsatz. Der "neue" Hauptradsatz HS ist nunmehr als ein "auf eine Zweisteg-Einheit reduziertes Dreisteg-Fünfwellen-Planetengetriebe" ausgeführt mit drei Einzel-Planetenradsätzen, von denen zwei zu einer Einsteg-Einheit zusammengefasst sind. Diese aus zwei Einzel-Planetenradsätzen zusammengefasste Einsteg-Einheit des Hauptradsatzes HS umfasst zwei getrennte Sonnenräder S1_HS, S3_HS, nur ein Hohlrad H13_HS sowie einen gekoppelten Steg ST13_HS mit daran verdrehbar gelagerten langen Planetenrädern P13_HS und kann auch als ein "Planetenradsatz mit geteiltem Sonnenrad" interpretiert werden. Der verbleibende andere Einzel-Planetenradsatz des Hauptradsatzes HS umfasst ein Sonnenrad S2_HS, ein Hohlrad H2_HS sowie einen Steg ST2_HS mit daran verdrehbar gelagerten kurzen Planetenrädern P2_HS und ist vorschaltradsatznah angeordnet. Wie in Fig. 9 hat der "neue" Hauptradsatz HS drei nicht miteinander verbunden Eingangselemente und ein Ausgangselement. Die Schaltlogik dieses siebzehnten erfindungsgemäßen Getriebeschemas gemäß Fig. 18 entspricht der in Fig. 1 B dargestellten Schaltlogik des gattungsgemäßen Getriebes.

Das Sonnenrad S3_HS ist axial zwischen dem vorschaltradnahen Sonnenrad S2_HS und dem auf der dem Vorschaltradsatz VS gegenüberliegenden Seite des Hauptradsatzes HS angeordnete Sonnenrad S1_HS angeordnet und einerseits mit dem Sonnenrad S2_HS fest verbunden und andererseits über die langen Planetenräder P13_HS mit dem Sonnenrad S1_HS wirkverbunden. Die beiden Sonnenräder S1_HS, S2_HS können beispielsweise auch einstückig ausgeführt sein. Das vorschaltradsatzfeme Sonnenrad S1_HS bildet das erste Eingangselement des Hauptradsatzes HS, welches wiederum mit den Ausgangselementen 230, 630 der beiden Kupplungen B, F und dem Ausgangselement 330 der Bremse C verbunden ist. Wie in Fig. 9 sind Ausgangselement 230 der Kupplung B und Ausgangselement 630 der Kupplung F als gemeinsames Bauteil ausgebildet, das Eingangselement 220 der Kupplung B mit dem Hohlrad HO_VS des Vorschaltradsatzes VS verbunden, das Eingangselement 620 der Kupplung F über den gekoppelten Steg ST_VS des Vorschaltradsatzes VS mit der Antriebswelle AN verbunden, und das Eingangselement 320 der Bremse C (hier über eine getriebegehäusefeste Gehäusezwischenwand GZ) mit dem Getriebegehäuse GG verbunden. Das vorschaltradsatzferne Hohlrad H13_HS bildet das zweite Eingangselement des Hauptradsatzes HS, welches wiederum mit dem Ausgangselement 130 der Kupplung A verbunden ist. Wie in Fig. 9 ist das Eingangselement 120 der Kupplung A mit dem Hohlrad HO_VS des Vorschaltradsatzes VS verbunden. Der vorschaltradsatznahe Steg ST2_HS bildet das dritte Eingangselement des Hauptradsatzes HS, welches wiederum mit dem Ausgangselement 530 der Kupplung E und dem Ausgangselement 430 der Bremse D verbunden ist. Wie in Fig. 9 ist das Eingangselement 520 der Kupplung E mit der Antriebswelle AN und das Eingangselement 420 der Bremse D (hier über einen getriebegehäusefesten Gehäusedeckel GD) mit dem Getriebegehäuse GG verbunden. Das vorschaltradsatznahe Hohlrad H2_HS und der vorschaltradsatzfeme Steg ST13_HS sind miteinander fest verbunden und bilden das Ausgangselement des Hauptradsatzes HS, welches wiederum mit der Abtriebswelle AB verbunden ist.

Die in Fig. 18 dargestellte räumliche Anordnung des Vorschaltradsatzes VS und der vier Kupplungen A, B, E und F relativ zum Hauptradsatz HS und relativ zueinander entspricht im Prinzip den in Fig. 9 bzw. Fig. 17 dargestellten beispielhaften Anordnungen. Die besondere Ausgestaltung des Hauptradsatzes HS mit "geteiltem Sonnenrad" ermöglicht nunmehr die Anordnung beider Bremsen C und D auf der dem Vorschaltradsatz VS abgewandten Seite. Dabei ist die Bremse C näher am Hauptradsatz HS angeordnet als die Bremse D, wobei die Bremse D im Bereich einer Außenwand des Getriebes - hier im Bereich des Gehäusedeckels GD - angeordnet ist. Die Bremse C ist benachbart zum Hauptradsatz HS angeordnet und grenzt auf ihrer dem Hauptradsatz HS abgewandten Seite axial an die Gehäusezwischenwand GZ an, die wiederum axial zwischen Hauptradsatz HS und Gehäusedeckel GD angeordnet ist, wobei das Sonnenrad S1_HS des Hauptradsatzes HS an der Gehäusezwischenwand GZ verdrehbar gelagert ist. Zur kinematischen Anbindung des mit dem Hohlrad H2_HS gekoppelten Stegs ST13_HS des Hauptradsatzes HS an die Abtriebswelle AB greift ein dem Vorschaltradsatz VS abgewandtes Stegblech des Stegs ST13_HS in radialer Richtung gesehen axial zwischen den beiden Sonnenrädern S3_HS, S1_HS hindurch. Dabei durchgreift eine mit der Abtriebswelle AB verbundene Nabe dieses Stegblechs bzw. ein mit diesem Stegblech verbundener Nabenabschnitt der Abtriebswelle AB sowohl das vorschaltradsatzferne Sonnenrad S1_HS des Hauptradsatzes HS als auch die Gehäusezwischenwand in axialer Richtung zentrisch und ist an der Gehäusezwischenwand GZ verdrehbar gelagert. Zur kinematischen Anbindung des Ausgangselementes 430 der Bremse D an das Ausgangselement 530 der Kupplung E und ein vorschaltradsatznahes Stegblech des Stegs ST2_HS des Hauptradsatzes HS ist eine Stegwelle 540 vorgesehen, die den Hauptradsatz HS zentrisch vollständig durchdringt. Die Abtriebswelle AB bzw. ein hier nicht näher dargestellter Stimtrieb, der kinematisch zwischen dem Ausgangselement des Hauptradsatzes HS und der Abtriebswelle zwischengeschaltet ist greift also räumlich gesehen in radialer Richtung axial zwischen der Gehäusezwischenwand GZ und dem Ausgangselement 430 der Bremse D hindurch.

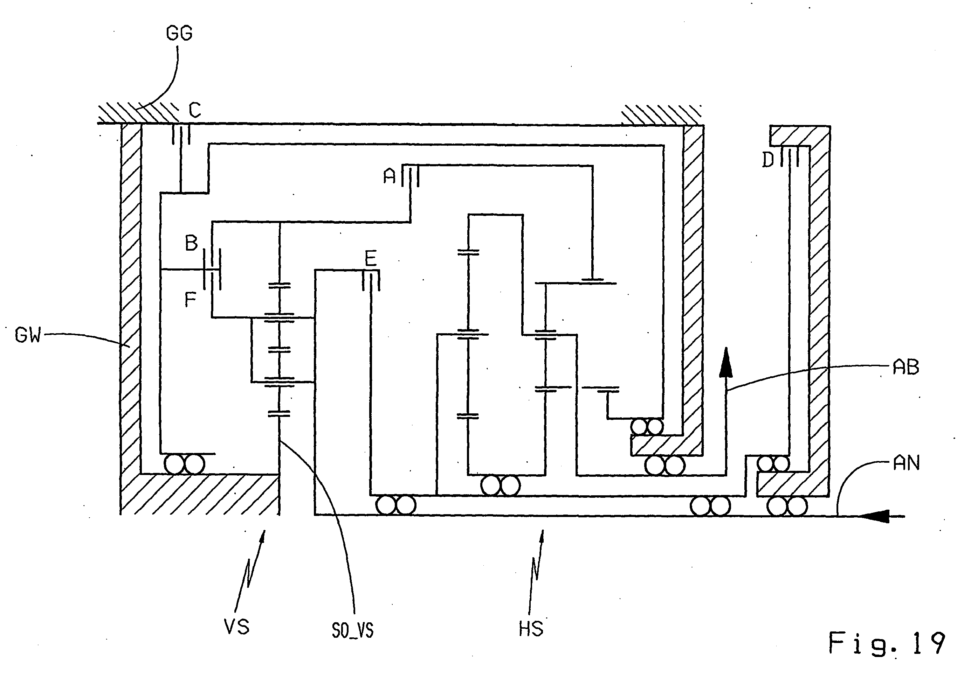

Dem Fachmann ist aus Fig. 18 leicht ersichtlich, dass es keiner besonderen Modifikationen der Getriebestruktur bedarf, um die räumliche Lage des mit der Antriebswelle AN wirkverbundenen (nicht näher dargestellten) Antriebsmotors des Getriebes relativ zu den Planetenradsätzen VS, HS zu verändern. Dies wird anhand Fig. 19 verdeutlicht, in der ein achtzehntes beispielhaftes Getriebeschema gemäß der vorliegenden Erfindung dargestellt ist. Im Unterschied zu Fig. 18 ist der mit der Antriebswelle AN wirkverbundene Antriebsmötor nunmehr auf der Seite des Hauptradsatzes HS angeordnet, die dem Vorschaltradsatz VS gegenüber liegt. Entsprechend sind jetzt auch die Bremse D sowie der als Stimtrieb angedeutete Abtrieb des Getriebes bzw. die Abtriebswelle AB des Getriebes antriebsmotornah angeordnet.

Ein weiterer Detail-Unterschied zu Fig. 18 betrifft die räumliche Lage der Bremse C. Wie aus Fig. 19 ersichtlich, ist diese Bremse C nunmehr beispielhaft auf der dem Hauptradsatz HS abgewandten Seite des Vorschaltradsatzes VS angeordnet, nahe der Kupplung B im Bereich der getriebegehäusefesten Gehäusewand GW bzw. des getriebegehäusefesten Gehäusedeckels, an dem auch das Sonnenrad SO_VS des Vorschaltradsatzes VS festgesetzt ist. Selbstverständlich ist eine solche räumliche Lage der Bremse C auch mit der in Fig. 18 dargestellten Bauteileanordnung kombinierbar.

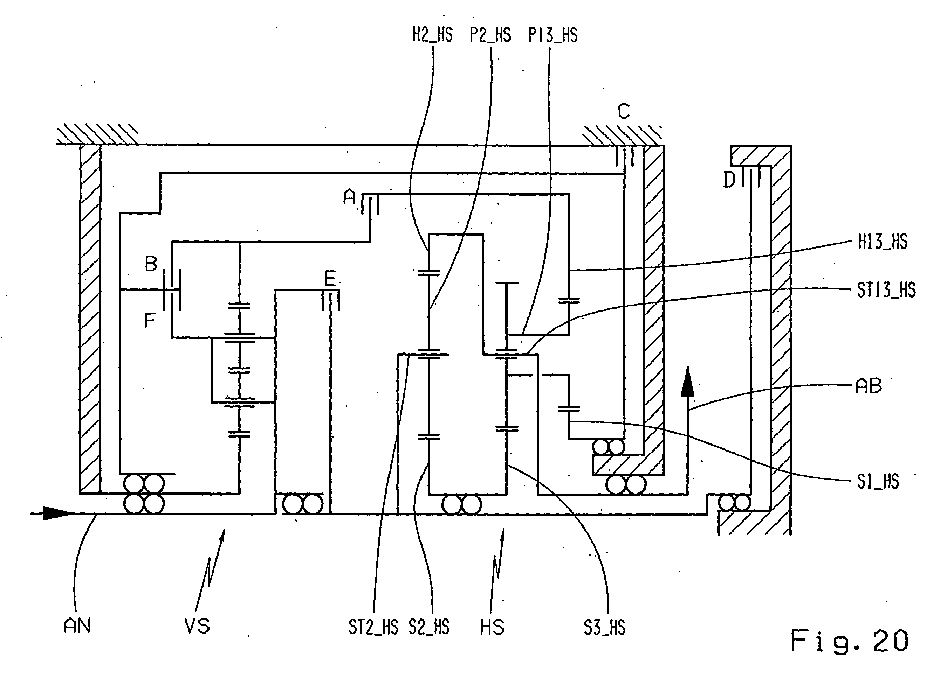

Wie bereit im Rahmen der Beschreibung von Fig. 18 angedeutet, ermöglicht die Teilung eines Zentralrades (also eines Sonnen- oder Hohlrades) eines Einzel-Planetenradsatzes in zwei getrennte Zentralräder nicht nur hinsichtlich einer Bauteilankoppelung an dieses ursprünglich ungeteilte Zentralrad einen zusätzlichen Freiheitsgrad, sondern auch einen zusätzlichen Freiheitsgrad hinsichtlich der Gangsprünge des Getriebes. Dies soll nun an einem neunzehnten Ausführungsbeispiel für ein Getriebeschema gemäß der vorliegenden Erfindung näher erläutert werden, welches in Fig. 20 dargestellt ist. Dabei basiert dieses neunzehnte Ausführungsbeispiel auf dem zuvor in Fig. 18 beschriebenen Getriebeschema, jedoch mit einer alternativen konstruktiven Ausgestaltung des Hauptradsatzes HS.

Wie in Fig. 20 ersichtlich, wurden in diesem neunzehnten Ausführungsbeispiel sowohl räumliche Bauteilanordnung als auch die kinematische Kopplung der Planetenradsätze VS und HS, der sechs Schaltelemente A bis F, sowie der Antriebs- und Abtriebswelle AN, AB vollständig von dem zuvor im Detail beschriebenen siebzehnten Ausführungsbeispiel gemäß Fig. 18 übernommen. Der "neue" Hauptradsatz HS ist ähnlich wie in Fig. 18 als ein "auf eine Zweisteg-Einheit reduziertes Dreisteg-Fünfwellen-Planetengetriebe" ausgeführt mit drei Einzel-Planetenradsätzen, von denen zwei zu einer Einsteg-Einheit zusammengefasst sind, die getrennte Sonnenräder (S1_HS, S3_HS), einen gekoppelten Steg (ST13_HS) und nur ein Hohlrad (H13_HS) aufweist. Im Unterschied zu Fig. 18 sind die am gekoppelten Steg ST13_HS verdrehbar gelagerten langen Planetenräder P13_HS des Hauptradsatzes HS nunmehr als Stufenplanet ausgebildet mit unterschiedlichen Verzahnungen für die beiden Sonnenräder S1_HS und S3_HS des Hauptradsatzes HS. Entsprechend haben das erste und dritte Sonnenrad S1_HS, S3_HS des Hauptradsatzes HS nunmehr eine unterschiedliche Zähnezahl. Beispielhaft kämmt das gekoppelte Hohlrad H13_HS des Hauptradsatzes HS mit der gleichen Verzahnung der langen Planetenräder P13_HS des Hauptradsatzes HS, mit der auch das erste Sonnenrad S1_HS des Hauptradsatzes HS kämmt. Selbstverständlich könnte in einer anderen Ausgestaltung auch vorgesehen sein, dass das gekoppelte Hohlrad (H13_HS) des Hauptradsatzes mit der gleichen Verzahnung der langen Planetenräder (P13_HS) des Hauptradsatzes kämmt, mit der auch das dritte Sonnenrad (S3_HS) des Hauptradsatzes kämmt Wie in Fig. 18 hat der "neue" Hauptradsatz HS gemäß Fig. 20 also drei nicht miteinander verbundene Eingangselemente und ein Ausgangselement.

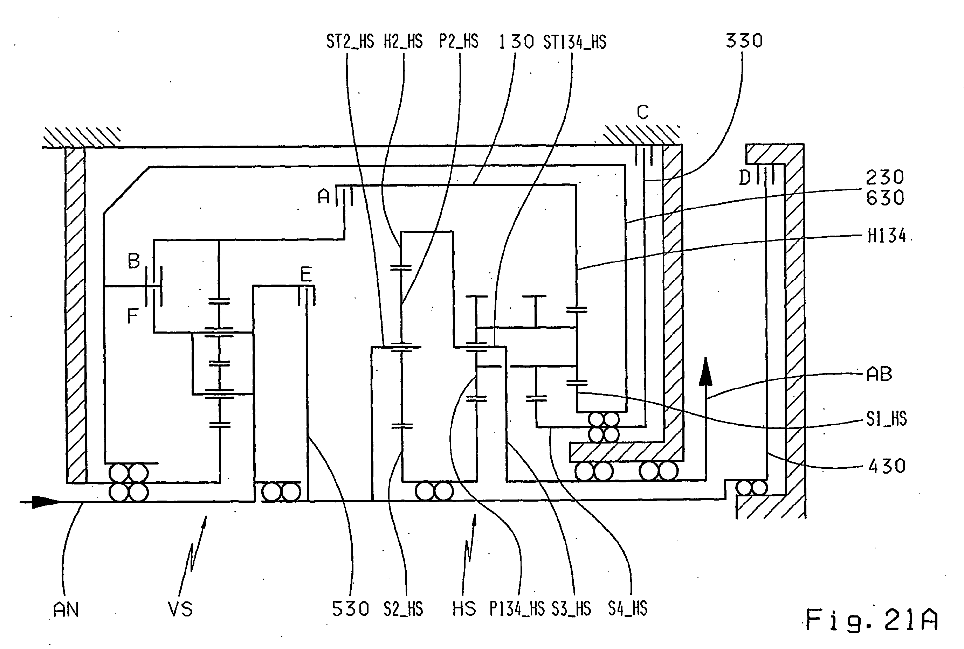

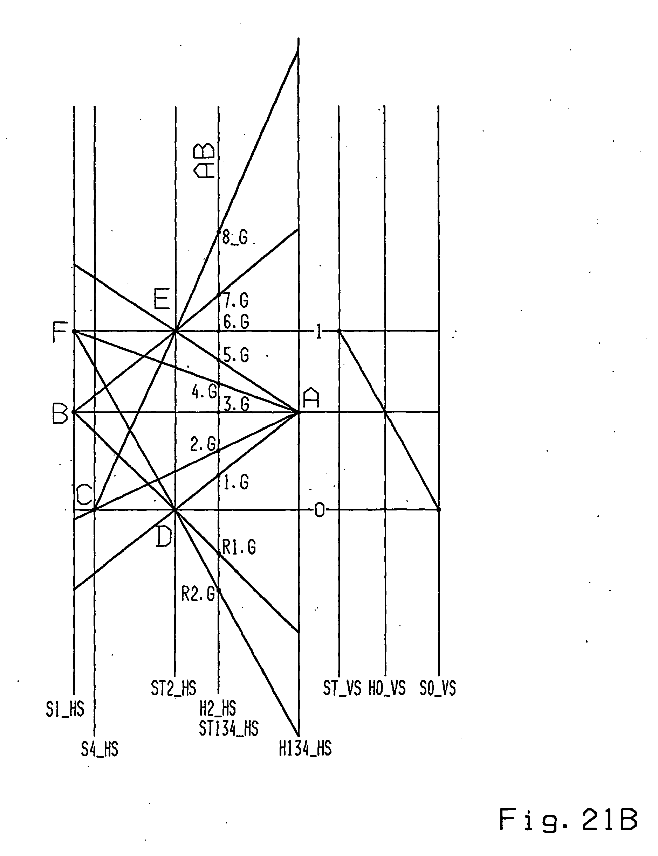

Die Teilung eines Zentralrades (also eines Sonnen- oder Hohlrades) eines Einzel-Planetenradsatzes in zwei getrennte Zentralräder bietet nicht nur hinsichtlich einer Bauteilankoppelung an dieses ursprünglich ungeteilte Zentralrad einen zusätzlichen Freiheitsgrad, sondern auch einen zusätzlichen Freiheitsgrad hinsichtlich des Drehzahlplans des Getriebes. Dies soll nun an einem zwanzigsten Ausführungsbeispiel für ein Getriebeschema gemäß der vorliegenden Erfindung näher erläutert werden, welches in Fig. 21A dargestellt ist. Dabei basiert dieses zwanzigste Ausführungsbeispiel wiederum auf dem zuvor in Fig. 18 beschriebenen Getriebeschema, jedoch mit einer weiteren alternativen konstruktiven Ausgestaltung des Hauptradsatzes HS. Im Prinzip ist es ohne Probleme möglich ist, alle Zentralräder (Sonnenräder, Hohlräder) des mehrgliedrigen Hauptradsatzes HS ähnlich den in den Figuren 18, 19 und 20 dargestellten Beispielen bauteilseitig in zwei oder mehr Bauteile zu teilen unter Beibehaltung der Anzahl der Hauptradsatz-Stege von zwei, sodass diese geteilten Zentralräder dann jeweils über die ihnen zugeordneten Planetenrädern kinematisch miteinander wirkverbunden sind. Selbstverständlich können die zu diesem geteilten Zentralrad korrespondierenden Planetenräder dabei als ungestufte oder gestufte Planetenräder ausgeführt sein. In dem in Fig. 21A dargestellten beispielhaften zwanzigsten Getriebeschema wurden durch eine Teilung des Zentralrades, welches zuvor mit den Ausgangselementen 230, 330, 630 der drei Schaltelemente B, C, F verbunden war, zwei der drei im Drehzahlplan der Getriebes zuvor deckungsgleichen Linien dieser drei Schaltelemente auseinander gezogen, was später anhand eines in Fig. 21B dargestellten Drehzahlplans dieses zwanzigsten Getriebeschemas noch genauer beschrieben wird.

Wie aus Fig. 21 ersichtlich, ist der Hauptradsatz HS nunmehr als ein "auf eine Zweisteg-Einheit reduziertes Viersteg-Planetengetriebe" ausgebildet, umfassend vier gekoppelte Einzel-Planetenradsätze mit insgesamt vier nicht gekoppelten Eingangselementen und einem Ausgangselemertt. Dabei weist der Hauptradsatz HS vier Sonnenräder S1_HS, S2_HS, S3_HS, S4_HS, ein einfaches Hohlrad H2_HS, ein gekoppeltes Hohlrad H134_HS, einen einfachen Steg ST2_HS mit daran verdrehbar gelagerten kurzen Planetenrädern P2_HS, sowie einen gekoppelten Steg ST134_HS mit daran verdrehbar gelagerten langen Planetenrädern P134_HS auf. Die beiden Sonnenräder S3_HS, S4_HS sind räumlich gesehen axial nebeneinander zwischen den beiden anderen Sonnenrädern S2_HS, S1_HS angeordnet, wobei das Sonnenrad S3_HS an das vorschaltradsatznahe Sonnenrad S2_HS angrenzt und das Sonnenrad S4_HS an das vorschaltradsatzferne Sonnenrad S1_HS angrenzt. Die beiden Sonnenräder S2_HS, S3_HS sind miteinander gekoppelt. Die in Fig. 21A dargestellten langen Planetenräder P134_HS sind beispielhaft als gestufte Planetenräder ausgeführt und kämmen mit den drei Sonnenrädern S1_HS, S3_HS und S4_HS. Das gekoppelte Hohlrad H134_HS kämmt hier beispielhaft mit der Planetenverzahnung, mit der auch das Sonnenrad S1_HS kämmt Die genannten kurzen Planetenräder P2_HS kämmen mit dem einfachen Hohlrad H2_HS und dem Sonnenrad S2_HS. Ein mit der Abtriebswelle AB verbundenes Stegblech des gekoppelten Stegs ST134_HS greift axial zwischen den Sonnenrädern S3_HS und S4_HS radial nach innen hindurch.

Das erste Sonnenrad S1_HS des Hauptradsatzes HS bildet dessen erstes Eingangselement und ist ständig verdrehfest mit dem gemeinsamen Ausgangselement 230, 630 der beiden Kupplungen B und F verbunden. Das gekoppelten Hohlrad H134_HS des Hauptradsatzes HS bildet dessen zweites Eingangselement und ist ständig verdrehfest mit dem Ausgangselement 130 der Kupplung A verbunden. Der einfache Steg ST2_HS des Hauptradsatzes HS bildet dessen drittes Eingangselement und ist ständig verdrehfest sowohl mit dem Ausgangselement 530 der Kupplung E und dem Ausgangselement 430 der Bremse D verbunden. Das Sonnenrad S4_HS bildet das gegenüber Fig. 18 zusätzliche vierte Eingangselement des Hauptradsatzes HS und ist ständig verdrehfest mit dem Ausgangselement 330 der Bremse C verbunden. Das einfache Hohlrad H2_HS und der gekoppelte Steg ST134_HS des Hauptradsatzes sind miteinander gekoppelt und bilden das ständig mit der Abtriebswelle AB verbundene Ausgangselement des Hauptradsatzes HS.

Ist die in dem in Fig. 21A dargestellten Beispiel die Standgetriebeübersetzung des ersten der vier gekoppelten Planetenradsätze des Hauptradsatzes HS, definiert durch das Verhältnis der Zähnezahlen von Hohlrad H134_HS und Sonnenrad S1_HS, betragsmäßig größer als die Standgetriebeübersetzung des vierten der vier gekoppelten Planetenradsätze des Hauptradsatzes HS, definiert durch das Verhältnis der Zähnezahlen von Hohlrad H134_HS und Sonnenrad S4_HS sowie durch das Verhältnis der Zähnezahlen der Stufen der Stufenplanetenräder P134_HS des Hauptradsatzes, HS, so ergibt sich einerseits, dass die "neue" Linie des vierten Eingangselementes (S4_HS) des Hauptradsatzes im Drehzahlplan benachbart zur Linie des ersten Eingangselementes (S1_HS) des Hauptradsatzes rechts von dieser liegt, also näher an der Linie des Abtriebselementes (H2_HS bzw. ST134_HS) des Hauptradsatzes als die genannte Linie des ersten Eingangselementes (S1_HS) des Hauptradsatzes. Andererseits ergibt sich daraus auch, dass die Linie des dritten Eingangselementes (ST2_HS) des Hauptradsatzes im Drehzahlplan rechts von der Linie des vierten Eingangselementes (S4_HS) des Hauptradsatzes liegt, also noch näher an der Linie des Abtriebselementes (H2_HS bzw. ST134_HS) des Hauptradsatzes als die genannte "neue" Linie des vierten Eingangselementes (S4_HS) des Hauptradsatzes. Bezogen auf die Eingangselemente des Hauptradsatzes liegen also nur noch die beiden Schaltelemente B, F sowie die beiden Schaltelemente D, E im Drehzahlplan jeweils auf gleicher Linie, wohingegen das Schaltelement C auf einer eigenen Linie liegt.

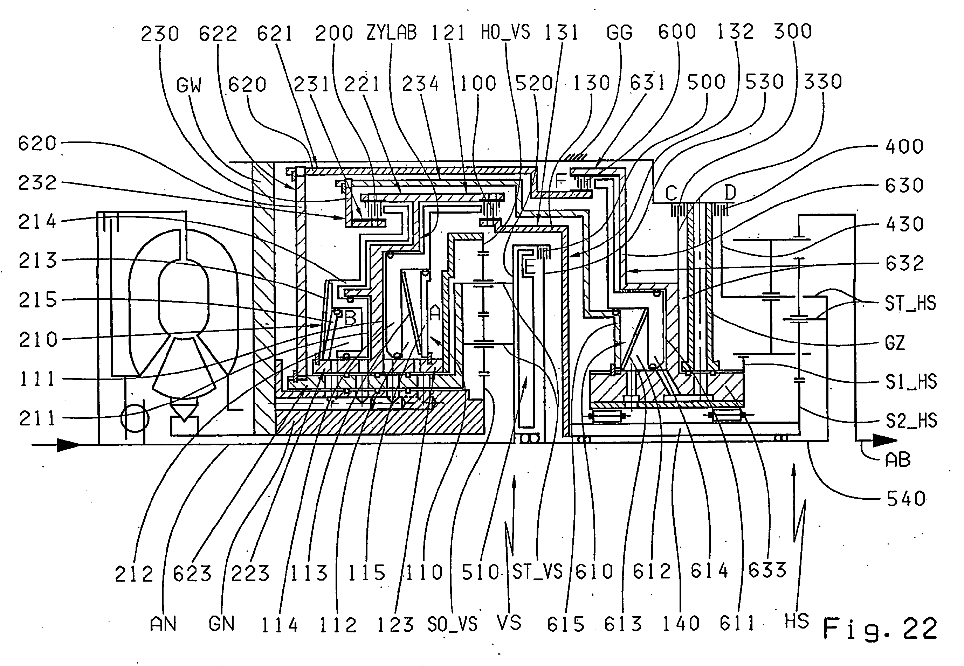

Anhand Fig. 22 wird nun ein einundzwanzigstes Ausführungsbeispiel für ein Getriebeschema gemäß der vorliegenden Erfindung erläutert. Im Vergleich zum gattungsgemäßen Stand der Technik gemäß Fig. 1A wurde die räumliche Lage der Schaltelemente A, B, F relativ zu den Radsätzen VS, HS und relativ zueinander und zu den anderen Schaltelementen C, D, E verändert, unter Beibehaltung der kinetischen Kopplungen der Radsätze und Schaltelemente und unter Beibehaltung der konstruktiven Ausbildung der koaxial nebeneinander (aber nicht unmittelbar nebeneinander) angeordneten Planetenradsätze VS und HS.

Gegenüber Fig. 1A unverändert ist das als Kupplung ausgebildete fünfte Schaltelement E axial zwischen Vorschaltradsatz VS und Hauptradsatz HS angeordnet, axial unmittelbar angrenzend an den Vorschaltradsatz VS. So ist das Eingangselement 520 der Kupplung E als Außenlamellenträger ausgebildet, geometrisch in Form eines in Richtung Hauptradsatz HS geöffneten zylinderförmigen Topfes, dessen scheibenförmiger Topfboden zum einen mit dem gekoppelten Steg ST_VS des Vorschaltradsatzes VS und zum anderen im Bereich seines kleinsten Durchmessers mit der Antriebswelle AN verbunden ist, und dessen zylindrischer Abschnitt am Innendurchmesser die Außenlamellen des Lamellenpaketes 500 der Kupplung E aufnimmt. Ein dem Hauptradsatz HS zugewandtes Stegblech des Vorschaltradsatzes VS und der Außenlamellenträger der Kupplung E können also einstückig ausgeführt sein. Eine nur schematisch dargestellte Servoeinrichtung 510 der Kupplung E ist innerhalb eines Zylinderraums angeordnet, der durch den genannten Außenlamellenträger 520 der Kupplung E gebildet wird, ist am Nabenbereich dieses Außenlamellenträgers 520 axial verschiebbar gelagert, rotiert stets mit Drehzahl der Antriebswelle AN und betätigt das ihr zugeordnete Lamellenpaket 500 beim Schließen der Kupplung E axial in Richtung des Hauptradsatzes HS. Das Ausgangselement 530 der Kupplung E ist entsprechend als Innenlamellenträger ausgebildet, der zentrisch mit einer. Stegwelle 540 verbunden, welche sich ausgehend vom Nabenbereich dieses Ausgangselementes 530 der Kupplung E axial in Richtung des Hauptradsatzes HS erstreckt und diesen Hauptradsatz HS zentrisch vollständig durchgreift und auf der dem Vorschaltradsatz VS gegenüberliegenden Seite des Hauptradsatzes HS mit dem gekoppelten Steg ST_HS des Hauptradsatzes HS verbunden ist. Dieser gekoppelte Steg ST_HS bildet das dritte Eingangselement des Hauptradsatzes HS. Die Nabe des Ausgangselementes 530 der Kupplung E oder die Stegwelle 540 ist an der Antriebswelle AN verdrehbar gelagert.

Gegenüber Fig. 1A ebenfalls unverändert ist die räumliche Lage der beiden beispielhaft als Lamellenbremse ausgebildeten Schaltelemente C und D relativ zu den beiden Radsätzen VS und HS. Das vierte Schaltelement D mit seinem Lamellenpaket 400 ist benachbart zum Hauptradsatz HS auf dessen dem Vorschaltradsatz VS zugewandten Seite angeordnet. Das als Innenlamellenträger ausgebildete Ausgangselement 430 der Bremse D ist mit dem gekoppelten Steg ST_HS des Hauptradsatzes HS verbunden, wobei dieser Steg ST_HS den Hauptradsatz HS axial vollständig durchdringt. In Richtung Vorschaltradsatz VS gesehen, schließt sich das Lamellenpaket 300 der Bremse C axial an das Lamellenpaket 400 der Bremse D an. Das Ausgangselement 330 der Bremse C ist als Innenlamellenträger ausgebildet Die Außenlamellenträger der beiden Bremsen C und D können in einfacher Weise in dem Getriebegehäuse GG integriert sein, ebenso die zur Vereinfachung nicht dargestellten Servoeinrichtungen zum Betätigen der Lamellenpakete 300 und 400, Selbstverständlich kann für die Bremsen C und D auch ein separater Außenlamellenträger vorgesehen sein, der dann mit dem Getriebegehäuse GG verdrehfest verbunden ist und auch die Servoeinrichtungen der Bremsen C und D axial verschiebbar aufnehmen kann.

Wie in Fig. 22 ersichtlich, ist das als Kupplung ausgebildete sechste Schaltelement F im Unterschied zu Fig. 1A nunmehr räumlich gesehen in einem Bereich axial zwischen Vorschaltradsatz VS und Hauptradsatz HS angeordnet, im dargestellten Beispiel axial zwischen Kupplung E und Hauptradsatz HS. Dabei ist das Ausgangselement 630 der Kupplung F als Außenlamellenträger ausgebildet, geometrisch in Form eines in Richtung Vorschaltradsatz VS geöffneten Topfes. Eine Nabe 633 dieses Außenlamellenträgers der Kupplung F grenzt unmittelbar an den Hauptradsatz HS an und ist mit dem ersten Sonnenrad S1_HS des Hauptradsatzes HS verdrehfest verbunden. Dieses Sonnenrad S1_HS bildet bekanntlich das erste Eingangselement des Hauptradsatzes, HS. Im dargestellten Ausführungsbeispiel ungefähr nabenmittig schließt sich ein gekröpfter scheibenförmiger Abschnitt 632 des Außenlamellenträgers 630 der Kupplung F an diese Nabe 633 an und erstreckt sich radial nach außen bis auf einen Durchmesser, der etwas größer ist als der Außendurchmesser des Lamellenpaketes 600 der Kupplung F. Am Außendurchmesser dieses scheibenförmigen Abschnitts 632 schließt sich ein zylindrischer Abschnitt 631 des Außenlamellenträgers 630 der Kupplung F an und erstreckt sich axial in Richtung des Vorschaltradsatzes VS und nimmt an seinem Innendurchmesser die (vorzugsweise als außenverzahnte Stahllamellen ausgebildeten) Außenlamellen des Lamellenpaketes 600 der Kupplung F auf. Der scheibenförmige Abschnitt 632 des Außenlamellenträgers 630 der Kupplung F ist im Bereich seiner Kröpfung zusätzlich mit dem als Innenfamellenträger ausgebildeten Ausgangselement 330 der Bremse C verbunden. Insofern ist die Bremse C über das Ausgangselement 630 der Kupplung F kinematisch an das erste Eingangselement (hier das erste Sonnenrad S1_HS) des Hauptradsatzes HS angebunden. Verdrehbar gelagert ist die Nabe 633 des Ausgangselementes (Außenlamellenträgers) 630 der Kupplung F auf einer zweiten Sonnenwelle 140, welche die kinematische Verbindung zwischen dem Ausgangselement 130 des zweiten Schaltelementes A und dem zweiten Eingangselement (hier dem zweiten Sonnenrad S2_HS) des Hauptradsatzes HS herstellt und dabei die genannte Nabe 633 und auch die ganze Kupplung F in axialer Richtung zentrisch vollständig durchgreift. Diese als Hohlwelle ausgeführte zweite Sonnenwelle 140 wiederum ist auf der Stegwelle 540 gelagert, welche die kinematische Verbindung zwischen dem Ausgangselement 530 der Kupplung E und dem dritten Eugangselement (hier dem gekoppelten Steg ST_HS) des Hauptradsatzes HS bildet und dabei die zweite Sonnenwelle 140 in axialer Richtung zentrisch vollständig durchgreift.

In dem in Fig. 22 dargestellten Ausführungsbeispiel sind die Lamellenpakete 500 und 600 der Kupplungen E und F in axialer Richtung gesehen nebeneinander angeordnet, wobei das Lamellenpaket 600 der Kupplung F einen größeren Durchmesser aufweist als das Lamellenpaket 500 der Kupplung E. Je nach konstruktiver Ausführung dieser beiden Kupplungen E, F hinsichtlich axialer Baulänge kann das Lamellenpaket 600 der Kupplung F auch räumlich gesehen zumindest teilweise in einem Bereich radial über dem Lamellenpaket 500 der Kupplung E angeordnet sein.

Die Servoeinrichtung 610 der Kupplung F ist zumindest weitgehend innerhalb eines Zylinderraums angeordnet, der durch das Ausgangselement 630 (bzw. den Außenlamellenträger) der Kupplung F gebildet wird. Ein Druckraum 611 dieser Servoeinrichtung 610 wird gebildet durch eine Mantelfläche dieses Ausgangselementes (Außenlamellenträgers) 630 und einen axial zu diesem Ausgangselement (Außenlamellenträger) 630 axial verschiebbaren Kolben 614. Ein beispielhaft als Tellerfeder ausgeführtes Rückstellelement 613 ist beispielhaft an der Nabe 633 des Ausgangselementes (Außenlamellenträgers) 630 axial fixiert und spannt den Kolben 614 axial gegenüber dem Ausgangselement (Außenlamellenträger) 630 der Kupplung F vor. Weiterhin weist die Servoeinrichtung 610 zum Ausgleich des dynamischen Drucks des stets mit Drehzahl des ersten Eingangselementes (also des ersten Sonnenrades S1_HS) des Hauptradsatzes HS rotierenden Druckraums 611 einen drucklos mit Schmiermittel befüllbaren Druckausgleichsraum 612 auf, der auf der dem Vorschaltradsatz VS zugewandten Seite des Druckraums 611 angeordnet ist und durch eine Mantelfläche des Kolbes 614 und eine Stauscheibe 615 gebildet wird. Diese Stauscheibe 615 der Servoeinrichtung 610 ist an der Nabe 633 des Ausgangselementes (Außenlamellenträgers) 630 der Kupplung F axial fixiert und zudem drehfest mit dieser Nabe 633 verbunden. Räumlich gesehen ist also der Druckraum 611 näher am Hauptradsatz HS angeordnet als der Druckausgleichsraum 612 bzw. als der Druckausgleichsraum 612 näher am Vorschaltradsatz VS angeordnet als der Druckraum 611. Wird der Druckraum 611 mit Druckmittel beaufschlagt, so betätigt der Kolben 614 das Lamellenpaket 600 der Kupplung F gegen die Rückstellkraft des Rückstellelementes 613 axial in Richtung Vorschaltradsatz VS. In dem dargestellten Ausführungsbeispiel wird das Druckmittel dem Druckraum 611 sowie das Schmiermittel dem Druckausgleichsraum 612 über entsprechende Bohrungen bzw. Kanäle vom Getriebegehäuse GG her zugeleitet Hierzu ist eine mit dem Getriebegehäuse GG verdrehfest verbundene Gehäusezwischenwand GZ oder ein getriebegehäusefestes Element vorgesehen, die bzw. das räumlich gesehen in einem Bereich axial zwischen den Bremsen C und D angeordnet ist und entsprechende Druck- und Schmiermittelkanäle aufweist. Druck- und Schmiermittel werden zunächst über diese Druck- und Schmiermittelkanäle der Gehäusezwischenwand GZ bzw. des getriebegehäusefesten Elementes der rotierenden Nabe 633 des Ausgangselementes (Außenlamellenträgers) 630 des sechsten Schaltelementes F zugeleitet, und von dort über entsprechende Bohrungen bzw. Kanäle der Nabe 633 dem Druck- bzw. Druckausgleichsraum 611, 612.

Das Eingangselement 620 der Kupplung F ist als Innenlamellenträger ausgebildet, geometrisch in Form eines in Richtung Hauptradsatz, HS geöffenten Topfes, umfassend eine Nabe 623, einen scheibenförmigen Abschnitt 622 und einen zylinderförmigen Abschnitt 621. Die Nabe 623 ist räumlich gesehen auf der dem Hauptradsatz HS abgewandten Seite des Vorschaltradsatzes HS angeordnet und hier auf einer getriebegehäusefesten Nabe GN verdrehbar gelagert. Diese Gehäusenabe GN erstreckt sich ausgehend von einer getriebegehäusefesten Gehäusewand GW, welche die vorschaltradsatznahe Stirnseite des Getriebegehäuses bildet, axial bis zum Vorschaltradsatz VS und ist mit dessen Sonnenrad SO_VS verdrehfest verbunden. Die Nabe 623 ist auf ihrer vorschaltradsatznahen Seite mit einem hauptradsatzfernen Stegblech des gekoppelten Stegs ST_VS des Vorschaltradsatzes VS verdrehfest verbunden. Dieser gekoppelte Steg ST_VS durchgreift den Vorschaltradsatz VS in axialer Richtung und verbindet das Eingangselement 620 der Kupplung F auf der hauptradsatznahen Seite des Vorschaltradsatzes VS mit der Antriebswelle AN. Der scheibenförmige Abschnitt 622 des Eingangselementes 620 der Kupplung F ist mit der Nabe 623 an deren vorschaltradsatzfernen Seite verbunden, im dargestellten Ausführungsbeispiel formschlüssig über ein geeignetes Mitnahmeprofil. Ausgehend von der Nabe 623 erstreckt sich dieser scheibenförmige Abschnitt 622 radial nach außen bis auf einen Durchmesser knapp unterhalb dem Innendurchmesser des Getriebegehäuses GG. An seinem Außendurchmesser ist der scheibenförmige Abschnitt 622 mit dem zylindrischen Abschnitt 621 des Eingangselementes 620 der Kupplung F verbunden, im dargestellten Ausführungsbeispiel formschlüssig über ein geeignetes Mitnahmeprofil. Ausgehend vom scheibenförmigen Abschnitt 622 erstreckt sich dieser zylindrische Abschnitt 621 axial in Richtung Hauptradsatz HS bis zu dem Lamellenpaket 600 der Kupplung F. Entsprechend der Funktion als Innenlamellenträger ist am hauptradsatznahen Ende dieses zylindrischen Abschnitts 621 am Außendurchmesser ein Mitnahmeprofil vorgesehen zur Aufnahme der vorzugsweise als innenverzahnte Belaglamellen ausgebildeten Innenlamellen des Lamellenpaketes 600. In seinem Verlauf übergreift das Eingangselement 620 der Kupplung F die Kupplungen B und A, den Vorschaltradsatz VS und die Kupplung E in axialer Richtung radial vollständig.

Selbstverständlich können anstelle der wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahllamelle wechselseitig zu einem Lamellenpaket zusammengefügt werden müssen. Selbstverständlich können anstelle der vorgeschlagenen Stahllamellen auch Lamellen aus Carbon oder Kohlefasern oder anderen geeigneten Verbundwerkstoffen verwendet werden.

Im Unterschied zu Fig. 1A ist gemäß Fig. 22 für die beiden als Kupplung ausgebildete Schaltelemente A, B ein gemeinsamer Lamellenträger ZYLAB vorgesehen, der das mit der Antriebswelle AN verbundene Eingangselement beider Kupplungen A, B bildet und dabei räumlich gesehen überwiegend auf der dem Hauptradsatz HS abgewandten Seite des Vorschaltradsatzes VS angeordnet ist. Im dargestellten Ausführungsbeispiel ist dieser Lamellenträger ZYLAB als Außenlamellenträger für beide Kupplungen A, B ausgeführt, zur Aufnahme von (vorzugsweise als außenverzahnte Stahllamellen ausgebildete) Außenlamellen der Lamellenpakete 100, 200 der beiden Kupplungen A, B. Das Lamellenpaket 200 des zweiten Schaltelementes B ist auf der dem Hauptradsatz HS abgewandten Seite des Vorschaltradsatzes VS angeordnet. Das Lamellenpaket 100 des ersten Schaltelementes A ist räumlich gesehen in einem Bereich über dem Vorschaltradsatz VS angeordnet, könnte jedoch auch in einem Bereich über der an den Vorschaltradsatz VS axial angrenzenden Kupplung E oder wie das Lamellenpaket 200 auf der dem Hauptradsatz HS abgewandten Seite des Vorschaltradsatzes VS angeordnet sein. In jedem Fall ist das Lamellenpaket 100 der Kupplung A näher am Hauptradsatz HS angeordnet als das Lamellenpaket 200 der Kupplung B. Das Konzept des für die Kupplungen A, B gemeinsamen Außenlamellenträgers begünstigt den Einsatz von Gleichteilen; insofern weisen die Lamellenpakete 100, 200 vorzugsweise einen gleichen Durchmesser auf.

Geometrisch ist der für beide Kupplungen A, B gemeinsame Lamellenträger ZYLAB als ein beidseitig geöffneter zylinderförmiger Topf mit zylindermittig angeordnetem Topfboden und einer sich beidseits des Topfbodens axial erstreckenden Nabe. Der vorschaltradsatznahe Abschnitt der Nabe des Lamellenträgers ZYLAB ist mit 123 bezeichnet, der durch den Topfboden von diesem ersten Abschnitt 123 räumlich getrennte vorschaltradsatzferne zweite Abschnitt dieser Nabe mit 223. Wie dieser Nomenklatur entnehmbar, ist der erste Abschnitt 123 der Nabe des Lamellenträgers ZYLAB dem ersten Schaltelement A zugeordnet und der zweite Abschnitt 223 dieser Nabe dem zweiten Schaltelement B. Die Nabe des Lamellenträgers ZYLAB ist an ihrer vorschaltradsatznahen Seite über ein scheibenförmiges Element mit dem Hohlrad HO_VS des Vorschaltradsatzes VS verdrehfest verbunden, beispielsweise über ein Mitnahmeprofil. Dieses scheibenförmige Element übernimmt die Funktion eines Hohlradträgers für den Vorschattradsatz VS und erstreckt sich radial parallel angrenzend an das hauptradsatzferne Stegblech des Vorschaltradsatzes VS. Verdrehbar gelagert ist die Nabe des Lamellenträgers ZYLAB mit ihren Abschnitten 123 und 223 auf der Nabe 623 des Eingangselementes 620 der Kupplung F, räumlich gesehen axial zwischen dem hauptradsatzfernen Stegblech des Vorschaltradsatzes VS und dem nahe der Gehäusewand GW angeordneten scheibenförmigen Abschnitt 622 des Eingangselementes 620 der Kupplung F.

Ausgehend in etwa von der Mitte der Nabe des Lamellenträgers ZYLAB erstreckt sich der zumindest abschnittsweise scheibenförmige Topfboden des Lamellenträgers ZYLAB radial nach außen bis zum Außendurchmesser der Lamellenpakete 100 und 200 der beiden Kupplungen A, B. Am Außendurchmesser des Topfbodens des Lamellenträgers ZYLAB erstreckt sich ausgehend von diesem Topfboden ein der Kupplung A zugeordneter erster zylindrischer Abschnitt 121 des Lamellenträgers ZYLAB axiale in Richtung Hauptradsatz HS. Am Innendurchmesser dieses zylindrischen Abschnitts 121 ist ein Mitnahmeprofil vorgesehen zur Aufnahme der vorzugsweise als außenverzahnte Stahllamellen ausgebildeten Außenlamellen des Lamellenpaketes 100 der Kupplung A. Im dargestellten Ausführungsbeispiel übergreift der erste zylindrische Abschnitt 121 des Lamellenträger ZYLAB den Vorschaltradsatz VS in axialer Richtung. Am Außendurchmesser des Topfbodens des Lamellenträgers ZYLAB erstreckt sich ausgehend von diesem Topfboden ein der Kupplung B zugeordneter zweiter zylindrischer Abschnitt 221 des Lamellenträgers ZYLAB axial in zum Hauptradsatz HS entgegengesetzter Richtung. Am Innendurchmesser dieses zylindrischen Abschnitts 221 ist ein Mitnahmeprofil vorgesehen zur Aufnahme der vorzugsweise als außenverzahnte Stahllamellen ausgebildeten Außenlamellen des Lamellenpaketes 200 der Kupplung B.

Eine Servoeinrichtung 110 des ersten Schaltelementes A ist zumindest teilweise radial oberhalb des vorschaltradsatznahen Nabenabschnitts 123 der Nabe des für die beiden Kupplungen A und B gemeinsamen Eingangselementes ZYLAB angeordnet, innerhalb eines Zylinderraums, der durch den Lamellenträger ZYLAB und dabei insbesondere durch dessen zylindrischen Abschnitts 121 gebildet wird. Dabei rotiert diese Servoeinrichtung 110 ständig mit Drehzahl des Ausgangselementes des Vorschaltradsatzes VS, also mit Drehzahl des Hohlrades HO_VS, und umfasst einen mit Druckmittel befüllbaren Druckraum 111, einen drucklos mit Schmiermittel befüllbaren Druckausgleichsraum 112 zum Ausgleich eines dynamischen Drucks des rotierenden Druckraums 111, einen am Lamellenträger ZYLAB axial verschiebbar gelagerten Kolben 114 zur Betätigung des Lamellenpaketes 100 der Kupplung A, eine Stauscheibe 115, sowie ein Rückstellelement 113 zur Rückstellung des Kolbens 114. Der Druckraum 111 wird durch eine Mantelfläche des Lamellenträgers ZYLAB und dem auf dem Nabenabschnitt 123 axial verschiebbar gelagerten Kolben 114 gebildet, der Druckausgleichsraum 111 durch den Kolben 114 und die Stauscheibe 115. Räumlich gesehen ist der Druckausgleichsraum 112 näher am Vorschaltradsatz VS angeordnet als oder Druckraum 111. Wird der Druckraum 111 zum Schließen der Kupplung A mit Druckmittel befüllt, so verschiebt sich der Kolben 114 gegen die Kraft des Rückstellelementes 113 axial in Richtung Hauptradsatz HS und bringt so das Lamellenpaket 100 der Kupplung A in Reibeingriff.

Eine Servoeinrichtung 210 des zweiten Schaltelementes B ist zumindest weitgehend radial oberhalb des vorschaltradsatzfernen Nabenabschnitts 223 des für die Kupplungen A und B gemeinsamen Eingangselementes ZYLAB angeordnet, zumindest teilweise innerhalb einer Zylinderraums, der durch den Lamellenträger ZYLAB und dabei insbesondere durch dessen zylindrischen Abschnitts 221 gebildet wird. Dabei rotiert diese Servoeinrichtung 210 ständig mit Drehzahl des Ausgangselementes des Vorschaltradsatzes VS, also mit Drehzahl des Hohlrades HO_VS, und umfasst einen mit Druckmittel befüllbaren Druckraum 211, einen drucklos mit Schmiermittel befüllbaren Druckausgleichsraum 212 zum Ausgleich eines dynamischen Drucks des rotierenden Druckraums 211, einen am Lamellenträger ZYLAB axial verschiebbar gelagerten Kolben 214 zur Betätigung des Lamellenpaketes 200 der Kupplung B, eine Stauscheibe 215, sowie ein Rückstellelement 213 zur Rückstellung des Kolbens 114. Der Druckraum 211 wird durch eine Mantelfläche des Lamellenträgers ZYLAB und dem auf dem Nabenabschnitt 223 axial verschiebbar gelagerten Kolben 214 gebildet, der Druckausgleichsraum 211 durch den Kolben 214 und die Stauscheibe 215. Räumlich gesehen ist der Druckraum 211 näher am Vorschaltradsatz VS angeordnet als der Druckausgleichsraum 212. Die Druckräume 111, 211 der Servoeinrichtungen 110, 210 der beiden Kupplungen A, B sind also nur durch eine Mantelfläche des für beide Kupplungen gemeinsamen Lamellenträgers ZYLAB, insbesondere nur durch den scheibenförmigen Topfboden des Lamellenträgers ZYLAB voneinander getrennt. Wird der Druckraum 211 der Servoeinrichtung 210 zum Schließen der Kupplung B mit Druckmittel befüllt, so verschiebt sich der Kolben 214 gegen die Kraft des Rückstellelementes 213 axial in zum Vorschaltradsatz VS entgegengesetzter Richtung bzw. in zum Hauptradsatz HS entgegengesetzter Richtung und bringt so das Lamellenpaket 200 der Kupplung B in Reibeingriff. Die Betätigungsrichtungen der Kupplungen A und B sind also entgegengesetzt zueinander.

Wie bereits erwähnt, ist die Nabe des für beide Kupplungen A, B gemeinsamen Lamellenträgers ZYLAB mit ihren beiden Nabenabschnitten 123, 223 auf der Nabe 623 des Eingangselementes 620 der Kupplung F verdrehbar gelagert. Wie ebenfalls bereits erwähnt, ist diese Nabe 623 verdrehbar auf der getriebegehäusefesten Gehäusenabe GN verdrehbar gelagert. Die Druck- und Schmiermittelzufuhr zu den Druckräumen 111, 211 und Druckausgleichräumen 112, 212 der Servoeinrichtungen 110, 210 der beiden Kupplungen A, B erfolgt von dieser Gehäusenabe GN über die rotierende Nabe 623 des Eingangselementes 620 der Kupplung F. Hierzu sind innerhalb der Gehäusenabe GN und der Nabe 623 entsprechende Bohrungen bzw. Kanäle vorgesehen, sowie geeignete Dichtelemente für eine rotierende Abdichtung radial zwischen der Nabe 623 und den beiden Nabenabschnitten 123, 223 und axial zwischen den jeweiligen radialen Bohrungen bzw. Kanälen der Druck- und Schmiermittelzuführungen.

Das Ausgangselement 130 der Kupplung A ist als Innenlamellenträger ausgebildet, geometrisch in Form eines in zum Hauptradsatz HS entgegengesetzter Richtung geöffneten Topfes. Ein zylindrischen Abschnitt 131 dieses Innenlamellenträgers 130 weist an seinem Außendurchmesser ein Mitnahmeprofil zur Aufnahme der vorzugsweise als innenverzahnte Belaglamellen ausgebildeten Innenlamellen des Lamellenpaketes 100 der Kupplung A auf und erstreckt sich ausgehend von diesem Lamellenpaket 100 axial in Richtung Hauptradsatz HS bis knapp über die Kupplung E hinweg. Auf der hauptradsatznahen Seite dieses zylindrischen Abschnitts 131 schließt sich ein scheibenförmiger Abschnitt 132 des Ausgangselementes 130 der Kupplung A an den zylindrischen Abschnitt 131 an und erstreckt sich radial nach innen bis knapp oberhalb der Stegwelle 540 und ist in seinem Nabenbereich mit der zweiten Sonnenwelle 140 verdrehfest verbunden. Wie bereits erwähnt, stellt diese Sonnenwelle 140 die kinematische Verbindung zwischen Kupplung A und dem zweiten Eingangselement (hier Sonnenrad S2_HS) des Hauptradsatzes HS dar. Entsprechend der im Ausführungsbeispiel dargestellten räumlichen Lage des Lamellenpaketes 100 der Kupplung A radial über dem Vorschaltradsatz VS und in Richtung Hauptradsatz HS gesehen vor der Kupplung E, übergreift das Ausgangselement 130 der Kupplung A die Kupplung E also in axialer Richtung gesehen radial vollständig.

Das Ausgangselement 230 der Kupplung B ist ebenfalls als Innenlamellenträger ausgebildet. Ein zylindrischer Abschnitt 231 dieses Innenlamellenträgers 230 weist an seinem Außendurchmesser ein Mitnahmprofil zur Aufnahme der vorzugsweise als innenverzahnte Belaglamellen ausgebildeten Innenlamellen des Lamellenpaketes 200 der Kupplung B auf und erstreckt sich ausgehend von diesem Lamellenpaket 200 axial in zum Vorschaltradsatz VS entgegengesetzer Richtung bis knapp über die axiale Erstreckung des zylindrischen Abschnitts 221 des (Außen-)Lamellenträgers ZYLAB hinweg. An seiner radsatzfernen Seite schließt sich an diesen zylindrischen Abschnitt 231 ein scheibenförmiger Abschnitt 232 des Ausgangselementes 230 der Kupplung B an und erstreckt sich radial nach außen bis auf einen Durchmesser zwischen dem Außendurchmesser des zylindrischen Abschnitts 221 des Lamellenträgers ZYLAB und dem Innendurchmesser des zylindrischen Abschnitts 621 des Eingangselementes 620 der Kupplung F, der in diesem axialen Bereich vorliegt. An seinem Außendurchmesser ist dieser scheibenförmige Abschnitt 232 des Ausgangselement 230 der Kupplung B mit einem zylindrischen Abschnitt der Stauscheibe 615 der Servoeinrichtung 610 der Kupplung F verdrehfest verbunden. Diese Stauscheibe 615 der Servoeinrichtung 610 der Kupplung F übernimmt neben ihrer Funktion der Druckäusgleichsraumbildung für diese Servoeinrichtung 610 nämlich zusätzlich eine weitere Funktion: die Drehmomentübertragung des Ausgangsdrehmomentes der Kupplung B zu dem ersten Eingangselement (Sonnenrad S1_HS) des Hauptradsatzes HS. Entsprechend ist die Stauscheibe 615 bauteilseitig ebenso wie ein Mitnahmeprofil zwischen Stauscheibe 615 und Nabe 633 auch derart dimensioniert, dass sie bzw. es zumindest das maximal mögliche Ausgangsdrehmoment der Kupplung B übertragen kann. In dem in Fig. 22 dargestellten Beispiel ist die Stauscheibe 615 als ein in Richtung des Vorschaltradsatzes VS hin geöffneter Topf mit großer axialer Erstreckung ausgebildet, dessen Topfboden im Bereich seines Innendurchmessers mit der Nabe 633 des Ausgangselementes 630 der Kupplung F verdrehfest verbunden ist und in einem Abschnitt mit einem Durchmesser radial oberhalb dieser Nabe 633 gegenüber dem Kolben 614 der Servoeinrichtung 610 der Kupplung F zur Bildung des Druckausgleichsraums 612 dieser Servoeinrichtung 610 axial verschiebbar schmiermitteldicht abgedichtet ist. Der sich an den Topfboden anschließende zylinderförmige Abschnitt der Stauscheibe ist der Außenkontur der Kupplung E und dem gemeinsamen Außenlamellenträger ZYLAB der Kupplungen A und B angepaßt und umgreift das Ausgangselement 130 der Kupplung A, die Kupplung E, den Vorschaltradsatz VS, die Kupplung A und das Lamellenpaket 200 der Kupplung B in axialer Richtung gesehen radial vollständig. Auf der Seite des Lamellenpaketes 200 der Kupplung B, die dem Vorschaltradsatz VS gegenüberliegt, ist die Stauscheibe mit dem als Innenlamellenträger ausgebildeten Ausgangselement 230 der Kupplung B verdrehfest verbunden. In dem dargestellten Ausführungsbeispiel ist hierzu konstruktiv am Außendurchmesser des scheibenförmigen Abschnitts 232 dieses Ausgangselementes 230 ein Mitnahmeprofil vorgesehen, welches in ein korrespondierendes Mitnahmeprofil an dem hauptradsatzfernen Ende der Stauscheibe 615 eingreift. In einer anderen konstruktiven Ausgestaltung der Verbindung zwischen dem Ausgangselement der Kupplung B und dem Ausgangselement der Kupplung F kann auch vorgesehen sein, dass das Ausgangselement der Kupplung B als ein Zylinder mit großer axialer Erstreckung ausgeführt ist, der kupplungsausgangsseitig mit dem Lamellenpaket der Kupplung B verbunden ist, die Kupplung A und den Vorschaltradsatz VS und die Kupplung E in axialer Richtung radial vollständig übergreift und entweder direkt oder aber über die Stauscheibe der Servoeinrichtung der Kupplung F indirekt mit der Nabe des Ausgangselementes der Kupplung F verbunden ist.

Auch wenn das in Fig. 22 dargestellte Getriebeschema eine koaxial zur Antriebswelle AN verlaufende Abtriebswelle AB aufweist, wird der Fachmann bei Bedarf hieraus ohne besonderen Aufwand eine Anordnung ableiten, bei der An- und Abtriebswelle nicht koaxial angeordnet sind. So kann die Abtriebswelle in einfacher Weise achsparallel oder winklig zum Ausgangselement des Hauptradsatzes HS (im Beispiel also achsparallel oder winklig zum Hohlrad HO_HS des Hauptradsatzes HS) abgegriffen werden, unter Beibehaltung der räumlichen Lage aller sonstiger Getriebekomponeten. Alternativ kann das als Bremse ausgebildete vierte Schaltelement D dann aber auch auf der dem Vorschaltradsatz VS abgewandten Seite des Hauptradsatzes HS im Bereich einer Getriebestimwand angeordnet sein. Ebenso wird der Fachmann bei Bedarf die in Fig. 22 als Vollwelle ausgeführte Stegwelle 540 als Hohlwelle ausführen, um in dieser die Antriebswelle AN zentrisch hindurchzuführen, wenn der mit der Antriebswelle AN wirkverbundene Antriebsmotor des getriebes an der hauptradsatznahen Stirnseite des Getriebes angeordnet sein soll.

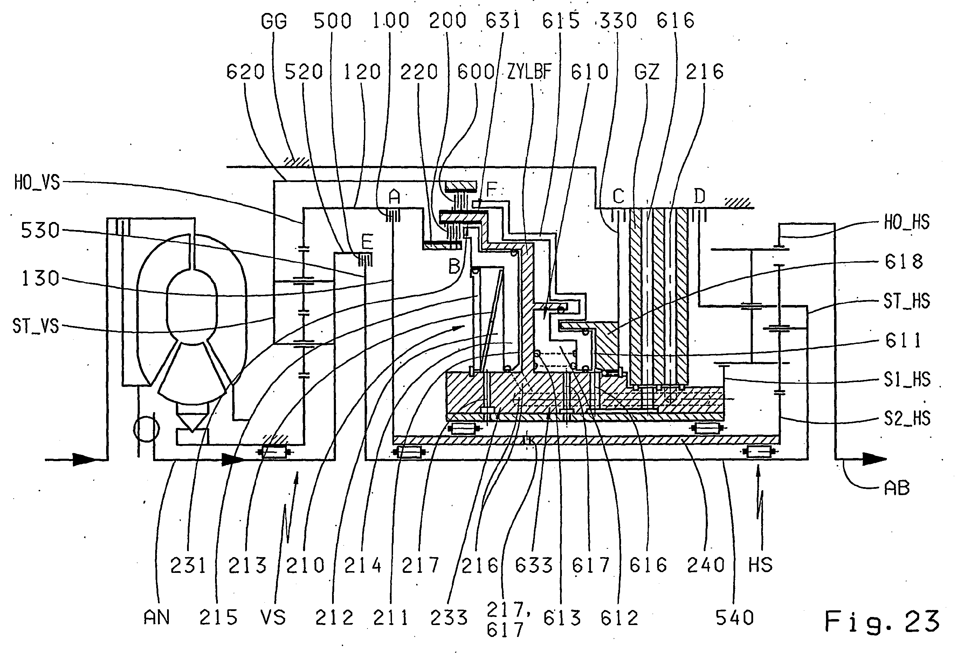

Anhand Fig. 23 wird nun ein zweiundzwanzigstes Ausführungsbeispiel für ein Getriebeschema gemäß der vorliegenden Erfindung erläutert. Dabei greift dieses zweiundzwanzigste Ausführungsbeispiel die Idee des anhand Fig. 22 im Detail erläuterten vorigen einundzwanzigsten Ausführungsbeispiel auf, das sechste Schaltelement des Getriebes, also die Kupplung F räumlich gesehen zwischen Vorschaltradsatz VS und Hauptradsatz HS und dabei nahe am Hauptradsatz HS anzuordnen, und kombiniert diese räumliche Anordnung der Kupplung F mit der bewährten und aus dem Stand der Technik gemäß Fig. 1A bekannten räumlichen Anordnung des zweiten, dritten, vierten und fünften Schaltelemente B, C, D und E und ansatzweise auch des ersten Schaltelementes A. Der Hauptradsatz HS ist wie in Fig. 1A und Fig. 22 beispielhaft als Ravigneaux-Planetenradsatz mit zwei Sonnenrädern S1_HS, S2_HS und nur einem Hohlrad HO_HS ausgeführt. Antriebswelle AN und Abtriebswelle AB verlaufen wie in Fig. 1A und Fig. 22 beispielhaft koaxial zueinander.

Wie in Fig. 23 ersichtlich, bilden die beiden Kupplungen B und F nunmehr eine axial an den Hauptradsatz HS auf dessen dem Vorschaltradsatz VS zugewandten Seite angeordnete, vormontierbare Baugruppe, umfassend einen für beide Kupplungen B, F gemeinsamen Lamellenträger ZYLBF sowie für die beiden Kupplungen B, F jeweils ein Lamellenpaket 200, 600 und je eine Servoeinrichtung 210, 610 zum Betätigen des jeweiligen Lamellenpaketes 200 bzw. 600. Dabei bildet dieser Lamellenträger ZYLBF das Ausgangselement beider Kupplungen B, F und ist entsprechend mit dem durch das erste Sonnenrad S1_HS gebildeten ersten Eingangselement des Hauptradsatzes HS verdrehfest verbunden. Dabei ist der Lamellenträger ZYLBF als Innenlamellenträger für die Kupplung F und als Außenlamellenträger für die Kupplung B ausgebildet. Entsprechend ist das Lamellenpaket 600 der Kupplung F räumlich gesehen in einem Bereich radial über dem Lamellenpaket 200 der Kupplung B angeordnet. Auf Details zur konstruktiven Ausgestaltung der Baugruppe mit den beiden Kupplungen B, F wird später noch genauer eingegangen.

Wie in Fig. 23 weiterhin ersichtlich, grenzt die die Kupplung E wie in Fig. 1A axial unmittelbar an den Vorschaltradsatz VS auf dessen dem Hauptradsatz HS zugewandten Seite an, wobei das hier beispielhaft als Außenlamellenträger ausgebildete Eingangselement 520 der Kupplung E mit einem hauptradsatzseitigen Stegblech des gekoppelten Stegs ST_VS des Vorschaltradsatzes VS und über dieses Stegblech mit der Antriebswelle AN verdrehfest verbunden ist. Zur Vereinfachung ist eine Servoeinrichtung zum Betätigen des Lamellenpaketes 500 der Kupplung E in Fig. 23 nicht dargestellt, kann aber zweckmäßigerweise innerhalb eines durch das genannte Eingangselement 520 gebildeten Zylinderraums angeordnet sein und stets mit Drehzahl der Antriebswelle AN rotieren. Das hier als weitgehend scheibenförmiger Innenlamellenträger ausgebildete Ausgangselement 530 der Kupplung E ist an seinem Innendurchmesser mit einer Stegwelle 540 verdrehfest verbunden, wobei diese Stegwelle 540 die verdrehfeste Verbindung dieses Ausgangselementes 530 mit dem durch den gekoppelten Steg ST_HS gebildeten dritten Eingangselement des Hauptradsatzes HS herstellt und in ihrem axialen Verlauf zumindest die Baugruppe der Kupplungen B und F sowie den Hauptradsatz HS zentrisch durchgreift.

Das Lamellenpaket 100 der Kupplung A ist in einem Bereich radial oberhalb der Kupplung E angeordnet. In dem in Fig. 23 dargestellten Beispiel ist das Lamellenpaket 100 der Kupplung A dabei räumlich gesehen in einem Bereich axial neben dem Lamellenpaket 500 der Kupplung E auf der dem Hauptradsatz HS zugewandten Seite dieses Lamellenpaketes 500 angeordnet, kann in einer geringfügigen Modifikation aber auch radial über dem Lamellenpaket 500 oder noch näher am Vorschaltradsatz VS angeordnet sein. Das hier beispielhaft als Äußenlamellenträger ausgebildete Eingangselement 120 der Kupplung A ist mit dem Hohlrad HO_VS des Vorschaltradsatzes VS verdrehfest verbunden und übergreift hierbei die Kupplung E in axialer Richtung vollständig. Das Ausgangselement 130 der Kupplung A ist entsprechend als ein Innenlamellenträger ausgebildet, der sich hier axial angrenzend an das Ausgangselement 530 bzw. den Innnenlamellenträger der Kupplung E auf dessen dem Hauptradsatz HS zugewandten Seite radial nach innen erstreckt und an seinem Innendurchmesser mit einer Sonnenwelle 240 verdrehfest verbunden ist. Diese Sonnenwelle 240 wiederum stellt die verdrehfeste Verbindung dieses Ausgangselementes 130 mit dem durch das vorschaltradsatzferne zweite Sonnenrad S2_HS gebildeten zweiten Eingangselement des Hauptradsatzes HS her, umschließt in ihrem axialen Verlauf die Stegwelle 540 und durchgreift dabei die Baugruppe der Kupplungen B und F sowie das vorschaltradsatznahe erste Sonnenrad S1_HS des Hauptradsatzes HS zentrisch. Dabei ist die Sonnenwelle 240 auf der Stegwelle 540 verdrehbar gelagert. Zur Vereinfachung ist eine Servoeinrichtung der Kupplung A zur Betätigung des Lamellenpaketes 100 in Fig. 23 nicht näher dargestellt, kann aber auf beiden Seiten des Lamellenpaketes angeordnet sein und je nach Lagerung entweder mit Drehzahl der Antriebswelle AN oder mit Drehzahl des zweiten Eingangselementes (hier des zweiten Sonnenrades S2_HS) des Hauptradsatzes HS rotieren. Wenn die Servoeinrichtung der Kupplung A mit Drehzahl des zweiten Eingangselementes des Hauptradsatzes HS rotiert, so kann es zweckmäßig sein, das Eingangselement 120 der Kupplung A abweichend von der Darstellung in Fig. 23 als Innenlamellenträger und das Ausgangselement 130 der Kupplung A entsprechend als Außenlamellenträger auszuführen.

Wie in Fig. 23 weiterhin ersichtlich, sind die beiden radial übereinander angeordneten Lamellenpakete 200, 600 der Kupplungen B, F unmittelbar benachbart zu und axial neben dem Lamellenpaket 100 der Kupplung A auf dessen dem Hauptradsatz HS zugewandten Seite angeordnet. Logischerweise ist zumindest ein Abschnitt eines Kolbens der Servoeinrichtung der Kupplung A noch axial zwischen dem Lamellenpaket 100 der Kupplung A und dem Lamellenpaket 200 der Kupplung B angeordnet, wenn die Servoeinrichtung der Kupplung A auf der dem Hauptradsatz HS zugewandten Seite des Lamellenpaketes 100 angeordnet ist. Entsprechend der vergleichbaren Drehmomentkapazität der beiden Kupplungen A und B ist das Lamellenpaket 200 der Kupplung B in dem dargestellten Beispiel baulängensparend auf einem Durchmesser angeordnet, der nur wenig kleiner ist als der Durchmesser des Lamellenpaketes 100 der Kupplung A. Selbstverständlich wird der Fachmann die geometrische Dimensionierung der drei benachbarten Lamellenpakete 100, 200 und 600 der Kupplungen A, B und F nicht nur anhand des von der jeweiligen Kupplung zu übertragenden Drehmomentes festlegen, sondern auch den in diesem Bereich zulässigen Außendurchmesser des Getriebegehäuses berücksichtigen. Das Eingangselement 220 der Kupplung B ist hier als weitgehend zylinderringförmiger Innenlamellenträger zur Aufnahme von innenverzahnten Lamellen des Lamellenpaketes 200 der Kupplung B ausgebildet. Die kinematische Verbindung des Eingangselementes 220 bzw. der Kupplung B zum Hohlrad HO_VS des Vorschaltradsatzes VS erfolgt über das Eingangselement 120 der Kupplung A. Hierzu ist das Eingangselement 220 im Bereich des hauptradsatznahen Endes des Lamellenpaketes 100 der Kupplung A mit dem Eingangselement 120 verdrehfest verbunden. Beispielsweise können Eingangselement 220 und Eingangselement 120 auch einstückig ausgeführt sein. Konstruktiv kann auch vorgesehen sein, dass das Eingangselement 220 der Kupplung B entgegen der Darstellung in Fig. 23 an der Sonnenwelle 240 gelagert ist und dabei auch die Servoeinrichtung der Kupplung A aufnimmt.

Das Eingangselement 620 der Kupplung F ist hier als Außenlamellenträger zur Aufnahme von außenverzahnten Lamellen des Lamellenpaketes 600 der Kupplung F ausgeführt. Geometrisch ist dieser als Außenlamellenträger 620 als ein zylinderförmiger Topf ausgebildet, der in Richtung Hauptradsatz HS geöffnet ist und den Vorschaltradsatz VS und die neben dem Vorschaltradsatz VS angeordneten Kupplungen E und A in axialer Richtung übergreift bzw. radial umschließt. Ein Topfboden des Außenlamellenträgers 620 ist auf der dem Lamellenpaket 600 bzw. dem Hauptradsatz HS gegenüberliegenden Seite des Vorschaltradsatzes VS angeordnet und mit einem hauptradsatzfernen Stegblech des gekoppelten Stegs ST_VS des Vorschaltradsatzes VS verdrehfest verbunden. Im Prinzip kann das hauptradsatzferne Stegblech des Stegs ST_VS auch gleichzeitig der Topfboden des Außenlamellenträgers 620 sein. Am Außendurchmesser des genannten Topfbodens schließt sich ein zylinderringförmiger Abschnitt des Außenlamellenträgers 620 der Kupplung F an und erstreckt sich axial in Richtung Hauptradsatz HS bis über das Lamellenpaket 600 der Kupplung F. Entsprechend ist am Innendurchmesser dieses zylinderringförmigen Abschnitts des Außenlamellenträgers 620 im Bereich seines hauptradsatznahen Endes ein Mitnahmeprofil zur Aufnahme der Außenlamellen des Lamellenpaketes 600 vorgesehen.

Im folgenden wird nun die konstruktive Ausgestaltung der Baugruppe mit den beiden Kupplungen B, F im Detail erläutert. Geometrisch weist der für die Kupplungen B, F gemeinsame Lamellenträger ZYLBF eine im wesentlichen zylinderförmige Struktur auf, mit einer in zwei Nabenabschnitte 633 und 233 unterteilten und auf der Sonnenwelle 240 verdrehbar gelagerten Nabe, mit einem zumindest teilweise scheibenförmigen Abschnitt, der sich ausgehend von der Nabe des Lamellenträgers ZYLBF im Bereich axial zwischen den genannten Naberiabschnitten 633, 233 radial nach außen erstreckt in etwa bis in einen Bereich des radial inneren Lamellenpaketes 200, sowie mit einem zylindrischen Abschnitt, der sich ausgehend vom Außendurchmesser des genannten scheibenförmigen Abschnitts des Lamellenträgers ZYLBF axial in Richtung Vorschaltradsatz VS erstreckt bis über das radial innere Lamellenpaket 200 der Kupplung B. Am Außendurchmesser des genannten zylindrischen Abschnitts des Lamellenträgers ZYLBF ist ein Mitnahmeprofil zur Aufnahme von innenverzahnten Lamellen des Lamellenpaketes 600 der Kupplung F vorgesehen und entsprechend seiner Zugehörigkeit zum Ausgangselement der Kupplung F mit 631 bezeichnet. Am Innendurchmesser des genannten zylindrischen Abschnitts des Lamellenträgers ZYLBF ist ein Mitnahmeprofil zur Aufnahme von außenverzahnten Lamellen des Lamellenpaketes 200 der Kupplung B vorgesehen und entsprechend seiner Zugehörigkeit zum Ausgangselement der Kupplung B mit 231 bezeichnet. Der mit 233 bezeichnete Nabenabschnitt der Nabe des Lamellenträgers ZYLBF erstreckt sich auf der dem Vorschaltradsatz VS zugewandten Seite des scheibenförmigen Abschnitts des Lamellenträgers ZYLBF in axialer Richtung radial unterhalb des Lamellenpaketes 200 der Kupplung B. Der mit 633 bezeichnete Nabenabschnitt der Nabe des Lamellenträgers ZYLBF erstreckt sich auf der dem Hauptradsatz HS zugewandten Seite des scheibenförmigen Abschnitts des Lamellenträgers ZYLBF in axialer Richtung bis zum vorschaltradsatznahen ersten Sonnenrad S1_HS des Hauptradsatzes HS und ist mit diesem ersten Sonnenrad S1_HS verdrehfest verbunden. Dabei durchgreift dieser Nabenabschnitt 633 des Lamellenträgers ZYLBF eine Zentralbohrung einer getriebegehäusefesten Gehäusezwischenwand GZ in axialer Richtung. Wie in Fig. 22 ist diese Gehäusezwischenwand GZ nahe am Hauptradsatz HS angeordnet und erstreckt sich dabei ausgehend vom Innendurchmesser des Getriebegehäuses GG beispielhaft axial zwischen den beiden Bremsen C und D radial nach innen bis in einen Bereich in etwa neben dem vorschaltradsatznahen ersten Sonnenrad S1_HS des Hauptradsatzes Je nach Struktur des Getriebegehäuses GG kann die Gehäusezwischenwand GZ auch ein fester Teil (Abschnitt) des Getriebegehäuses GG sein.

Die Servoeinrichtung 210 der Kupplung B, umfassend einen Druckraum 211, einen Druckausgleichsraum 212, einen Kolben 214, ein Rückstellelement 213 und eine Stauscheibe 215, ist vollständig innerhalb eines Zylinderraums angeordnet, der durch den Lamellenträger ZYLBF (insbesondere durch den zylindrischen Abschnitt (231) und den scheibenförmigen Abschnitt des Lamellenträgers ZYLBF) gebildet wird, räumlich gesehen radial oberhalb des Nabenabschnitts 233 des Lamellenträgers ZYLBF. Der Kolben 214 ist am Lamellenträger ZYLBF axial verschiebbar gelagert. Entsprechend rotiert die Servoeinrichtung 210 ständig mit Drehzahl des ersten Eingangselementes (also hier des ersten Sonnenrades S1_HS) des Hauptradsatzes HS. Zum Ausgleich des rotatorischen Drucks des rotierenden Druckraums 211 der Servoeinrichtung 210 ist ein dynamischer Druckausgleich mit dem drucklos mit Schmiermittel befüllbaren Druckausgleichsraum 212 vorgesehen. Dabei ist der Druckraum 211 näher am Hauptradsatz HS angeordnet als der Druckausgleichsraum 212 und der Druckausgleichsraum 212 näher am Vorschaltradsatz VS angeordnet als der Druckraum 211. Gebildet wird der Druckraum 211 durch eine Mantelfläche des Lamellenträgers ZYLBF (genauer gesagt durch den zylindrischen Abschnitt 231 und den scheibenförmigen Abschnitt und einen Teil des Nabenabschnitts 233 des Lamellenträgers ZYLBF) und durch den Kolben 214. Der Druckausgleichsraum 212 wird gebildet durch den Kolben 214 und die Stauscheibe 215, welche axial an dem vorschaltradsatznahen Ende des Nabenabschnitts 233 des Lamellenträgers ZYLBF fixiert und gegenüber dem Kolben 214 axial verschiebbar schmiermitteldicht abgedichtet ist Der Kolben 214 ist über das hier beispielhaft als Tellerfeder ausgebildete Rückstellelement 213 axial gegen den Nabenabschnitt 233 des Lamellenträgers ZYLBF vorgespannt. Bei einer Beaufschlagung des Druckraums 211 mit Druckmittel zum Schließen der Kupplung B bewegt sich der Kolben 214 axial in Richtung Vorschaltradsatz VS und betätigt das ihm zugeordnete Lamellenpaket 200 gegen die Federkraft des Rückstellelementes 213.

Räumlich gesehen ist die Servoeinrichtung 610 der Kupplung F näher an Hauptradsatz HS angeordnet als die Servoeinrichtung 210 der Kupplung B und dabei nur durch eine Mantelfläche des Lamellenträgers ZYLBF von dieser Servoeinrichtung 210 getrennt. Dabei ist die Servoeinrichtung 610 der Kupplung F räumlich gesehen zumindest überwiegend in einem Bereich radial über dem dem Hauptradsatz HS zugewandten Nabenabschnitt 633 des Lamellenträgers ZYLBF angeordnet und auch an dem Lamellenträger ZYLBF axial verschiebbar gelagert. Entsprechend rotiert auch die Servoeinrichtung 610 ständig mit Drehzahl des ersten Eingangselementes (also hier des ersten Sonnenrades S1_HS) des Hauptradsatzes HS. Die Servoeinrichtung 610 der Kupplung F umfasst einen Druckraum 611, einen Druckausgleichsraum 612, einen abschnittsweise meanderförmig ausgebildeten Kolben 614, ein Rückstellelement 613 und eine abschnittsweise zylindrische Stützscheibe 618. Zum Ausgleich des rotatorischen Drucks des rotierenden Druckraums 611 der Servoeinrichtung 610 ist ein dynamischer Druckausgleich mit dem Druckausgleichsraum 612 vorgesehen. Die Stützscheibe 618 grenzt unmittelbar an die Gehäusezwischenwand GZ an und ist zur Bildung des Druckraums 611 druckmitteldicht an dem Nabenabschnitt 633 des Lamellenträgers ZYLBF verdrehfest befestigt und axial gesichert, im dargestellten Beispiel über ein abgedichtetes Mitnahmeprofil und einen Sicherungsring. Ein scheibenförmiger Abschnitt der Stützscheibe 618 erstreckt sich dabei axial parallel zur Gehäusezwischenwand GZ, ein zylindrischer Abschnitt der Stützscheibe 618 schließt sich an den Außendurchmesser des scheibenförmigen Abschnitts der Stützscheibe 618 an und erstreckt sich axial in Richtung Vorschaltradsatz VS. Zur Bildung des Druckausgleichsraums 612 der Servoeinrichtung 610 ist ein zweiter zylindrischer Abschnitt des Lamellenträgers ZYLBF vorgesehen, der sich ausgehend vom scheibenförmigen Abschnitt des Lamellenträgers ZYLBF, radial oberhalb des Nabenabschnitts 633 auf einem Durchmesser größer dem Außendurchmesser der Stützscheibe 618, axial in Richtung Hauptradsatz HS in etwa bis zum vorschaltradsatzseitigen Ende des zylindrischen Abschnitts der Stützscheibe 618 erstreckt. Der Kolben 614 der Servoeinrichtung 610 ist gegen den genannten zylindrischen Abschnitt der Stützscheibe 618 und gegen den Nabenabschnitt 633 des Lamellenträgers ZYLBF axial verschiebbar druckmitteldicht abgedichtet und gegen den genannten zweiten zylindrischen Abschnitt des Lamellenträgers ZYLBF axial verschiebbar schmiermitteldicht abgedichtet. Dabei umgreift der in diesem Bereich meanderförmige Kolben 614 einerseits den zylindrischen Abschnitt der Stützscheibe 618 in axialer und radialer Richtung, andererseits auch den zweiten zylindrischen Abschnitt des Lamellenträgers ZYLBF in axialer und radialer Richtung. Der Kolben 614 durchgreift also einen radialen Spalt zwischen dem zylindrischen Abschnitt der Stützscheibe 618 und dem zweiten zylindrischen Abschnitt des Lamellenträgers ZYLBF. Entsprechend wird der Druckraum 611 der Servoeinrichtung 610 der Kupplung F durch den Kolben 614, den zylindrischen Abschnitt der Stützscheibe 618, den radial unterhalb dieses zylindrischen Abschnitts der Stützscheibe 618 befindlichen scheibenförmigen Abschnitt der Stützscheibe 618, sowie einen Teil des Nabenabschnitts 633 des Lamellenträgers ZYLBF gebildet. Der Druckausgleichsraum 612 der Servoeinrichtung 610 der Kupplung F wird durch den Kolben 614, den zweiten zylindrischen Abschnitt des Lamellenträgers ZYLBF und den radial unterhalb dieses zweiten zylindrischen Abschnitts des Lamellenträgers ZYLBF befindlichen scheibenförmigen Abschnitt des Lamellenträgers ZYLBF gebildet und ist nur durch eine Mantelfläche des für beide Kupplungen B, F gemeinsamen Lamellenträgers ZYLBF von dem Druckraum 211 der Servoeinrichtung 210 der Kupplung B getrennt.

In seinem weiteren geometrischen Verlauf erstreckt sich der Kolben 614 der Servoeinrichtung 610 der Kupplung F zumindest weitgehend entlang der Außenkontur des radial oberen Bereichs des Lamellenträgers ZYLBF radial nach außen und axial in Richtung Vorschaltradsatz VS bis zu der haupradsatznahen Seite des ihm zugeordneten Lamellenpaketes 600 der Kupplung F. Axial vorgespannt wird der Kolben 614 durch das Rückstellelement 613, das hier beispielhaft als ein axial zwischen dem scheibenförmigen Abschnitt des Lamellenträgers ZYLBF und dem Kolben 614 angeordnetes Spiralfederpaket ausgebildet ist. Bei einer Beaufschlagung des Druckraums 611 mit Druckmittel zum Schließen der Kupplung F bewegt sich der Kolben 614 axial in Richtung Vorschaltradsatz VS und betätigt das ihm zugeordnete Lamellenpaket 600 gegen die Federkraft des Rückstellelementes 613. Der Kolben 614 umgreift also den für beide Kupplungen B, F gemeinsamen Lamellenträger ZYLBF fast vollständig.

Aufgrund der Lagerung des Lamellenträgers ZYLBF in der getriebegehäusefesten Gehäusezwischenwand GZ ergibt sich eine konstruktiv relativ einfache Druck- und Schmiermittelzufuhr zu beiden Kupplungen B, F. In dem in Fig. 23 dargestellten Ausführungsbeispiel erfolgt die Druckmittelzuführung zu den Druckräumen 211, 611 der Servoeinrichtungen 210, 610 der beiden Kupplungen B, F über entsprechende Kanäle bzw. Bohrungen, die abschnittsweise innerhalb der Gehäusezwischenwand GZ und abschnittsweise innerhalb der Nabe des Lamellenträgers ZYLBF verlaufen und mit 216 bzw. 616 bezeichnet sind. Eine Druckmittelzuführung zum Druckraum 211 der Servoeinrichtung 210 der Kupplung B ist mit 216 bezeichnet, eine Druckmittelzuführung zum Druckraum 611 der Servoeinrichtung 610 der Kupplung F mit 616. Das Druckmittel wird also radial von außen in die Nabe des Lamellenträgers ZYLBF über deren Nabenabschnitt 633 eingeleitet. Selbstverständlich sind die Druckmittelkanäle 216, 616 in dem Nabenabschnitt 633 im Bereich dessen Durchtritts durch die korrespondierende Zentralbohrung der Gehäusezwischenwand GZ gegeneinander und gegen die Gehäusezwischenwand GZ hin rotierend abgedichtet. Die Schmiermittelzuführung zu den Druckausgleichräumen 212, 612 erfolgt hier beispielhaft über eine (nicht näher dargestellte) Zentralbohrung der Stegwelle 540 und (mindestens) eine Radialbohrung der ersten Sonnenwelle 240, die in diesem Bereich die Stegwelle 540 radial umschließt. Eine Schmiermittelzuführung zum Druckausgleichsraum 212 der Servoeinrichtung 210 der Kupplung B ist mit 217 bezeichnet, eine Schmiermittelzuführung zum Druckausgleichsraum 612 der Servoeinrichtung 610 der Kupplung F mit 617.

Eine weitere konstruktive Besonderheit des Getriebes gemäß Fig. 23 ist die drehmomentführende Anbindung der Bremse C an das hier durch das erste Sonnenrad S1_HS gebildete erste Eingangselement des Hauptradsatzes HS. Die Bremse C ist beispielhaft als Lamellenbremse ausgeführt, könnte selbstverständlich aber auch - ebenso wie die Bremse D als Bandbremse ausgeführt sein. Entsprechend ist das Ausgangselement 330 der Bremse C als Innenlamellenträger ausgeführt. Hierbei ist vorgesehen, dass das Ausgangselement 330 über die Stützscheibe 618 der Servoeinrichtung 610 der Kupplung F mit dem Lamellenträger ZYLBF verdrehfest verbunden ist, wobei dieser Lamellenträger ZYLBF wie zuvor gesagt das Ausgangselement der Kupplungen B und F bildet und seinerseits verdrehfest mit dem ersten Sonnenrad S1_HS des Hauptradsatzes HS verbunden ist.

Abschließend sei noch ausdrücklich darauf hingewiesen, dass die anhand der Figuren 17 bis 21 beschriebenen alternativen Hauptradsatztypen ohne weiteres mit allen zuvor in den Figuren 2 bis 16, 22 und 23 beschriebenen Bauteilanordnungen kombinierbar sind.

### Bezugszeichen

- A: erstes Schaltelement, Kupplung
- B: zweites Schaltelement, Kupplung
- C: drittes Schaltelement, Bremse
- D: viertes Schaltelement, Bremse
- E: fünftes Schaltelement, Kupplung
- F: sechstes Schaltelement, Kupplung

- AN: Antriebswelle
- AB: Abtriebswelle
- GD: Gehäusedeckel
- GG: Getriebegehäuse
- GN: Nabe der Gehäusewand
- GW: Gehäusewand
- GZ: Gehäusezwischenwand
- ZYL: zylinderförmiges Verbindungselement
- ZYLB: zylinderförmiges Verbindungselement
- ZYLF: zylinderförmiges Verbindungselement
- ZYLAB: gemeinsamer Lamellenträger des ersten und zweiten Schaltelementes
- ZYLBF: gemeinsamer Lamellenträger des zweiten und sechsten Schaltelementes

- VS: Vorschaltradsatz
- HO_VS: Hohlrad des Vorschaltradsatzes
- SO_VS: Sonnenrad des Vorschaltradsatzes
- ST_VS: (gekoppelter) Steg des Vorschaltradsatzes
- P1_VS: inneres Planetenrad des Vorschaltradsatzes
- P2_VS: äußeres planetenrad des Vorschaltradsatzes

- HS: Hauptradsatz
- HO_HS: (einziges) Hohlrad des Hauptradsatzes
- H1_HS: erstes Hohlrad des Hauptradsatzes
- H13_HS: gekoppeltes (erstes) Hohlrad des Hauptradsatzes
- H134_HS: gekoppeltes (erstes) Hohlrad des Hauptradsatzes
- H2_HS: zweites Hohlrad des Hauptradsatzes
- S1_HS: erstes Sonnenrad des Hauptradsatzes
- S2_HS: zweites Sonnenrad des Hauptradsatzes
- S3_HS: drittes Sonnenrad des Hauptradsatzes
- S4_HS: viertes Sonnenrad des Hauptradsatzes
- ST_HS: gekoppelter (einziger) Steg des Hauptradsatzes
- ST1_HS: erster Steg des Hauptradsatzes
- ST13_HS: gekoppelter (erster) Steg des Hauptradsatzes
- ST134_HS: gekoppelter (erster) Steg des Hauptradsatzes
- ST2_HS: zweiter Steg des Hauptradsatzes
- P1_HS: langes Planetenrad des Hauptradsatzes
- P13_HS: gekoppeltes langes Planetenrad des Hauptradsatzes
- P2_HS: kurzes Planetenrad des Hauptradsatzes
- PL_HS: erstes Planetenrad des Hauptradsatzes
- PLa_HS: äußeres Planetenrad des Hauptradsatzes
- PLi_HS: inneres Planetenrad des Hauptradsatzes

- 100: Lamellen des ersten Schaltelementes
- 110: Servoeinrichtung des ersten Schaltelementes
- 111: Druckraum der Servoeinrichtung des ersten Schaltelementes
- 112: Druckausgleichsraum der Servoeinrichtung des ersten Schaltelementes
- 113: Rückstellelement der Servoeinrichtung des ersten Schaltelementes
- 114: Kolben der Servoeinrichtung des ersten Schaltelementes
- 115: Stauscheibe der Servoeinrichtung des ersten Schaltelementes

- 120: Eingangselement des ersten Schaltelementes
- 121: zylindrischer Abschnitt des Eingangselementes des ersten Schaltelementes
- 123: Nabe des Eingangselementes des ersten Schaltelementes
- 130: Ausgangselement des ersten Schaltelementes
- 131: zylindrischer Abschnitt des Ausgangselementes des ersten Schaltelementes
- 132: scheibenförmiger Abschnitt des Ausgangselementes des ersten Schaltelementes
- 140: zweite Sonnenwelle
- 150: Mitnahmescheibe

- 200: Lamellen des zweiten Schaltelementes
- 210: Servoeinrichtung des zweiten Schaltelementes
- 211: Druckraum der Servoeinrichtung des zweiten Schaltelementes
- 212: Druckausgleichsraum der Servoeinrichtung des zweiten Schaltelementes
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 216: Druckmittelzuführung zum Druckraum der Servoeinrichtung des zweiten Schaltelementes
- 217: Schmiermittelzuführung zum Druckausgleichsraum der Servoeinrichtung des zweiten Schaltelementes
- 218: Stützscheibe der Servoeinrichtung des zweiten Schaltelementes
- 220: Eingangselement des zweiten Schaltelementes
- 221: zylindrischer Abschnitt des Eingangselementes des zweiten Schaltelementes
- 222: scheibenförmiger Abschnitt des Eingangselementes des zweiten Schaltelementes
- 223: Nabe des Eingangselementes des zweiten Schaltelementes
- 230: Ausgangselement des zweiten Schaltelementes
- 231: zylindrischer Abschnitt des Ausgangselementes des zweiten Schaltelementes
- 232: scheibenförmiger Abschnitt des Ausgangselementes des zweiten Schaltelementes
- 233: Nabe des Ausgangselementes des zweiten Schaltelementes
- 234: zweiter zylindrischer Abschnitt des Ausgangselementes des zweiten Schaltelementes
- 240: erste Sonnenwelle
- 250: Mitnahmeblech
- 300: Lamellen des dritten Schaltelementes
- 310: Servoeinrichtung des dritten Schaltelementes
- 330: Ausgangselement des dritten Schaltelementes

- 400: Lamellen des vierten Schaltelementes
- 410: Servoeinrichtung des vierten Schaltelementes
- 430: Ausgangselement des vierten Schaltelementes

- 500: Lamellen des fünften Schaltelementes
- 510: Servoeinrichtung des fünften Schaltelementes
- 520: Eingangselement des fünften Schaltelementes
- 530: Ausgangselement des fünften Schaltelementes
- 540: Stegwelle

- 600: Lamellen des sechsten Schaltelementes
- 610: Servoeinrichtung des sechsten Schaltelementes
- 611: Druckraum der Servoeinrichtung des sechsten Schaltelementes
- 612: Druckausgleichsraum der Servoeinrichtung des sechsten Schaltelementes
- 613: Rückstellelement der Servoeinrichtung des sechsten Schaltelementes
- 614: Kolben der Servoeinrichtung des sechsten Schaltelementes
- 615: Stauscheibe der Servoeinrichtung des sechsten Schaltelementes
- 616: Druckmittelzuführung zum Druckraum der Servoeinrichtung des sechsten Schaltelementes
- 617: Schmiermittelzuführung zum Druckausgleichsraum der Servoeinrichtung des sechsten Schaltelementes
- 618: Stützscheibe der Servoeinrichtung des sechsten Schaltelementes
- 620: Eingangselement des sechsten Schaltelementes
- 621: zylindrischer Abschnitt des Eingangselementes des sechsten Schaltelementes
- 622: scheibenförmiger Abschnitt des Eingangselementes des sechsten Schaltelementes
- 623: Nabe des Eingangselementes des sechsten Schaltelementes
- 630: Ausgangselement des sechsten Schaltelementes
- 631: zylindrischer Abschnitt des Ausgangselementes des sechsten Schaltelementes
- 632: scheibenförmiger Abschnitt des Ausgangselementes des sechsten Schaltelementes
- 633: Nabe des Ausgangselementes des sechsten Schaltelementes

## Patentansprüche (Patentansprüche für folgende(n) Vertragsstaat(en): DE FR GB)

1. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
• der Vorschaltradsatz (VS) weist ein Sonnenrad (SO_VS), ein Hohlrad (HO_VS) sowie einen gekoppelten Steg (ST_VS) auf,
• an dem gekoppelten Steg (ST_VS) des Vorschaltradsatzes (VS) sind innere und äußere Planetenräder (P1_VS, P2_VS) verdrehbar gelagert,
○ wobei die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen
○ und wobei die äußeren Planetenräder (P2_VS) des Vorschaltradsatzes (VS) mit den inneren Planetenrädern (P1_VS) und dem Hohlrad (HO_VS) des Vorschaltradsatzes (HS) kämmen,
• der Steg (ST_VS) des Vorschaltradsatzes (VS) bildet das Eingangselement des Vorschaltradsatzes (VS),
• das Hohlrad (HO_VS) des Vorschaltradsatzes (VS) bildet das Ausgangselement des Vorschaltradsatzes (VS),
• das Sonnenrad (SO_VS) des Vorschaltradsatzes (VS) ist am Getriebegehäuse (GG) festgesetzt,
• der Hauptradsatz (HS) ist als Zweisteg-Vierwellen-Getriebe mit zwei gekoppelten Einzel-Planetenradsätzen ausgeführt, umfassend zwei Sonnenräder (S1_HS, S2_HS), zwei Hohlräder (H1_HS, H2_HS), einen ersten Steg (ST1_HS), an dem erste Planetenräder (PL_HS) verdrehbar gelagert sind, sowie einen gekoppelten zweiten Steg (ST2_HS), an dem innere und äußere Planetenräder (PLi_HS, PLa_HS) verdrehbar gelagert sind,
wobei
○ die ersten Planetenräder (PL_HS) des Hauptradsatzes (HS) mit dem ersten Hohlrad (H1_HS) und dem ersten Sonnenrad (S1_HS) des Hauptradsatzes (HS) kämmen,
○ die inneren Planetenräder (PLi_HS) des Hauptradsatzes (HS) mit den äußeren Planetenräder (PLa_HS) und dem zweiten Sonnenrad (S2_HS) des Hauptradsatzes (HS) kämmen
○ und die äußeren Planetenräder (PLa_HS) des Hauptradsatzes (HS) mit den inneren Planetenräder (PLi_HS) und dem zweiten Hohlrad (H2_HS) des Hauptradsatzes (HS) kämmen,
• das erste Sonnenrad (S1_HS) und der gekoppelte zweite Steg (ST2_HS) des Hauptradsatzes (HS) sind miteinander verbunden, bilden das erste Eingangselement des Hauptradsatzes (HS) und sind mit den Ausgangselementen (230, 330, 630) des zweiten, dritten und sechsten Schaltelementes (B, C, F) verbunden,
• das zweite Sonnenrad (S2_HS) des Hauptradsatzes (HS) bildet das zweite Eingangselement des Hauptradsatzes (HS) und ist mit dem Ausgangselement (130) des ersten Schaltelementes (A) verbunden,
• der erste Steg (ST1_HS) und das zweite Hohlrad (H2_HS) des Hauptradsatzes (HS) sind miteinander verbunden, bilden das dritte Eingangselement des Hauptradsatzes (HS) und sind mit den Ausgangselementen (430, 530) des vierten und fünften Schaltelementes (D, E) verbunden,
• das erste Hohlrad (H1_HS) des Hauptradsatzes (HS) bildet das Ausgangselement des Hauptradsatzes (HS) und ist mit der Abtriebswelle (AB) verbunden,
**dadurch gekennzeichnet, dass** eine Servoeinrichtung (610) zur Betätigung des sechsten Schaltelementes (F) ständig mit der Drehzahl des ersten Eingangselementes des Hauptradsatzes (HS) rotiert.

2. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
• der Vorschaltradsatz (VS) weist ein Sonnenrad (SO_VS), ein Hohlrad (HO_VS) sowie einen gekoppelten Steg (ST_VS) auf,
• an dem gekoppelten Steg (ST_VS) des Vorschaltradsatzes (VS) sind innere und äußere Planetenräder (P1_VS, P2_VS) verdrehbar gelagert,
○ wobei die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen
○ und wobei die äußeren Planetenräder (P2_VS) des Vorschaltradsatzes (VS) mit den inneren Planetenrädern (P1_VS) und dem Hohlrad (HO_VS) des Vorschaltradsatzes (HS) kämmen,
• der Steg (ST_VS) des Vorschaltradsatzes (VS) bildet das Eingangselement des Vorschaltradsatzes (VS),
• das Hohlrad (HO_VS) des Vorschaltradsatzes (VS) bildet das Ausgangselement des Vorschaltradsatzes (VS),
• das Sonnenrad (SO_VS) des Vorschaltradsatzes (VS) ist am Getriebegehäuse (GG) festgesetzt,
• der Hauptradsatz (HS) ist als reduziertes Dreisteg-Getriebe ausgeführt, mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
○ das dritte Sonnenrad (S3_HS) des Hauptradsatzes (HS) axial zwischen dem ersten und zweiten Sonnenrad (S1_HS, S2_HS) des Hauptradsatzes (HS) angeordnet ist,
○ die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
○ die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen
○ und das zweite und dritte Sonnenrad (S2_HS, S3_HS) des Hauptradsatzes (HS) fest miteinander verbunden sind,
• das erste Sonnenrad (S1_HS) des Hauptradsatzes (HS) bildet das erste Eingangselement des Hauptradsatzes (HS) und ist mit den Ausgangselementen (230, 330, 630) des zweiten, dritten und sechsten Schaltelementes (B, C, F) verbunden,
• das gekoppelte Hohlrad (H13_HS) des Hauptradsatzes (HS) bildet das zweite Eingangselement des Hauptradsatzes (HS) und ist mit dem Ausgangselement (130) des ersten Schaltelementes (A) verbunden,
○ der zweite Steg (ST2_HS) des Hauptradsatzes (HS) bildet das dritte Eingangselement des Hauptradsatzes (HS) und ist mit den Ausgangselementen (430, 530) des vierten und fünften Schaltelementes (D, E) verbunden,
○ der gekoppelte Steg (ST13_HS) und das zweite Hohlrad (H2_HS) des Hauptradsatzes (HS) sind fest miteinander verbunden, bilden das Ausgangselement des Hauptradsatzes (HS) und sind mit der Abtriebswelle (AB) verbunden,
**dadurch gekennzeichnet, dass** eine Servoeinrichtung (610) zur Betätigung des sechsten Schaltelementes (F) ständig mit der Drehzahl des ersten Eingangselementes des Hauptradsatzes (HS) rotiert.

3. Mehrstufen-Automatgetriebe nach Anspruch 2, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) radial nach innen hindurchgreift,
wobei eine Nabe, die mit diesem Stegblech verdrehfest und mit der Abtriebswelle (AB) wirkverbunden ist, das erste Sonnenrad (S1_HS) des Hauptradsatzes (HS) in axialer Richtung zentrisch durchdringt.

4. Mehrstufen-Automatgetriebe nach Anspruch 2 oder 3, **dadurch gekennzeichnet, dass** die langen Planetenrädern (P13_HS) des Hauptradsatzes (HS) als Stufenplanetenräder ausgebildet sind.

5. Mehrstufen-Automatgetriebe nach einem der Ansprüche 1 bis 4, **dadurch gekennzeichnet, dass** das Ausgangselement (630) des sechsten Schaltelementes (F) über das Ausgangselement (230) des zweiten Schaltelementes (B) mit dem ersten Eingangselement des Hauptradsatzes (HS) verbunden ist.

6. Mehrstufen-Automatgetriebe nach einem der Ansprüche 1 bis 4, **dadurch gekennzeichnet, dass** das sechste Schaltelement (F) und das zweite Schaltelement (B) über ein gemeinsames Ausgangselement (ZYLBF) mit dem ersten Eingangselement des Hauptradsatzes (HS) verbunden sind.

7. Mehrstufen-Automatgetriebe nach einem der Ansprüche 1 bis 6, **dadurch gekennzeichnet, dass** eine Servoeinrichtung (210) zur Betätigung des zweiten Schaltelementes (B) ständig mit der Drehzahl des ersten Elementes des Hauptradsatzes (HS) rotiert.

8. Mehrstufen-Automatgetriebe nach einem der Ansprüche 1 bis 7, **dadurch gekennzeichnet, dass** das zweite und sechste Schaltelement (B, F) räumlich gesehen zumindest teilweise in einem Bereich axial zwischen dem Vorschaltradsatz (VS) und einer sich radial erstreckenden Gehäusewand (GW) des Getriebegehäuses (GG) angeordnet sind, räumlich gesehen auf der dem Hauptradsatz (HS) abgewandten Seite des Vorschaltradsatzes (VS), wobei Vorschaltradsatz (VS) und Hauptradsatz (HS) koaxial zueinander angeordnet sind.

9. Mehrstufen-Automatgetriebe nach einem der Ansprüche 1 bis 7, **dadurch gekennzeichnet, dass** das zweite und sechste Schaltelement (B, F) räumlich gesehen zumindest teilweise in einem Bereich axial zwischen dem Vorschaltradsatz (VS) und dem Hauptradsatz (HS) angeordnet sind, wobei Vorschaltradatz (VS) und Hauptradsatz (HS) koaxial zueinander angeordnet sind.

10. Mehrstufen-Automatgetriebe nach einem der Ansprüche 1 bis 9, **dadurch gekennzeichnet,**
**dass** das zweite und sechste Schaltelement (B, F) eine Baugruppe bilden, die räumlich gesehen
• axial zwischen dem ersten und dem dritten Schaltelement (A, C)
• und/oder axial zwischen dem ersten Schaltelement (A) und dem Hauptradsatz (HS)
• und/oder axial zwischen dem fünften und dem dritten Schaltelement (E, C)
• und/oder axial zwischen dem fünften Schaltelement (E) und dem Hauptradsatz (HS)
• und/oder axial neben dem ersten Schaltelement (A), insbesondere axial neben einem Lamellenpaket (100) des ersten Schaltelementes (A)
• und/oder axial neben dem dritten Schaltelement (C), insbesondere axial neben einem Lamellenpaket (300) des dritten Schaltelementes (C) angeordnet ist.

11. Mehrstufen-Automatgetriebe nach einem der Ansprüche 1 bis 10, **dadurch gekennzeichnet, dass** das zweite und sechste Schaltelement (B, F) zur Aufnahmen von Lamellen des zweiten und sechsten Schaltelementes (B, F) einen gemeinsamen Lamellenträger (ZYLBF) aufweisen, der mit dem ersten Eingangselement des Hauptradsatzes (HS) verbunden ist.

12. Mehrstufen-Automatgetriebe nach einem der Ansprüche 1 bis 11, **dadurch gekennzeichnet, dass** ein Lamellenpaket (200) des zweiten Schaltelementes (B) in axialer Richtung gesehen zumindest teilweise radial über einem Lamellenpaketes (600) des sechsten Schaltelementes (F) angeordnet ist.

13. Mehrstufen-Automatgetriebe nach einem der Ansprüche 1 bis 12, **dadurch gekennzeichnet, dass** die Lamellenpakete (200, 600) des zweiten und sechsten Schaltelementes (B, F) benachbart zum Vorschaltradsatz (VS) angeordnet sind,
dass die Servoeinrichtung (210) des zweiten Schaltelementes (B) zumindest überwiegend auf der dem Vorschaltradsatzes (VS) abgewandten Seite des Lamellenpaketes (200) des zweiten Schaltelementes (B) angeordnet ist,
und dass die Servoeinrichtung (610) des sechsten Schaltelementes (F) zumindest überwiegend auf der dem Vorschaltradsatz (VS) abgewandten Seite des Lamellenpaketes (600) des sechsten Schaltelementes (B, F) angeordnet ist.

14. Mehrstufen-Automatgetriebe nach Anspruch 12 oder 13, **dadurch gekennzeichnet, dass** ein Druckraum (211) der Servoeinrichtung (210) des zweiten Schaltelementes (B) in axialer Richtung gesehen zumindest überwiegend radial über einem Druckraum (611) der Servoeinrichtung (610) des sechsten Schaltelementes (F) angeordnet ist.

15. Mehrstufen-Automatgetriebe nach Anspruch 12 oder 13, **dadurch gekennzeichnet, dass** ein Druckausgleichsraum (212) eines dynamischen Druckausgleichs der Servoeinrichtung (210) des zweiten Schaltelementes (B) in axialer Richtung gesehen zumindest überwiegend radial über einem Druckausgleichsraum (612) eines dynamischen Druckausgleichs der Servoeinrichtung (610) des sechsten Schaltelementes (F) angeordnet ist.

16. Mehrstufen-Automatgetriebe nach einem der Ansprüche 1 bis 11, **dadurch gekennzeichnet, dass** ein Lamellenpaket (600) des sechsten Schaltelementes (F) in axialer Richtung gesehen zumindest teilweise radial oberhalb eines Lamellenpaketes (200) des zweiten Schaltelementes (B) angeordnet ist.

17. Mehrstufen-Automatgetriebe nach Anspruch 16, **dadurch gekennzeichnet, dass** die Servoeinrichtungen (210, 610) des zweiten und sechsten Schaltelementes (B, F) axial benachbart zum Vorschaltradsatz (VS) angeordnet sind,
wobei die Lamellenpakete (200, 600) des zweiten und sechsten Schaltelementes (B, F) auf der dem Vorschaltradsatzes (VS) abgewandten Seite der Servoeinrichtungen (210, 610) des zweiten und sechsten Schaltelementes (B, F) angeordnet sind.

18. Mehrstufen-Automatgetriebe nach Anspruch 16 oder 17, **dadurch gekennzeichnet, dass** der Druckraum (211) der Servoeinrichtung (210) des zweiten Schaltelementes (B) näher am Vorschaltradsatz (VS) angeordnet ist als der Druckraum (611) der Servoeinrichtung (610) des sechsten Schaltelementes (F).

19. Mehrstufen-Automatgetriebe nach Anspruch 16, 17 oder 18, **dadurch gekennzeichnet, dass** der Druckraum (211) der Servoeinrichtung (210) des zweiten Schaltelementes (B) axial benachbart zu einem Druckausgleichsraum (612) eines dynamischen Druckausgleichs der Servoeinrichtung (610) des sechsten Schaltelementes (F) angeordnet ist.

20. Mehrstufen-Automatgetriebe nach Anspruch 16, dadurch g e - **kennzeichnet**, dass der Druckraum (611) der Servoeinrichtung (610) des sechsten Schaltelementes (F) in axialer Richtung gesehen zumindest überwiegend radial über dem Druckraum (211) der Servoeinrichtung (210) des zweiten Schaltelementes (B) angeordnet ist.

21. Mehrstufen-Automatgetriebe nach Anspruch 16 oder 20, **dadurch gekennzeichnet, dass** der Druckausgleichsraum (612) der Servoeinrichtung (610) des sechsten Schaltelementes (F) in axialer Richtung gesehen zumindest überwiegend radial über dem Druckausgleichsraum (212) der Servoeinrichtung (210) des zweiten Schaltelementes (B) angeordnet ist.

22. Mehrstufen-Automatgetriebe nach einem der Ansprüche 1 bis 11, **dadurch gekennzeichnet, dass** ein Lamellenpaket (200) des zweiten Schaltelementes (B) axial neben einem Lamellenpaketes (600) des sechsten Schaltelementes (F) angeordnet ist.

23. Mehrstufen-Automatgetriebe nach einem der Ansprüche 12, 13, 19, 20 oder 22, **dadurch gekennzeichnet, dass** der Druckraum (611) der Servoeinrichtung (610) des sechsten Schaltelementes (F) näher am Vorschaltradsatz (VS) angeordnet ist als der Druckraum (211) der Servoeinrichtung (210) des zweiten Schaltelementes (B).

24. Mehrstufen-Automatgetriebe nach einem der Ansprüche 12; 13, 19, 20, 22 oder 23, **dadurch gekennzeichnet, dass** der Druckraum (611) der Servoeinrichtung (610) des sechsten Schaltelementes (F) axial benachbart zu einem Druckausgleichsraum (212) eines dynamischen Druckausgleichs der Servoeinrichtung (210) des zweiten Schaltelementes (B) angeordnet ist.

25. Mehrstufen-Automatgetriebe nach einem der Ansprüche 12, 13, 19, 20, 22 oder 23, **dadurch gekennzeichnet, dass** die Druckräume (211, 611) der Servoeinrichtungen (210, 610) des zweiten und sechsten Schaltelementes (B, F) zueinander benachbart angeordnet sind, insbesondere voneinander getrennt durch eine Mantelfläche des für das zweite und sechste Schaltelement (B, F) gemeinsamen Lamellenträgers (ZYLBF).

26. Mehrstufen-Automatgetriebe nach einem der Ansprüche 1 bis 25, **dadurch gekennzeichnet, dass** ein mit dem Ausgangselement des Vorschaltradsatzes (VS) verbundenes Eingangselement (220) des zweiten Schaltelementes (B) und/oder ein mit der Antriebswelle (AN) verbundenes Eingangselement (620) des sechsten Schaltelementes (F) die Lamellenpakete (200, 600) des zweiten und sechsten Schaltelementes (B, F) in axialer Richtung radial außen umgreift.

27. Mehrstufen-Automatgetriebe nach einem der Ansprüche 1 bis 26, **dadurch gekennzeichnet, dass** ein im Kraftfluss zwischen dem Eingangselement des Hauptradsatzes (HS) und den Ausgangselementen (230, 630) des zweiten und sechsten Schaltelementes (B, F) angeordnetes Verbindungselement (ZYL) das erste und fünfte Schaltelement (A, E) in axialer Richtung radial außen vollständig übergreift.

28. Mehrstufen-Automatgetriebe nach einem der Ansprüche 1 bis 7, **dadurch gekennzeichnet, dass** das zweite Schaltelement (B) räumlich gesehen zumindest teilweise in einem Bereich axial zwischen dem Vorschaltradsatz (VS) und dem Hauptradsatz (HS) angeordnet ist,
und dass das sechste Schaltelement (F) räumlich gesehen zumindest teilweise in einem Bereich axial zwischen dem Vorschaltradsatz (VS) und einer sich radial erstreckenden Gehäusewand (GW) des Getriebegehäuses (GG) angeordnet ist, räumlich gesehen auf der dem Hauptradsatz (HS) abgewandten Seite des Vorschaltradsatzes (VS),
wobei Vorschaltradsatz (VS) und Hauptradsatz (HS) koaxial zueinander angeordnet sind.

29. Mehrstufen-Automatgetriebe nach einem der Ansprüche 1 bis 4, **dadurch gekennzeichnet, dass** das Ausgangselement (230) des zweiten Schaltelementes (B) über das Ausgangselement (630) des sechsten Schaltelementes (F) mit dem ersten Eingangselement des Hauptradsatzes (HS) verbunden ist.

30. Mehrstufen-Automatgetriebe nach einem der Ansprüche 1 bis 4 oder 29, **dadurch gekennzeichnet, dass** das zweite Schaltelement (B) räumlich gesehen zumindest teilweise in einem Bereich axial zwischen dem Vorschaltradsatz (VS) und einer sich radial erstreckenden Gehäusewand (GW) des Getriebegehäuses (GG) angeordnet ist, räumlich gesehen auf der dem Hauptradsatz (HS) abgewandten Seite des Vorschaltradsatzes (VS),
und dass das sechste Schaltelement (F) räumlich gesehen zumindest teilweise in einem Bereich axial zwischen dem Vorschaltradsatz (VS) und dem Hauptradsatz (HS) angeordnet ist,
wobei Vorschaltradsatz (VS) und Hauptradsatz (HS) koaxial zueinander angeordnet sind.

31. Mehrstufen-Automatgetriebe nach einem der Ansprüche 1 bis 4, 29 oder 30, **dadurch gekennzeichnet, dass** eine Servoeinrichtung (210) zur Betätigung des zweiten Schaltelementes (B) ständig mit der Drehzahl des Ausgangselementes des Vorschaltradsatzes (VS) rotiert.

32. Mehrstufen-Automatgetriebe nach einem der Ansprüche 1 bis 4 oder 29 bis 31, **dadurch gekennzeichnet,**
**dass** das sechste Schaltelement (F) räumlich gesehen
• axial zwischen dem fünften und dem dritten Schaltelement (E, C)
• und/oder axial zwischen dem fünften Schaltelement (E) und dem Hauptradsatz (HS)
• und/oder axial neben dem fünften Schaltelement (E)
• und/oder axial neben dem dritten Schaltelement (C)
angeordnet ist,
und **dass** das zweite Schaltelement (B) räumlich gesehen auf der Seite des ersten Schaltelement (A) angeordnet ist, die dem sechsten Schaltelement (F) gegenüber liegt.

33. Mehrstufen-Automatgetriebe nach einem der Ansprüche 1 bis 4 oder 29 bis 32, **dadurch gekennzeichnet, dass** ein Druckausgleichsraum (612) eines dynamischen Druckausgleichs der Servoeinrichtung (610) des sechsten Schaltelementes (F) näher am Vorschaltradsatz (VS) angeordnet ist als ein Druckraum (611) der Servoeinrichtung (610) des sechsten Schaltelementes (F).

34. Mehrstufen-Automatgetriebe nach einem der Ansprüche 1 bis 4 oder 29 bis 33, **dadurch gekennzeichnet, dass** ein Druckraum (611) der Servoeinrichtung (610) des sechsten Schaltelementes (F) näher am Vorschaltradsatz (VS) angeordnet ist als ein Druckausgleichsraum (612) eines dynamischen Druckausgleichs der Servoeinrichtung (610) des sechsten Schaltelementes (F).

35. Mehrstufen-Automatgetriebe nach einem der Ansprüche 1 bis 34, **dadurch gekennzeichnet, dass** ein Lamellenpaket (200) des zweiten Schaltelementes (B) axial neben einem Lamellenpaket (100) des ersten Schaltelementes (A) angeordnet ist.

36. Mehrstufen-Automatgetriebe nach einem der Ansprüche 1 bis 35, **dadurch gekennzeichnet, dass** das Lamellenpaket (100) des ersten Schaltelementes (A) näher am Hauptradsatz (HS) angeordnet ist als das Lamellenpaket (200) des zweiten Schaltelementes (B).

37. Mehrstufen-Automatgetriebe nach einem der Ansprüche 1 bis 35, **dadurch gekennzeichnet, dass** das Lamellenpaket (200) des zweiten Schaltelementes (B) näher am Hauptradsatz (HS) angeordnet ist als das Lamellenpaket (100) des ersten Schaltelementes (A).

38. Mehrstufen-Automatgetriebe nach einem der Ansprüche 1 bis 37, **dadurch gekennzeichnet, dass** das erste und zweite Schaltelement (A, B) einen gemeinsamen Lamellenträger (ZYLAB) aufweisen, der mit dem Ausgangselement des Vorschaltradsatzes (VS) verbunden ist.

39. Mehrstufen-Automatgetriebe nach einem der Ansprüche 1 bis 38, **dadurch gekennzeichnet, dass** das fünfte Schaltelement (E) räumlich gesehen axial zwischen dem Vorschaltradsatz (VS) und dem Hauptradsatz (HS) angeordnet ist, axial angrenzend an den Vorschaltradsatz (VS).

40. Mehrstufen-Automatgetriebe nach einem der Ansprüche 1 bis 38, **dadurch gekennzeichnet, dass** das fünfte Schaltelement (E) räumlich gesehen auf der Seite des Hauptradsatz (HS) angeordnet ist, die dem Vorschaltradsatz (VS) gegenüberliegt.

41. Mehrstufen-Automatgetriebe nach einem der Ansprüche 1 bis 40, **dadurch gekennzeichnet, dass** das Ausgangselement (630) des sechsten Schaltelementes (F) auf dem mit der Antriebswelle (AN) verbundenen Eingangselement (620) des sechsten Schaltelementes (F) gelagert ist,
wobei das Eingangselement (620) des sechsten Schaltelementes (F) auf einer verdrehfesten Nabe (GN) der Gehäusewand (GW) des Getriebegehäuses (GG) gelagert ist.

42. Mehrstufen-Automatgetriebe nach einem der Ansprüche 1 bis 40, **dadurch gekennzeichnet, dass** das Ausgangselement (630) des sechsten Schaltelementes (F) und/oder das Ausgangselement (230) des zweiten Schaltelementes (B) auf einer verdrehfesten Nabe (GN) der Gehäusewand (GW) des Getriebegehäuses (GG) gelagert ist.

43. Mehrstufen-Automatgetriebe nach einem der Ansprüche 1 bis 42, **dadurch gekennzeichnet, dass** ein mit dem Ausgangselement des Vorschaltradsatzes (VS) verbundenes Eingangselement (120) des ersten Schaltelementes (A) an dem mit der Antriebswelle (AN) verbundenen Eingangselement (620) des sechsten Schaltelementes (F) gelagert ist.

44. Mehrstufen-Automatgetriebe nach einem der Ansprüche 1 bis 42, **dadurch gekennzeichnet, dass** ein mit dem zweiten Eingangselement des Hauptradsatzes (HS) verbundenes Ausgangselement (130) des ersten Schaltelementes (A) an dem mit dem Ausgangselement des Vorschaltradsatzes (VS) verbundenen Eingangselement (220) des zweiten Schaltelementes (B) gelagert ist.

45. Mehrstufen-Automatgetriebe nach einem der Ansprüche 1 bis 44, **dadurch gekennzeichnet, dass** das mit dem Ausgangselement des Vorschaltradsatzes (VS) verbundene Eingangselement (220) des zweiten Schaltelementes (B) an dem mit der Antriebswelle (AN) verbundenen Eingangselement (620) des sechsten Schaltelementes (F) gelagert ist.

46. Mehrstufen-Automatgetriebe nach einem der Ansprüche 34 bis 45, **dadurch gekennzeichnet, dass** die Nabe (GN) der Gehäusewand (GW) Kanäle und/oder Bohrungen aufweist zur Zufuhr von Druck-und/oder Schmiermittel zur Servoeinrichtung (610, 210, 110) des sechsten und/oder zweiten und/oder ersten Schaltelementes (F, B, A).

47. Mehrstufen-Automatgetriebe nach einem der Ansprüche 1 bis 46, **dadurch gekennzeichnet, dass** durch selektives Schließen der Schaltelemente (A bis F) zumindest acht Vorwärtsgänge derart schaltbar sind, dass die Drehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, wobei
• im ersten Vorwärtsgang das erste und vierte Schaltelement (A, D),
• im zweiten Vorwärtsgang das erste und dritte Schaltelement (A, C),
• im dritten Vorwärtsgang das erste und zweite Schaltelement (A, B),
• im vierten Vorwärtsgang das erste und sechste Schaltelement (A, F),
• im fünften Vorwärtsgang das erste und fünfte Schaltelement (A, E),
• im sechsten Vorwärtsgang das fünfte und sechste Schaltelement (E, F),
• im siebten Vorwärtsgang das zweite und fünfte Schaltelement (B, E) und
• im achten Vorwärtsgang das dritte und fünfte Schaltelement (C, E) geschlossen sind,
und wobei in einem Rückwärtsgang das vierte Schaltelement (D) und zusätzlich entweder das zweite Schaltelement (B) oder das sechste Schaltelement (F) geschlossen sind.

## Patentansprüche (Patentansprüche für folgende(n) Vertragsstaat(en): AT BE BG CH CY CZ DK EE ES FI GR HU IE IS IT LI LT LU LV MC NL PL PT RO SE SI SK TR)

1. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
**dadurch gekennzeichnet,**
**dass** eine Servoeinrichtung (610) zur Betätigung des sechsten Schaltelementes (F) ständig mit der Drehzahl des ersten Eingangselementes des Hauptradsatzes (HS) rotiert,
**dass** die Servoeinrichtung (610) des sechsten Schaltelementes (F) räumlich gesehen zumindest weitgehend auf der dem Hauptradsatz (HS) abgewandten Seite des Vorschaltradsatzes (VS) angeordnet ist,
und **dass** das Ausgangselement (630) des sechsten Schaltelementes (F) über das Ausgangselement (230) des zweiten Schaltelementes (B) mit dem ersten Eingangselement des Hauptradsatzes (HS) verbunden ist.

2. Mehrstufen-Automatgetriebe nach dem Oberbegriff von Anspruch 1,
**dadurch gekennzeichnet,**
**dass** eine Servoeinrichtung (610) zur Betätigung des sechsten Schaltelementes (F) ständig mit der Drehzahl des ersten Eingangselementes des Hauptradsatzes (HS) rotiert,
**dass** die Servoeinrichtung (610) des sechsten Schaltelementes (F) räumlich gesehen zumindest weitgehend auf der dem Hauptradsatz (HS) abgewandten Seite des Vorschaltradsatzes (VS) angeordnet ist,
und **dass** das zweite und das sechste Schaltelement (B, F) über ein gemeinsames Ausgangselement (ZYLBF) mit dem ersten Eingangselement des Hauptradsatzes (HS) verbunden sind.

3. Mehrstufen-Automatgetriebe nach Anspruch 1 oder 2, **dadurch gekennzeichnet, dass** eine Servoeinrichtung (210) zur Betätigung des zweiten Schaltelementes (B) ständig mit der Drehzahl des ersten Elementes des Hauptradsatzes (HS) rotiert.

4. Mehrstufen-Automatgetriebe nach Anspruch 1, 2 oder 3, **dadurch gekennzeichnet, dass** das zweite und sechste Schaltelement (B, F) räumlich gesehen zumindest teilweise in einem Bereich axial zwischen dem Vorschaltradsatz (VS) und einer sich radial erstreckenden Gehäusewand (GW) des Getriebegehäuses (GG) angeordnet sind, räumlich gesehen auf der dem Hauptradsatz (HS) abgewandten Seite des Vorschaltradsatzes (VS), wobei Vorschaltradsatz (VS) und Hauptradsatz (HS) koaxial zueinander angeordnet sind.

5. Mehrstufen-Automatgetriebe nach einem der Ansprüche 1 bis 4, **dadurch gekennzeichnet, dass** das zweite und sechste Schaltelement (B, F) eine Baugruppe bilden, die räumlich gesehen
• axial zwischen dem ersten und dem dritten Schaltelement (A, C)
• und/oder axial zwischen dem ersten Schaltelement (A) und dem Hauptradsatz (HS)
• und/oder axial zwischen dem fünften und dem dritten Schaltelement (E, C)
• und/oder axial zwischen dem fünften Schaltelement (E) und dem Hauptradsatz (HS)
• und/oder axial neben dem ersten Schaltelement (A), insbesondere axial neben einem Lamellenpaket (100) des ersten Schaltelementes (A)
• und/oder axial neben dem dritten Schaltelement (C), insbesondere axial neben einem Lamellenpaket (300) des dritten Schaltelementes (C) angeordnet ist.

6. Mehrstufen-Automatgetriebe nach einem der Ansprüche 1 bis 5,**dadurch gekennzeichnet, dass** das zweite und sechste Schaltelement (B, F) zur Aufnahmen von Lamellen des zweiten und sechsten Schaltelementes (B, F) einen gemeinsamen Lamellenträger (ZYLBF) aufweisen, der mit dem ersten Eingangselement des Hauptradsatzes (HS) verbunden ist.

7. Mehrstufen-Automatgetriebe nach einem der Ansprüche 1 bis 6, **dadurch gekennzeichnet, dass** ein Lamellenpaket (200) des zweiten Schaltelementes (B) in axialer Richtung gesehen zumindest teilweise radial über einem Lamellenpaketes (600) des sechsten Schaltelementes (F) angeordnet ist.

8. Mehrstufen-Automatgetriebe nach einem der Ansprüche 1 bis 6, **dadurch gekennzeichnet, dass** ein Lamellenpaket (200) des zweiten Schaltelementes (B) axial neben einem Lamellenpaketes (600) des sechsten Schaltelementes (F) angeordnet ist.

9. Mehrstufen-Automatgetriebe nach Anspruch 8, **dadurch gekennzeichnet, dass** die Lamellenpakete (200, 600) des zweiten und sechsten Schaltelementes (B, F) auf gleichem oder zumindest ähnlichem Durchmesser angeordnet sind.

10. Mehrstufen-Automatgetriebe nach Anspruch 8 oder 9, **dadurch gekennzeichnet, dass** das Lamellenpaket (200) des zweiten Schaltelementes (B) näher am Vorschaltradsatz (VS) angeordnet ist als das Lamellenpaket (600) des sechsten Schaltelementes (F).

11. Mehrstufen-Automatgetriebe nach einem der Ansprüche 1 bis 7, **dadurch gekennzeichnet, dass** das sechste Schaltelement (F), insbesondere das Lamellenpaket (600) und die Servoeinrichtung (610) des sechsten Schaltelementes (F) zumindest weitgehend innerhalb eines Zylinderraumes angeordnet sind, der durch einen Lamellenträger des zweiten Schaltelementes (B) gebildet wird.

12. Mehrstufen-Automatgetriebe nach einem der Ansprüche 1 bis 7 oder 11
**dadurch gekennzeichnet,**
**dass** die Lamellenpakete (200, 600) des zweiten und sechsten Schaltelementes (B, F) benachbart zum Vorschaltradsatz (VS) angeordnet sind, dass die Servoeinrichtung (210) des zweiten Schaltelementes (B) zumindest überwiegend auf der dem Vorschaltradsatz (VS) abgewandten Seite des Lamellenpaketes (200) des zweiten Schaltelementes (B) angeordnet ist,
und **dass** die Servoeinrichtung (610) des sechsten Schaltelementes (F) zumindest überwiegend auf der dem Hauptradsatz (HS) abgewandten Seite des Lamellenpaketes (600) des sechsten Schaltelementes (F) angeordnet ist.

13. Mehrstufen-Automatgetriebe nach einem der Ansprüche 1 bis 7, 11, 12,
**dadurch gekennzeichnet, dass** ein Druckraum (611) der Servoeinrichtung (610) des sechsten Schaltelementes (F) näher am Vorschaltradsatz (VS) angeordnet ist als ein Druckraum (211) der Servoeinrichtung (210) des zweiten Schaltelementes (B).

14. Mehrstufen-Automatgetriebe nach einem der Ansprüche 1 bis 7, 11 bis 13
**dadurch gekennzeichnet, dass** der Druckraum (611) der Servoeinrichtung (610) des sechsten Schaltelementes (F) axial benachbart zu einem Druckausgleichsraum (212) eines dynamischen Druckausgleichs der Servoeinrichtung (210) des zweiten Schaltelementes (B) angeordnet ist.

15. Mehrstufen-Automatgetriebe nach einem der Ansprüche 1 bis 7,
**dadurch gekennzeichnet, dass** die Druckräume (211, 611) der Servoeinrichtungen (210, 610) des zweiten und sechsten Schaltelementes (B, F) zueinander axial benachbart angeordnet sind.

16. Mehrstufen-Automatgetriebe nach einem der Ansprüche 1 bis 7,
**dadurch gekennzeichnet,**
**dass** ein Druckraum (211) der Servoeinrichtung (210) des zweiten Schaltelementes (B) in axialer Richtung gesehen zumindest überwiegend radial über einem Druckraum (611) der Servoeinrichtung (610) des sechsten Schaltelementes (F) angeordnet ist,
und/oder dass ein Druckausgleichsraum (212) eines dynamischen Druckausgleichs der Servoeinrichtung (210) des zweiten Schaltelementes (B) in axialer Richtung gesehen zumindest überwiegend radial über einem Druckausgleichsraum (612) eines dynamischen Druckausgleichs der Servoeinrichtung (610) des sechsten Schaltelementes (F) angeordnet ist.

17. Mehrstufen-Automatgetriebe nach einem der Ansprüche 1 bis 7, 11,
**dadurch gekennzeichnet,**
**dass** der Druckausgleichsraum (212) der Servoeinrichtung (210) des zweiten Schaltelementes (B) näher am Vorschaltradsatz (VS) angeordnet ist als der Druckraum (211) der Servoeinrichtung (210) des zweiten Schaltelementes (B), und/oder dass der Druckausgleichsraum (612) der Servoeinrichtung (610) des sechsten Schaltelementes (F) näher am Vorschaltradsatz (VS) angeordnet ist als der Druckraum (611) der Servoeinrichtung (610) des sechsten Schaltelementes (F).

18. Mehrstufen-Automatgetriebe nach Anspruch 1, 2 oder 3, **dadurch gekennzeichnet,**
**dass** das zweite Schaltelement (B) räumlich gesehen zumindest teilweise in einem Bereich axial zwischen dem Vorschaltradsatz (VS) und dem Hauptradsatz (HS) angeordnet ist,
und **dass** das sechste Schaltelement (F) räumlich gesehen zumindest teilweise in einem Bereich axial zwischen dem Vorschaltradsatz (VS) und einer sich radial erstreckenden Gehäusewand (GW) des Getriebegehäuses (GG) angeordnet ist, räumlich gesehen auf der dem Hauptradsatz (HS) abgewandten Seite des Vorschaltradsatzes (VS),
wobei Vorschaltradsatz (VS) und Hauptradsatz (HS) koaxial zueinander angeordnet sind.

19. Mehrstufen-Automatgetriebe nach dem Oberbegriff von Anspruch 1,
**dadurch gekennzeichnet,**
**dass** eine Servoeinrichtung (610) zur Betätigung des sechsten Schaltelementes (F) ständig mit der Drehzahl des ersten Eingangselementes des Hauptradsatzes (HS) rotiert,
**dass** die Servoeinrichtung (610) des sechsten Schaltelementes (F) räumlich gesehen zumindest weitgehend in einem Bereich axial zwischen Vorschaltradsatz (VS) und Hauptradsatz (HS) angeordnet ist,
und **dass** das Ausgangselement (230) des zweiten Schaltelementes (B) über das Ausgangselement (630) des sechsten Schaltelementes (F) das Ausgangselement (230) des zweiten Schaltelementes (B) mit dem ersten Eingangselement des Hauptradsatzes (HS) verbunden ist.

20. Mehrstufen-Automatgetriebe nach Anspruch 19, **dadurch gekennzeichnet, dass** eine Servoeinrichtung (210) zur Betätigung des zweiten Schaltelementes (B) ständig mit der Drehzahl des Ausgangselementes des Vorschaltradsatzes (VS) rotiert.

21. Mehrstufen-Automatgetriebe nach Anspruch 19 oder 20, **dadurch gekennzeichnet,**
**dass** das zweite Schaltelement (B) räumlich gesehen zumindest teilweise in einem Bereich axial zwischen dem Vorschaltradsatz (VS) und einer sich radial erstreckenden Gehäusewand (GW) des Getriebegehäuses (GG) angeordnet ist, räumlich gesehen auf der dem Hauptradsatz (HS) abgewandten Seite des Vorschaltradsatzes (VS),
wobei Vorschaltradsatz (VS) und Hauptradsatz (HS) koaxial zueinander angeordnet sind.

22. Mehrstufen-Automatgetriebe nach Anspruch 19, 20 oder 21, **dadurch gekennzeichnet,**
**dass** das zweite Schaltelement (B) räumlich gesehen auf der Seite des ersten Schaltelement (A) angeordnet ist, die dem sechsten Schaltelement (F) gegenüber liegt,
und **dass** das sechste Schaltelement (F), räumlich gesehen
• axial neben dem fünften Schaltelement (E)
• und/oder axial zwischen dem fünften und dem dritten Schaltelement (E, C)
• und/oder axial zwischen dem fünften Schaltelement (E) und dem Hauptradsatz (HS)
• und/oder axial neben dem dritten Schaltelement (C)
angeordnet ist.

23. Mehrstufen-Automatgetriebe nach einem der Ansprüche 19 bis 22, **dadurch gekennzeichnet, dass** ein Ausgangselement (230) des zweiten Schaltelementes (B) einen Kupplungsraum des sechsten Schaltelementes (F), der durch einen Lamellenträger des sechsten Schaltelementes (F) gebildet wird, in axialer Richtung durchgreift.

24. Mehrstufen-Automatgetriebe nach einem der Ansprüche 1 bis 7, 11 bis 23 **dadurch gekennzeichnet, dass** ein Lamellenpaket (200) des zweiten Schaltelementes (B) axial neben einem Lamellenpaket (100) des ersten Schaltelementes (A) angeordnet ist, insbesondere auf gleichem oder zumindest ähnlichem Durchmesser.

25. Mehrstufen-Automatgetriebe nach einem der Ansprüche 1 bis 17, 19 bis 24 **dadurch gekennzeichnet, dass** das Lamellenpaket (100) des ersten Schaltelementes (A) näher am Hauptradsatz (HS) angeordnet ist als das Lamellenpaket (200) des zweiten Schaltelementes (B).

26. Mehrstufen-Automatgetriebe nach einem der Ansprüche 1 bis 3, **dadurch gekennzeichnet, dass** das Lamellenpaket (200) des zweiten Schaltelementes (B) näher am Hauptradsatz (HS) angeordnet ist als das Lamellenpaket (100) des ersten Schaltelementes (A).

27. Mehrstufen-Automatgetriebe nach einem der Ansprüche 1 bis 7, 19 bis 25, **dadurch gekennzeichnet, dass** das erste und zweite Schaltelement (A, B) einen gemeinsamen Lamellenträger (ZYLAB) aufweisen, der mit dem Ausgangselement des Vorschaltradsatzes (VS) verbunden ist.

28. Mehrstufen-Automatgetriebe nach einem der Ansprüche 1 bis 27,
**dadurch gekennzeichnet, dass** das fünfte Schaltelement (E), räumlich gesehen, axial zwischen dem Vorschaltradsatz (VS) und dem Hauptradsatz (HS) angeordnet ist, axial angrenzend an den Vorschaltradsatz (VS).

29. Mehrstufen-Automatgetriebe nach einem der Ansprüche 1 bis 5, 7
**dadurch gekennzeichnet, dass** das fünfte Schaltelement (E), räumlich gesehen, auf der Seite des Hauptradsatz (HS) angeordnet ist, die dem Vorschaltradsatz (VS) gegenüberliegt.

30. Mehrstufen-Automatgetriebe nach einem der Ansprüche 1 bis 7, 17 bis 19, **dadurch gekennzeichnet, dass** das Eingangselement (620) des sechsten Schaltelementes (F) auf einer verdrehfesten Nabe (GN) der Gehäusewand (GW) des Getriebegehäuses (GG) gelagert ist.

31. Mehrstufen-Automatgetriebe nach einem der Ansprüche 1 bis 3, 18, 19
**dadurch gekennzeichnet, dass** das Ausgangselement (630) des sechsten Schaltelementes (F) auf dem mit der Antriebswelle (AN) verbundenes Eingangselement (620) des sechsten Schaltelementes (F) gelagert ist.

32. Mehrstufen-Automatgetriebe nach einem der Ansprüche 1 bis 18,
**dadurch gekennzeichnet, dass** das Ausgangselement (630) des sechsten Schaltelementes (F) und/oder das Ausgangselement (230) des zweiten Schaltelementes (B) und/oder das Eingangselement (620) auf einer verdrehfesten Nabe (GN) der Gehäusewand (GW) des Getriebegehäuses (GG) gelagert ist.

33. Mehrstufen-Automatgetriebe nach einem der Ansprüche 30 bis 32,
**dadurch gekennzeichnet, dass** die Nabe (GN) der Gehäusewand (GW) Kanäle und/oder Bohrungen aufweist zur Zufuhr von Druck- und/oder Schmiermittel zur Servoeinrichtung (610, 210, 110) des sechsten und/oder zweiten und/oder ersten Schaltelementes (F, B, A).

34. Mehrstufen-Automatgetriebe nach einem der Ansprüche 1 bis 33,
**dadurch gekennzeichnet,**
**dass** der Vorschaltradsatz (VS) ein Sonnenrad (SO_VS), ein Hohlrad (HO_VS) sowie einen gekoppelten Steg (ST_VS), an dem innere und äußere Planetenräder (P1_VS, P2_VS) verdrehbar gelagert sind, aufweist, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse (GG) festgesetzt ist,
und **dass** der Hauptradsatz (HS) als Zweisteg-Vierwellen-Getriebe in Bauart eines Ravigneaux-Radsatzes ausgeführt ist mit zwei Sonnenrädern (S1_HS, S2_HS), einem Hohlrad (HO_HS), sowie einem gekoppelten Steg (ST_HS), an dem lange Planetenräder (P1_HS) und kurze Planetenräder (P2_HS) verdrehbar gelagert sind, wobei
• die langen Planetenräder (P1_HS) des Hauptradsatzes (HS) mit dem Hohlrad (HO_HS) und dem ersten Sonnenrad (S1_HS) des Hauptradsatzes (HS) kämmen,
• die kurzen Planetenräder (P2_HS) des Hauptradsatzes (HS) mit den langen Planetenräder (P1_HS) und dem zweiten Sonnenrad (S2_HS) des Hauptradsatzes (HS) kämmen,
• das erste Sonnenrad (S1_HS) des Hauptradsatzes (HS) das erste Eingangselement des Hauptradsatzes (HS) bildet und mit den Ausgangselementen (230, 330, 630) des zweiten, dritten und sechsten Schaltelementes (B, C, F) verbunden ist,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der Steg (ST_HS) des Hauptradsatzes (HS) das dritte Eingangselement des Hauptradsatzes (HS) bildet und mit den Ausgangselementen (430, 530) des vierten und fünften Schaltelementes (D, E) verbunden ist, und
• das Hohlrad (HO_HS) des Hauptradsatzes (HS) das Ausgangselement des Hauptradsatzes (HS) bildet und mit der Abtriebswelle (AB) verbunden ist.

35. Mehrstufen-Automatgetriebe nach einem der Ansprüche 1 bis 34,
**dadurch gekennzeichnet, dass** durch selektives Schließen der Schaltelemente (A bis F) zumindest acht Vorwärtsgänge derart schaltbar sind, dass die Drehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, wobei
• im ersten Vorwärtsgang das erste und vierte Schaltelement (A, D),
• im zweiten Vorwärtsgang das erste und dritte Schaltelement (A, C),
• im dritten Vorwärtsgang das erste und zweite Schaltelement (A, B),
• im vierten Vorwärtsgang das erste und sechste Schaltelement (A, F),
• im fünften Vorwärtsgang das erste und fünfte Schaltelement (A, E),
• im sechsten Vorwärtsgang das fünfte und sechste Schaltelement (E, F),
• im siebten Vorwärtsgang das zweite und fünfte Schaltelement (B, E) und
• im achten Vorwärtsgang das dritte und fünfte Schaltelement (C, E) geschlossen sind,
und wobei in einem Rückwärtsgang das vierte Schaltelement (D) und zusätzlich entweder das zweite Schaltelement (B) oder das sechste Schaltelement (F) geschlossen sind.

## Claims (Claims for the following Contracting State(s): DE FR GB)

1. Multi-speed automatic transmission, with a drive shaft (AN), a driven shaft (AB), an upstream wheel set (VS), a main wheel set (HS) and at least six shift elements (A to F), with the following features:
• the upstream wheel set (VS) is formed as a double planetary wheel set,
• an output element of the upstream wheel set (VS) rotates with a rotational speed which is lower than the input rotational speed of the drive shaft (AN),
• an input element of the upstream wheel set (VS) is continuously connected to the drive shaft (AN),
• an element of the upstream wheel set (VS) is connected to a transmission housing (GG) of the multi-speed automatic transmission,
• the main wheel set (HS) is formed as a coupled planetary wheel set with a plurality of input elements, which are not coupled to one another, and an output element,
• the output element of the main wheel set (HS) is continuously connected to the driven shaft (AB),
• an input element (120) of the first shift element (A) is connected to the output element of the upstream wheel set (VS),
• an output element (130) of the first shift element (A) is connected to a second input element of the main wheel set (HS),
• an input element (220) of the second shift element (B) is connected to the output element of the upstream wheel set (VS),
• an output element (230) of the second shift element (B) is connected to a first input element of the main wheel set (HS),
• an input element of the third shift element (C) is connected to the transmission housing (GG),
• an output element (330) of the third shift element (C) is connected to the first input element of the main wheel set (HS) or an input element of the main wheel set (HS) adjacent to this first input element in a rotational speed diagram,
• an input element of the fourth shift element (D) is connected to the transmission housing (GG),
• an output element (430) of the fourth shift element (D) is connected to a third input element of the main wheel set (HS),
• an input element (520) of the fifth shift element (E) is connected to the drive shaft (AN),
• an output element (530) of the fifth shift element (E) is connected to the third input element of the main wheel set (HS),
• an input element (620) of the sixth shift element (F) is connected to the drive shaft (AN),
• an output element (630) of the sixth shift element (F) is connected to the first input element of the main wheel set (HS) or an input element of the main wheel set (HS) adjacent to this first input element in a rotational speed diagram,
• the upstream wheel set (VS) has a sun wheel (SO_VS), a crown wheel (HO_VS) and a coupled web (ST_VS),
• inner and outer planetary wheels (P1_VS, P2_VS) are rotatably mounted on the coupled web (ST_VS) of the upstream wheel set (VS),
o wherein the inner planetary wheels (P1_VS) of the upstream wheel set (VS) cog with the sun wheel (SO_VS) and the outer planetary wheels (P2_VS) of the upstream wheel set (VS)
o and wherein the outer planetary wheels (P2_VS) of the upstream wheel set (VS) cog with the inner planetary wheels (P1_VS) and the crown wheel (HO_VS) of the upstream wheel set (VS),
• the web (ST_VS) of the upstream wheel set (VS) forms the input element of the upstream wheel set (VS),
• the crown wheel (HO_VS) of the upstream wheel set (VS) forms the output element of the upstream wheel set (VS),
• the sun wheel (SO_VS) of the upstream wheel set (VS) is fixed on the transmission housing (GG),
• the main wheel set (HS) is embodied as a two-web/four-shaft transmission with two coupled single planetary wheel sets, comprising two sun wheels (S1_HS, S2_HS), two crown wheels (H1_HS, H2_HS), a first web (ST1_HS), on which first planetary wheels (PL_HS) are rotatably mounted, and a coupled second web (ST2_HS) on which inner and outer planetary wheels (PLi_HS, Pla_HS) are rotatably mounted,
wherein
o the first planetary wheels (PL_HS) of the main wheel set (HS) cog with the first crown wheel (H1_HS) and the first sun wheel (S1_HS) of the main wheel set (HS),
o the inner planetary wheels (PLi_HS) of the main wheel set (HS) cog with the outer planetary wheels (PLa_HS) and the second sun wheel (S2_HS) of the main wheel set (HS)
o and the outer planetary wheels (PLa_HS) of the main wheel set (HS) cog with the inner planetary wheels (PLi_HS) and the second sun wheel (H2_HS) of the main wheel set (HS),
• the first sun wheel (S1_HS) and the coupled second web (ST2_HS) of the main wheel set (HS) are connected to one another, form the first input element of the main wheel set (HS) and are connected to the output elements (230, 330, 630) of the second, third and sixth shift element (B, C, F),
• the second sun wheel (S2_HS) of the main wheel set (HS) forms the second input element of the main wheel set (HS) and is connected to the output element (130) of the first shift element (A),
• the first web (ST1_HS) and the second crown wheel (H2_HS) of the main wheel set (HS) are connected to one another, form the third input element of the main wheel set (HS) and are connected to the output elements (430, 530) of the fourth and fifth shift element (D, E),
• the first crown wheel (H1_HS) of the main wheel set (HS) forms the output element of the main wheel set (HS) and is connected to the driven shaft (AB),
**characterized in that** a servo device (610) for activation of the sixth shift element (F) rotates continuously with the rotational speed of the first input element of the main wheel set (HS).

2. Multi-speed automatic transmission, with a drive shaft (AN), a driven shaft (AB), an upstream wheel set (VS), a main wheel set (HS) and at least six shift elements (A to F), with the following features:
• the upstream wheel set (VS) is formed as a double planetary wheel set,
• an output element of the upstream wheel set (VS) rotates with a rotational speed which is lower than the input rotational speed of the drive shaft (AN),
• an input element of the upstream wheel set (VS) is continuously connected to the drive shaft (AN),
• an element of the upstream wheel set (VS) is connected to a transmission housing (GG) of the multi-speed automatic transmission,
• the main wheel set (HS) is formed as a coupled planetary wheel set with a plurality of input elements, which are not coupled to one another, and an output element,
• the output element of the main wheel set (HS) is continuously connected to the driven shaft (AB),
• an input element (120) of the first shift element (A) is connected to the output element of the upstream wheel set (VS),
• an output element (130) of the first shift element (A) is connected to a second input element of the main wheel set (HS),
• an input element (220) of the second shift element (B) is connected to the output element of the upstream wheel set (VS),
• an output element (230) of the second shift element (B) is connected to a first input element of the main wheel set (HS),
• an input element of the third shift element (C) is connected to the transmission housing (GG),
• an output element (330) of the third shift element (C) is connected to the first input element of the main wheel set (HS) or an input element of the main wheel set (HS) adjacent to this first input element in a rotational speed diagram,
• an input element of the fourth shift element (D) is connected to the transmission housing (GG),
• an output element (430) of the fourth shift element (D) is connected to a third input element of the main wheel set (HS),
• an input element (520) of the fifth shift element (E) is connected to the drive shaft (AN),
• an output element (530) of the fifth shift element (E) is connected to the third input element of the main wheel set (HS),
• an input element (620) of the sixth shift element (F) is connected to the drive shaft (AN),
• an output element (630) of the sixth shift element (F) is connected to the first input element of the main wheel set (HS) or an input element of the main wheel set (HS) adjacent to this first input element in a rotational speed diagram,
• the upstream wheel set (VS) has a sun wheel (SO_VS), a crown wheel (HO_VS) and a coupled web (ST_VS),
• inner and outer planetary wheels (P1_VS, P2_VS) are rotatably mounted on the coupled web (ST_VS) of the upstream wheel set (VS),
o wherein the inner planetary wheels (P1_VS) of the upstream wheel set (VS) cog with the sun wheel (SO_VS) and the outer planetary wheels (P2_VS) of the upstream wheel set (VS)
o and wherein the outer planetary wheels (P2_VS) of the upstream wheel set (VS) cog with the inner planetary wheels (P1_VS) and the crown wheel (HO_VS) of the upstream wheel set (VS),
• the web (ST_VS) of the upstream wheel set (VS) forms the input element of the upstream wheel set (VS),
• the crown wheel (HO_VS) of the upstream wheel set (VS) forms the output element of the upstream wheel set (VS),
• the sun wheel (SO_VS) of the upstream wheel set (VS) is fixed on the transmission housing (GG),
• the main wheel set (HS) is embodied as a reduced three-web transmission, with three sun wheels (S1_HS, S2_HS, S3_HS), a coupled crown wheel (H13_HS), a second crown wheel (H2_HS), a coupled web (ST13_HS) with long planetary wheels (P13_HS) rotatably mounted thereon, and with a second web (ST2_HS) with short planetary wheels (P2_HS) rotatably mounted thereon, wherein
o the third sun wheel (S3_HS) of the main wheel set (HS) is arranged axially between the first and second sun wheel (S1_HS, S2_HS) of the main wheel set (HS),
o the long planetary wheels (P13_HS) of the main wheel set (HS) cog with the coupled crown wheel (H13_HS) and the first and third sun wheel (S1_HS, S3_HS) of the main wheel set (HS),
o the short planetary wheels (P2_HS) of the main wheel set (HS) cog with the second crown wheel (H2_HS) and the second sun wheel (S2_HS) of the main wheel set (HS)
o and the second and third sun wheel (S2_HS, S3_HS) of the main wheel set (HS) are connected fixedly to one another,
• the first sun wheel (S1_HS) of the main wheel set (HS) forms the first input element of the main wheel set (HS) and is connected to the output elements (230, 330, 630) of the second, third and sixth shift element (B, C, F),
• the coupled crown wheel (H13_HS) of the main wheel set (HS) forms the second input element of the main wheel set (HS) and is connected to the output element (130) of the first shift element (A),
• the second web (ST2_HS) of the main wheel set (HS) forms the third input element of the main wheel set (HS) and is connected to the output elements (430, 530) of the fourth and fifth shift element (D, E),
• the coupled web (ST13_HS) and the second crown wheel (H2_HS) of the main wheel set (HS) are connected fixedly to one another, form the output element of the main wheel set (HS) and are connected to the driven shaft (AB),
**characterized in that** a servo device (610) for activation of the sixth shift element (F) rotates continuously with the rotational speed of the first input element of the main wheel set (HS).

3. Multi-speed automatic transmission according to Claim 2, **characterized in that** the coupled web (ST13_HS) of the main wheel set (HS) has a web plate which penetrates radially inwards in the radial direction axially between the first and third sun wheel (S1_HS, S3_HS) of the main wheel set (HS),
wherein a hub, which is operatively connected to the driven shaft (AB) and in a rotationally fixed manner to this web plate, penetrates centrally through the first sun wheel (S1_HS) of the main wheel set (HS) in the axial direction.

4. Multi-speed automatic transmission according to Claim 2 or 3, **characterized in that** the long planetary wheels (P13_HS) of the main wheel set (HS) are formed as continuous planetary wheels.

5. Multi-speed automatic transmission according to one of Claims 1 to 4, **characterized in that** the output element (630) of the sixth shift element (F) is connected via the output element (230) of the second shift element (B) to the first input element of the main wheel set (HS).

6. Multi-speed automatic transmission according to one of Claims 1 to 4, **characterized in that** the sixth shift element (F) and the second shift element (B) are connected via a common output element (ZYLBF) to the first input element of the main wheel set (HS).

7. Multi-speed automatic transmission according to one of Claims 1 to 6, **characterized in that** a servo device (210) for activating the second shift element (B) rotates continuously with the rotational speed of the first element of the main wheel set (HS).

8. Multi-speed automatic transmission according to one of Claims 1 to 7, **characterized in that** the second and the sixth shift element (B, F) are arranged, as seen spatially, at least partially in a region axially between the upstream wheel set (VS) and a radially extending housing wall (GW) of the transmission housing (GG), as seen spatially, on the side of the upstream wheel set (VS) facing away from the main wheel set (HS), wherein the upstream wheel set (VS) and main wheel set (HS) are arranged coaxially with respect to one another.

9. Multi-speed automatic transmission according to one of Claims 1 to 7, **characterized in that** the second and the sixth shift element (B, F) are arranged, as seen spatially, at least partially in a region axially between the upstream wheel set (VS) and the main wheel set (HS), wherein the upstream wheel set (VS) and main wheel set (HS) are arranged coaxially with respect to one another.

10. Multi-speed automatic transmission according to one of Claims 1 to 9, **characterized in that** the second and sixth shift element (B, F) form a structural group which, as seen spatially, is arranged
• axially between the first and the third shift element (A, C)
• and/or axially between the first shift element (A) and the main wheel set (HS)
• and/or axially between the fifth and the third shift element (E, C)
• and/or axially between the fifth shift element (E) and the main wheel set (HS)
• and/or axially next to the first shift element (A), in particular axially next to a disc pack (100) of the first shift element (A)
• and/or axially next to the third shift element (C), in particular axially next to a disc pack (300) of the third shift element (C).

11. Multi-speed automatic transmission according to one of Claims 1 to 10, **characterized in that** the second and sixth shift element (B, F) have a common disc carrier (ZYLBF) for accommodating discs of the second and sixth shift element (B, F), which disc carrier is connected to the first input element of the main wheel set (HS).

12. Multi-speed automatic transmission according to one of Claims 1 to 11, **characterized in that** a disc pack (200) of the second shift element (B) is arranged, as seen in the axial direction, at least partially radially above a disc pack (600) of the sixth shift element (F).

13. Multi-speed automatic transmission according to one of Claims 1 to 12, **characterized in that** the disc packs (200, 600) of the second and sixth shift element (B, F) are arranged adjacent to the upstream wheel set (VS),
that the servo device (210) of the second shift element (B) is arranged at least primarily on the side of the disc pack (200) of the second shift element (B) facing away from the upstream wheel set (VS),
and that the servo device (610) of the sixth shift element (F) is arranged at least primarily on the side of the disc pack (600) of the sixth shift element (B, F) facing away from the upstream wheel set (VS).

14. Multi-speed automatic transmission according to Claim 12 or 13, **characterized in that** a pressure chamber (211) of the servo device (210) of the second shift element (B), as seen in the axial direction, is arranged at least primarily radially above a pressure chamber (611) of the servo device (610) of the sixth shift element (F).

15. Multi-speed automatic transmission according to Claim 12 or 13, **characterized in that** a pressure equalization chamber (212) of a dynamic pressure equalization of the servo device (210) of the second shift element (B), as seen in the axial direction, is arranged at least primarily radially above a pressure equalization chamber (612) of a dynamic pressure equalization of the servo device (610) of the sixth shift element (F).

16. Multi-speed automatic transmission according to one of Claims 1 to 11, **characterized in that** a disc pack (600) of the sixth shift element (F), as seen in the axial direction, is arranged at least partially radially above a disc pack (200) of the second shift element (B).

17. Multi-speed automatic transmission according to Claim 16, **characterized in that** the servo devices (210, 610) of the second and sixth shift element (B, F) of the upstream wheel set (VS) are arranged axially adjacent to the upstream wheel set (VS),
wherein the disc packs (200, 600) of the second and sixth shift element (B, F) are arranged on the side of the servo devices (210, 610) of the second and sixth shift element (B, F) facing away from the upstream wheel set (VS).

18. Multi-speed automatic transmission according to Claim 16 or 17, **characterized in that** the pressure chamber (211) of the servo device (210) of the second shift element (B) is arranged closer to the upstream wheel set (VS) than the pressure chamber (611) of the servo device (610) of the sixth shift element (F).

19. Multi-speed automatic transmission according to Claim 16, 17 or 18, **characterized in that** the pressure chamber (211) of the servo device (210) of the second shift element (B) is arranged axially adjacent to a pressure equalization chamber (612) of a dynamic pressure equalization of the servo device (610) of the sixth shift element (F).

20. Multi-speed automatic transmission according to Claim 16, **characterized in that** the pressure chamber (611) of the servo device (610) of the sixth shift element (F), as seen in the axial direction, is arranged at least primarily radially above the pressure chamber (211) of the servo device (210) of the second shift element (B).

21. Multi-speed automatic transmission according to Claim 16 or 20, **characterized in that** the pressure equalization chamber (612) of the servo device (610) of the sixth shift element (F), as seen in the axial direction, is arranged at least primarily radially above the pressure equalization chamber (212) of the servo device (210) of the second shift element (B).

22. Multi-speed automatic transmission according to one of Claims 1 to 11, **characterized in that** a disc pack (200) of the second shift element (B) is arranged axially next to a disc pack (600) of the sixth shift element (F).

23. Multi-speed automatic transmission according to one of Claims 12, 13, 19, 20 or 22, **characterized in that** the pressure chamber (611) of the servo device (610) of the sixth shift element (F) is arranged closer to the upstream wheel set (VS) than the pressure chamber (211) of the servo device (210) of the second shift element (B).

24. Multi-speed automatic transmission according to one of Claims 12, 13, 19, 20, 22 or 23, **characterized in that** the pressure chamber (611) of the servo device (610) of the sixth shift element (F) is arranged axially adjacent to a pressure equalization chamber (212) of a dynamic pressure equalization of the servo device (210) of the second shift element (B).

25. Multi-speed automatic transmission according to one of Claims 12, 13, 19, 20, 22 or 23, **characterized in that** the pressure chambers (211, 611) of the servo devices (210, 610) of the second and sixth shift element (B, F) are arranged adjacent to one another, in particular separated from one another by a lateral surface of the disc carrier (ZYLBF) shared by the second and sixth shift element (B, F).

26. Multi-speed automatic transmission according to one of Claims 1 to 25, **characterized in that** an input element (220) of the second shift element (B) connected to the output element of the upstream wheel set (VS) and/or an input element (620) of the sixth shift element (F) connected to the drive shaft (AN) engages in the axial direction radially externally around the disc packs (200, 600) of the second and sixth shift element (B, F).

27. Multi-speed automatic transmission according to one of Claims 1 to 26, **characterized in that** a connecting element (ZYL) arranged in the flow of force between the input element of the main wheel set (HS) and the output elements (230, 630) of the second and sixth shift element (B, F) engages radially externally fully over the first and fifth shift element (A, E) in the axial direction.

28. Multi-speed automatic transmission according to one of Claims 1 to 7, **characterized in that** the second shift element (B), as seen spatially, is arranged at least partially in a region axially between the upstream wheel set (VS) and the main wheel set (HS), and that the sixth shift element (F), as seen spatially, is arranged at least partially in a region axially between the upstream wheel set (VS) and a radially extending housing wall (GW) of the transmission housing (GG), as seen spatially, on the side of the upstream wheel set (VS) facing away from the main wheel set (HS),
wherein the upstream wheel set (VS) and main wheel set (HS) are arranged coaxially with respect to one another.

29. Multi-speed automatic transmission according to one of Claims 1 to 4, **characterized in that** the output element (230) of the second shift element (B) is connected via the output element (630) of the sixth shift element (F) to the first input element of the main wheel set (HS).

30. Multi-speed automatic transmission according to one of Claims 1 to 4 or 29, **characterized in that** the second shift element (B), as seen spatially, is arranged at least partially in a region axially between the upstream wheel set (VS) and a radially extending housing wall (GW) of the transmission housing (GG), as seen spatially, on the side of the upstream wheel set (VS) facing away from the main wheel set (HS),
and that the sixth shift element (F), as seen spatially, is arranged at least partially in a region axially between the upstream wheel set (VS) and the main wheel set (HS),
wherein the upstream wheel set (VS) and main wheel set (HS) are arranged coaxially with respect to one another.

31. Multi-speed automatic transmission according to one of Claims 1 to 4, 29 or 30, **characterized in that** a servo device (210) for activating the second shift element (B) rotates continuously with the rotational speed of the output element of the upstream wheel set (VS).

32. Multi-speed automatic transmission according to one of Claims 1 to 4 or 29 to 31, **characterized in that** the sixth shift element (F), as seen spatially, is arranged
• axially between the fifth and the third shift element (E, C)
• and/or axially between the fifth shift element (E) and the main wheel set (HS)
• and/or axially next to the fifth shift element (E)
• and/or axially next to the third shift element (C),
and that the second shift element (B), as seen spatially, is arranged on the side of the first shift element (A) which is opposite the sixth shift element (F).

33. Multi-speed automatic transmission according to one of Claims 1 to 4 or 29 to 32, **characterized in that** a pressure equalization chamber (612) of a dynamic pressure equalization of the servo device (610) of the sixth shift element (F) is arranged closer to the upstream wheel set (VS) than a pressure chamber (611) of the servo device (610) of the sixth shift element (F).

34. Multi-speed automatic transmission according to one of Claims 1 to 4 or 29 to 33, **characterized in that** a pressure chamber (611) of the servo device (610) of the sixth shift element (F) is arranged closer to the upstream wheel set (VS) than a pressure equalization chamber (612) of a dynamic pressure equalization of the servo device (610) of the sixth shift element (F).

35. Multi-speed automatic transmission according to one of Claims 1 to 34, **characterized in that** a disc pack (200) of the second shift element (B) is arranged axially next to a disc pack (100) of the first shift element (A).

36. Multi-speed automatic transmission according to one of Claims 1 to 35, **characterized in that** the disc pack (100) of the first shift element (A) is arranged closer to the main wheel set (HS) than the disc pack (200) of the second shift element (B).

37. Multi-speed automatic transmission according to one of Claims 1 to 35, **characterized in that** the disc pack (200) of the second shift element (B) is arranged closer to the main wheel set (HS) than the disc pack (100) of the first shift element (A).

38. Multi-speed automatic transmission according to one of Claims 1 to 37, **characterized in that** the first and second shift element (A, B) have a common disc carrier (ZYLAB) which is connected to the output element of the upstream wheel set (VS).

39. Multi-speed automatic transmission according to one of Claims 1 to 38, **characterized in that** the fifth shift element (E), as seen spatially, is arranged axially between the upstream wheel set (VS) and the main wheel set (HS), axially adjoining the upstream wheel set (VS).

40. Multi-speed automatic transmission according to one of Claims 1 to 38, **characterized in that** the fifth shift element (E), as seen spatially, is arranged on the side of the main wheel set (HS) which is opposite the upstream wheel set (VS).

41. Multi-speed automatic transmission according to one of Claims 1 to 40, **characterized in that** the output element (630) of the sixth shift element (F) is mounted on the input element (620), which is connected to the drive shaft (AN), of the sixth shift element (F), wherein the input element (620) of the sixth shift element (F) is mounted on a rotationally fixed hub (GN) of the housing wall (GW) of the transmission housing (GG).

42. Multi-speed automatic transmission according to one of Claims 1 to 40, **characterized in that** the output element (630) of the sixth shift element (F) and/or the output element (230) of the second shift element (B) is mounted on a rotationally fixed hub (GN) of the housing wall (GW) of the transmission housing (GG).

43. Multi-speed automatic transmission according to one of Claims 1 to 42, **characterized in that** an input element (120) of the first shift element (A) connected to the output element of the upstream wheel set (VS) is mounted on the input element (620), which is connected to the drive shaft (AN), of the sixth shift element (F).

44. Multi-speed automatic transmission according to one of Claims 1 to 42, **characterized in that** an output element (130), which is connected to the second input element of the main wheel set (HS), of the first shift element (A) is mounted on the input element (220), which is connected to the output element of the upstream wheel set (VS), of the second shift element (B).

45. Multi-speed automatic transmission according to one of Claims 1 to 44, **characterized in that** the input element (220), which is connected to the output element of the upstream wheel set (VS), of the second shift element (B) is mounted on the input element (620), which is connected to the drive shaft (AN), of the sixth shift element (F).

46. Multi-speed automatic transmission according to one of Claims 34 to 45, **characterized in that** the hub (GN) of the housing wall (GW) has conduits and/or bores for the supply of pressurizing medium and/or lubricant to the servo device (610, 210, 110) of the sixth and/or second and/or first shift element (F, B, A).

47. Multi-speed automatic transmission according to one of Claims 1 to 46, **characterized in that** by selective closing of the shift elements (A to F) at least eight forward gears can be shifted such that the rotational speed of the drive shaft (AN) can be transmitted to the driven shaft (AB) such that, for switching from one gear into the next highest or next lowest gear, of the currently activated shift elements, in each case only one shift element is opened and a further shift element is closed, wherein
• in the first forward gear the first and fourth shift element (A, D),
• in the second forward gear the first and third shift element (A, C),
• in the third forward gear the first and second shift element (A, B),
• in the fourth forward gear the first and sixth shift element (A, F),
• in the fifth forward gear the first and fifth shift element (A, E),
• in the sixth forward gear the fifth and sixth shift element (E, F),
• in the seventh forward gear the second and fifth shift element (B, E) and
• in the eighth forward gear the third and fifth shift element (C, E) are closed,
and wherein, in a reverse gear, the fourth shift element (D) and additionally either the second shift element (B) or the sixth shift element (F) are closed.

## Claims (Claims for the following Contracting State(s): AT BE BG CH CY CZ DK EE ES FI GR HU IE IS IT LI LT LU LV MC NL PL PT RO SE SI SK TR)

1. Multi-speed automatic transmission, with a drive shaft (AN), a driven shaft (AB), an upstream wheel set (VS), a main wheel set (HS) and at least six shift elements (A to F), with the following features:
• the upstream wheel set (VS) is formed as a double planetary wheel set,
• an output element of the upstream wheel set (VS) rotates with a rotational speed which is lower than the input rotational speed of the drive shaft (AN),
• an input element of the upstream wheel set (VS) is continuously connected to the drive shaft (AN),
• an element of the upstream wheel set (VS) is connected to a transmission housing (GG) of the multi-speed automatic transmission,
• the main wheel set (HS) is formed as a coupled planetary wheel set with a plurality of input elements, which are not coupled to one another, and an output element,
• the output element of the main wheel set (HS) is continuously connected to the driven shaft (AB),
• an input element (120) of the first shift element (A) is connected to the output element of the upstream wheel set (VS),
• an output element (130) of the first shift element (A) is connected to a second input element of the main wheel set (HS),
• an input element (220) of the second shift element (B) is connected to the output element of the upstream wheel set (VS),
• an output element (230) of the second shift element (B) is connected to a first input element of the main wheel set (HS),
• an input element of the third shift element (C) is connected to the transmission housing (GG),
• an output element (330) of the third shift element (C) is connected to the first input element of the main wheel set (HS) or an input element of the main wheel set (HS) adjacent to this first input element in a rotational speed diagram,
• an input element of the fourth shift element (D) is connected to the transmission housing (GG),
• an output element (430) of the fourth shift element (D) is connected to a third input element of the main wheel set (HS),
• an input element (520) of the fifth shift element (E) is connected to the drive shaft (AN),
• an output element (530) of the fifth shift element (E) is connected to the third input element of the main wheel set (HS),
• an input element (620) of the sixth shift element (F) is connected to the drive shaft (AN),
• an output element (630) of the sixth shift element (F) is connected to the first input element of the main wheel set (HS) or an input element of the main wheel set (HS) adjacent to this first input element in a rotational speed diagram,
**characterized in that** a servo device (610) for activation of the sixth shift element (F) rotates continuously with the rotational speed of the first input element of the main wheel set (HS), **in that** the servo device (610) of the sixth shift element (F), as seen spatially, is arranged at least substantially on the side of the upstream wheel set (VS) facing away from the main wheel set (HS), and **in that** the output element (630) of the sixth shift element (F) is connected via the output element (230) of the second shift element (B) to the first input element of the main wheel set (HS).

2. Multi-speed automatic transmission according to the preamble of Claim 1, **characterized in that** a servo device (610) for activation of the sixth shift element (F) rotates continuously with the rotational speed of the first input element of the main wheel set (HS),
**in that** the servo device (610) of the sixth shift element (F), as seen spatially, is arranged at least substantially on the side of the upstream wheel set (VS) facing away from the main wheel set (HS),
and **in that** the second and the sixth shift element (B, F) are connected via a common output element (ZYLBF) to the first input element of the main wheel set (HS).

3. Multi-speed automatic transmission according to Claim 1 or 2, **characterized in that** a servo device (210) for activating the second shift element (B) rotates continuously with the rotational speed of the first element of the main wheel set (HS).

4. Multi-speed automatic transmission according to Claim 1, 2 or 3, **characterized in that** the second and the sixth shift element (B, F) are arranged, as seen spatially, at least partially in a region axially between the upstream wheel set (VS) and a radially extending housing wall (GW) of the transmission housing (GG), as seen spatially, on the side of the upstream wheel set (VS) facing away from the main wheel set (HS), wherein the upstream wheel set (VS) and main wheel set (HS) are arranged coaxially with respect to one another.

5. Multi-speed automatic transmission according to one of Claims 1 to 4, **characterized in that** the second and sixth shift element (B, F) form a structural group which, as seen spatially, is arranged
• axially between the first and the third shift element (A, C)
• and/or axially between the first shift element (A) and the main wheel set (HS)
• and/or axially between the fifth and the third shift element (E, C)
• and/or axially between the fifth shift element (E) and the main wheel set (HS)
• and/or axially next to the first shift element (A), in particular axially next to a disc pack (100) of the first shift element (A)
• and/or axially next to the third shift element (C), in particular axially next to a disc pack (300) of the third shift element (C).

6. Multi-speed automatic transmission according to one of Claims 1 to 5, **characterized in that** the second and sixth shift element (B, F) have a common disc carrier (ZYLBF) for accommodating discs of the second and sixth shift element (B, F), which disc carrier is connected to the first input element of the main wheel set (HS).

7. Multi-speed automatic transmission according to one of Claims 1 to 6, **characterized in that** a disc pack (200) of the second shift element (B) is arranged, as seen in the axial direction, at least partially radially above a disc pack (600) of the sixth shift element (F).

8. Multi-speed automatic transmission according to one of Claims 1 to 6, **characterized in that** a disc pack (200) of the second shift element (B) is arranged axially adjacent to a disc pack (600) of the sixth shift element (F).

9. Multi-speed automatic transmission according to Claim 8, **characterized in that** the disc packs (200, 600) of the second and sixth shift elements (B, F) are arranged at the same diameter or at least at a similar diameter.

10. Multi-speed automatic transmission according to Claim 8 or 9, **characterized in that** the disc park (200) of the second shift element (B) is arranged closer to the upstream wheel set (VS) than the disk park (600) of the sixth shift element (F).

11. Multi-speed automatic transmission according to one of Claims 1 to 7, **characterized in that** the sixth shift element (F), in particular the disc pack (600) and the servo device (610) of the sixth shift element (F), are arranged at least substantially within a cylindrical chamber formed by a disc carrier of the second shift element (B).

12. Multi-speed automatic transmission according to one of Claims 1 to 7 or 11, **characterized in that** the disc packs (200, 600) of the second and sixth shift element (B, F) are arranged adjacent to the upstream wheel set (VS),
that the servo device (210) of the second shift element (B) is arranged at least primarily on the side of the disc pack (200) of the second shift element (B) facing away from the upstream wheel set (VS),
and that the servo device (610) of the sixth shift element (F) is arranged at least primarily on the side of the disc pack (600) of the sixth shift element (F) facing away from the main wheel set (HS).

13. Multi-speed automatic transmission according to one of Claims 1 to 7, 11, 12, **characterized in that** a pressure chamber (611) of the servo device (610) of the sixth shift element (F) is arranged closer to the upstream wheel set (VS) than a pressure chamber (211) of the servo device (210) of the second shift element (B).

14. Multi-speed automatic transmission according to one of Claims 1 to 7, 11 to 13, **characterized in that** the pressure chamber (611) of the servo device (610) of the sixth shift element (F) is arranged axially adjacent to a pressure equalization chamber (212) of a dynamic pressure equalization of the servo device (210) of the second shift element (B).

15. Multi-speed automatic transmission according to one of Claims 1 to 7, **characterized in that** the pressure chambers (211, 611) of the servo devices (210, 610) of the second and sixth shift element (B, F) are arranged axially adjacent to one another.

16. Multi-speed automatic transmission according to one of Claims 1 to 7, **characterized in that** a pressure chamber (211) of the servo device (210) of the second shift element (B), as seen in the axial direction, is arranged at least primarily radially above a pressure chamber (611) of the servo device (610) of the sixth shift element (F),
and/or **in that** a pressure equalization chamber (212) of a dynamic pressure equalization of the servo device (210) of the second shift element (B), as seen in the axial direction, is arranged at least primarily radially above a pressure equalization chamber (612) of a dynamic pressure equalization of the servo device (610) of the sixth shift element (F).

17. Multi-speed automatic transmission according to one of Claims 1 to 7, 11, **characterized in that** the pressure equalization chamber (212) of the servo device (210) of the second shift element (B) is arranged closer to the upstream wheel set (VS) than the pressure chamber (211) of the servo device (210) of the second shift element (B) and/or **in that** the pressure equalization chamber (612) of the servo device (610) of the sixth shift element (F) is arranged closer to the upstream wheel set (VS) than the pressure chamber (611) of the servo device (610) of the sixth shift element (F).

18. Multi-speed automatic transmission according to Claim 1, 2 or 3, **characterized in that** the second shift element (B), as seen spatially, is arranged at least partially in a region axially between the upstream wheel set (VS) and the main wheel set (HS),
and that the sixth shift element (F), as seen spatially, is arranged at least partially in a region axially between the upstream wheel set (VS) and a radially extending housing wall (GW) of the transmission housing (GG), as seen spatially, on the side of the upstream wheel set (VS) facing away from the main wheel set (HS),
wherein the upstream wheel set (VS) and main wheel set (HS) are arranged coaxially with respect to one another.

19. Multi-speed automatic transmission according to the preamble of Claim 1, **characterized in that** a servo device (610) for actuating the sixth shift element (F) rotates continuously with the rotational speed of the first input element of the main wheel set (HS),
**in that** the servo device (610) of the sixth shift element (F), as seen spatially, is arranged at least substantially in a region axially between the upstream wheel set (BS) and the main wheel set (HS),
and **in that** the output element (230) of the second shift element (B) is connected via the output element (630) of the sixth shift element (F) to the first input element of the main wheel set (HS).

20. Multi-speed automatic transmission according to Claim 19, **characterized in that** a servo device (210) for activating the second shift element (B) rotates continuously with the rotational speed of the output element of the upstream wheel set (VS).

21. Multi-speed automatic transmission according to Claim 19 or 20, **characterized in that** the second shift element (B), as seen spatially, is arranged at least partially in a region axially between the upstream wheel set (VS) and a radially extending housing wall (GW) of the transmission housing (GG), as seen spatially, on the side of the upstream wheel set (VS) facing away from the main wheel set (HS),
wherein the upstream wheel set (VS) and main wheel set (HS) are arranged coaxially with respect to one another.

22. Multi-speed automatic transmission according to Claim 19, 20 or 21, **characterized in that** the second shift element (B), as seen spatially, is arranged on the side of the first shift element (A) which is opposite the sixth shift element (F),
and **in that** the sixth shift element (F), as seen spatially, is arranged
• axially next to the fifth shift element (E)
• and/or axially between the fifth and the third shift element (E, C)
• and/or axially between the fifth shift element (E) and the main wheel set (HS)
• and/or axially next to the third shift element (C).

23. Multi-speed automatic transmission according to one of Claims 19 to 22, **characterized in that** an output element (230) of the second shift element (B) extends in the axial direction through a clutch chamber of the sixth shift element (F), said clutch chamber being formed by a disc carrier of the sixth shift element (F).

24. Multi-speed automatic transmission according to one of Claims 1 to 7, 11 to 23, **characterized in that** a disc pack (200) of the second shift element (B) is arranged axially next to a disc pack (100) of the first shift element (A), in particular at the same diameter or at least at a similar diameter.

25. Multi-speed automatic transmission according to one of Claims 1 to 17, 19 to 24, **characterized in that** the disc pack (100) of the first shift element (A) is arranged closer to the main wheel set (HS) than the disc pack (200) of the second shift element (B).

26. Multi-speed automatic transmission according to one of Claims 1 to 3, **characterized in that** the disc pack (200) of the second shift element (B) is arranged closer to the main wheel set (HS) than the disc pack (100) of the first shift element (A).

27. Multi-speed automatic transmission according to one of Claims 1 to 7, 19 to 25, **characterized in that** the first and second shift element (A, B) have a common disc carrier (ZYLAB) which is connected to the output element of the upstream wheel set (VS).

28. Multi-speed automatic transmission according to one of Claims 1 to 27, **characterized in that** the fifth shift element (E), as seen spatially, is arranged axially between the upstream wheel set (VS) and the main wheel set (HS), axially adjoining the upstream wheel set (VS).

29. Multi-speed automatic transmission according to one of Claims 1 to 5, 7, **characterized in that** the fifth shift element (E), as seen spatially, is arranged on the side of the main wheel set (HS) which is opposite the upstream wheel set (VS).

30. Multi-speed automatic transmission according to one of Claims 1 to 7, 17 to 19, **characterized in that** the input element (620) of the sixth shift element (F) is mounted on a rotationally fixed hub (GN) of the housing wall (GW) of the transmission housing (GG).

31. Multi-speed automatic transmission according to one of Claims 1 to 3, 18, 19, **characterized in that** the output element (630) of the sixth shift element (F) is mounted on the input element (620), which is connected to the drive shaft (AN), of the sixth shift element (F).

32. Multi-speed automatic transmission according to one of Claims 1 to 18, **characterized in that** the output element (630) of the sixth shift element (F) and/or the output element (230) of the second shift element (B) and/or the input element (620) is mounted on a rotationally fixed hub (GN) of the housing wall (GW) of the transmission housing (GG).

33. Multi-speed automatic transmission according to one of Claims 30 to 32, **characterized in that** the hub (GN) of the housing wall (GW) has conduits and/or bores for the supply of pressurizing medium and/or lubricant to the servo device (610, 210, 110) of the sixth and/or second and/or first shift element (F, B, A).

34. Multi-speed automatic transmission according to one of Claims 1 to 33, **characterized in that** the upstream wheel set (VS) has a sun wheel (SO_VS), a crown wheel (HO_VS) and a coupled web (ST_VS) on which inner and outer planetary wheels (P1_VS, P2_VS) are rotatably mounted, wherein
• the inner planetary wheels (P1_VS) of the upstream wheel set (VS) cog with the sun wheel (SO_VS) and the outer planetary wheels (P2_VS) of the upstream wheel set (VS),
• the outer planetary wheels (P2_VS) of the upstream wheel set (VS) cog with the inner planetary wheels (P1_VS) and the crown wheel (HO_VS) of the upstream wheel set (VS),
• the web (ST_VS) of the upstream wheel set (VS) forms the input element, which is permanently connected to the drive shaft (AN), of the upstream wheel set (VS),
• the crown wheel (HO_VS) of the upstream wheel set (VS) forms the output element, which can be connected to input elements of the main wheel set (HS), of the upstream wheel set (VS), and
• the sun wheel (SO_VS) of the upstream wheel set (VS) is fixed on the transmission housing (GG),
and **in that** the main wheel set (HS) is embodied as a two-web/four-shaft transmission in the form of a Ravigneaux wheel set, with two sun wheels (S1_HS, S2_HS), a crown wheel (HO_HS) and a coupled web (ST_HS) on which long planetary wheels (P1_HS) and short planetary wheels (P2_HS) are rotatably mounted, wherein
• the long planetary wheels (P1_HS) of the main wheel set (HS) cog with the crown wheel (HO_HS) and the first sun wheel (S1_HS) of the main wheel set (HS),
• the short planetary wheels (P2_HS) of the main wheel set (HS) cog with the long planetary wheels (P1_HS) and the second sun wheel (S2_HS) of the main wheel set (HS),
• the first sun wheel (S1_HS) of the main wheel set (HS) forms the first input element of the main wheel set (HS) and is connected to the output elements (230, 330, 630) of the second, third and sixth shift element (B, C, F),
• the second sun wheel (S2_HS) of the main wheel set (HS) forms the second input element of the main wheel set (HS) and is connected to the output element (130) of the first shift element (A),
• the web (ST_HS) of the main wheel set (HS) forms the third input element of the main wheel set (HS) and is connected to the output elements (430, 530) of the fourth and fifth shift element (D, E), and
• the crown wheel (HO_HS) of the main wheel set (HS) forms the output element of the main wheel set (HS) and is connected to the driven shaft (AB).

35. Multi-speed automatic transmission according to one of Claims 1 to 34, **characterized in that** by selective closing of the shift elements (A to F) at least eight forward gears can be shifted such that the rotational speed of the drive shaft (AN) can be transmitted to the driven shaft (AB) such that, for switching from one gear into the next highest or next lowest gear, of the currently activated shift elements, in each case only one shift element is opened and a further shift element is closed, wherein
• in the first forward gear the first and fourth shift element (A, D),
• in the second forward gear the first and third shift element (A, C),
• in the third forward gear the first and second shift element (A, B),
• in the fourth forward gear the first and sixth shift element (A, F),
• in the fifth forward gear the first and fifth shift element (A, E),
• in the sixth forward gear the fifth and sixth shift element (E, F),
• in the seventh forward gear the second and fifth shift element (B, E) and
• in the eighth forward gear the third and fifth shift element (C, E) are closed,
and wherein, in a reverse gear, the fourth shift element (D) and additionally either the second shift element (B) or the sixth shift element (F) are closed.

## Revendications (Revendications pour l'(les) Etat(s) contractant(s) suivant(s): DE FR GB)

1. Boîte de vitesses automatique à rapports multiples, comprenant un arbre d'entraînement (AN), un arbre de sortie (AB), un train de roues monté devant la boîte de vitesses (VS), un train de roues principal (HS) et au moins six éléments de commutation (A à F), comprenant les caractéristiques suivantes :
- le train de roues monté devant la boîte de vitesses (VS) est réalisé sous forme de double train planétaire,
- un élément de sortie du train de roues monté devant la boîte de vitesses (VS) tourne avec une vitesse de rotation qui est inférieure à la vitesse de rotation d'entrée de l'arbre d'entraînement (AN),
- un élément d'entrée du train de roues monté devant la boîte de vitesses (VS) est connecté en permanence à l'arbre d'entraînement (AN),
- un élément du train de roues monté devant la boîte de vitesses (VS) est connecté à un boîtier (GG) de la boîte de vitesses automatique à rapports multiples,
- le train de roues principal (HS) est réalisé sous forme de train planétaire accouplé avec plusieurs éléments d'entrée non accouplés les uns aux autres et avec un élément de sortie,
- l'élément de sortie du train de roues principal (HS) est connecté en permanence à l'arbre de sortie (AB),
- un élément d'entrée (120) du premier élément de commutation (A) est connecté à l'élément de sortie du train de roues monté devant la boîte de vitesses (VS),
- un élément de sortie (130) du premier élément de commutation (A) est connecté à un deuxième élément d'entrée du train de roues principal (HS),
- un élément d'entrée (220) du deuxième élément de commutation (B) est connecté à l'élément de sortie du train de roues monté devant la boîte de vitesses (VS),
- un élément de sortie (230) du deuxième élément de commutation (B) est connecté à un premier élément d'entrée du train de roues principal (HS),
- un élément d'entrée du troisième élément de commutation (C) est connecté au boîtier (GG) de la boîte de vitesses,
- un élément de sortie (330) du troisième élément de commutation (C) est connecté au premier élément d'entrée du train de roues principal (HS) ou à un élément d'entrée du train de roues principal (HS) adjacent à ce premier élément d'entrée dans un plan de vitesse de rotation,
- un élément d'entrée du quatrième élément de commutation (D) est connecté au boîtier (GG) de la boîte de vitesses,
- un élément de sortie (430) du quatrième élément de commutation (D) est connecté à un troisième élément d'entrée du train de roues principal (HS),
- un élément d'entrée (520) du cinquième élément de commutation (E) est connecté à l'arbre d'entraînement (AN),
- un élément de sortie (530) du cinquième élément de commutation (E) est connecté au troisième élément d'entrée du train de roues principal (HS),
- un élément d'entrée (620) du sixième élément de commutation (F) est connecté à l'arbre d'entraînement (AN),
- un élément de sortie (630) du sixième élément de commutation (F) est connecté au premier élément d'entrée du train de roues principal (HS) ou à un élément d'entrée du train de roues principal (HS) adjacent à ce premier élément d'entrée dans le plan de vitesse de rotation,
- le train de roues monté devant la boîte de vitesses (VS) présente une roue solaire (SO_VS), une couronne (HO-VS) ainsi qu'un porte-satellites accouplé (ST-VS),
- sur le porte-satellites accouplé (ST-VS) du train de roues monté devant la boîte de vitesses (VS) sont montées de manière rotative des roues planétaires internes et externes (P1-VS, P2_VS),
- les roues planétaires internes (P1_VS) du train de roues monté devant la boîte de vitesses (VS) s'engrenant avec la roue solaire (SO_VS) et les roues planétaires externes (P2_VS) du train de roues monté devant la boîte de vitesses (VS),
- et les roues planétaires externes (P2_VS) du train de roues monté devant la boîte de vitesses (VS) s'engrenant avec les roues planétaires internes (P1_VS) et la couronne (HO_VS) du train de roues monté devant la boîte de vitesses (VS),
- le porte-satellites (ST_VS) du train de roues monté devant la boîte de vitesses (VS) forme l'élément d'entrée du train de roues monté devant la boîte de vitesses (VS),
- la couronne (HO_VS) du train de roues monté devant la boîte de vitesses (VS) forme l'élément de sortie du train de roues monté devant la boîte de vitesses (VS),
- la roue solaire (SO-VS) du train de roues monté devant la boîte de vitesses (VS) est fixée sur le boîtier (GG) de la boîte de vitesses,
- le train de roues principal (HS) est réalisé sous forme de transmission à deux porte-satellites et quatre arbres, avec deux trains planétaires individuels accouplés, comprenant deux roues solaires (S1_HS, S2_HS), deux couronnes (H1_HS, H2_HS), un premier porte-satellites (ST1_HS), sur lequel sont montées, de manière rotative, des premières roues planétaires (PL_HS), ainsi qu'un deuxième porte-satellites (ST2_HS) accouplé, sur lequel sont montées, de manière rotative, des roues planétaires internes et externes (PLi-HS, PLa-HS),
- les premières roues planétaires (PL_HS) du train de roues principal (HS) s'engrenant avec la première couronne (H1_HS) et la première roue solaire (S1_HS) du train de roues principal (HS),
- les roues planétaires internes (PLi-HS) du train de roues principal (HS) s'engrenant avec les roues planétaires externes (PLa-HS) et la deuxième roue solaire (S2_HS) du train de roues principal (HS)
- et les roues planétaires externes (PLa-HS) du train de roues principal (HS) s'engrenant avec les roues planétaires internes (PLi-HS) et la deuxième couronne (H2_HS) du train de roues principal (HS),
- la première roue solaire (S1_HS) et le deuxième porte-satellites accouplé (ST2_HS) du train de roues principal (HS) sont connectés l'un à l'autre, forment le premier élément d'entrée du train de roues principal (HS) et sont connectés aux éléments de sortie (230, 330, 630) du deuxième, troisième et sixième élément de commutation (B, C, F),
- la deuxième roue solaire (S2_HS) du train de roues principal (HS) forme le deuxième élément d'entrée du train de roues principal (HS) et est connectée à l'élément de sortie (130) du premier élément de commutation (A),
- le premier porte-satellites (ST1_HS) et la deuxième couronne (H2_HS) du train de roues principal (HS) sont connectés l'un à l'autre, forment le troisième élément d'entrée du train de roues principal (HS) et sont connectés aux éléments de sortie (430, 530) du quatrième et du cinquième élément de commutation (D, E),
- la première couronne (H1_HS) du train de roues principal (HS) forme l'élément de sortie du train de roues principal (HS) et est connectée à l'arbre de sortie (AB),
**caractérisée en ce qu'**un dispositif d'asservissement (610) pour l'actionnement du sixième élément de commutation (F) tourne en permanence à la vitesse de rotation du premier élément d'entrée du train de roues principal (HS).

2. Boîte de vitesses automatique à rapports multiples, comprenant un arbre d'entraînement (AN), un arbre de sortie (AB), un train de roues monté devant la boîte de vitesses (VS), un train de roues principal (HS) et au moins six éléments de commutation (A à F), comprenant les caractéristiques suivantes :
- le train de roues monté devant la boîte de vitesses (VS) est réalisé sous forme de double train planétaire,
- un élément de sortie du train de roues monté devant la boîte de vitesses (VS) tourne avec une vitesse de rotation qui est inférieure à la vitesse de rotation d'entrée de l'arbre d'entraînement (AN),
- un élément d'entrée du train de roues monté devant la boîte de vitesses (VS) est connecté en permanence à l'arbre d'entraînement (AN),
- un élément du train de roues monté devant la boîte de vitesses (VS) est connecté à un boîtier (GG) de la boîte de vitesses automatique à rapports multiples,
- le train de roues principal (HS) est réalisé sous forme de train planétaire accouplé avec plusieurs éléments d'entrée non accouplés les uns aux autres et avec un élément de sortie,
- l'élément de sortie du train de roues principal (HS) est connecté en permanence à l'arbre de sortie (AB),
- un élément d'entrée (120) du premier élément de commutation (A) est connecté à l'élément de sortie du train de roues monté devant la boîte de vitesses (VS),
- un élément de sortie (130) du premier élément de commutation (A) est connecté à un deuxième élément d'entrée du train de roues principal (HS),
- un élément d'entrée (220) du deuxième élément de commutation (B) est connecté à l'élément de sortie du train de roues monté devant la boîte de vitesses (VS),
- un élément de sortie (230) du deuxième élément de commutation (B) est connecté à un premier élément d'entrée du train de roues principal (HS),
- un élément d'entrée du troisième élément de commutation (C) est connecté au boîtier (GG) de la boîte de vitesses,
- un élément de sortie (330) du troisième élément de commutation (C) est connecté au premier élément d'entrée du train de roues principal (HS) ou à un élément d'entrée du train de roues principal (HS) adjacent à ce premier élément d'entrée dans un plan de vitesse de rotation,
- un élément d'entrée du quatrième élément de commutation (D) est connecté au boîtier (GG) de la boîte de vitesses,
- un élément de sortie (430) du quatrième élément de commutation (D) est connecté à un troisième élément d'entrée du train de roues principal (HS),
- un élément d'entrée (520) du cinquième élément de commutation (E) est connecté à l'arbre d'entraînement (AN),
- un élément de sortie (530) du cinquième élément de commutation (E) est connecté au troisième élément d'entrée du train de roues principal (HS),
- un élément d'entrée (620) du sixième élément de commutation (F) est connecté à l'arbre d'entraînement (AN),
- un élément de sortie (630) du sixième élément de commutation (F) est connecté au premier élément d'entrée du train de roues principal (HS) ou à un élément d'entrée du train de roues principal (HS) adjacent à ce premier élément d'entrée dans le plan de vitesse de rotation,
- le train de roues monté devant la boîte de vitesses (VS) présente une roue solaire (SO_VS), une couronne (HO-VS) ainsi qu'un porte-satellites accouplé (ST-VS),
- sur le porte-satellites accouplé (ST-VS) du train de roues monté devant la boîte de vitesses (VS) sont montées de manière rotative des roues planétaires internes et externes (P1-VS, P2_VS),
- les roues planétaires internes (P1_VS) du train de roues monté devant la boîte de vitesses (VS) s'engrenant avec la roue solaire (SO_VS) et les roues planétaires externes (P2_VS) du train de roues monté devant la boîte de vitesses (VS),
- et les roues planétaires externes (P2_VS) du train de roues monté devant la boîte de vitesses (VS) s'engrenant avec les roues planétaires internes (P1_VS) et la couronne (HO_VS) du train de roues monté devant la boîte de vitesses (VS),
- le porte-satellites (ST_VS) du train de roues monté devant la boîte de vitesses (VS) forme l'élément d'entrée du train de roues monté devant la boîte de vitesses (VS),
- la couronne (HO_VS) du train de roues monté devant la boîte de vitesses (VS) forme l'élément de sortie du train de roues monté devant la boîte de vitesses (VS),
- la roue solaire (SO-VS) du train de roues monté devant la boîte de vitesses (VS) est fixée sur le boîtier (GG) de la boîte de vitesses,
- le train de roues principal (HS) est réalisé sous forme de transmission à trois porte-satellites réduites, avec trois roues solaires (S1_HS, S2_HS, S3_HS), une couronne accouplée (H13_HS), une deuxième couronne (H2_HS), un porte-satellites (ST13_HS) accouplé avec des roues planétaires longues (P13_HS) montées sur celui-ci de manière rotative, ainsi qu'avec un deuxième porte-satellites (ST2_HS) avec des roues planétaires courtes (P2_HS) montées sur celui-ci de manière rotative,
- la troisième roue solaire (S3_HS) du train de roues principal (HS) étant disposée axialement entre la première et la deuxième roue solaire (S1_HS, S2_HS) du train de roues principal (HS),
- les roues planétaires longues (P13_HS) du train de roues principal (HS) s'engrenant avec la couronne accouplée (H13_HS) et la première et la troisième roue solaire (S1_HS, S3_HS) du train de roues principal (HS),
- les roues planétaires courtes (P2_HS) du train de roues principal (HS) s'engrenant avec la deuxième couronne (H2_HS) et la deuxième roue solaire (S2_HS) du train de roues principal (HS)
- et la deuxième et la troisième roue solaire (S2_HS, S3_HS) du train de roues principal (HS) étant connectées fixement l'une à l'autre,
- la première roue solaire (S1_HS) du train de roues principal (HS) forme le premier élément d'entrée du train de roues principal (HS) et est connectée aux éléments de sortie (230, 330, 630) du deuxième, troisième et sixième élément de commutation (B, C, F),
- la couronne accouplée (H13_HS) du train de roues principal (HS) forme le deuxième élément d'entrée du train de roues principal (HS) et est connectée à l'élément de sortie (130) du premier élément de commutation (A),
- le deuxième porte-satellites (ST2_HS) du train de roues principal (HS) forme le troisième élément d'entrée du train de roues principal (HS) et est connecté aux éléments de sortie (430, 530) du quatrième et du cinquième élément de commutation (D, E),
- le porte-satellites accouplé (ST13_HS) et la deuxième couronne (H2_HS) du train de roues principal (HS) sont connectés fixement l'un à l'autre, forment l'élément de sortie du train de roues principal (HS) et son connectés a l'arbre de sortie (AB),
**caractérisé en ce qu'**un dispositif d'asservissement (610) pour l'actionnement du sixième élément de commutation (F) tourne en permanence à la vitesse de rotation du premier élément d'entrée du train de roues principal (HS).

3. Boîte de vitesses automatique à rapports multiples selon la revendication 2, **caractérisée en ce que** le porte-satellites accouplé (ST13_HS) du train de roues principal (HS) présente une tôle de porte-satellites qui vient en prise radialement vers l'intérieur dans la direction radiale axialement entre la première et la troisième roue solaire (S1_HS, S3_HS) du train de roues principal (HS), un moyeu, qui est en liaison fonctionnelle de manière solidaire en rotation avec cette tôle de porte-satellites et avec l'arbre de sortie (AB), traversant centralement dans la direction axiale la première roue solaire (S1_HS) du train de roues principal (HS).

4. Boîte de vitesses automatique à rapports multiples selon la revendication 2 ou 3, **caractérisée en ce que** les roues planétaires longues (P13_HS) du train de roues principal (HS) sont réalisées sous forme de roues planétaires étagées.

5. Boîte de vitesses automatique à rapports multiples selon l'une quelconque des revendications 1 à 4, **caractérisée en ce que** l'élément de sortie (630) du sixième élément de commutation (F) est connecté par le biais de l'élément de sortie (230) du deuxième élément de commutation (B) au premier élément d'entrée du train de roues principal (HS).

6. Boîte de vitesses automatique à rapports multiples selon l'une quelconque des revendications 1 à 4, **caractérisée en ce que** le sixième élément de commutation (F) et le deuxième élément de commutation (B) sont connectés par le biais d'un élément de sortie commun (ZYLBF) au premier élément d'entrée du train de roues principal (HS).

7. Boîte de vitesses automatique à rapports multiples selon l'une quelconque des revendications 1 à 6, **caractérisée en ce qu'**un dispositif d'asservissement (210) pour l'actionnement du deuxième élément de commutation (B) tourne en permanence à la vitesse de rotation du premier élément du train de roues principal (HS).

8. Boîte de vitesses automatique à rapports multiples selon l'une quelconque des revendications 1 à 7, **caractérisée en ce que** le deuxième et le sixième élément de commutation (B, F), vus spatialement, sont disposés au moins en partie dans une région axialement entre le train de roues monté devant la boîte de vitesses (VS) et une paroi de boîtier (GW) s'étendant radialement du boîtier (GG) de la boîte de vitesses, vus spatialement sur le côté du train de roues monté devant la boîte de vitesses (VS) opposé au train de roues principal (HS), le train de roues monté devant la boîte de vitesses (VS) et le train de roues principal (HS) étant disposés coaxialement l'un par rapport à l'autre.

9. Boîte de vitesses automatique à rapports multiples selon l'une quelconque des revendications 1 à 7, **caractérisée en ce que** le deuxième et le sixième élément de commutation (B, F), vus spatialement, sont disposés au moins en partie dans une région axialement entre le train de roues monté devant la boîte de vitesses (VS) et le train de roues principal (HS), le train de roues monté devant la boîte de vitesses (VS) et le train de roues principal (HS) étant disposés coaxialement l'un par rapport à l'autre.

10. Boîte de vitesses automatique à rapports multiples selon l'une quelconque des revendications 1 à 9, **caractérisée en ce que** le deuxième et le sixième élément de commutation (B, F) forment un module qui, vu spatialement, est disposé
- axialement entre le premier et le troisième élément de commutation (A, C)
- et/ou axialement entre le premier élément de commutation (A) et le train de roues principal (HS)
- et/ou axialement entre le cinquième et le troisième élément de commutation (E, C)
- et/ou axialement entre le cinquième élément de commutation (E) et le train de roues principal (HS),
- et/ou axialement à côté du premier élément de commutation (A), en particulier axialement à côté d'un paquet de lamelles (100) du premier élément de commutation (A),
- et/ou axialement à côté du troisième élément de commutation (C), en particulier axialement à côté d'un paquet de lamelles (300) du troisième élément de commutation (C).

11. Boîte de vitesses automatique à rapports multiples selon l'une quelconque des revendications 1 à 10, **caractérisée en ce que** le deuxième et le sixième élément de commutation (B, F) pour recevoir des lamelles du deuxième et du sixième élément de commutation (B, F) présentent un support de lamelles commun (ZYLBF), qui est connecté au premier élément d'entrée du train de roues principal (HS).

12. Boîte de vitesses automatique à rapports multiples selon l'une quelconque des revendications 1 à 11, **caractérisée en ce qu'**un paquet de lamelles (200) du deuxième élément de commutation (B) est disposé, vu dans la direction axiale, au moins en partie radialement au-dessus d'un paquet de lamelles (600) du sixième élément de commutation (F).

13. Boîte de vitesses automatique à rapports multiples selon l'une quelconque des revendications 1 à 12, **caractérisée en ce que** les paquets de lamelles (200, 600) du deuxième et du sixième élément de commutation (B, F) sont disposés à côté du train de roues monté devant la boîte de vitesses (VS), **en ce que** le dispositif d'asservissement (210) du deuxième élément de commutation (B) est disposé principalement sur le côté du paquet de lamelles (200) du deuxième élément de commutation (B) opposé au train de roues monté devant la boîte de vitesses (VS),
et **en ce que** le dispositif d'asservissement (610) du sixième élément de commutation (F) est disposé au moins principalement sur le côté du paquet de lamelles (600) du sixième élément de commutation (B, F) opposé au train de roues monté devant la boîte de vitesses (VS).

14. Boîte de vitesses automatique à rapports multiples selon les revendications 12 ou 13, **caractérisée en ce qu'**un espace de pression (211) du dispositif d'asservissement (210) du deuxième élément de commutation (B), vu dans la direction axiale, est disposé au moins principalement radialement au-dessus d'un espace de pression (611) du dispositif d'asservissement (610) du sixième élément de commutation (F).

15. Boîte de vitesses automatique à rapports multiples selon les revendications 12 ou 13, **caractérisée en ce qu'**un espace de compensation de pression (212) d'une compensation de pression dynamique du dispositif d'asservissement (210) du deuxième élément de commutation (B), vu dans la direction axiale, est disposé au moins principalement radialement au-dessus d'un espace de compensation de pression (612) d'une compensation de pression dynamique du dispositif d'asservissement (610) du sixième élément de commutation (F).

16. Boîte de vitesses automatique à rapports multiples selon l'une quelconque des revendications 1 à 11, **caractérisée en ce qu'**un paquet de lamelles (600) du sixième élément de commutation (F), vu dans la direction axiale, est disposé au moins en partie radialement au-dessus d'un paquet de lamelles (200) du deuxième élément de commutation (B).

17. Boîte de vitesses automatique à rapports multiples selon la revendication 16, **caractérisée en ce que** les dispositifs d'asservissement (210, 610) du deuxième et du sixième élément de commutation (B, F) sont disposés axialement à côté du train de roues monté devant la boîte de vitesses (VS),
les paquets de lamelles (200, 600) du deuxième et du sixième élément de commutation (B, F) étant disposés du côté des dispositifs d'asservissement (210, 610) du deuxième et du sixième élément de commutation (B, F) opposé au train de roues monté devant la boîte de vitesses (VS).

18. Boîte de vitesses automatique à rapports multiples selon la revendication 16 ou 17, **caractérisée en ce que** l'espace de pression (211) du dispositif d'asservissement (210) du deuxième élément de commutation (B) est disposé plus près du train de roues monté devant la boîte de vitesses (VS) que l'espace de pression (611) du dispositif d'asservissement (610) du sixième élément de commutation (F).

19. Boîte de vitesses automatique à rapports multiples selon la revendication 16, 17 ou 18, **caractérisée en ce que** l'espace de pression (211) du dispositif d'asservissement (210) du deuxième élément de commutation (B) est disposé axialement à côté d'un espace de compensation de pression (612) d'une compensation de pression dynamique du dispositif d'asservissement (610) du sixième élément de commutation (F).

20. Boîte de vitesses automatique à rapports multiples selon la revendication 16, **caractérisée en ce que** l'espace de pression (611) du dispositif d'asservissement (610) du sixième élément de commutation (F), vu dans la direction axiale, est disposé au moins principalement radialement au-dessus de l'espace de pression (211) du dispositif d'asservissement (210) du deuxième élément de commutation (B).

21. Boîte de vitesses automatique à rapports multiples selon la revendication 16 ou 20, **caractérisée en ce que** l'espace de compensation de pression (612) du dispositif d'asservissement (610) du sixième élément de commutation (F), vu dans la direction axiale, est disposé au moins principalement radialement au-dessus de l'espace de compensation de pression (212) du dispositif d'asservissement (210) du deuxième élément de commutation (B).

22. Boîte de vitesses automatique à rapports multiples selon l'une quelconque des revendications 1 à 11, **caractérisée en ce qu'**un paquet de lamelles (200) du deuxième élément de commutation (B) est disposé axialement à côté d'un paquet de lamelles (600) du sixième élément de commutation (F).

23. Boîte de vitesses automatique à rapports multiples selon l'une quelconque des revendications 12, 13, 19, 20 ou 22, **caractérisée en ce que** l'espace de pression (611) du dispositif d'asservissement (610) du sixième élément de commutation (F) est disposé plus près du train de roues monté devant la boîte de vitesses (VS) que l'espace de pression (211) du dispositif d'asservissement (210) du deuxième élément de commutation (B).

24. Boîte de vitesses automatique à rapports multiples selon l'une quelconque des revendications 12, 13, 19, 20, 22 ou 23, **caractérisée en ce que** l'espace de pression (611) du dispositif d'asservissement (610) du sixième élément de commutation (F) est disposé axialement à côté d'un espace de compensation de pression (212) d'une compensation de pression dynamique du dispositif d'asservissement (210) du deuxième élément de commutation (B).

25. Boîte de vitesses automatique à rapports multiples selon l'une quelconque des revendications 12, 13, 19, 20, 22 ou 23, **caractérisée en ce que** les espaces de pression (211, 611) des dispositifs d'asservissement (210, 610) du deuxième et du sixième élément de commutation (B, F) sont disposés l'un à côté de l'autre, en particulier sont séparés l'un de l'autre par une surface d'enveloppe du support de lamelles (ZYLBF) commun au deuxième et au sixième élément de commutation (B, F).

26. Boîte de vitesses automatique à rapports multiples selon l'une quelconque des revendications 1 à 25, **caractérisée en ce qu'**un élément d'entrée (220) du deuxième élément de commutation (B) connecté à l'élément de sortie du train de roues monté devant la boîte de vitesses (VS) et/ou un élément d'entrée (620) du sixième élément de commutation (F) connecté à l'arbre d'entraînement (AN), viennent en prise radialement à l'extérieur dans la direction axiale autour des paquets de lamelles (200, 600) du deuxième et du sixième élément de commutation (B, F).

27. Boîte de vitesses automatique à rapports multiples selon l'une quelconque des revendications 1 à 26, **caractérisée en ce qu'**un élément de liaison (ZYL) disposé dans le flux de forces entre l'élément d'entrée du train de roues principal (HS) et les éléments de sortie (230, 630) du deuxième et du sixième élément de commutation (B, F), vient en prise par le dessus radialement à l'extérieur dans la direction axiale avec le premier et le cinquième élément de commutation (A, E).

28. Boîte de vitesses automatique à rapports multiples selon l'une quelconque des revendications 1 à 7, **caractérisée en ce que** le deuxième élément de commutation (B), vu spatialement, est disposé au moins en partie dans une région axialement entre le train de roues monté devant la boîte de vitesses (VS) et le train de roues principal (HS), et **en ce que** le sixième élément de commutation (F), vu spatialement, est disposé au moins partiellement dans une région axialement entre le train de roues monté devant la boîte de vitesses (VS) et une paroi de boîtier (GW) du boîtier (GG) de la boîte de vitesses s'étendant radialement, vu spatialement sur le côté du train de roues monté devant la boîte de vitesses (VS) opposé au train de roues principal (HS),
le train de roues monté devant la boîte de vitesses (VS) et le train de roues principal (HS) étant disposés coaxialement l'un par rapport à l'autre.

29. Boîte de vitesses automatique à rapports multiples selon l'une quelconque des revendications 1 à 4, **caractérisée en ce que** l'élément de sortie (230) du deuxième élément de commutation (B) est connecté par le biais de l'élément de sortie (630) du sixième élément de commutation (F) au premier élément d'entrée du train de roues principal (HS).

30. Boîte de vitesses automatique à rapports multiples selon l'une quelconque des revendications 1 à 4 ou 29, **caractérisée en ce que** le deuxième élément de commutation (B), vu spatialement, est disposé au moins en partie dans une région axialement entre le train de roues monté devant la boîte de vitesses (VS) et une paroi de boîtier (GW) du boîtier (GG) de la boîte de vitesses s'étendant radialement, vu spatialement sur le côté du train de roues monté devant la boîte de vitesses (VS) opposé au train de roues principal (HS),
et **en ce que** le sixième élément de commutation (F), vu spatialement, est disposé au moins partiellement dans une région axialement entre le train de roues monté devant la boîte de vitesses (VS) et le train de roues principal (HS),
le train de roues monté devant la boîte de vitesses (VS) et le train de roues principal (HS) étant disposés coaxialement l'un par rapport à l'autre.

31. Boîte de vitesses automatique à rapports multiples selon l'une quelconque des revendications 1 à 4, 29 ou 30, **caractérisée en ce qu'**un dispositif d'asservissement (210) pour l'actionnement du deuxième élément de commutation (B) tourne en permanence à la vitesse de rotation de l'élément de sortie du train de roues monté devant la boîte de vitesses (VS).

32. Boîte de vitesses automatique à rapports multiples selon l'une quelconque des revendications 1 à 4 ou 29 à 31, **caractérisée en ce que** le sixième élément de commutation (F), vu spatialement, est disposé
- axialement entre le cinquième et le troisième élément de commutation (E, C)
- et/ou axialement entre le cinquième élément de commutation (E) et le train de roues principal (HS),
- et/ou axialement à côté du cinquième élément de commutation (E),
- et/ou axialement à côté du troisième élément de commutation (C),
et **en ce que** le deuxième élément de commutation (B), vu spatialement, est disposé du côté du premier élément de commutation (A) qui est opposé au sixième élément de commutation (F).

33. Boîte de vitesses automatique à rapports multiples selon l'une quelconque des revendications 1 à 4 ou 29 à 32, **caractérisée en ce qu'**un espace de compensation de pression (612) d'une compensation de pression dynamique du dispositif d'asservissement (610) du sixième élément de commutation (F) est disposé plus près du train de roues monté devant la boîte de vitesses (VS) qu'un espace de pression (611) du dispositif d'asservissement (610) du sixième élément de commutation (F).

34. Boîte de vitesses automatique à rapports multiples selon l'une quelconque des revendications 1 à 4 ou 29 à 33, **caractérisée en ce qu'**un espace de pression (611) du dispositif d'asservissement (610) du sixième élément de commutation (F) est disposé plus près du train de roues monté devant la boîte de vitesses (VS) qu'un espace de compensation de pression (612) d'une compensation de pression dynamique du dispositif d'asservissement (610) du sixième élément de commutation (F).

35. Boîte de vitesses automatique à rapports multiples selon l'une quelconque des revendications 1 à 34, **caractérisée en ce qu'**un paquet de lamelles (200) du deuxième élément de commutation (B) est disposé axialement à côté d'un paquet de lamelles (100) du premier élément de commutation (A).

36. Boîte de vitesses automatique à rapports multiples selon l'une quelconque des revendications 1 à 35, **caractérisée en ce que** le paquet de lamelles (100) du premier élément de commutation (A) est disposé plus près du train de roues principal (HS) que le paquet de lamelles (200) du deuxième élément de commutation (B).

37. Boîte de vitesses automatique à rapports multiples selon l'une quelconque des revendications 1 à 35, **caractérisée en ce que** le paquet de lamelles (200) du deuxième élément de commutation (B) est disposé plus près du train de roues principal (HS) que le premier paquet de lamelles (100) du premier élément de commutation (A).

38. Boîte de vitesses automatique à rapports multiples selon l'une quelconque des revendications 1 à 37, **caractérisée en ce que** le premier et le deuxième élément de commutation (A, B) présentent un support de lamelles commun (ZYLAB) qui est connecté à l'élément de sortie du train de roues monté devant la boîte de vitesses (VS).

39. Boîte de vitesses automatique à rapports multiples selon l'une quelconque des revendications 1 à 38, **caractérisée en ce que** le cinquième élément de commutation (E), vu spatialement, est disposé axialement entre le train de roues monté devant la boîte de vitesses (VS) et le train de roues principal (HS), en position axialement adjacente au train de roues monté devant la boîte de vitesses (VS).

40. Boîte de vitesses automatique à rapports multiples selon l'une quelconque des revendications 1 à 38, **caractérisée en ce que** le cinquième élément de commutation (E), vu spatialement, est disposé sur le côté du train de roues principal (HS) qui est opposé au train de roues monté devant la boîte de vitesses (VS).

41. Boîte de vitesses automatique à rapports multiples selon l'une quelconque des revendications 1 à 40, **caractérisée en ce que** l'élément de sortie (630) du sixième élément de commutation (F) est monté sur l'élément d'entrée (620) du sixième élément de commutation (F) connecté à l'arbre d'entraînement (AN), l'élément d'entrée (620) du sixième élément de commutation (F) étant monté sur un moyeu fixe en rotation (GN) de la paroi de boîtier (GW) du boîtier (GG) de la boîte de vitesses.

42. Boîte de vitesses automatique à rapports multiples selon l'une quelconque des revendications 1 à 40, **caractérisée en ce que** l'élément de sortie (630) du sixième élément de commutation (F) et/ou l'élément de sortie (230) du deuxième élément de commutation (B) sont montés sur un moyeu fixe en rotation (GN) de la paroi de boîtier (GW) du boîtier (GG) de la boîte de vitesses.

43. Boîte de vitesses automatique à rapports multiples selon l'une quelconque des revendications 1 à 42, **caractérisée en ce qu'**un élément d'entrée (120) du premier élément de commutation (A) connecté à l'élément de sortie du train de roues monté devant la boîte de vitesses (VS) est monté sur l'élément d'entrée (620) du sixième élément de commutation (F) connecté à l'arbre d'entrée (AN).

44. Boîte de vitesses automatique à rapports multiples selon l'une quelconque des revendications 1 à 42, **caractérisée en ce qu'**un élément de sortie (130) du premier élément de commutation (A) connecté au deuxième élément d'entrée du train de roues principal (HS) est monté sur l'élément d'entrée (220) du deuxième élément de commutation (B) connecté au train de roues monté devant la boîte de vitesses (VS).

45. Boîte de vitesses automatique à rapports multiples selon l'une quelconque des revendications 1 à 44, **caractérisée en ce que** l'élément d'entrée (220) du deuxième élément de commutation (B) connecté à l'élément de sortie du train de roues monté devant la boîte de vitesses (VS) est monte sur l'élément d'entrée (620) du sixième élément de commutation (F) connecté à l'arbre d'entraînement (AN).

46. Boîte de vitesses automatique à rapports multiples selon l'une quelconque des revendications 34 à 45, **caractérisée en ce que** le moyeu (GN) de la paroi de boîtier (GW) présente des canaux et/ou des alésages pour l'alimentation d'agent sous pression et/ou de lubrifiant au dispositif d'asservissement (610, 210, 110) du sixième et/ou du deuxième et/ou du premier élément de commutation (F, B, A).

47. Boîte de vitesses automatique à rapports multiples selon l'une quelconque des revendications 1 à 46, **caractérisée en ce que** par fermeture sélective des éléments de commutation (A à F), au moins huit rapports de marche avant peuvent être commutés de telle sorte que la vitesse de rotation de l'arbre d'entraînement (AN) puisse être transmise à l'arbre de sortie (AB) de telle sorte que pour le passage d'un rapport au rapport suivant supérieur ou inférieur, seulement un élément de commutation soit à chaque fois ouvert parmi les éléments de commutation effectivement actionnés, et un autre élément de commutation soit fermé,
- dans le premier rapport de marche avant, le premier et le quatrième élément de commutation (A, D) étant fermés,
- dans le deuxième rapport de marche avant le premier et le troisième élément de commutation (A, C) étant fermés,
- dans le troisième rapport de marche avant le premier et le deuxième élément de commutation (A, B) étant fermés,
- dans le quatrième rapport de marche avant le premier et le sixième élément de commutation (A, F) étant fermés,
- dans le cinquième rapport de marche avant le premier et le cinquième élément de commutation (A, E) étant fermés,
- dans le sixième rapport de marche avant le cinquième et le sixième élément de commutation (E, F) étant fermés,
- dans le septième rapport de marche avant le deuxième et le cinquième élément de commutation (B, E) étant fermés, et
- dans le huitième rapport de marche avant le troisième et le cinquième élément de commutation (C, E) étant fermés,
et dans un rapport de marche arrière, le quatrième élément de commutation (D) et de puis soit le deuxième élément de commutation (B) soit le sixième élément de commutation (F) étant fermés.

## Revendications (Revendications pour l'(les) Etat(s) contractant(s) suivant(s): AT BE BG CH CY CZ DK EE ES FI GR HU IE IS IT LI LT LU LV MC NL PL PT RO SE SI SK TR)

1. Boîte de vitesses automatique à rapports multiples, comprenant un arbre d'entraînement (AN), un arbre de sortie (AB), un train de roues monté devant la boîte de vitesses (VS), un train de roues principal (HS) et au moins six éléments de commutation (A à F), comprenant les caractéristiques suivantes :
- le train de roues monté devant la boîte de vitesses (VS) est réalisé sous forme de double train planétaire,
- un élément de sortie du train de roues monté devant la boîte de vitesses (VS) tourne avec une vitesse de rotation qui est inférieure à la vitesse de rotation d'entrée de l'arbre d'entraînement (AN),
- un élément d'entrée du train de roues monté devant la boîte de vitesses (VS) est connecté en permanence à l'arbre d'entraînement (AN),
- un élément du train de roues monté devant la boîte de vitesses (VS) est connecté à un boîtier (GG) de la boîte de vitesses automatique à rapports multiples,
- le train de roues principal (HS) est réalisé sous forme de train planétaire accouplé avec plusieurs éléments d'entrée non accouplés les uns aux autres et avec un élément de sortie,
- l'élément de sortie du train de roues principal (HS) est connecté en permanence à l'arbre de sortie (AB),
- un élément d'entrée (120) du premier élément de commutation (A) est connecté à l'élément de sortie du train de roues monté devant la boîte de vitesses (VS),
- un élément de sortie (130) du premier élément de commutation (A) est connecté à un deuxième élément d'entrée du train de roues principal (HS),
- un élément d'entrée (220) du deuxième élément de commutation (B) est connecté à l'élément de sortie du train de roues monté devant la boîte de vitesses (VS),
- un élément de sortie (230) du deuxième élément de commutation (B) est connecté à un premier élément d'entrée du train de roues principal (HS),
- un élément d'entrée du troisième élément de commutation (C) est connecté au boîtier (GG) de la boîte de vitesses,
- un élément de sortie (330) du troisième élément de commutation (C) est connecté au premier élément d'entrée du train de roues principal (HS) ou à un élément d'entrée du train de roues principal (HS) adjacent à ce premier élément d'entrée dans un plan de vitesse de rotation,
- un élément d'entrée du quatrième élément de commutation (D) est connecté au boîtier (GG) de la boîte de vitesses,
- un élément de sortie (430) du quatrième élément de commutation (D) est connecté à un troisième élément d'entrée du train de roues principal (HS),
- un élément d'entrée (520) du cinquième élément de commutation (E) est connecté à l'arbre d'entraînement (AN),
- un élément de sortie (530) du cinquième élément de commutation (E) est connecté au troisième élément d'entrée du train de roues principal (HS),
- un élément d'entrée (620) du sixième élément de commutation (F) est connecté à l'arbre d'entraînement (AN),
- un élément de sortie (630) du sixième élément de commutation (F) est connecté au premier élément d'entrée du train de roues principal (HS) ou à un élément d'entrée du train de roues principal (HS) adjacent à ce premier élément d'entrée dans le plan de vitesse de rotation,
**caractérisée en ce qu'**un dispositif d'asservissement (610) pour l'actionnement du sixième élément de commutation (F) tourne en permanence à la vitesse de rotation du premier élément d'entrée du train de roues principal (HS),
**en ce que** le dispositif d'asservissement (610) du sixième élément de commutation (F), vu spatialement, est disposé au moins essentiellement sur le côté du train de roues monté devant la boîte de vitesses (VS) opposé au train de roues principal (HS),
et **en ce que** l'élément de sortie (630) du sixième élément de commutation (F) est connecté par le biais de l'élément de sortie (230) du deuxième élément de commutation (B) au premier élément d'entrée du train de roues principal (HS).

2. Boîte de vitesses automatique à rapports multiples selon le préambule de la revendication 1, **caractérisée en ce qu'**un dispositif d'asservissement (610) pour l'actionnement du sixième élément de commutation (F) tourne en permanence à la vitesse de rotation du premier élément d'entrée du train de roues principal (HS), **en ce que** le dispositif d'asservissement (610) du sixième élément de commutation (F), vu spatialement, est disposé au moins essentiellement sur le côté du train de roues monté devant la boîte de vitesses (VS) opposé au train de roues principal (HS),
et **en ce que** le deuxième et le sixième élément de commutation (B, F) sont connectés par le biais d'un élément de sortie commun (ZYLBF) au premier élément d'entrée du train de roues principal (HS).

3. Boîte de vitesses automatique à rapports multiples selon la revendication 1 ou 2, **caractérisée en ce qu'**un dispositif d'asservissement (210) pour l'actionnement du deuxième élément de commutation (B) tourne en permanence à la vitesse de rotation du premier élément du train de roues principal (HS).

4. Boîte de vitesses automatique à rapports multiples selon la revendication 1, 2 ou 3, **caractérisée en ce que** le deuxième et le sixième élément de commutation (B, F), vus spatialement, sont disposés au moins en partie dans une région axialement entre le train de roues monté devant la boîte de vitesses (VS) et une paroi de boîtier (GW) s'étendant radialement du boîtier (GG) de la boîte de vitesses, vus spatialement sur le côté du train de roues monté devant la boîte de vitesses (VS) opposé au train de roues principal (HS), le train de roues monté devant la boîte de vitesses (VS) et le train de roues principal (HS) étant disposés coaxialement l'un par rapport à l'autre.

5. Boîte de vitesses automatique à rapports multiples selon l'une quelconque des revendications 1 à 4, **caractérisée en ce que** le deuxième et le sixième élément de commutation (B, F) forment un module qui, vu spatialement, est disposé
- axialement entre le premier et le troisième élément de commutation (A, C)
- et/ou axialement entre le premier élément de commutation (A) et le train de roues principal (HS)
- et/ou axialement entre le cinquième et le troisième élément de commutation (E, C)
- et/ou axialement entre le cinquième élément de commutation (E) et le train de roues principal (HS),
- et/ou axialement à côté du premier élément de commutation (A), en particulier axialement à côté d'un paquet de lamelles (100) du premier élément de commutation (A),
- et/ou axialement à côté du troisième élément de commutation (C), en particulier axialement à côté d'un paquet de lamelles (300) du troisième élément de commutation (C).

6. Boîte de vitesses automatique à rapports multiples selon l'une quelconque des revendications 1 à 5, **caractérisée en ce que** le deuxième et le sixième élément de commutation (B, F) pour recevoir des lamelles du deuxième et du sixième élément de commutation (B, F) présentent un support de lamelles commun (ZYLBF), qui est connecté au premier élément d'entrée du train de roues principal (HS).

7. Boîte de vitesses automatique à rapports multiples selon l'une quelconque des revendications 1 à 6, **caractérisée en ce qu'**un paquet de lamelles (200) du deuxième élément de commutation (B) est disposé, vu dans la direction axiale, au moins en partie radialement au-dessus d'un paquet de lamelles (600) du sixième élément de commutation (F).

8. Boîte de vitesses automatique à rapports multiples selon l'une quelconque des revendications 1 à 6, **caractérisée en ce qu'**un paquet de lamelles (200) du deuxième élément de commutation (B) est disposé axialement à côté d'un paquet de lamelles (600) du sixième élément de commutation (F).

9. Boîte de vitesses automatique à rapports multiples selon la revendication 8, **caractérisée en ce que** les paquets de lamelles (200, 600) du deuxième et du sixième élément de commutation (B, F) sont disposés sur le même diamètre ou sur un diamètre au moins similaire.

10. Boîte de vitesses automatique à rapports multiples selon la revendication 8 ou 9, **caractérisée en ce que** le paquet de lamelles (200) du deuxième élément de commutation (B) est disposé plus près du train de roues monté devant la boîte de vitesses (VS) que le paquet de lamelles (600) du sixième élément de commutation (F).

11. Boîte de vitesses automatique à rapports multiples selon l'une quelconque des revendications 1 à 7, **caractérisée en ce que** le sixième élément de commutation (F), en particulier le paquet de lamelles (600) et le dispositif d'asservissement (610) du sixième élément de commutation (F), sont disposés au moins essentiellement à l'intérieur d'un espace cylindrique, qui est formé par un support de lamelles du deuxième élément de commutation (B).

12. Boîte de vitesses automatique à rapports multiples selon l'une quelconque des revendications 1 à 7 ou 11, **caractérisée en ce que** les paquets de lamelles (200, 600) du deuxième et du sixième élément de commutation (B, F) sont disposés à côté du train de roues monté devant la boîte de vitesses (VS), **en ce que** le dispositif d'asservissement (210) du deuxième élément de commutation (B) est disposé principalement sur le côté du paquet de lamelles (200) du deuxième élément de commutation (B) opposé au train de roues monté devant la boîte de vitesses (VS),
et **en ce que** le dispositif d'asservissement (610) du sixième élément de commutation (F) est disposé au moins principalement sur le côté du paquet de lamelles (600) du sixième élément de commutation (F) opposé au train de roues principal (HS).

13. Boîte de vitesses automatique à rapports multiples selon l'une quelconque des revendications 1 à 7, 11, 12, **caractérisée en ce qu'**un espace de pression (611) du dispositif d'asservissement (610) du sixième élément de commutation (F) est disposé plus près du train de roues monté devant la boîte de vitesses (VS) qu'un espace de pression (211) du dispositif d'asservissement (210) du deuxième élément de commutation (B).

14. Boîte de vitesses automatique à rapports multiples selon l'une quelconque des revendications 1 à 7, 11 à 13, **caractérisée en ce que** l'espace de pression (611) du dispositif d'asservissement (610) du sixième élément de commutation (F) est disposé axialement à côté d'un espace de compensation de pression (212) d'une compensation de pression dynamique du dispositif d'asservissement (210) du deuxième élément de commutation (B).

15. Boîte de vitesses automatique à rapports multiples selon l'une quelconque des revendications 1 à 7, **caractérisée en ce que** les espaces de pression (211, 611) des dispositifs d'asservissement (210, 610) du deuxième et du sixième élément de commutation (B, F) sont disposés axialement l'un à côté de l'autre.

16. Boîte de vitesses automatique à rapports multiples selon l'une quelconque des revendications 1 à 7, **caractérisée en ce qu'**un espace de pression (211) du dispositif d'asservissement (210) du deuxième élément de commutation (B), vu dans la direction axiale, est disposé au moins principalement radialement au-dessus d'un espace de pression (611) du dispositif d'asservissement (610) du sixième élément de commutation (F),
et/ou **en ce qu'**un espace de compensation de pression (212) d'une compensation de pression dynamique du dispositif d'asservissement (210) du deuxième élément de commutation (B), vu dans la direction axiale, est disposé au moins principalement radialement au-dessus d'un espace de compensation de pression (612) d'une compensation de pression dynamique du dispositif d'asservissement (610) du sixième élément de commutation (F).

17. Boîte de vitesses automatique à rapports multiples selon l'une quelconque des revendications 1 à 7, 11, **caractérisée en ce que** l'espace de compensation de pression (212) du dispositif d'asservissement (210) du deuxième élément de commutation (B) est disposé plus près du train de roues monté devant la boîte de vitesses (VS) que l'espace de pression (211) du dispositif d'asservissement (210) du deuxième élément de commutation (B), et/ou **en ce que** l'espace de compensation de pression (612) du dispositif d'asservissement (610) du sixième élément de commutation (F) est disposé plus près du train de roues monté devant la boîte de vitesses (VS) que l'espace de pression (611) du dispositif d'asservissement (610) du sixième élément de commutation (F).

18. Boîte de vitesses automatique à rapports multiples selon la revendication 1, 2 ou 3, **caractérisée en ce que** le deuxième élément de commutation (B), vu spatialement, est disposé au moins en partie dans une région axialement entre le train de roues monté devant la boîte de vitesses (VS) et le train de roues principal (HS),
et **en ce que** le sixième élément de commutation (F), vu spatialement, est disposé au moins partiellement dans une région axialement entre le train de roues monté devant la boîte de vitesses (VS) et une paroi de boîtier (GW) du boîtier (GG) de la boîte de vitesses s'étendant radialement, vu spatialement sur le côté du train de roues monté devant la boîte de vitesses (VS) opposé au train de roues principal (HS),
le train de roues monté devant la boîte de vitesses (VS) et le train de roues principal (HS) étant disposés coaxialement l'un par rapport à l'autre.

19. Boîte de vitesses automatique à rapports multiples selon le préambule de la revendication 1, **caractérisée en ce**
**qu'**un dispositif d'asservissement (610) pour l'actionnement du sixième élément de commutation (F) tourne en permanence à la vitesse de rotation du premier élément d'entrée du train de roues principal (HS),
**que** le dispositif d'asservissement (610) du sixième élément de commutation (F), vu spatialement, est disposé au moins essentiellement dans une région axialement entre le train de roues monté devant la boîte de vitesses (VS) et le train de roues principal (HS),
et en ce que l'élément de sortie (230) du deuxième élément de commutation (B) est connecté par le biais de l'élément de sortie (630) du sixième élément de commutation (F) au premier élément d'entrée du train de roues principal (HS).

20. Boîte de vitesses automatique à rapports multiples selon la revendication 19, **caractérisée en ce qu'**un dispositif d'asservissement (210) pour l'actionnement du deuxième élément de commutation (B) tourne en permanence à la vitesse de rotation de l'élément de sortie du train de roues monté devant la boîte de vitesses (VS).

21. Boîte de vitesses automatique à rapports multiples selon la revendication 19 ou 20, **caractérisée en ce que** le deuxième élément de commutation (B), vu spatialement, est disposé au moins en partie dans une région axialement entre le train de roues monté devant la boîte de vitesses (VS) et une paroi de boîtier (GW) du boîtier (GG) de la boîte de vitesses s'étendant radialement, vu spatialement sur le côté du train de roues monté devant la boîte de vitesses (VS) opposé au train de roues principal (HS),
le train de roues monté devant la boîte de vitesses (VS) et le train de roues principal (HS) étant disposés coaxialement l'un par rapport à l'autre.

22. Boîte de vitesses automatique à rapports multiples selon la revendication 19, 20 ou 21, **caractérisée en ce que** le deuxième élément de commutation (B), vu spatialement, est disposé du côté du premier élément de commutation (A) qui est opposé au sixième élément de commutation (F),
et **en ce que** le sixième élément de commutation (F), vu spatialement, est disposé
- axialement à côté du cinquième élément de commutation (E),
- et/ou axialement entre le cinquième et le troisième élément de commutation (E, C)
- et/ou axialement entre le cinquième élément de commutation (E) et le train de roues principal (HS),
- et/ou axialement à côté du troisième élément de commutation (C).

23. Boîte de vitesses automatique à rapports multiples selon l'une quelconque des revendications 19 à 22, **caractérisée en ce qu'**un élément de sortie (230) du deuxième élément de commutation (B) vient en prise dans la direction axiale à travers un espace d'accouplement du sixième élément de commutation (F) qui est formé par un support de lamelles du sixième élément de commutation (F).

24. Boîte de vitesses automatique à rapports multiples selon l'une quelconque des revendications 1 à 7, 11 à 23, **caractérisée en ce qu'**un paquet de lamelles (200) du deuxième élément de commutation (B) est disposé axialement à côté d'un paquet de lamelles (100) du premier élément de commutation (A), en particulier sur le même diamètre ou sur un diamètre au moins similaire.

25. Boîte de vitesses automatique à rapports multiples selon l'une quelconque des revendications 1 à 17, 19 à 24, **caractérisée en ce que** le paquet de lamelles (100) du premier élément de commutation (A) est disposé plus près du train de roues principal (HS) que le paquet de lamelles (200) du deuxième élément de commutation (B).

26. Boîte de vitesses automatique à rapports multiples selon l'une quelconque des revendications 1 à 3, **caractérisée en ce que** le paquet de lamelles (200) du deuxième élément de commutation (B) est disposé plus près du train de roues principal (HS) que le premier paquet de lamelles (100) du premier élément de commutation (A).

27. Boîte de vitesses automatique à rapports multiples selon l'une quelconque des revendications 1 à 7, 19 à 25, **caractérisée en ce que** le premier et le deuxième élément de commutation (A, B) présentent un support de lamelles commun (ZYLAB) qui est connecté à l'élément de sortie du train de roues monté devant la boîte de vitesses (VS).

28. Boîte de vitesses automatique à rapports multiples selon l'une quelconque des revendications 1 à 27, **caractérisée en ce que** le cinquième élément de commutation (E), vu spatialement, est disposé axialement entre le train de roues monté devant la boîte de vitesses (VS) et le train de roues principal (HS), en position axialement adjacente au train de roues monté devant la boîte de vitesses (VS).

29. Boîte de vitesses automatique à rapports multiples selon l'une quelconque des revendications 1 à 5, 7, **caractérisée en ce que** le cinquième élément de commutation (E), vu spatialement, est disposé sur le côté du train de roues principal (HS) qui est opposé au train de roues monté devant la boîte de vitesses (VS).

30. Boîte de vitesses automatique à rapports multiples selon l'une quelconque des revendications 1 à 7, 17 à 19, **caractérisée en ce que** l'élément d'entrée (620) du sixième élément de commutation (F) est monté sur un moyeu fixe en rotation (GN) de la paroi de boîtier (GW) du boîtier (GG) de la boîte de vitesses.

31. Boîte de vitesses automatique à rapports multiples selon l'une quelconque des revendications 1 à 3, 18, 19, **caractérisée en ce que** l'élément de sortie (630) du sixième élément de commutation (F) est monté sur l'élément d'entrée (620) du sixième élément de commutation (F) connecté à l'arbre d'entraînement (AN).

32. Boîte de vitesses automatique à rapports multiples selon l'une quelconque des revendications 1 à 18, **caractérisée en ce que** l'élément de sortie (630) du sixième élément de commutation (F) et/ou l'élément de sortie (230) du deuxième élément de commutation (B) et/ou l'élément d'entrée (620) sont montés sur un moyeu fixe en rotation (GN) de la paroi de boîtier (GW) du boîtier (GG) de la boîte de vitesses.

33. Boîte de vitesses automatique à rapports multiples selon l'une quelconque des revendications 30 à 32, **caractérisée en ce que** le moyeu (GN) de la paroi de boîtier (GW) présente des canaux et/ou des alésages pour l'alimentation d'agent sous pression et/ou de lubrifiant au dispositif d'asservissement (610, 210, 110) du sixième et/ou du deuxième et/ou du premier élément de commutation (F, B, A).

34. Boîte de vitesses automatique à rapports multiples selon l'une quelconque des revendications 1 à 33, **caractérisée en ce que**
le train de roues monté devant la boîte de vitesses (VS) présente une roue solaire (SO_VS), une couronne (HO_VS), ainsi qu'un porte-satellites accouplé (ST_VS), sur lequel sont montées de manière rotative des roues planétaires internes et externes (P1_VS, P2_VS),
- les roues planétaires internes (P1_VS) du train de roues monté devant la boîte de vitesses (VS) s'engrenant avec la roue solaire (SO_VS) et les roues planétaires externes (P2_VS) du train de roues monté devant la boîte de vitesses (VS),
- les roues planétaires externes (P2_VS) du train de roues monté devant la boîte de vitesses (VS) s'engrenant avec les roues planétaires internes (P1_VS) et la couronne (HO_VS) du train de roues monté devant la boîte de vitesses (VS),
- le porte-satellites (ST_VS) du train de roues monté devant la boîte de vitesses (VS) formant l'élément d'entrée du train de roues monté devant la boîte de vitesses (VS) connecté en permanence à l'arbre d'entraînement (AN),
- la couronne (HO-VS) du train de roues monté devant la boîte de vitesses (VS) formant l'élément de sortie du train de roues monté devant la boîte de vitesses (VS) pouvant être connecté à des éléments d'entrée du train de roues principal (HS) et
- la roue solaire (SO_VS) du train de roues monté devant la boîte de vitesses (VS) étant fixée sur le boîtier (GG) de la boîte de vitesses,
et **en ce que** le train de roues principal (HS) est réalisé sous forme de transmission à deux satellites et quatre arbres dans une construction de train de roues de Ravigneaux, avec deux roues solaires (S1_HS, S2_HS), une couronne (HO_HS),
ainsi qu'un porte-satellites accouplé (ST_HS), sur lequel des roues planétaires longues (P1_HS) et des roues planétaires courtes (P2_HS) sont montées de manière rotative,
- les roues planétaires longues (P1_HS) du train de roues principal (HS) s'engrenant avec la couronne (HO_HS) et la première roue solaire (S1_HS) du train de roues principal (HS),
- les roues planétaires courtes (P2_HS) du train de roues principal (HS) s'engrenant avec les roues planétaires longues (P1_HS) et la deuxième roue solaire (S2_HS) du train de roues principal (HS),
- la première roue solaire (S1_HS) du train de roues principal (HS) formant le premier élément d'entrée du train de roues principal (HS) et étant connectée aux éléments de sortie (230, 330, 630) du deuxième, troisième et sixième élément de commutation (B, C, F),
- la deuxième roue solaire (S2_HS) du train de roues principal (HS) formant le deuxième élément d'entrée du train de roues principal (HS) et étant connectée à l'élément de sortie (130) du premier élément de commutation (A),
- le porte-satellites (ST_HS) du train de roues principal (HS) formant le troisième élément d'entrée du train de roues principal (HS) et étant connecté aux éléments de sortie (430, 530) du quatrième et du cinquième élément de commutation (D, E), et
- la couronne (HO_HS) du train de roues principal (HS) formant l'élément de sortie du train de roues principal (HS) et étant connectée à l'arbre de sortie (AB).

35. Boîte de vitesses automatique à rapports multiples selon l'une quelconque des revendications 1 à 34, **caractérisée en ce que** par fermeture sélective des éléments de commutation (A à F), au moins huit rapports de marche avant peuvent être commutés de telle sorte que la vitesse de rotation de l'arbre d'entraînement (AN) puisse être transmise à l'arbre de sortie (AB) de telle sorte que pour le passage d'un rapport au rapport suivant supérieur ou inférieur, seulement un élément de commutation soit à chaque fois ouvert parmi les éléments de commutation effectivement actionnés, et un autre élément de commutation soit fermé,
- dans le premier rapport de marche avant, le premier et le quatrième élément de commutation (A, D) étant fermés,
- dans le deuxième rapport de marche avant le premier et le troisième élément de commutation (A, C) étant fermés,
- dans le troisième rapport de marche avant le premier et le deuxième élément de commutation (A, B) étant fermés,
- dans le quatrième rapport de marche avant le premier et le sixième élément de commutation (A, F) étant fermés,
- dans le cinquième rapport de marche avant le premier et le cinquième élément de commutation (A, E) étant fermés,
- dans le sixième rapport de marche avant le cinquième et le sixième élément de commutation (E, F) étant fermés,
- dans le septième rapport de marche avant le deuxième et le cinquième élément de commutation (B, E) étant fermés, et
- dans le huitième rapport de marche avant le troisième et le cinquième élément de commutation (C, E) étant fermés,
et dans un rapport de marche arrière, le quatrième élément de commutation (D) et de puis soit le deuxième élément de commutation (B) soit le sixième élément de commutation (F) étant fermés.
